# EUROPEAN PATENT APPLICATION

(11) **EP 4 796 271 A1**
(43) Date of publication of application: **26.08.2026**
(21) Application number: 23954273.1
(22) Date of filing: 28.09.2023
(51) Int. Cl.: B25J 13/08

(54) **CONTROL DEVICE, CONTROL SYSTEM, ROBOT SYSTEM, CONTROL METHOD, AND COMPUTER PROGRAM**

(71) Applicant: NIKON CORPORATION, Tokyo 140-8601 (JP)
(72) Inventor: WAKIMOTO, Kenta, Tokyo 140-8601 (JP); ONODERA, Eiji, Tokyo 140-8601 (JP)
(74) Representative: Hoffmann Eitle
(86) International application number: PCT/JP2023/035378
(87) International publication number: WO 2025/069297

(57) **Abstract**

A control apparatus generates a first control signal for controlling a robot so that a imaging system moves away from a first target object group, in a case where a first determination that there is no target object on which the process apparatus can perform a process in the first target object group is made based on an imaged result of the first target object group; and generates a second control signal for controlling the robot to change a position and a pose of the imaging system relative to one target object of a second target object group, in a case where a second determination that there is no target object on which the process apparatus can perform the process in the second target object group is made based on an imaged result of the second target object group after the imaging system moves by a control of the robot based on the first control signal.

## Description

### Technical Field

The present invention relates to a technical field of a control apparatus, a control system, a robot system, a control method, and a computer program that are configured to generate a control signal for controlling a robot, for example.

### Background Art

A Patent literature 1 discloses one example of a control apparatus that calculates at least one of a position and a pose of an object, which is a target for a process performed by a robot, and controls a robot based on at least one of the calculated position and pose. The control apparatus is required to control the robot properly.

### Citation List

### Patent Literature

Patent Literature 1: US2013/0230235A1

### Summary of Invention

A first aspect provides a control apparatus that generates a control signal for controlling a robot on which a process apparatus that is configured perform a process on a target object and an imaging system are mounted and which moves the process apparatus and the imaging system, wherein the control apparatus includes: a computing apparatus that generates the control signal; and a communication apparatus that outputs the control signal generated by the computing apparatus, the computing apparatus: generates, as the control signal, a first control signal for controlling the robot so that the imaging system moves away from a first target object group, in a case where a first determination that there is no target object on which the process apparatus can perform the process in the first target object group is made based on an imaged result of the first target object group, which includes at least a part of a plurality of target objects, by the imaging system; and generates, as the control signal, a second control signal for controlling the robot to change a position and a pose of the imaging system relative to one target object of a second target object group, in a case where a second determination that there is no target object on which the process apparatus can perform the process in the second target object group is made based on an imaged result of the second target object group, which includes at least a part of the plurality of target objects, by the imaging system after the imaging system moves by a control of the robot based on the first control signal.

A second aspect provides a control system including: the control apparatus provided by the first aspect; and the imaging system.

A third aspect provides a robot system including: the control apparatus provided by the first aspect; the imaging system; and the robot.

A fourth aspect provides a control method that generates a control signal for controlling a robot on which a process apparatus that is configured perform a process on a target object and an imaging system are mounted and which moves the process apparatus and the imaging system, wherein the control method includes: generating, as the control signal, a first control signal for controlling the robot so that the imaging system moves away from a first target object group, in a case where a first determination that there is no target object on which the process apparatus can perform the process in the first target object group is made based on an imaged result of the first target object group, which includes at least a part of a plurality of target objects, by the imaging system; and generates, as the control signal, a second control signal for controlling the robot to change a position and a pose of the imaging system relative to one target object of a second target object group, in a case where a second determination that there is no target object on which the process apparatus can perform the process in the second target object group is made based on an imaged result of the second target object group, which includes at least a part of the plurality of target objects, by the imaging system after the imaging system moves by a control of the robot based on the first control signal.

A fifth aspect provides a computer program that allows a computer to execute the control method provided by the fourth aspect.

A sixth aspect provides a control apparatus that generates a control signal for controlling a robot on which a process apparatus that is configured perform a process on a target object and an imaging system are mounted and which moves the process apparatus and the imaging system, wherein the control apparatus includes: a computing apparatus that generates the control signal; and a communication apparatus that outputs the control signal generated by the computing apparatus, the computing apparatus generates the control signal for controlling the robot to change a position and a pose of the imaging system relative to one target object of a first target object group, in a case where it is determined based on an imaged result of the first target object group, which includes at least a part of a plurality of target objects contained in a container, by the imaging system that there is no target object on which the process apparatus can perform the process in the first target object group and in a case where a predetermined trigger condition, which is related to at least one of a quantity of the plurality of target objects in the container and a height of the plurality of target objects in the container, is satisfied.

A seventh aspect provides a control system including: the control apparatus provided by the sixth aspect; and the imaging system.

An eighth aspect provides a robot system including: the control apparatus provided by the sixth aspect; the imaging system; and the robot.

A ninth aspect provides a control method that generates a control signal for controlling a robot on which a process apparatus that is configured perform a process on a target object and an imaging system are mounted and which moves the process apparatus and the imaging system, wherein the control method generates the control signal for controlling the robot to change a position and a pose of the imaging system relative to one target object of a first target object group, in a case where it is determined based on an imaged result of the first target object group, which includes at least a part of a plurality of target objects contained in a container, by the imaging system that there is no target object on which the process apparatus can perform the process in the first target object group and in a case where a predetermined trigger condition, which is related to at least one of a quantity of the plurality of target objects in the container and a height of the plurality of target objects in the container, is satisfied.

A tenth aspect provides a computer program that allows a computer to execute the control method provided by the ninth aspect.

An operation and another advantage of the present invention will be apparent from an example embodiment described below.

### Brief Description of Drawings

[FIG. 1] FIG. 1 is a block diagram that illustrates a configuration of a robot system in a present example embodiment.
[FIG. 2] FIG. 2 is a side view that illustrates an exterior appearance of a robot in the present example embodiment.
[FIG. 3] FIG. 3 is a block diagram that illustrates a configuration of a control apparatus in the present example embodiment.
[FIG. 4] FIG. 4 is a flowchart that illustrates a flow of a robot control processing.
[FIG. 5] Each of FIG. 5(a) to FIG. 5(d) is a side view that illustrates a positional relationship between the robot and a workpiece at a certain time in a period during which a holding process for holding the workpiece placed on a placing apparatus that moves on a support surface is performed.
[FIG. 6] Each of FIG. 6(a) to FIG. 6(d) is a side view that illustrates a positional relationship between the robot and the workpiece at a certain time in a period during which a releasing process for placing the workpiece on the placing apparatus that moves on the support surface is performed.

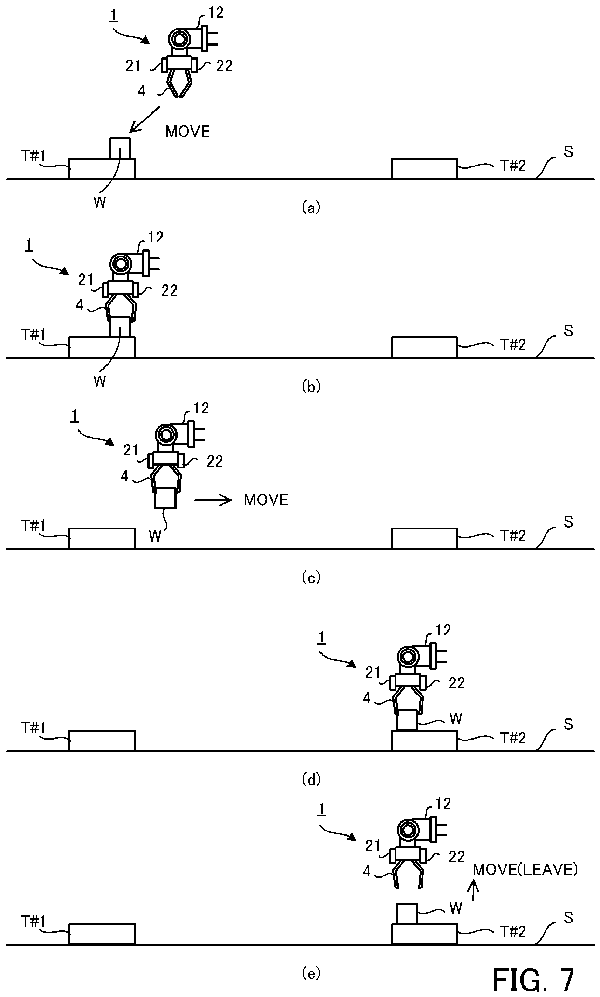

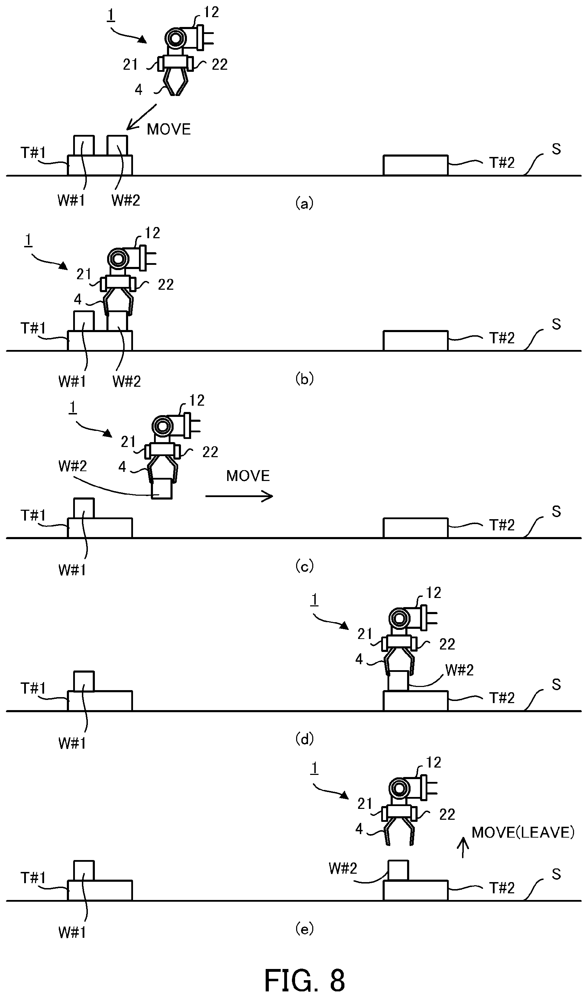

[FIG. 7] Each of FIG. 7(a) to FIG. 7(b) is a side view that illustrates a positional relationship between the robot and the workpiece at a certain time in a period during which the holding process for holding the workpiece placed on the placing apparatus that is stationary on the support surface is performed, and each of FIG. 8(c) to FIG. 8(e) is a side view that illustrates a positional relationship between the robot and the workpiece at a certain time in a period during which the releasing process for placing the workpiece on the placing apparatus that is stationary on the support surface is performed.
[FIG. 8] Each of FIG. 8(a) to FIG. 8(e) is a side view that illustrates a positional relationship between the robot and the workpiece at a certain time in a period during which the holding process for holding a plurality of workpieces, which are placed on the placing apparatus, one by one in sequence and the releasing process for placing the plurality of workpieces on the placing apparatus one by one in sequence are performed.
[FIG. 9] Each of FIG. 9(a) to FIG. 9(e) is a side view that illustrates a positional relationship between the robot and the workpiece at a certain time in a period during which the holding process for holding a plurality of workpieces, which are placed on the placing apparatus, one by one in sequence and the releasing process for placing the plurality of workpieces on the placing apparatus one by one in sequence are performed.
[FIG. 10] FIG. 10 illustrates a plurality of reset positions.
[FIG. 11] FIG. 11 illustrates a plurality of reset poses.
[FIG. 12] FIG. 12(a) to FIG. 12(c) illustrate a metho for setting the plurality of reset positions.
[FIG. 13] FIG. 13 is a flowchart that illustrates a flow of a gazing processing at a step S7 in FIG. 4.
[FIG. 14] Each of FIG. 14(a) and FIG. 14(b) illustrates a positional relationship between a target object and an imaging apparatus.
[FIG. 15] FIG. 15(a) illustrates the imaging apparatus that rotationally moves, and FIG. 15(b) illustrates the imaging apparatus that translationally moves.
[FIG. 16] Each of FIG. 16(a) and FIG. 16(b) illustrates the moving imaging apparatus.
[FIG. 17] FIG. 17 is a cross-sectional view that illustrates a height of a plurality of target objects.
[FIG. 18] FIG. 18(a) is a cross-sectional view that illustrates an example in which the height of the plurality of target objects is higher than a height threshold value, and FIG. 18(a) is a cross-sectional view that illustrates an example in which the height of the plurality of target objects is lower than the height threshold value.
[FIG. 19] Each of FIG. 19(a) to FIG. 19(b) illustrates an imaging system that images the plurality of target objects.
[FIG. 20] Each of FIG. 20(a) to FIG. 20(b) illustrates the imaging system that images the plurality of target objects.
[FIG. 21] Each of FIG. 21(a) to FIG. 21(b) illustrates the imaging system that images the plurality of target objects.
[FIG. 22] Each of FIG. 22(a) to FIG. 22(b) illustrates the imaging system that images the plurality of target objects.
[FIG. 23] FIG. 23 is a cross-sectional view that illustrates an imaging system that images the target object.
[FIG. 24] FIG. 24 is a cross-sectional view that illustrates a weight sensor that measures a weight of the target object.
[FIG. 25] FIG. 25 is a cross-sectional view that illustrates a container on which an object detection sensor for detecting the target object is positioned.
[FIG. 26] Each of FIG. 26(a) and FIG. 26(b) is a cross-sectional view that illustrates the container on which the object detection sensor for detecting the target object is positioned.
[FIG. 27] FIG. 27 is a cross-sectional view that illustrates the container on which a marker is positioned.
[FIG. 28] Each of FIG. 28(a) and FIG. 28(b) is a cross-sectional view that illustrates the container on which the marker is positioned.
[FIG. 29] FIG. 29 is a flowchart that illustrates a flow of a robot control processing in a third modified example.
[FIG. 30] Each of FIG. 30(a) and FIG. 30(b) illustrates one example of a model generation screen.
[FIG. 31] FIG. 31(a) illustrates one example of the target object, each of FIG. 31(b) and FIG. 31(c) illustrates one example of a point cloud included in point cloud data (three-dimensional position data) that is generated from image data generated by the imaging apparatus imaging the target object illustrated in FIG. 31(a) before moving, FIG. 31(d) illustrates a whole model of the target object illustrated in FIG. 31(a), and FIG. 31(e) illustrates a partial model of the target object illustrated in FIG. 31(a).
[FIG. 32] Each of FIG. 32(a) and FIG. 32(b) is a cross-sectional view that illustrates the imaging apparatus imaging the target object.
[FIG. 33] FIG. 33 is a block diagram that illustrates a configuration of the robot system including a measurement system.

### Description of Example embodiments

Next, with reference to drawings, an example embodiment of a control apparatus, a control system, a robot system, a control method, and a computer program will be described. In the below described description, the example embodiment of the control apparatus, the control system, the robot system, the control method, and the computer program will be described by using a robot system SYS.

### (1) Configuration of Robot System SYS

Firstly, a configuration of the robot system SYS will be described.

### (1-1) Entire Configuration of Robot System SYS

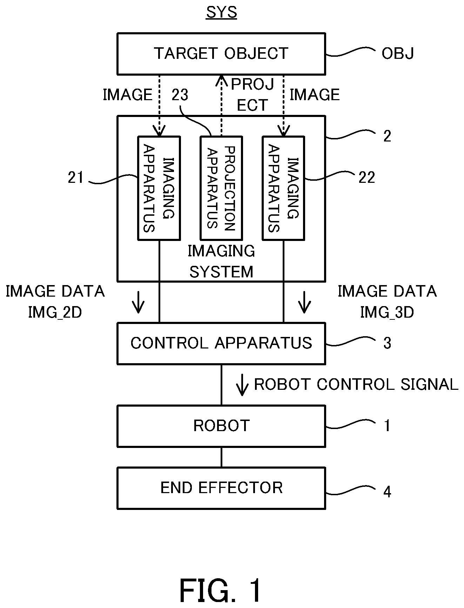

Firstly, with reference to FIG.1, an entire configuration of the robot system SYS will be described. FIG. 1 is a block diagram that illustrates the entire configuration of the robot system SYS.

As illustrated in FIG. 1, the robot system SYS includes: a robot 1; an imaging system 2, a control apparatus 3, and an end effector 4. Note that the imaging system 2 may be referred to as an imaging unit.

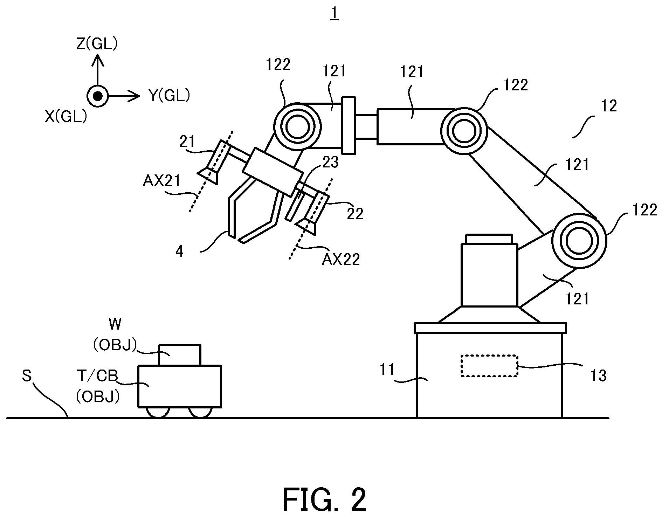

The robot 1 is an apparatus that is configured to perform a predetermined process on a target object OBJ. One example of the robot 1 is illustrated in FIG. 2. FIG. 2 is a side view that illustrates an exterior appearance of the robot 1. As illustrated in FIG. 2, the robot 1 includes: a base 11; a robot arm 12, and a robot control apparatus 13, for example.

The base 11 is a member that is a foundation of the robot 1. The base 11 is placed on a support surface S such as a floor surface. The base 11 may be fixed to the support surface S. Alternatively, the base 11 may be movable relative to the support surface S. As one example, the base 11 may be configured to be self-propelled on the support surface S. In this case, the base 11 may be mounted on an Automatic Guided Vehicle (AGV). In a case where the base 11 is mounted on the Automatic Guided Vehicle, the Automatic Guided Vehicle may be regarded as a part of the robot 1. Alternatively, the Automatic Guided Vehicle (AGV) may be used as the base 11. Note that FIG. 2 illustrates an example in which the base 11 is fixed to the support surface S.

The robot arm 12 is attached to the base 11. The robot arm 12 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the base 11 and an apparatus in which the plurality of links 121 are connected through the joint 122 may be referred to as the robot arm 12.

The end effector 4 is attached to the robot arm 12. Namely, the end effector 4 is attached to the robot 1. In an example illustrated in FIG. 2, the end effector 4 is attached to an end of the robot arm 12. The end effector 4 is movable by a movement of the robot arm 12. Namely, the robot arm 12 moves the end effector 4. Namely, the robot 1 moves the end effector 4.

The end effector 4 is an apparatus that performs a predetermined process (in other words, a predetermined operation) on the target object OBJ. The end effector 4 that performs the predetermined process on the target object OBJ may be referred to as a process apparatus.

For example, the end effector 4 may perform a holding process for holding the target object OBJ as one example of the predetermined process. In this case, the end effector 4 may be considered to perform the holding process on the target object OBJ that should be held by the end effector 4. The end effector 4 that is configured to perform the holding process may be referred to as a holding apparatus.

For example, holding the target object OBJ may include gripping the target object OBJ. For example, holding the target object OBJ may include gripping the target object OBJ by using a hand gripper that is one example of the end effector 4 and that will be described below. Holding the target object OBJ may include sucking the target object OBJ. For example, holding the target object OBJ may include sucking (vacuum sucking) the target object OBJ by using a vacuum gripper that is one example of the end effector 4 and that will be described below. For example, holding the target object OBJ may include sucking the target object OBJ by using a magnetic suction gripper that is one example of the end effector 4 and that will be described below.

For example, the end effector 4 may perform a releasing process (in other words, a releasing operation) for releasing (in other words, letting off) the held target object OBJ as one example of the predetermined process. In this case, the end effector 4 may be considered to perform the releasing process on the target object OBJ held by the end effector 4. The end effector 4 that is configured to perform the releasing process may be referred to as a releasing apparatus.

The hand gripper is one example of the end effector 4 that is configured to perform the holding process and the releasing process. The hand gripper is an end effector 4 that is configured to hold the target object OBJ by physically clamping the target object OBJ using a plurality of (for example, two, three, or four) finger members or claw members. The vacuum gripper that is configured to hold the target object OBJ by vacuum-sucking the target object OBJ is another example of the end effector 4 that is configured to perform the holding process and the releasing process. The vacuum gripper is an end effector 4 that is configured to hold the target object OBJ by vacuum sucking the target object OBJ. The magnetic suction gripper is another example of the end effector 4 that is configured to perform the holding process and the releasing process. FIG. 2 illustrates an example in which the end effector 4 is the hand gripper. However, the end effector 4 that is configured to perform the holding process and the releasing process may be other existing end effector.

The robot 1 may perform a placing process (in other words, a placing operation) for placing the target object OBJ at a desired position by using the end effector 4 that is configured to perform the holding process and the releasing process. For example, the robot 1 may perform the placing process for holding a first target object OBJ by using the end effector 4, and then placing the first target object OBJ held by the end effector 4 at a desired position of a second target object OBJ that is different from the first target object OBJ. In this case, the end effector 4 may be considered to perform the releasing process on the second target object OBJ on which the end effector 4 should place the first target object OBJ. Similarly, the end effector 4 may be considered to perform the releasing process on the first target object OBJ that should be released by the end effector 4.

The robot 1 may perform, as one example of the placing process (in other words, the placing operation), an embedding process (in other words, an embedding operation) for embedding the first target object OBJ into the second target object OBJ that is different from the first target object OBJ by using the end effector 4 that is configured to perform the holding process and the releasing process. For example, the robot 1 may perform the embedding process for holding the first target object OBJ by using the end effector 4, and then embedding the first target object OBJ held by the end effector 4 into the second target object OBJ that is different from the first target object OBJ. In this case, the end effector 4 may be considered to perform the releasing process on the second target object OBJ into which the end effector 4 should embed the first target object OBJ. Similarly, the end effector 4 may be considered to perform the releasing process on the first target object OBJ that should be released by the end effector 4. Note that the embedding process may be referred to as a processing process.

As one example, the embedding process may include a process for embedding (namely, inserting) the first target object OBJ into a hole formed in the second target object OBJ. For example, the robot 1 may perform the embedding process for holding the first target object OBJ by using the end effector 4, and then embedding (namely, inserting) the first target object OBJ held by the end effector 4 into the hole formed in the second target object OBJ. In this case, the end effector 4 may be considered to perform the releasing process on the second target object OBJ in which the hole, into which the end effector 4 should embed (namely, should insert) the first target object OBJ, is formed. Similarly, the end effector 4 may be considered to perform the releasing process on the first target object OBJ that should be released by the end effector 4.

The robot 1 may perform, as one example of the placing process (in other words, the placing operation), an attachment process (in other words, an attachment operation) for attaching the first target object to the second target object that is different from the first target object by using the end effector 4 that is configured to perform the holding process and the releasing process. For example, the robot 1 may perform the attachment process for holding the first target object OBJ by using the end effector 4, and then attaching the first target object OBJ held by the end effector 4 to the second target object OBJ that is different from the first target object OBJ. In this case, the end effector 4 may be considered to perform the releasing process on the second target object OBJ to which the end effector 4 should attach the first target object OBJ. Similarly, the end effector 4 may be considered to perform the releasing process on the first target object OBJ that should be released by the end effector 4. Note that the attachment process may be referred to as a processing process.

The robot 1 may perform, as one example of the placing process (in other words, the placing operation), an adhesive process (in other words, an adhesive operation) for adhering the first target object to the second target object that is different from the first target object by using the end effector 4 that is configured to perform the holding process and the releasing process. For example, the robot 1 may perform the adhesive process for holding the first target object OBJ by using the end effector 4, and then adhering the first target object OBJ held by the end effector 4 to the second target object OBJ that is different from the first target object OBJ. In this case, the end effector 4 may be considered to perform the releasing process on the second target object OBJ to which the end effector 4 should adhere the first target object OBJ. Similarly, the end effector 4 may be considered to perform the releasing process on the first target object OBJ that should be released by the end effector 4. Note that the adhesive process may be referred to as a processing process.

The robot 1 may perform, as one example of the placing process (in other words, the placing operation), a welding process (in other words, a welding operation) for welding the first target object to the second target object that is different from the first target object by using the end effector 4 that is configured to perform the holding process and the releasing process. For example, the robot 1 may perform the welding process for holding the first target object OBJ by using the end effector 4, and then welding the first target object OBJ held by the end effector 4 to the second target object OBJ that is different from the first target object OBJ. In this case, the end effector 4 may be considered to perform the releasing process on the second target object OBJ to which the end effector 4 should weld the first target object OBJ. Similarly, the end effector 4 may be considered to perform the releasing process on the first target object OBJ that should be released by the end effector 4. Note that the welding process may be referred to as a processing process.

The robot 1 may perform, as one example of the placing process (in other words, the placing operation), a screw tightening process (in other words, a screw tightening operation) for tightening the first target object, which serves as a screw, into a screw hole formed in the second target object that is different from the first target object by using the end effector 4 that is configured to perform the holding process and the releasing process. For example, the robot 1 may perform the screw tightening process for holding the first target object OBJ by using the end effector 4, and then tightening the first target object OBJ held by the end effector 4 into the second target object OBJ that is different from the first target object OBJ. In this case, the end effector 4 may be considered to perform the releasing process on the second target object OBJ into which the end effector 4 should tighten the first target object OBJ. Similarly, the end effector 4 may be considered to perform the releasing process on the first target object OBJ that should be released by the end effector 4. Note that the screw tightening process may be referred to as a processing process.

For example, the end effector 4 may perform the predetermined process on each of a plurality of target objects OBJ. Namely, the end effector 4 may sequentially perform the predetermined process on the plurality of target objects OBJ. In this case, the robot 1 may move the end effector 4 to a first position at which the end effector 4 can perform the predetermined process on a first target object OBJ, and the end effector 4 may perform the predetermined process on the first target object OBJ after the end effector 4 moves to the first position. Then, the robot 1 may move end effector 4 to a second position at which the end effector 4 can perform the predetermined process on a second target object OBJ that is different from the first target object OBJ, and the end effector 4 may perform the predetermined process on the second target object OBJ after the end effector 4 moves to the second position.

For example, the end effector 4 may perform the predetermined process on each of a plurality of parts of the single target object OBJ. Namely, the end effector 4 may sequentially perform the predetermined process on the plurality of parts of the single target object OBJ. In this case, the robot 1 may move the end effector 4 to a third position at which the end effector 4 can perform the predetermined process on a first part of the target object OBJ, and the end effector 4 may perform the predetermined process on the first part of the target object OBJ after the end effector 4 moves to the third position. Then, the robot 1 may move end effector 4 to a fourth position at which the end effector 4 can perform the predetermined process on a second part of the target object OBJ, and the end effector 4 may perform the predetermined process on the second part of the target object OBJ after the end effector 4 moves to the fourth position.

The robot 1 may repeat the embedding process for embedding the first target object OBJ into each hole on the second target object OBJ in which a plurality of holes are formed, as one example of an operation for performing the predetermined process on each of the plurality of parts of the single target object OBJ. Note that a part of the target object OBJ on which the end effector 4 performs the predetermined process may be referred to as a target part or a target member. For example, each part (each member) of the second target object OBJ in which each hole is formed may be referred to as the target part or the target member. Note that each component may be referred to as the target part or the target member in a case where the target object OBJ includes a plurality of components. Each member may be regarded as the target part or the target member in a case where the target object OBJ includes a plurality of members.

The target object OBJ on which the end effector 4 performs the predetermined process may include a workpiece W, as illustrated in FIG. 2. The workpiece W may include a component or a member that is used to manufacture a desired product, for example. The workpiece W may include a component or a member that is processed to manufacture the desired product, for example. The workpiece W may include a component or a member that is transported to manufacture the desired product, for example. The workpiece W may include a component or a member that is moved by a transportation for manufacturing the desired product, for example. The workpiece W may include a component or a member that is moved to manufacture the desired product, for example.

The target object OBJ on which the end effector 4 performs the predetermined process may include a placing apparatus T on which the workpiece W is placed, as illustrated in FIG. 2. A container (a container box) CB is one example of the placing apparatus T. The container CB may be a placing apparatus T which includes a bottom wall and a side wall protruding upward from the bottom wall and in which the workpiece W is placed on the bottom wall in a containing space surrounded by the bottom wall and the side wall. The container CB may be a placing apparatus T which includes the bottom wall and the side wall protruding upward from the bottom wall and which can contain the workpiece W in the containing space SP surrounded by the bottom wall and the side wall. However, the container CB may not include the side wall. The container CB that does not include the side wall may be referred to as a pallet. Note that the placing apparatus T may be the pallet. Moreover, the placing apparatus T is not limited to the container CB or the pallet, and may be an existing object on which the workpiece W is allowed to be placed. Note that the placing apparatus T may be referred to as a placing member. The placing apparatus T may be positioned on the support surface S. The placing apparatus T may be fixed to the support surface S. Alternatively, at least a part of the placing apparatus T may be movable relative to the support surface S.

An example in which the placing apparatus T is supported by a transport apparatus that is configured to move (in other words, that is configured to transport) the placing apparatus T is a first example in which at least a part of the placing apparatus T is movable relative to the support surface S. A transport apparatus that is configured to move by itself on the support surface S is a first example of the transport apparatus. In this case, the placing apparatus T may be placed on the transport apparatus that is configured to move by itself or may be held by the transport apparatus that is configured to move by itself. Note that the transport apparatus that is configured to move by itself may be referred to as an AGV (Automatic Guided Vehicle). A belt conveyer is a second example of the transport apparatus. In this case, the placing apparatus T may be placed on a transport belt that is a part of the belt conveyor and that is movable relative to the support surface S. A flying apparatus that is configured to fly over the support surface S is a third example of the transport apparatus. In this case, the placing apparatus T may be placed on the transport apparatus that is configured to fly or may be held by the transport apparatus that is configured to fly. Note that the transport apparatus that is configured to fly may be referred to as an unmanned aerial vehicle or a drone. Another robot arm which is different from the robot arm 12 and to which an end effector configured to hold the placing apparatus T is attached is a fourth example of the transport apparatus. In this case, the placing apparatus T may be held by the end effector attached to another robot arm.

An example in which the placing apparatus T itself is movable relative to the support surface S is a second example in which at least a part of the placing apparatus T is movable relative to the support surface S. The placing apparatus T that is configured to move by itself on the support surface S is a first example of the movable placing apparatus T. Note that the placing apparatus T that is configured to move by itself may be referred to as an AGV (Automatic Guided Vehicle). A belt conveyer is a second example of the movable placing apparatus T. In this case, a transport belt which is a part of the belt conveyor and on which the workpiece W is placed may move relative to the support surface. The placing apparatus that is configured to fly over the support surface S is a third example of the movable placing apparatus T. In this case, the placing apparatus T may be movable relative to the support surface S by flying over the support surface S. Note that the placing apparatus T that is configured to fly may be referred to as an unmanned aerial vehicle or a drone. Another robot arm which is different from the robot arm 12 and to which an end effector configured to hold the workpiece W is attached is a fourth example of the movable placing apparatus T. In this case, the end effector attached to another robot arm may move relative to the support surface S.

When the transport apparatus moves the placing apparatus T, the workpiece W placed on the placing apparatus T also moves relative to the support surface S. Therefore, the transport apparatus that is configured to move the placing apparatus T may be considered to be equivalent to a transport apparatus that is configured to transport the workpiece W. Similarly, when the placing apparatus T moves, the workpiece W placed on the placing apparatus T also moves relative to the support surface S. Therefore, the movable placing apparatus T may be considered to be equivalent to a movement apparatus that is configured to move the workpiece W (in other words, a transport apparatus that is configured to transport the workpiece W). Note that FIG. 2 illustrates an example in which the placing apparatus T is configured to move by itself on the support surface S.

Note that the a placing apparatus T, on which the workpiece W is placed, may be placed on a second placing apparatus T that is movable relative to the support surface S in a case where at least a part of the placing apparatus T is movable relative to the support surface S. In this case, an apparatus that includes the first placing apparatus T and the second placing apparatus T may be referred to as the placing apparatus T.

However, the target object OBJ may not include the placing apparatus T. Moreover, the workpiece W may not be placed on the placing apparatus T, and the placing apparatus T may not be used. For example, the workpiece W may be placed on the support surface S.

In a case where the target object OBJ includes the workpiece W and the placing apparatus T, the above-described holding process may include a process for holding the workpiece W on the stationary or moving placing apparatus T. The above-described holding process may include a process for holding the workpiece W placed on the support surface S. The above-described releasing process may include a process for releasing the workpiece W held by the end effector 4 in order to place the workpiece W held by the end effector 4 at a desired position on the stationary or moving placing apparatus T. The above-described releasing process may include a process for releasing the workpiece W held by the end effector 4 in order to place the workpiece W held by the end effector 4 at a desired position on the support surface S. The above-described releasing process may include a process for releasing a first workpiece W held by the end effector 4 in order to embed the first workpiece W held by the end effector 4 into a second workpiece W placed on the stationary or moving placing apparatus T. The above-described releasing process may include a process for releasing the first workpiece W held by the end effector 4 in order to embed the first workpiece W held by the end effector 4 into the second workpiece W placed on the support surface S. The above-described releasing process may include a process for releasing a first workpiece W held by the end effector 4 in order to embed (namely, insert) the first workpiece W held by the end effector 4 into a hole formed in a second workpiece W placed on the stationary or moving placing apparatus T. The above-described releasing process may include a process for releasing a first workpiece W held by the end effector 4 in order to embed (namely, insert) the first workpiece W held by the end effector 4 into a hole formed in a second workpiece W placed on the support surface S.

The robot control apparatus 13 controls an operation of the robot 1.

Specifically, the robot control apparatus 13 may control an operation of the robot arm 12. For example, the robot control apparatus 13 may control the operation of the robot arm 12 so that the desired link 121 rotates around an axis defined by the desired joint 122. For example, the robot control apparatus 13 may control the operation of the robot arm 12 so that the end effector 4 attached to the robot arm 12 is positioned at a desired position. For example, the robot control apparatus 13 may control the operation of the robot arm 12 so that the end effector 4 attached to the robot arm 12 moves to a desired position.

The robot control apparatus 13 may control an operation of the end effector 4 attached to the robot 1, in addition to or instead of controlling the operation of the robot 1. For example, the robot control apparatus 13 may control the operation of the end effector 4 so that the end effector 4 holds the target object OBJ at a desired timing. Namely, the robot control apparatus 13 may control the operation of the end effector 4 so that the end effector 4 performs the holding process at the desired timing. For example, the robot control apparatus 13 may control the operation of the end effector 4 so that the end effector 4 releases the held target object OBJ at a desired timing. Namely, the robot control apparatus 13 may control the operation of the end effector 4 so that the end effector 4 performs the releasing process at the desired timing. In a case where the end effector 4 is the hand gripper, the robot control apparatus 13 may control a timing at which the hand gripper opens and closes. In a case where the end effector 4 is the vacuum gripper, the robot control apparatus 13 may control a timing at which a vacuum apparatus of the vacuum gripper is turned on and turned off. In a case where the end effector 4 is the magnetic suction gripper, the robot control apparatus 13 may control a timing at which a magnetic suction apparatus of the magnetic suction gripper is turned on and turned off.

Note that FIG. 2 illustrates an example in which the robot 1 is the robot arm 12 (namely, a vertically articulated robot). However, the robot 1 may be a robot that is different from the vertically articulated of robot. For example, the robot 1 may be a SCARA robot (namely, a horizontally articulated robot). For example, the robot 1 may be a parallel link robot. For example, the robot 1 may be a dual-armed robot including two robot arms 12. For example, the robot 1 may be a Cartesian robot. For example, the robot 1 may be a cylindrical robot. The robot 1 may be referred to as a movable apparatus. The movable apparatus may include at least one of an automated guided vehicle and an unmanned aerial vehicle in addition to the robot 1. For example, the robot 1 may be mounted on at least one of the automatic guided vehicle and the unmanned aerial vehicle.

Again in FIG. 1, the imaging system 2 images the target object OBJ. In order to image the target object OBJ, the imaging system 2 includes an imaging apparatus 21, an imaging apparatus 22, and a projection apparatus 23. Note that the imaging system 2 may be referred to as an imaging unit.

The imaging apparatus 21 is a camera that is configured to images the target object OBJ. In the present example embodiment, the imaging apparatus 21 is a monocular camera. The imaging apparatus 21 generates image data IMG_2D by imaging the target object OBJ. Namely, the imaging apparatus 21 generates image data IMG_2D that is an imaged result of the target object OBJ. The image data IMG_2D generated by the imaging apparatus 21 is output from the imaging apparatus 21 to the control apparatus 3. As a result, the control apparatus 3 acquires the image data IMG_2D acquired by the imaging apparatus 21 imaging the target object OBJ. In the present example embodiment, the imaging apparatus 21 is a monocular camera. Specifically, the imaging apparatus 21 is configured to image the target object OBJ by using the monocular camera (in other words, an imaging element). Specifically, since the imaging apparatus 21 is the monocular camera, the imaging apparatus 21 generates, as the image data IMG_2D, single image data generated by the monocular camera. In this case, the image data IMG_2D that corresponds to the single image data (namely, that indicates a single image) may be referred to as monocular image data. Note that the imaging apparatus 21 is not limited to the monocular camera. The imaging apparatus 21 may be a stereo camera that is configured to image the target object OBJ by using two monocular cameras, or may include three or more monocular cameras. Note that the imaging apparatus 21 may be at least one of a light field camera, a plenoptic camera, and a multispectral camera.

The imaging apparatus 22 is a camera that is configured to images the target object OBJ, as with the imaging apparatus 21. In the present example embodiment, the imaging apparatus 22 is a stereo camera. Specifically, the imaging apparatus 22 is configured to image the target object OBJ by using two monocular cameras (in other words, tow imaging elements). The imaging apparatus 22 generates image data IMG_3D by imaging the target object OBJ. Namely, the imaging apparatus 22 generates the image data IMG_3D that is an imaged result of the target object OBJ. Specifically, since the imaging apparatus 22 is the stereo camera, the imaging apparatus 22 generates the image data IMG_3D that includes two image data generated by the two monocular cameras, respectively. In this case, the image data IMG_3D that includes two image data (namely, that indites two images) may be referred to as stereo image data. The image data IMG_3D generated by the imaging apparatus 22 is output from the imaging apparatus 22 to the control apparatus 3. As a result, the control apparatus 3 acquires the image data IMG_3D acquired by the imaging apparatus 22 imaging the target object OBJ. Note that the imaging apparatus 22 is not limited to the monocular camera. The imaging apparatus 22 may be a monocular camera, or may include three or more monocular cameras. Note that the imaging apparatus 22 may be at least one of a light field camera, a plenoptic camera, and a multispectral camera.

The projection apparatus 23 is an apparatus that is configured to irradiate the target object OBJ with projection light. Especially, the projection apparatus 23 is an apparatus that is configured to project a desired projection pattern on the target object OBJ by irradiating the target object OBJ with the projection light. Note that the projection pattern may be referred to as an intensity distribution of the light projected on the target object OBJ. When the intensity distribution of the projected light changes, the projection pattern also changes. The desired projection pattern may include a random pattern, for example. The random pattern may be a projection pattern having different patterns in unit irradiation areas, respectively. The random pattern may include a random dot pattern. The desired projection pattern may include a one-dimensional or two-dimensional grid pattern. The desired projection pattern may include a line-shaped pattern, for example. The desired projection pattern may include a stripe-shaped pattern, for example. The desired projection pattern may include another projection pattern. The imaging apparatus 22 images the target object OBJ on which the projection pattern is projected. In this case, the target object OBJ on which the projection pattern is projected is captured in the image indicated by the image data IMG_3D. On the other hand, the imaging apparatus 21 may not image the target object OBJ on which the projection pattern is projected. The imaging apparatus 21 may image the target object OBJ on which the projection pattern is not projected. In this case, the target object OBJ on which the projection pattern is projected may not be captured in the image indicated by the image data IMG_2D. The target object OBJ on which the projection pattern is not projected may be captured in the image indicated by the image data IMG_2D. Note that the projection light for projecting the desired projection pattern on the target object OBJ may be referred to as pattern light or may be referred to as structure light. In this case, the projection light may include the pattern light or may include the structure light. Moreover, the projection light may be light with a uniform projection pattern (namely, a uniform intensity distribution).

Note that the projection apparatus 23 may be considered to illuminate the target object OBJ with the projection light by irradiating the target object OBJ with the projection light. In this case, the projection apparatus 23 may be configured to serve as an illumination apparatus that illuminates the target object OBJ. In a case where the projection apparatus 23 serves as the illumination apparatus, the projection light may be referred to as illumination light. The projection light (the illumination light) used as the illumination apparatus may be light whose intensity distribution is uniform. In a case where the projection apparatus 23 serves as the illumination apparatus, the projection light may not be the light capable of projecting the desired projection pattern on the target object OBJ. In a case where the projection apparatus 23 serves as the illumination apparatus, the projection light may be any light capable of illuminating the target object OBJ.

The imaging apparatus 21 may image the entire target object OBJ. Alternatively, the imaging apparatus 21 may image a part of the target object OBJ. Namely, the imaging apparatus 21 may image a part of the target object OBJ and may not image another part of the target object OBJ. Similarly, the imaging apparatus 22 may image the entire target object OBJ. Alternatively, the imaging apparatus 22 may image a part of the target object OBJ. Namely, that imaging apparatus 22 may image a part of the target object OBJ and may not image another part of the target object OBJ.

The imaging apparatus 21 may image a single target object OBJ. Namely, the single target object OBJ may be captured in the image indicated by the image data IMG_2D. Alternatively, the imaging apparatus 21 may image a plurality of target objects OBJ. Namely, the plurality of target objects OBJ may be captured in the image illustrated by image data IMG_2D. In this case, the control apparatus 3 may determine (in other words, select) one target object OBJ of the plurality of target objects OBJ captured by the imaging apparatus 21 as the target object OBJ on which the end effector 4 actually performs the predetermined process, as described in detail later. Note that the one target object OBJ of the plurality of target objects OBJ captured by the imaging apparatus 21 on which the end effector 4 actually performs the predetermined process may be referred to as a process performed object.

The imaging apparatus 22 may image a single target object OBJ. Namely, the single target object OBJ may be captured in the image indicated by the image data IMG_3D. Alternatively, the imaging apparatus 22 may image a plurality of target objects OBJ. Namely, the plurality of target objects OBJ may be captured in the image illustrated by image data IMG_3D. In this case, the control apparatus 3 may determine (in other words, select) one target object OBJ of the plurality of target objects OBJ captured by the imaging apparatus 22 as the target object OBJ on which the end effector 4 actually performs the predetermined process, as described in detail later. Note that the one target object OBJ of the plurality of target objects OBJ captured by the imaging apparatus 22 on which the end effector 4 actually performs the predetermined process may be referred to as a process performed object.

In a case where each of the imaging apparatuses 21 and 22 images the plurality of target objects OBJ, the plurality of target objects OBJ imaged by the imaging apparatus 21 may be the same as the plurality of target objects OBJ imaged by the imaging apparatus 22. Namely, the plurality of target objects OBJ captured in the image indicated by the image data IMG_2D may be the same as the plurality of target objects OBJ captured in the image indicated by image data IMG_3D. Alternatively, at least one of the plurality of target objects OBJ captured by the imaging apparatus 21 may be different from at least one of the plurality of target objects OBJ captured by the imaging apparatus 22. Namely, at least one of the plurality of target objects OBJ captured in the image indicated by the image data IMG_2D may be the same as at least one of the plurality of target objects OBJ captured in the image indicated by the image data IMG_3D.

The plurality of target objects OBJ imaged by at least one of the imaging apparatuses 21 and 22 may be positioned so that at least two of the plurality of target objects OBJ overlap at least partially. As one example, in a case where the target object OBJ is the workpiece W corresponding to the component used to manufacture the desired product, the plurality of workpieces W (namely, the plurality of components) may be positioned so that at least two of the plurality of workpieces W overlap at least partially. In this case, the robot 1 may perform a bin picking for picking the workpiece W one by one from the plurality of workpieces W positioned in a disordered manner.

The imaging system 2 is attached to the robot arm 12, as with the end effector 4. Namely, the imaging apparatuses 21 and 22 and the projection apparatus 23 are attached to the robot arm 12. For example, as illustrated in FIG. 2, the imaging apparatuses 21 and 22 and the projection apparatus 23 may be attached to an end of the robot arm 12, as with the end effector 4. In this case, the imaging apparatuses 21 and 22 and the projection apparatus 23 are movable by the movement of the robot arm 12. Namely, the robot arm 12 moves the imaging apparatuses 21 and 22 and the projection apparatus 23.

However, the imaging system 2 may not be attached to the robot arm 12. The imaging system 2 may be attached to any position that allows the imaging system 2 to irradiate the target object OBJ with the projection light and to image the target object OBJ. In this case, the imaging system 2 may be attached to a structural object such as a pillar so as to irradiate the target object OBJ with the projection light and to image the target object OBJ. Note that at least one of the imaging apparatus 21, the imaging apparatus 22, and the projection apparatus 23 may be attached to the robot arm 12, and at least other one of the imaging apparatus 21, the imaging apparatus 22, and the projection apparatus 23 may be attached to a position (for example, the structural object such as the pillar) that is different from the robot arm 12. In a case where at least one of the imaging apparatus 21 and the imaging apparatus 22 is attached to the position that is different form the robot arm 12, at least one of the imaging apparatus 21 and the imaging apparatus 22 may be attached to the structural object, such as the pillar, that is positioned so that the target object OBJ can be imaged. Moreover, in a case where the projection apparatus 23 is attached to the position that is different from the robot arm 12, the projection apparatus 23 may be attached to the structural object, such as the pillar, that is positioned so that the target object OBJ can be irradiated with the projection light.

The imaging apparatus 21 may image the target object OBJ in a period during which the target object OBJ and the imaging apparatus 21 are being relatively displaced. Note that a state in which the imaging apparatus 21 and the target object OBJ are relatively displaced may mean a state in which a relative positional relationship between the imaging apparatus 21 and the target object OBJ is changing. The state in which the imaging apparatus 21 and the target object OBJ are relatively displaced may mean a state in which the imaging apparatus 21 and the target object OBJ are relatively moving. For example, the state in which the imaging apparatus 21 and the target object OBJ are relatively displaced may include a state in which the target object OBJ is moving with respect to the imaging apparatus 21. For example, the state in which the imaging apparatus 21 and the target object OBJ are relatively displaced may include a state in which the imaging apparatus 21 is moving with respect to the target object OBJ. In this case, the imaging apparatus 21 may not stop in order to image the target object OBJ, and therefore, the robot system SYS can efficiently perform the predetermined process on the target object OBJ by using the end effector 4.

Alternatively, the imaging apparatus 21 may image the target object OBJ in a period during which the imaging apparatus 21 and the target object OBJ are not being relatively displaced. Note that a state in which the imaging apparatus 21 and the target object OBJ are not being relatively displaced may mean a state in which the relative positional relationship between the imaging apparatus 21 and the target object OBJ is not changed. The state in which the imaging apparatus 21 and the target object OBJ are not being relatively displaced may mean a state in which the imaging apparatus 21 and the target object OBJ are not relatively moving. The state in which the imaging apparatus 21 and the target object OBJ are not being relatively displaced may mean a state in which the imaging apparatus 21 and the target object OBJ stop. The state in which the imaging apparatus 21 and the target object OBJ are not being relatively displaced may mean a state in which the imaging apparatus 21 and the target object OBJ are moving toward the same movement direction at the same movement speed.

The imaging apparatus 22 may image the target object OBJ in a period during which the target object OBJ and the imaging apparatus 22 are being relatively displaced. Note that a state in which the imaging apparatus 22 and the target object OBJ are relatively displaced may mean a state in which a relative positional relationship between the imaging apparatus 22 and the target object OBJ is changing. The state in which the imaging apparatus 22 and the target object OBJ are relatively displaced may mean a state in which the imaging apparatus 22 and the target object OBJ are relatively moving. For example, the state in which the imaging apparatus 22 and the target object OBJ are relatively displaced may include a state in which the target object OBJ is moving with respect to the imaging apparatus 22. For example, the state in which the imaging apparatus 22 and the target object OBJ are relatively displaced may include a state in which the imaging apparatus 22 is moving with respect to the target object OBJ. In this case, the imaging apparatus 22 may not stop in order to image the target object OBJ, and therefore, the robot system SYS can efficiently perform the predetermined process on the target object OBJ by using the end effector 4.

Alternatively, the imaging apparatus 22 may image the target object OBJ in a period during which the imaging apparatus 22 and the target object OBJ are not being relatively displaced. Note that a state in which the imaging apparatus 22 and the target object OBJ are not being relatively displaced may mean a state in which the relative positional relationship between the imaging apparatus 22 and the target object OBJ is not changed. The state in which the imaging apparatus 22 and the target object OBJ are not being relatively displaced may mean a state in which the imaging apparatus 22 and the target object OBJ are not relatively moving. The state in which the imaging apparatus 22 and the target object OBJ are not being relatively displaced may mean a state in which the imaging apparatus 22 and the target object OBJ stop. The state in which the imaging apparatus 22 and the target object OBJ are not being relatively displaced may mean a state in which the imaging apparatus 22 and the target object OBJ are moving toward the same movement direction at the same movement speed.

The imaging apparatuses 21 and 22 may image the target object OBJ in synchronization with each other. For example, the imaging apparatuses 21 and 22 may image the target object OBJ simultaneously. Namely, the imaging apparatuses 21 and 22 may image the target object OBJ so that a 2D imaging time at which the imaging apparatus 21 images the target object OBJ and a 3D imaging time at which the imaging apparatus 22 images the target object OBJ are the same time. The imaging apparatuses 21 and 22 may image the target object OBJ so that the 2D imaging time at which the imaging apparatus 21 images the target object OBJ to generate the image data IMG_2D and the 3D imaging time at which the imaging apparatus 22 images the target object OBJ to generate the image data IMG_3D are the same time.

The imaging apparatuses 21 and 22 may image the target object OBJ under the control of the control apparatus 3. In this case, a time (in other words, a timing) at which each of the imaging apparatuses 21 and 22 images the target object OBJ may be controlled by the control apparatus 3. For example, the control apparatus 3 may control the imaging apparatuses 21 and 22 so that the imaging apparatuses 21 and 22 image the target object OBJ in synchronization with each other. For example, the control apparatus 3 may control the imaging apparatuses 21 and 22 so that the imaging apparatuses 21 and 22 image the target object OBJ simultaneously. Namely, the control apparatus 3 may control the imaging apparatuses 21 and 22 so that the 2D imaging time are the same as the 3D imaging time are the same time.

Here, a state in which "the 2D imaging time and the 3D imaging time are the same time" may include a state in which "the 2D imaging time and the 3D imaging time are exactly the same time literally". The state in which "the 2D imaging time and the 3D imaging time are the same time" may include a state in which "the 2D imaging time and the 3D imaging time are not exactly the same time, but the 2D imaging time and the 3D imaging time are allowed to be considered to be substantially the same time because a difference in time between the 2D imaging time and the 3D imaging time is smaller than a first allowable upper limit value". Here, the first allowable upper limit value may be an allowable upper limit value based on a control error of the robot arm 12. For example, there is a possibility that the difference in time between the 2D imaging time and the 3D imaging time causes an error in a calculated result of at least one of a position and a pose of the target object OBJ described below (namely, decreases an accuracy of at least one of the calculated position and pose of the target object OBJ). In this case, there is a possibility that the error in the calculated result of at least one of the position and the pose of the target object OBJ causes the control error of the robot arm 12. There is a possibility that the control error of the robot arm 12 results in a movement error of the end effector 4, and the end effector 4 cannot properly perform the predetermined process on the target object OBJ. The first allowable value may be set to a proper value for avoiding a state in which the end effector 4 cannot properly perform the predetermined process on the target object OBJ due to the control error of the robot arm 12. Note that the first allowable upper limit value may be considered to be equivalent to an allowable upper limit value of the movement error of the end effector 4 by the robot arm 12. Moreover, for example, even in a case where a synchronization error in the imaging processing of the imaging apparatuses 21 and 22 causes the difference in time between the 2D imaging time and the 3D imaging time, the 2D imaging time and the 3D imaging time may be considered to be substantially the same time. Note that the synchronization error in the imaging processing of the imaging apparatuses 21 and 22 may be a synchronization control error in the imaging processing of the imaging apparatuses 21 and 22 by the control apparatus 3.

However, the imaging apparatuses 21 and 22 may not image the target object OBJ simultaneously. Namely, the imaging apparatuses 21 and 22 may image the target object OBJ so that the 2D imaging time at which the imaging apparatus 21 images the target object OBJ and the 3D imaging time at which the imaging apparatus 22 images the target object OBJ are different times. Note that a state in which "the 2D imaging time and the 3D imaging time are the different times" may include a state in which "the 2D imaging time and the 3D imaging time are not allowed to be considered to be substantially the same time because the difference in time between the 2D imaging time and the 3D imaging time is larger than the first allowable upper limit value".

In the present example embodiment, in a case where the imaging apparatuses 21 and 22 image the target object OBJ in a period during which the target object OBJ and each of the imaging apparatuses 21 and 22 are being relatively displaced, the imaging apparatuses 21 and 22 may image the target object OBJ so that the 2D imaging time and the 3D imaging time are the same time. Namely, in a case where the imaging apparatuses 21 and 22 image the target object OBJ in the period during which the target object OBJ and each of the imaging apparatuses 21 and 22 are being relatively displaced, the control apparatus 3 may control the imaging apparatuses 21 and 22 so that the 2D imaging time and the 3D imaging time are the same time.

On the other hand, in a case where the imaging apparatuses 21 and 22 image the target object OBJ in a period during which the target object OBJ and each of the imaging apparatuses 21 and 22 are not being relatively displaced, the imaging apparatuses 21 and 22 may not image the target object OBJ so that the 2D imaging time and the 3D imaging time are the same time. Namely, the control apparatus 3 may not control the imaging apparatuses 21 and 22 so that the 2D imaging time and the 3D imaging time are the same time. For example, the imaging apparatuses 21 and 22 may image the target object OBJ so that the 2D imaging time and the 3D imaging time are the different times. Namely, the control apparatus 3 may control the imaging apparatuses 21 and 22 so that the 2D imaging time and the 3D imaging time are the different times. However, in a case where the imaging apparatuses 21 and 22 image the target object OBJ in the period during which the target object OBJ and each of the imaging apparatuses 21 and 22 are not being relatively displaced, the imaging apparatuses 21 and 22 may image the target object OBJ so that the 2D imaging time and the 3D imaging time are the same time. Namely, the control apparatus 3 may control the imaging apparatuses 21 and 22 so that the 2D imaging time and the 3D imaging time are the same time.

The control apparatus 3 performs a robot control processing. The robot control processing includes a processing for generating a robot control signal for controlling the robot 1. Specifically, the control apparatus 3 generates the robot control signal based on at least one of the image data IMG_2D and IMG_3D output from the imaging system 2. In the present example embodiment, the control apparatus 3 calculates at least one of a position and a pose of the target object OBJ in a global coordinate system of the robot system SYS based on at least one of the image data IMG_2D and IMG_3D, and generates the robot control signal based on at least one of the calculated position and pose of the target object OBJ.

The global coordinate system is a coordinate system that is a basis for the robot system SYS. For example, the global coordinate system may be a coordinate system that is a basis for the robot 1. Note that it can be said that the global coordinate system is a coordinate system that is used to control the robot 1. A world coordinate system that is defined relative to the support surface S on which the robot 1 is positioned may be used as the global coordinate system. Namely, the world coordinate system that is fixed relative to the support surface S may be used as the global coordinate system.

However, the control apparatus 3 may calculate at least one of the position and the pose of the target object OBJ in a coordinate system that is different from the global coordinate system based on at least one of the image data IMG_2D and IMG_3D.

As a first example, the control apparatus 3 may calculate at least one of the position and the pose of the target object OBJ in a robot coordinate system based on at least one of the image data IMG_2D and IMG_3D. The robot coordinate system may be a coordinate system that is defined relative to the robot 1. Namely, the robot coordinate system may be a coordinate system that is fixed relative to the robot 1 (for example, that is fixed relative to the base 11 of the robot 1). Note that the robot coordinate system may be referred to as the global coordinate system because it is defined relative to the robot 1. Note that it can be said that the robot coordinate system is a coordinate system that is used to control the robot 1.

As a second example, the control apparatus 3 may calculate at least one of the position and the pose of the target object OBJ in a 2D imaging coordinate system based on at least one of the image data IMG_2D and IMG_3D. The 2D imaging coordinate system may be a coordinate system that is defined relative to the imaging apparatus 21. Namely, the 2D imaging coordinate system may be a coordinate system that is fixed relative to the imaging apparatus 21. A coordinate system that is defined based on an optical axis AX21 (see FIG. 2) of an optical system (especially, a terminal optical element such as an objective lens) of the imaging apparatus 21 is one example of the 2D imaging coordinate system. A coordinate system in which one of three axes defining the 2D imaging coordinate system is an axis that is along the optical axis AX21 (see FIG. 2) of the optical system (especially, the terminal optical element such as the objective lens) of the imaging apparatus 21 is another example of the 2D imaging coordinate system.

As a third example, the control apparatus 3 may calculate at least one of the position and the pose of the target object OBJ in a 3D imaging coordinate system based on at least one of the image data IMG_2D and IMG_3D. The 3D imaging coordinate system may be a coordinate system that is defined relative to the imaging apparatus 22. Namely, the 3D imaging coordinate system may be a coordinate system that is fixed relative to the imaging apparatus 22. A coordinate system that is defined based on an optical axis AX22 (see FIG. 2) of an optical system (especially, a terminal optical element such as an objective lens) of the imaging apparatus 22 is one example of the 3D imaging coordinate system. A coordinate system in which one of three axes defining the 3D imaging coordinate system is an axis that is along the optical axis AX22 (see FIG. 2) of the optical system (especially, the terminal optical element such as the objective lens) of the imaging apparatus 22 is another example of the 3D imaging coordinate system.

The control apparatus 3 may perform an end effector control processing, in addition to performing the robot control processing. The end effector control processing may include a processing for generating an end effector control signal for controlling the end effector 4. Specifically, the control apparatus 3 may generate the end effector control signal based on at least one of the calculated position and pose of the target object OBJ.

Note that the end effector control processing may be included or may not be included in the robot control processing. Namely, the end effector control signal generated by the control apparatus 3 may be included in the robot control signal or may not be included in the robot control signal. In the below-described description, an example in which the end effector control processing is included in the robot control processing (namely, the end effector control signal is included in the robot control signal) will be described. Therefore, in the below-described description, the robot control processing may mean a processing for generating at least one of the robot control signal and the end effector control signal. Moreover, in the below-described description, the robot control signal may mean at least one of the signal for controlling the robot 1 and the signal for controlling the end effector 4. Note that the robot control signal may be simply referred to as a control signal.

In this manner, the control apparatus 3 and the imaging system 2 are used to control the robot 1. Therefore, a system including the control apparatus 3 and the imaging system 2 may be referred to as a robot control system or a control system.

The robot control signal generated by the control apparatus 3 is output to the robot control apparatus 13 of the robot 1. The robot control apparatus 13 controls the operation of the robot 1 based on the robot control signal generated by the control apparatus 3. Therefore, the robot control signal may include a signal for controlling the operation of the robot 1.

In a case where the robot control signal includes the signal for controlling the robot arm 12 as described above, the robot control apparatus 13 may control the robot arm 12 based on the robot control signal. For example, the robot control apparatus 13 may control the operation of the robot arm 12 by controlling an operation of the actuator built into the joint 122 based on the robot control signal.

For example, the robot arm 12 moves the end effector 4 as described above. In this case, the robot control signal may include a signal for controlling the robot arm 12 so that the end effector 4 is positioned at a desired position. The robot control signal may include a signal for controlling the robot arm 12 so that the end effector 4 moves to the desired position. The robot control signal may include a signal for controlling the robot arm 12 so that a positional relationship between the end effector 4 and the target object OBJ is a desired positional relationship. In this case, the robot control apparatus 13 may control the robot arm 12 based on the robot control signal so that the end effector 4 is positioned at the desired position. The robot control apparatus 13 may control the robot arm 12 based on the robot control signal so that the end effector 4 moves to the desired position. The robot control apparatus 13 may control the robot arm 12 based on the robot control signal so that the positional relationship between the end effector 4 and the target object OBJ is the desired positional relationship.

As one example, in a case where the end effector 4 performs the holding process for holding the target object OBJ, the robot control signal may include a signal for controlling the robot arm 12 so that the end effector 4 moves toward (namely, approaches) a hold position at which the end effector 4 can hold the target object OBJ. Namely, the robot control signal may include a signal for controlling the robot arm 12 so that the end effector 4 is positioned at the hold position. In this case, the robot control apparatus 13 may control the robot arm 12 based on the robot control signal so that the end effector 4 moves toward (namely, approaches) the hold position. Namely, the robot control signal may control the robot arm 12 so that the end effector 4 is positioned at the hold position.

As another example, in a case where the end effector 4 performs the releasing process for releasing the held target object OBJ, the robot control signal may include a signal for controlling the robot arm 12 so that the end effector 4 moves toward (namely, approaches) a release position at which the end effector 4 should release the held target object OBJ. Namely, the robot control signal may include a signal for controlling the robot arm 12 so that the end effector 4 is positioned at the release position. In this case, the robot control apparatus 13 may control the robot arm 12 based on the robot control signal so that the end effector 4 moves toward (namely, approaches) the release position. Namely, the robot control signal may control the robot arm 12 so that the end effector 4 is positioned at the release position.

In a case where the robot control signal includes the signal for controlling the end effector 4 as described above, the robot control apparatus 13 may control the end effector 4 based on the robot control signal. For example, the robot control apparatus 13 may control the operation of the end effector 4 by controlling an operation of the actuator that moves the hand gripper constituting the end effector 4 based on the robot control signal. For example, the robot control apparatus 13 may control the operation of the end effector 4 by controlling an operation of the vacuum apparatus of the vacuum gripper constituting the end effector 4 based on the robot control signal.

As one example, in a case where the end effector 4 performs the holding process for holding the target object OBJ, the robot control signal may include a signal for controlling the end effector 4 so that the end effector 4 positioned at the above-described hold position holds the target object OBJ. In this case, the robot control apparatus 13 may control the end effector 4 based on the robot control signal so that the end effector 4 positioned at the hold position holds the target object OBJ.

As another example, in a case where the end effector 4 performs the releasing process for releasing the held target object OBJ, the robot control signal may include a signal for controlling the end effector 4 so that the end effector 4 positioned at the above-described release position releases the held target object OBJ. In this case, the robot control apparatus 13 may control the end effector 4 based on the robot control signal 3 so that the end effector 4 positioned at the above-described release position releases the held target object OBJ.

The robot control signal may include a signal that is usable as it is by the robot control apparatus 13 to control the operation of the robot 1. The robot control signal may include a signal that is usable as it is as a robot driving signal that is used by the robot control apparatus 13 to control the operation of the robot 1. In this case, the robot control apparatus 13 may use the robot control signal as it is to control the operation of the robot 1. Specifically, for example, the control apparatus 3 may generate a driving signal of the actuator built in the joint 122 of the robot arm 12 as the robot control signal, and the robot control apparatus 13 may use the robot control signal generated by the control apparatus 3 as it is to control the actuator built in the joint 122 of the robot arm 12.

The robot control signal may include a signal that is usable as it is by the robot control apparatus 13 to control the operation of the end effector 4. The robot control signal may include a signal that is usable as it is as an end effector driving signal that is used by the robot control apparatus 13 to control the operation of the end effector 4. In this case, for example, the control apparatus 3 may generate a driving signal (the end effector driving signal) of the actuator that moves the hand gripper constituting the end effector 4 as the robot control signal, and the robot control apparatus 13 may use the robot control signal generated by the control apparatus 3 as it is to control the actuator of the end effector 4. For example, the control apparatus 3 may generate a driving signal (the end effector driving signal) of the vacuum apparatus of the vacuum gripper constituting the end effector 4 as the robot control signal, and the robot control apparatus 13 may use the robot control signal generated by the control apparatus 3 as it is to control the vacuum apparatus of the end effector 4.

Note that the robot 1 may not include the robot control apparatus 13 in a case where the robot control signal includes the signal that is usable as it is by the robot control apparatus 13 to control the operation of at least one of the robot 1 and the end effector 4 as described above.

Alternatively, the robot control signal may include a signal that is usable by the robot control apparatus 13 to generate the robot driving signal for controlling the operation of the robot 1. In this case, the robot control apparatus 13 may generate the robot driving signal for controlling the operation of the robot 1 based on the robot control signal, and control the operation of the robot 1 based on the generated robot driving signal. For example, the robot control apparatus 13 may generate the driving signal of the actuator built in the joint 122 of the robot arm 12 based on the robot control signal, and control the actuator built in the joint 122 of the robot arm 12 based on the generated signal.

The robot control signal may include a signal that is usable by the robot control apparatus 13 to generate the end effector driving signal for controlling the operation of the end effector 4. In this case, the robot control apparatus 13 may generate the end effector driving signal for controlling the operation of the end effector 4 based on the end effector control signal, and control the operation of the end effector based on the generated end effector driving signal. For example, in a case where the end effector 4 is the hand gripper, the robot control apparatus 13 may generate the end effector driving signal for driving the actuator of the hand gripper based on the robot control signal, and control the actuator of the hand gripper based on the generated end effector driving signal. For example, in a case where the end effector 4 is the magnetic suction gripper, the robot control apparatus 13 may generate the end effector driving signal for driving the magnetic suction apparatus of the magnetic suction gripper based on the robot control signal, and control the magnetic suction apparatus of the magnetic suction gripper based on the generated end effector driving signal.

Note that the signal that is usable by the robot control apparatus 13 to generate the robot driving signal may include a signal indicating at least one of the position and the pose of the target object OBJ in the global coordinate system. In this case, for example, the robot control apparatus 13 may generate the robot driving signal for driving the actuator built in the joint 122 of the robot arm 12 based on the robot control signal so that the end effector 4 approaches the target object OBJ at least one of the position and the pose in the global coordinate system of which is calculated by the robot control signal (namely, the positional relationship between the robot 1 (the end effector 4) and the target object OBJ is the desired positional relationship), and control the operation of the robot arm 12 based on the generated robot driving signal.

The signal that is usable by the robot control apparatus 13 to generate the robot driving signal may include a signal indicating the desired positional relationship between the robot 1 and the target object OBJ in the global coordinate system. In this case, for example, the robot control apparatus 13 may generate the robot driving signal for driving the actuator built in the joint 122 of the robot arm 12 based on the robot control signal so that the positional relationship between the robot 1 (the end effector 4) and the target object OBJ is the desired positional relationship indicated by the robot control signal, and control the operation of the robot arm 12 based on the generated robot driving signal.

The signal that is usable by the robot control apparatus 13 to generate the robot driving signal may include a signal indicating the desired position of the end effector 4 in the global coordinate system. In this case, for example, the robot control apparatus 13 may generate the robot driving signal for driving the actuator built in the joint 122 of the robot arm 12 based on the robot control signal so that the end effector 4 is positioned at the desired position indicated by the robot control signal (namely, the positional relationship between the robot 1 (the end effector 4) and the target object OBJ is the desired positional relationship), and control the operation of the robot arm 12 based on the generated robot driving signal. A process position at which the end effector 4 should perform the process on the target object OBJ is one example of the desired position. The hold position at which the end effector 4 should hold the target object OBJ is one specific example of the desired position. In this case, the robot control apparatus 13 may generate the robot driving signal for driving the actuator built in the joint 122 of the robot arm 12 based on the robot control signal so that the end effector 4 moves to the hold position indicated by the robot control signal, and control the operation of the robot arm 12 based on the generated robot driving signal. The release position at which the end effector 4 should release the target object OBJ is one specific example of the desired position. In this case, the robot control apparatus 13 may generate the robot driving signal for driving the actuator built in the joint 122 of the robot arm 12 based on the robot control signal so that the end effector 4 moves to the release position indicated by the robot control signal, and control the operation of the robot arm 12 based on the generated robot driving signal.

Note that the signal that is usable by the robot control apparatus 13 to generate the robot driving signal may include a signal indicating a desired position of an end part (for example, a tool center point) of the robot arm 12 in the global coordinate system, or may include a signal indicating a desired position of the imaging system 2 in the global coordinate system. Note that the signal that is usable by the robot control apparatus 13 to generate the robot driving signal may be a signal indicating a movement distance and a movement direction from a current position of the end effector 4 to the desired position of the end effector 4.

Note that the coordinate system used as a basis in the robot control signal may be a coordinate system (for example, the robot coordinate system, the 2D imaging coordinate system, or the 3D imaging coordinate system) other than the global coordinate system.

### (1-2) Configuration of Control Apparatus 3

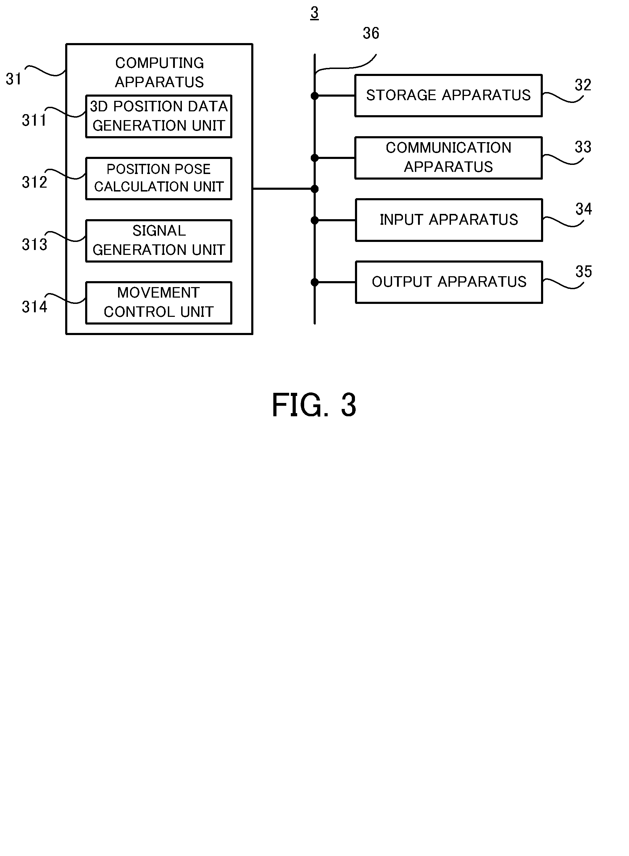

Next, with reference to FIG. 3, a configuration of the control apparatus 3 will be described. FIG. 3 is a block diagram that illustrates the configuration of the control apparatus 3.

As illustrated in FIG. 3, the control apparatus 3 includes a computing apparatus 31, a storage apparatus 32, and a communication apparatus 33. Furthermore, the control apparatus 3 may include an input apparatus 34 and an output apparatus 35. However, the control apparatus 3 may not include at least one of the input apparatus 34 and the output apparatus 35. The computing apparatus 31, the storage apparatus 32, the communication apparatus 33, the input apparatus 34, and the output apparatus 35 may be connected through a data bus 36.

The computing apparatus 31 may include at least one of a CPU (Central Processing Unit), a GPU (Graphic Processing Unit), and a FPGA (Field Programmable Gate Array), for example. The computing apparatus 31 reads a computer program. For example, the computing apparatus 31 may read the computer program recorded in the storage apparatus 32. For example, the computing apparatus 31 may read the computer program recorded in a non-transitory computer-readable recording medium by using a non-illustrated recording medium reading apparatus of the control apparatus 3. The computing apparatus 31 may acquire (namely, download or read) the computer program from a non-illustrated apparatus external to the control apparatus 3 through the communication apparatus 33 (alternatively, other communication apparatus). The computing apparatus 31 executes the read computer program. As a result, a logical functional block for performing a processing that should be performed by the control apparatus 3 (for example, the above-described robot control processing) is implemented in the computing apparatus 31. Namely, the computing apparatus 31 is configured to serve as a controller for implementing the logical functional block for performing the processing that should be performed by the control apparatus 3.

An arithmetic model that is buildable by machine learning may be implemented in the computing apparatus 31 by the computing apparatus 31 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 31 may perform the robot control processing by using the arithmetic model. Namely, an operation for performing the robot control processing may include an operation for performing the robot control processing by using the arithmetic model. Note that the arithmetic model that has been built by off-line machine learning using training data may be implemented in the computing apparatus 31. Moreover, the arithmetic model implemented in the computing apparatus 31 may be updated by online machine learning on the computing apparatus 31. Alternatively, the computing apparatus 31 may perform the robot control processing by using the arithmetic model implemented in an apparatus external to the computing apparatus 31 (namely, an apparatus external to the control apparatus 3), in addition to or instead of the arithmetic model implemented in the computing apparatus 31.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the computing apparatus 31. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the computing apparatus 31 by means of the computing apparatus 31 (namely, a computer) executing the computer program, may be realized by a hardware such as a predetermined gate array (a FPGA, an ASIC) of the computing apparatus 31, or may be realized in a form in which the logical process block and a partial hardware module that realizes a partial element of the hardware are combined.

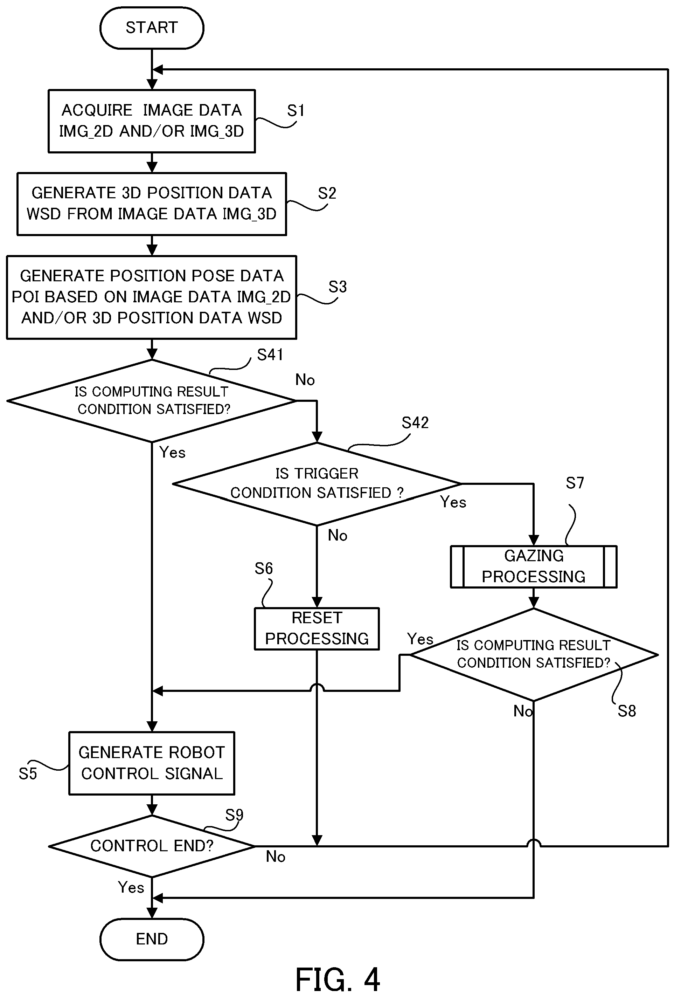

FIG. 3 illustrates one example of the logical functional block implemented in the computing apparatus 31 to perform the robot control processing. As illustrated in FIG. 3, a three-dimensional position data generation unit 311, a position pose calculation unit 312, and a signal generation unit 313 are implemented in the computing apparatus 31. Note that a processing performed by each of the three-dimensional position data generation unit 311, the position pose calculation unit 312, and the signal generation unit 313 will be described in detail later with reference to FIG. 4 and so on, and a description thereof is omitted here. Note that the computing apparatus 31 may be a computing unit.

The storage apparatus 32 is configured to store desired data. For example, the storage apparatus 32 may temporarily store the computer program that is executed by the computing apparatus 31. The storage apparatus 32 may temporarily store data temporarily used by the computing apparatus 31 in a case where the computing apparatus 31 executes the computer program. The storage apparatus 32 may store data stored for a long term by the control apparatus 3. The storage apparatus 32 may include at least one of a RAM, a ROM, a hard disk apparatus, a magneto-optical disc, a SSD and a disk array apparatus. Namely, the storage apparatus 32 may include a non-transitory recording medium.

The communication apparatus 33 is configured to communicate with each of the robot 1 and the imaging system 2 through a no-illustrated communication network. Alternatively, the communication apparatus 33 may be configured to communicate with other apparatus that is different from the robot 1 and the imaging system 2, in addition to or instead of at least one of the robot 1 and the imaging system 2, through a non-illustrated communication network. In the present example embodiment, the communication apparatus 33 may receive (namely, acquire) at least one of the image data IMG_2D and IMG_3D from the imaging system 2. Furthermore, the communication apparatus 33 may transmit (namely, output) the robot control signal to the robot 1. Note that the communication apparatus 33 that output the robot control signal to the robot 1 may be referred to as an output unit.

The input apparatus 34 is an apparatus that is configured to receive an input of information from an outside of the control apparatus 3 to the control apparatus 3. For example, the input apparatus 34 may include an operating apparatus (for example, at least one of a keyboard, a mouse, and a touch panel) that is operable by a user of the control apparatus 3. For example, the input apparatus 34 may include a recording medium reading apparatus that is configured to read information recorded as data on a recording medium that is attachable to the control apparatus 3.

Note that information is allowed to be input to the control apparatus 3 as data from the apparatus external to the control apparatus 3 through the communication apparatus 33. In this case, the communication apparatus 33 may serve as an input apparatus that receives an input of information to the control apparatus 3 from outside of the control apparatus 3.

The output apparatus 35 is an apparatus that outputs information to the outside of the control apparatus 3. For example, the output apparatus 35 may output the information as an image. Namely, the output apparatus 35 may include a display apparatus (a so-called display) that is configured to display an image. For example, the output apparatus 35 may output the information as audio. Namely, the output apparatus 35 may include an audio apparatus (so-called a speaker) that is configured output the audio. For example, the output apparatus 35 may output the information on a paper. Namely, the output apparatus 35 may include a printing apparatus (so-called a printer) that is configured to print desired information on the paper. For example, the output apparatus 35 may output the information as data on a recording medium that is attachable to the control apparatus 3.

Incidentally, the control apparatus 3 is allowed to output the information as the data to the apparatus external to the control apparatus 3 through the communication apparatus 33. In this case, the communication apparatus 33 may serve as an output apparatus that outputs the information to the apparatus external to the control apparatus 3.

### (2) Robot Control Processing

Next, the robot control processing performed by the control apparatus 3 will be described.

### (2-1) Flow of Robot Control Processing

Firstly, with reference to FIG. 4, a flow of the robot control processing will be described. FIG. 4 is a flowchart that illustrates the flow of the robot control processing.

As illustrated in FIG. 4, the control apparatus 3 acquires the image data IMG_3D from the imaging apparatus 22 by using the communication apparatus 33 (a step S1). Specifically, the imaging apparatus 22 images the target object OBJ at a predetermined 3D imaging rate. For example, the imaging apparatus 22 may image the target object OBJ at the 3D imaging rate, at which the target object OBJ is imaged tens of times to hundreds of times (as one example, 500 times) per second. As a result, the imaging apparatus 22 generates the image data IMG_3D in a cycle based on the predetermined 3D imaging rate. For example, the imaging apparatus 22 may generate tens to hundreds of (as one example, 500) image data IMG_3D per second. The control apparatus 3 acquires the image data IMG_3D each time the imaging apparatus 22 generates the image data IMG_3D. Namely, the control apparatus 3 may acquire tens to hundreds of (as one example, 500) image data IMG_3D per second.

However, the imaging apparatus 22 may not periodically image the target object OBJ at the desired 3D imaging rate. For example, the imaging apparatus 22 may image the target object OBJ when the imaging apparatus 22 receives a control signal for controlling the imaging apparatus 22 to image the target object OBJ from the control apparatus 3.

The imaging apparatus 22 may image another object that is different from the target object OBJ, in addition to the target object OBJ on which the robot 1 performs the predetermined process. Note that another object that is different from the target object OBJ is referred to as a non-target object in the below-described description, because since another objects is not a target on which the robot 1 performs the predetermined process. At least one of at least a part of the end effector 4, at least a part of the robot arm 12, and a surrounding object that is positioned around the robot 1 is one example of the non-target object. At least one of the placing apparatus T and the container CB is one example of the surrounding object. For example, in a case where both the target object OBJ and the non-target object are included in an imaging range (a field of view) of the imaging apparatus 22, the imaging apparatus 22 may image both the target object OBJ and the non-target object. As a result, the imaging apparatus 22 may generate the image data IMG_3D indicating an image in which both the target object OBJ and the non-target object are captured. However, the imaging apparatus 22 may image the target object OBJ and may not image the non-target object. Namely, the imaging apparatus 22 may generate the image data IMG_3D indicating an image in which the target object OBJ is captured and the non-target object is not captured. In both cases, the imaging apparatus 22 generates the image data IMG_3D indicating an image in which at least the target object OBJ is captured. Namely, the imaging apparatus 22 generates the image data IMG_3D that includes at least image data of the target object OBJ.

As described above, the imaging apparatus 22 may image the plurality of target objects OBJ on which the end effector 4 sequentially performs the predetermined process. In this case, the end effector 4 may perform the predetermined process on a first target object OBJ of the plurality of target objects OBJ in a first period, and then perform the predetermined process on a second target object OBJ, which is different from the first target object OBJ, of the plurality of target objects OBJ in a second period following the first period. In this case, other target object OBJ, which is different from the first target object OBJ on which the end effector 4 performs the predetermined process, of the plurality of target objects OBJ may be regarded as the target object OBJ that is not the process performed object, on which the robot 1 performs the predetermined process in the first period, (alternatively, the non-target object) in the first period. Similarly, other target object OBJ, which is different from the second target object OBJ on which the end effector 4 performs the predetermined process, of the plurality of target objects OBJ may be regarded as the target object OBJ that is not the process performed object, on which the robot 1 performs the predetermined process in the second period, (alternatively, the non-target object) in the second period. Note that each of the first target object OBJ and the second target object OBJ may be different target objects OBJ of the plurality of target objects OBJ captured by the imaging apparatus 22.

The control apparatus 3 acquires the image data IMG_2D from the imaging apparatus 21 by using the communication apparatus 33 in addition to or instead of acquiring the image data IMG_3D from the imaging apparatus 22 (the step S1). Specifically, the imaging apparatus 21 images the target object OBJ at a predetermined 2D imaging rate. The 2D imaging rate may be the same as the 3D imaging rate. However, the 2D imaging rate may be different from the 3D imaging rate. For example, the imaging apparatus 21 may image the target object OBJ at the 2D imaging rate, at which the target object OBJ is imaged tens of times to hundreds of times (as one example, 500 times) per second. As a result, the imaging apparatus 21 generates the image data IMG_2D in a cycle based on the predetermined 2D imaging rate. For example, the imaging apparatus 21 may generate tens to hundreds of (as one example, 500) image data IMG_2D per second. The control apparatus 3 acquires the image data IMG_2D each time the imaging apparatus 21 generates the image data IMG_2D. Namely, the control apparatus 3 may acquire tens to hundreds of (as one example, 500) image data IMG_2D per second.

However, the imaging apparatus 21 may not periodically image the target object OBJ at the desired 2D imaging rate. For example, the imaging apparatus 21 may image the target object OBJ when the imaging apparatus 21 receives a control signal for controlling the imaging apparatus 21 to image the target object OBJ from the control apparatus 3.

Note that the image data IMG_2D may be referred to as two-dimensional position data that indicates a two-dimensional position of the target object OBJ captured in the image data IMG_2D. The image data IMG_2D (the two-dimensional position data) may be data that indicates a two-dimensional position of at least a part of a surface of the target object OBJ. Especially, the image data IMG_2D (the two-dimensional position data) is data that indicates a two-dimensional position of each of a plurality of points on the target object OBJ. For example, the image data IMG_2D (the two-dimensional position data) may be data that indicates a two-dimensional position of each of the plurality of points on the surface of the target object OBJ. For example, the image data IMG_2D (the two-dimensional position data) may be data that indicates the two-dimensional position of each of the plurality of points that correspond to a plurality of parts of the surface of the target object OBJ, respectively.

The imaging apparatus 21 may image the non-target object that is different from the target object OBJ, in addition to the target object OBJ on which the robot 1 performs the predetermined process. For example, in a case where both the target object OBJ and the non-target object are included in an imaging range (a field of view) of the imaging apparatus 21, the imaging apparatus 21 may image both the target object OBJ and the non-target object. As a result, the imaging apparatus 21 may generate the image data IMG_2D indicating an image in which both the target object OBJ and the non-target object are captured. However, the imaging apparatus 21 may image the target object OBJ and may not image the non-target object. Namely, the imaging apparatus 21 may generate the image data IMG_2D indicating an image in which the target object OBJ is captured and the non-target object is not captured. In both cases, the imaging apparatus 21 generates the image data IMG_2D indicating an image in which at least the target object OBJ is captured. Namely, the imaging apparatus 21 generates the image data IMG_2D that includes at least image data of the target object OBJ.

As described above, the imaging apparatus 21 may image the plurality of target objects OBJ on which the end effector 4 sequentially performs the predetermined process. In this case, the end effector 4 may perform the predetermined process on a third target object OBJ of the plurality of target objects OBJ in a third period, and then perform the predetermined process on a fourth target object OBJ, which is different from the third target object OBJ, of the plurality of target objects OBJ in a fourth period following the third period. In this case, other target object OBJ, which is different from the third target object OBJ on which the end effector 4 performs the predetermined process, of the plurality of target objects OBJ may be regarded as the target object OBJ that is not the process performed object, on which the robot 1 performs the predetermined process in the third period, (alternatively, the non-target object) in the third period. Similarly, other target object OBJ, which is different from the fourth target object OBJ on which the end effector 4 performs the predetermined process, of the plurality of target objects OBJ may be regarded as the target object OBJ that is not the process performed object, on which the robot 1 performs the predetermined process in the fourth period, (alternatively, the non-target object) in the fourth period. Note that each of the third target object OBJ and the fourth target object OBJ may be different target objects OBJ of the plurality of target objects OBJ captured by the imaging apparatus 21.

In a case where the control apparatus 3 acquires the image data IMG_3D, the three-dimensional position data generation unit 311 generates three-dimensional position data WSD based on the acquired image data IMG_3D each time the control apparatus 3 acquires the image data IMG_3D (a step S2). Furthermore, the three-dimensional position data generation unit 311 outputs the generated three-dimensional position data WSD to the position pose calculation unit 312 However, in a case where the control apparatus 3 does not acquire the image data IMG_3D, the three-dimensional position data generation unit 311 may not generate the three-dimensional position data WSD. Namely, the control apparatus 3 may not perform an operation at the step S2.

Note that the control apparatus 3 may generate the three-dimensional position data WSD based on each of a part of the plurality of image data IMG_3D generated by the imaging apparatus 22. The control apparatus 3 may generate the three-dimensional position data WSD without using other part of the plurality of image data IMG_3D generated by the imaging apparatus 22.

The three-dimensional position data WSD is data that indicates a three-dimensional position of the target object OBJ captured in the image data IMG_3D. For example, the three-dimensional position data WSD may be data that indicates a three-dimensional position of at least a part of a surface of the target object OBJ. Especially, the three-dimensional position data WSD is data that indicates a three-dimensional position of each of a plurality of points of the target object OBJ. For example, the three-dimensional position data WSD may be data that indicates a three-dimensional position of each of the plurality of points on the surface of the target object OBJ. For example, the three-dimensional position data WSD may be data that indicates a three-dimensional position of each of the plurality of points, which correspond to a plurality of parts of the surface of the target object OBJ, respectively. Note that the three-dimensional position of the target object OBJ may mean at least one of the three-dimensional position of at least a part of the surface of the target object OBJ, the three-dimensional position of each of the plurality of points of the target object OBJ, the three-dimensional position of each of the plurality of points of the surface of the target object OBJ, and the three-dimensional position of each of the plurality of points, which correspond to the plurality of parts of the surface of the target object OBJ, respectively, in the below-described description in a case where there is no specific notation.

Specifically, as described above, the target object OBJ on which the projection pattern is projected is captured in the image indicated by the image data IMG_3D. In this case, the projection pattern in the image indicated by the image data IMG_3D reflects a three-dimensional shape of at least a part of the surface of the target object OBJ on which the projection pattern is projected. A shape of the projection pattern captured in the image indicated by the image data IMG_3D reflects the three-dimensional shape of at least a part of the surface of the target object OBJ on which the projection pattern is projected. Therefore, the three-dimensional position data generation unit 311 may calculate the three-dimensional shape of at least a part of the surface of the target object OBJ based on the projection pattern captured in the image indicated by the image data IMG_3D. The three-dimensional shape of at least a part of the surface of target object OBJ substantially indicates the three-dimensional position of each of the plurality of points of the target object OBJ. This is because each of the plurality of points of the target object OBJ is included in the surface of the target object OBJ. Therefore, a processing for calculating the three-dimensional shape of at least a part of the surface of the target object OBJ may be considered to be substantially equivalent to a processing for calculating the three-dimensional position of each of the plurality of points of the target object OBJ. Therefore, the three-dimensional position data generation unit 311 can generate the three-dimensional position data WSD based on the image data IMG_3D.

Incidentally, considering that each of the plurality of points of the target object OBJ is included in the surface of the target object OBJ, the three-dimensional position data WSD indicating the three-dimensional position of each of the plurality of points of the target object OBJ may be considered to be substantially equivalent to three-dimensional shape data indicating the three-dimensional shape of at least a part of the target object OBJ (especially, the three-dimensional shape of at least a part of the surface of the target object OBJ).

In order to generate the three-dimensional position data WSD, the three-dimensional position data generation unit 311 may calculate parallax by performing a matching for each part (for example, each pixel) between the images indicated by the two image data included in the image data IMG_3D, respectively. Specifically, in this matching, the three-dimensional position data generation unit 311 may calculate the parallax by performing the matching for each part of the projection pattern included in the images indicated by the two image data, respectively (namely, each part between the projection patterns included in the images, respectively). The three-dimensional position data generation unit 311 may calculate the three-dimensional position of each of the plurality of points of the target object OBJ by using a well-known method based on a principle of triangulation using the calculated parallax. As a result, the three-dimensional position data WSD indicating the three-dimensional position of each of the plurality of points of the target object OBJ is generated. In this case, a calculation accuracy of the parallax is higher in a case where the matching for each part between images in which the projection pattern is included (namely, for each part between the projection patterns) is performed, compared to a case where the matching for each part between images in which the projection pattern is not included is performed. Therefore, an accuracy of the generated three-dimensional position data WSD (namely, a calculation accuracy of the three-dimensional position of each of the plurality of points of the target object OBJ) is higher.

The three-dimensional position data WSD may be any data as long as it can indicate the three-dimensional position of each of the plurality of points of the target object OBJ. Namely, the three-dimensional position data WSD may be any data that directly or indirectly indicates the three-dimensional position of each of the plurality of points of the target object OBJ. For example, the three-dimensional position data WSD may include coordinate information indicating the three-dimensional position of each of the plurality of points of the target object OBJ. For example, the three-dimensional position data WSD may include information indicating the three-dimensional shape of at least a part of the target object OBJ.

Depth image data is one example of the three-dimensional position data WSD. The depth image data is image data in which depth information is associated with each pixel of a depth image indicated by the depth image data in addition to or instead of brightness information. The depth information is information that indicates a distance between each part of the target object OBJ captured in each pixel and the imaging apparatus 22 (namely, a depth). The distance between each part of the target object OBJ captured in each pixel and the imaging apparatus 22 (namely, the depth) can be calculated from the parallax described above. Note that the depth image data may be image data in which the brightness information of each pixel indicates the depth of each part of the target object OBJ (namely, the distance between each part of the target object OBJ and the imaging apparatus 22). The three-dimensional position data generation unit 311 may calculate the distance between the imaging apparatus 22 and each part of the target object OBJ captured in the image indicated by the image data IMG_3D based on the projection pattern captured in the image indicated by the image data IMG_3D, and associates, as the depth information, the calculated distance to each pixel of the image indicated by the image data IMG_3D to generate the depth image.

Point cloud data is another example of the three-dimensional position data WSD. The point cloud data is data indicating a set of points, each of which corresponds to each part of the target object OBJ captured in the image indicated by the image data IMG_3D, in a three-dimensional space. The three-dimensional position data generation unit 311 may generate the point cloud data based on the depth image data and a camera parameter of the imaging apparatus 22. Note that an example in which the point cloud data is used as the three-dimensional position data WSD will be described in the below-described description.

As described above, in a case where not only the target object OBJ on which the robot 1 performs the predetermined process but also other object that is different from the target object OBJ is included in the imaging range (the field of view) of the imaging apparatus 22, the image data IMG_3D indicates the image in which both the target object OBJ and the other object are captured. In this case, the three-dimensional position data WSD may be data indicating not only the three-dimensional position of the target object OBJ captured in the image data IMG_3D but also a three-dimensional position of the other object captured in the image data IMG_3D. Namely, the three-dimensional position data WSD may include data indicating a three-dimensional position of each of a plurality of points of the other object imaged by the imaging apparatus 22. Even in this case, the three-dimensional position data WSD may be considered to be the data indicating the three-dimensional position of each of the plurality of points of the target object OBJ as long as the three-dimensional position data WSD includes the data indicating the three-dimensional position of the target object OBJ. This is because the fact remains that the three-dimensional position data WSD includes the data indicating the three-dimensional position of the target object OBJ even in a case where the three-dimensional position data WSD includes the data indicating the three-dimensional position of the other object.

Then, the position pose calculation unit 312 calculates at least one of the position and the pose of the target object OBJ based on at least one of the image data IMG_2D acquired at the step S1 and the three-dimensional position data WSD generated at the step S2 (a step S3). As a result, the position pose calculation unit 312 generates position pose data POI indicating at least one of the position and the pose of the target object OBJ (the step S3). The position pose data POI may include position data indicating the position of the target object OBJ. The position pose data POI may include pose data indicating the pose of the target object OBJ, in addition to or instead of the position data indicating the position of the target object OBJ. Namely, the position-attitude data POI may include at least one of the position data and the pose data.

Note that the image data IMG_2D that is usable to generate the position pose data POI corresponds to an imaged result by the imaging apparatus 21. Similarly, the three-dimensional position data WSD that is usable to generate the position pose data POI corresponds to an imaged result by the imaging apparatus 22. Therefore, the position pose calculation unit 312 may be considered to calculate the position pose data POI based on at least one of the imaged result by the imaging apparatus 21 and the imaged result by the imaging apparatus 22. Namely, the position pose calculation unit 312 may be considered to calculate the position pose data POI based on the imaged result by the imaging system 2. Moreover, even in the below-described description, the processing (the operation) based on the image data IMG_2D may be considered to be equivalent to the processing (the operation) based on the imaged result by the imaging apparatus 21 (namely, the imaged result by the imaging system 2). The processing (the operation) based on the image data IMG_3D may be considered to be equivalent to the processing (the operation) based on the imaged result by the imaging apparatus 22 (namely, the imaged result by the imaging system 2). The processing (the operation) based on the three-dimensional position data WSD generated from the image data IMG_3D may be considered to be equivalent to the processing (the operation) based on the imaged result by the imaging apparatus 22 (namely, the imaged result by the imaging system 2).

At the step S3, the position pose calculation unit 312 calculates at least one of the position and the pose of the target object OBJ in the global coordinate system. Namely, the position pose calculation unit 312 generates the position pose data POI indicating at least one of the position and the pose of the target object OBJ in the global coordinate system. For example, the robot control apparatus 13 may control the robot arm 12 so that the end effector 4 is positioned at a desired position in the global coordinate system. The global coordinate system is a coordinate system that is defined by an X-axis(GL), a Y-axis(GL) and a Z-axis(GL) that are orthogonal to one another. The X-axis(GL) may be an axis along a horizontal plane. The Y-axis(GL) may be an axis along the horizontal plane. The Z-axis(GL) may be an axis orthogonal to the horizontal plane. The Z-axis(GL) may be an axis extending along a gravity direction. Note that an X-axis, a Y-axis, and a Z-axis illustrated in FIG. 2 may be the X-axis(GL), the Y-axis(GL), and the Z-axis(GL), respectively. Note that an origin of the global coordinate system may not be an origin of the X-axis(GL), the Y-axis(GL), and the Z-axis(GL) illustrated in FIG. 2. For example, the origin of the global coordinate system may be set to any position of the base 11 in FIG. 2. For example, the origin of the global coordinate system may be set to any position of the support surface S. For example, the origin of the global coordinate system may be set to any position of a contact surface of the base 11 relative to the support surface S (for example, a center or a center of gravity of the contact surface).

The position pose calculation unit 312 may calculate, as the position of the target object OBJ in the global coordinate system, at least one of a position Tx(GL) of the target object OBJ in a X-axis direction(GL) parallel to the X-axis(GL), a position Ty(GL) of the target object OBJ in a Y-axis direction(GL) parallel to the Y-axis(GL), a position Tz(GL) of the target object OBJ in a Z-axis direction(GL) parallel to the Z-axis(GL). The position pose calculation unit 312 may calculate, as the pose of the target object OBJ in the global coordinate system, a rotational amount Rx(GL) of the target object OBJ around the X-axis(GL), a rotational amount Ry(GL) of the target object OBJ around the Y-axis(GL), and a rotational amount Rz(GL) of the target object OBJ around the Z-axis(GL). This is because the rotational amount Rx(GL) of the target object OBJ around the X-axis(GL), the rotational amount Ry(GL) of the target object OBJ around the Y-axis(GL), and the rotational amount Rz(GL) of the target object OBJ around the Z-axis(GL) are equivalent to a parameter representing the pose of the target object OBJ around the X-axis(GL), a parameter representing the pose of the target object OBJ around the Y-axis(GL), and a parameter representing the pose of the target object OBJ around the Z-axis(GL), respectively. Therefore, in the below-described description, the rotational amount Rx(GL) of the target object OBJ around the X-axis(GL), the rotational amount Ry(GL) of the target object OBJ around the Y-axis(GL), and the rotational amount Rz(GL) of the target object OBJ around the Z-axis(GL) are referred to as the pose RX(GL) of the target object OBJ around the X-axis(GL), the pose RY(GL) of the target object OBJ around the Y-axis(GL), and the pose Rz(GL) of the target object OBJ around the Z-axis(GL), respectively.

Note that the pose Rx(GL) of the target object OBJ around the X-axis(GL), the pose Ry(GL) of the target object OBJ around the Y-axis(GL), and the pose Rz(GL) of the target object OBJ around the Z-axis(GL) may be considered to represent a position of the target object OBJ in a rotational direction around the X-axis(GL), a position of the target object OBJ in a rotational direction around the Y-axis(GL), and a position of the target object OBJ in a rotational direction around the Z-axis(GL), respectively. Namely, each of the pose Rx(GL) of the target object OBJ around the X-axis(GL), the pose Ry(GL) of the target object OBJ around the Y-axis(GL), and the pose Rz(GL) of the target object OBJ around the Z-axis(GL) may be regarded as a parameter representing the position of the target object OBJ.

Thus, the position pose calculation unit 312 may calculates at least one of the position Tx(GL), the position Ty(GL), the position Tz(GL), the pose Rx(GL), the pose Ry(GL), and the pose Rz(GL), as at least one of the position and the pose of the target object OBJ in the global coordinate system, at the step S3 in FIG. 4.

At the step S3 in FIG. 4, the position pose calculation unit 312 may calculate at least one of the position and the pose of the target object OBJ by performing a matching processing using at least one of the image data IMG_2D and the three-dimensional position data WSD. In the below-described description, an example in which the position pose calculation unit 312 calculate at least one of the position and the pose of the target object OBJ by performing the matching processing using the three-dimensional position data WSD will be described, for convenience of description. Note that the matching processing using the three-dimensional position data WSD is referred to as a 3D matching processing in the below-described description.

Specifically, the position pose calculation unit 312 may perform the 3D matching processing using the three-dimensional position data WSD and three-dimensional model data WMD indicating a three-dimensional model that is a reference for the target object OBJ. In this case, the 3D matching processing may be regarded as a matching processing using the point cloud indicated by the three-dimensional position data WSD and a three-dimensional model indicated by the three-dimensional model data. Note that the 3D matching processing itself may be the same as an existing matching processing. For example, the position pose calculation unit 312 may perform the 3D matching processing by using a known method including at least one of a RANSAC (Random Sample Consensus), a SIFT (Scale-Invariant Feature Transform), a ICP (Iterative Closest Point), and a DSO (Direct Sparse Odometry) may be used, for example

The three-dimensional model based on the three-dimensional position data WSD may include a point cloud model that is a three-dimensional model indicating a three-dimensional shape of the target object OBJ by using a point cloud indicated by the three-dimensional position data WSD. The three-dimensional model based on the three-dimensional position data WSD may include a polygon model or a mesh model that is generated by connecting the plurality of points, which are included in the point cloud indicated by the three-dimensional position data WSD, with surfaces (especially, polygonal surfaces in which each point is a vertex thereof). The three-dimensional model based on the three-dimensional position data WSD may include a solid model that is generated by connecting the plurality of points, which are included in the point cloud indicated by the three-dimensional position data WSD, with smooth surfaces.

The three-dimensional model data WMD is data indicating a template model TM3 that is a three-dimensional model of the target object OBJ. Namely, the three-dimensional model data WMD is data indicating the template model TM3 having a standard three-dimensional shape of the target object OBJ. The template model may be a CAD model of the target object OBJ. The template model may be a three-dimensional model having a shape that is the same as the three-dimensional shape of the target object OBJ acquired by measuring the three-dimensional shape of the actual target object OBJ in advance. The template model may be a polygon model, a mesh model, or a solid model. The three-dimensional model data WMD may be point cloud data indicating the template model TM3 of the target object OBJ. The three-dimensional model data WMD may be polygon model data, mesh model data, or solid model data generated from the point cloud data. Note that the actual target object OBJ that is measured in advance to generate the three-dimensional model data WMD may be a standard or good target object OBJ.

In this case, the position pose calculation unit 312 may perform, on the three-dimensional position data WSD, the 3D matching processing (in other words, a template matching processing) that using the template model TM3 indicated by the three-dimensional model data WMD as a template. Specifically, the position pose calculation unit 312 may translate, scale and / or rotate the template model TM3 in the 3D imaging coordinate system so that a feature part (for example, at least one of a feature point and an edge) of the template model TM3 indicated by the three-dimensional model data WMD is closer to (typically, matches) a feature part of the target object OBJ whose three-dimensional position is indicated by the three-dimensional position data WSD (for example, a point cloud corresponding to the target object OBJ indicated by the three-dimensional position data WSD, or a three-dimensional model (for example, a point cloud model) reflecting the actual three-dimensional position of the target object OBJ). Namely, the position pose calculation unit 312 may change a positional relationship between a coordinate system of the three-dimensional model data WMD (for example, a coordinate system of the CAD model) and the 3D imaging coordinate system so that the feature part of the target object OBJ whose three-dimensional position is indicated by the three-dimensional position data WSD (for example, the point cloud corresponding to the target object OBJ indicated by the three-dimensional position data WSD, or the three-dimensional model (for example, the point cloud model) reflecting the actual three-dimensional position of the target object OBJ) is closer to (typically, matches) the feature part of the template model TM3 indicated by the three-dimensional model data WMD. As a result, the position pose calculation unit 312 can determine the positional relationship between the coordinate system of the three-dimensional model data WMD and the 3D imaging coordinate system. Then, the position pose calculation unit 312 may calculate at least one of the position and the pose of the target object OBJ in the 3D imaging coordinate system from at least one of the position and the pose of the target object OBJ in the coordinate system of the three-dimensional model data WMD based on the positional relationship between the coordinate system of the three-dimensional model data WMD and the 3D imaging coordinate system.

Then, the position pose calculation unit 312 transform at least one of the position and the pose of the target object OBJ in the 3D imaging coordinate system to at least one of the position and the pose of the target object OBJ in the robot coordinate system based on a transformation matrix for transforming a three-dimensional coordinate in one of the robot coordinate system and the 3D imaging coordinate system to a three-dimensional coordinate in the other one of the robot coordinate system and the 3D imaging coordinate system. In a case where the robot coordinate system is used as the global coordinate system, at least one of the position and the pose of the target object OBJ in the robot coordinate system corresponds to at least one of the position and the pose of the target object OBJ in the global coordinate system. However, in a case where the coordinate system that is different from the robot coordinate system is used as the global coordinate system, the position pose calculation unit 312 may calculate at least one of the position and the pose of the target object OBJ in the global coordinate system from at least one of the position and the pose of the target object OBJ in the robot coordinate system based on a transformation matrix for transforming a three-dimensional coordinate in one of the robot coordinate system and the global coordinate system to a three-dimensional coordinate in the other one of the robot coordinate system and the global coordinate system.

In making the feature part of the three-dimensional model indicated by the three-dimensional model data WMD be closer to the feature part of the target object OBJ whose three-dimensional position is indicated by the three-dimensional position data WSD, the position pose calculation unit 312 may calculates a matching similarity that is a degree of similarity between the three-dimensional model of the target object OBJ indicated by the three-dimensional model data WMD and the target object OBJ whose three-dimensional position is indicated by the three-dimensional position data WSD (for example, the point cloud of the target object OBJ). Note that the matching similarity, which is the similarity between the three-dimensional model of the target object OBJ indicated by the three-dimensional model data WMD and the target object OBJ whose three-dimensional position is indicated by the three-dimensional position data WSD (for example, the point cloud of the target object OBJ), may be simply referred to as the matching similarity of the target object OBJ. The position pose calculation unit 312 may translate, scale, and / or rotate the three-dimensional model indicated by the three-dimensional model data WMD to maximize the matching similarity. Note that the matching similarity may be considered to be equivalent to a correlation degree that indicates a correlation between the three-dimensional model indicated by the three-dimensional model data WMD and the target object OBJ whose three-dimensional position is indicated by the three-dimensional position data WSD. Note that it can be said that the correlation degree is an index value that indicates the correlation between the three-dimensional model indicated by the three-dimensional model data WMD and the target object OBJ whose three-dimensional position is indicated by the three-dimensional position data WSD. Note that the matching similarity may be referred to as a matching score.

In a case where the target object OBJ whose calculated matching similarity is higher than a predetermined matching determination threshold value is detected by the 3D matching processing, the position pose calculation unit 312 may select this target object OBJ as one target object OBJ on which the end effector 4 should perform the predetermined process (namely, the process performed object). On the other hand, in a case where the target object OBJ whose calculated matching similarity is lower than the predetermined matching determination threshold value is detected by the 3D matching processing, the position pose calculation unit 312 may not select this target object OBJ as one target object OBJ on which the end effector 4 should perform the predetermined process (namely, the process performed object).

Depending on the three-dimensional position data WSD, there is a possibility that the three-dimensional position data WSD indicates the position of each of the plurality of target objects OBJ. For example, in a case where the plurality of workpieces W are placed on the placing apparatus T in the disordered or ordered manner, there is a possibility that the imaging apparatus 22 images the plurality of workpieces W and generates the image data IMG_3D in which the plurality of workpieces W are captured as the plurality of target objects OBJ. For example, in a case where the plurality of workpieces W are contained in the container (the container box) CB, which is one example of the placing apparatus T, in the disordered or ordered manner, there is a possibility that the imaging apparatus 22 images the plurality of workpieces W and generates the image data IMG_3D in which the plurality of workpieces W are captured as the plurality of target objects OBJ. As a result, there is a possibility that the position pose calculation unit 312 generates the three-dimensional position data WSD that indicates the position of each of the plurality of target objects OBJ. In this case, the position pose calculation unit 312 may perform the above-described 3D matching processing on each of the plurality of target objects OBJ. For example, the position pose calculation unit 312 may sequentially perform the 3D matching processing on the plurality of target objects OBJ. Alternatively, the position pose calculation unit 312 may perform a plurality of 3D matching processing, which are for the plurality of target objects OBJ, respectively, simultaneously in parallel. Then, the position pose calculation unit 312 may select one target object OBJ, whose matching similarity is higher than the matching determination threshold value and whose matching similarity is maximum, from among the plurality of target objects OBJ as the process performed object on which the end effector 4 should perform the predetermined process. Alternatively, the position pose calculation unit 312 may select one target object OBJ, whose matching similarity is higher than the matching determination threshold value and whose matching similarity is the N-th (wherein, N is a constant value representing an integer that is equal to or larger than 2) highest, from among the plurality of target objects OBJ as the process performed object on which the end effector 4 should perform the predetermined process. Alternatively, the position pose calculation unit 312 may select one target object OBJ, which corresponds to the matching similarity higher than the matching determination threshold value, from among the plurality of target objects OBJ as the process performed object. Alternatively, the position pose calculation unit 312 may select one target object OBJ, which corresponds to the matching similarity higher than the matching determination threshold value and which is the closest to the end effector 4, from among the plurality of target objects OBJ as the process performed object. Alternatively, for example, in a case where the plurality of target objects OBJ are contained in the container CB (the placing apparatus T) (for example, in a case where the plurality of objects are randomly stacked), the position pose calculation unit 312 may select one target object OBJ, whose matching similarity is higher than the matching determination threshold value and whose Z coordinate along the Z-axis is the greatest (which is positioned at the highest position), from among the plurality of target objects OBJ as the process performed object. Note that the Z-coordinate of each of the plurality of target objects OBJ may be the Z-position along the Z-axis of the global coordinate system of the that is calculated by the above-described 3D matching processing. Alternatively, the position pose calculation unit 312 may select one target object OBJ, whose matching similarity is higher than the matching determination threshold value and on which the end effector 4 can perform the predetermined process, from among the plurality of target objects OBJ as the process performed object.

However, in a case where the end effector 4 can simultaneously perform the predetermined process on two or more target objects OBJ, the position pose calculation unit 312 may select each of at least two of the plurality of target objects OBJ as the process performed objects. Namely, the position pose calculation unit 312 may select at least two process performed objects on which the end effector 4 should perform the predetermined process simultaneously. Note that an example in which the position pose calculation unit 312 selects one target object OBJ of the plurality of target objects OBJ as the process performed object will be described in the below-described description for convenience of description.

Note that the position pose calculation unit 312 may calculate the matching similarities of the plurality of target objects OBJ, then select one target object OBJ on which the end effector 4 should perform the predetermined process based on the matching similarities of the plurality of target objects OBJ, and then calculate at least one of the position and the pose of the selected one target object OBJ. In this case, the position pose calculation unit 312 may not calculate the position and the pose of other target object OBJ that is not selected as one target object OBJ on which the end effector 4 should perform the predetermined process. Alternatively, since at least one of the position and the pose of the target object OBJ is calculated as a result of the 3D matching processing as described above, the position pose calculation unit 312 may be considered to calculate the above-described matching similarity together with at least one of the position and the pose of the target object OBJ. In this case, the position pose calculation unit 312 may calculate the matching similarities of the plurality of target objects OBJ together with at least one of the position and the pose of each of the plurality of target objects OBJ, and then select one target object OBJ on which the end effector 4 should perform the predetermined process based on the matching similarities of the plurality of target objects OBJ. Alternatively, the position pose calculation unit 312 may calculate at least one of the positions and poses of the plurality of target objects OBJ, then calculate the matching similarities of the plurality of target objects OBJ, and then select one target object OBJ on which the end effector 4 should perform the predetermined process based on the calculated matching similarities.

However, at the step S3 in FIG. 4, the position pose calculation unit 312 may calculate at least one of the position and the pose of the target object OBJ by performing a matching processing using the image data IMG_2D, in addition to or instead of performing the 3D matching processing using the three-dimensional position data WSD. Note that the matching processing using the image data IMG_2D is referred to as a 2D matching processing in the below-described description.

Specifically, the position pose calculation unit 312 may perform the 2D matching processing using the image data IMG_2D (the two-dimensional position data) and two-dimensional model data indicating a two-dimensional model that is a reference for the target object OBJ. Specifically, the position pose calculation unit 312 may perform, as the 2D matching processing, an object detection processing for detecting the target object OBJ indicated by a template image in the image indicated by the image data IMG_2D by using the two-dimensional model indicated by the two-dimensional model data as the template image. In other words, the position pose calculation unit 312 may perform, as the matching processing, the object detection processing for detecting the target object OBJ in the image indicated by the image data IMG_2D by detecting a similar image part that is similar to the template image in the image indicated by the image data IMG_2D. Note that the 2D matching processing (in this case, the object detection processing) itself may be the same as an existing matching processing. For example, the position pose calculation unit 312 may perform the 2D matching processing by using a known method such as a SIFT (Scale-Invariant Feature Transform) or a SURF (Speed-Upped Robust Feature).

The two-dimensional model data may be data based on the three-dimensional model data of the target object OBJ. Here, the two-dimensional model data may be generated from CAD (Computer Aided Design) model data of the target object OBJ, or may be generated from model data (data indicating a polygon model or a mesh model) of the target object OBJ generated based on a pre-measurement result using a known three-dimensional shape measurement apparatus or the imaging apparatus 22. For example, the two-dimensional model data may be two-dimensional image data representing at least a part of a two-dimensional model of the target object OBJ that is generated by virtually projecting at least a part of the three-dimensional model indicated by the three-dimensional model data of the target object OBJ on a virtual plane. For example, the two-dimensional model data may be two-dimensional image data representing at least a part of an edge of the two-dimensional model of the target object OBJ that is generated by virtually projecting at least a part of the three-dimensional model indicated by the three-dimensional model data of the target object OBJ on the virtual plane. Note that the two-dimensional model data may not be the data based on the three-dimensional model data of the target object OBJ. For example, the two-dimensional model data may be image data IMG_2D generated by the imaging apparatus 21 imaging the target object OBJ in advance. For example, the two-dimensional model data may be a feature part on the image indicated by the image data IMG_2D generated by the imaging apparatus 21 imaging the target object OBJ in advance. For example, the feature part on the image indicated by the image data IMG_2D may be at least one of a feature point and an edge of the target object OBJ captured in the image indicated by the image data IMG_2D. Note that the two-dimensional model may be regarded as a model of at least a part of the edge of the target object OBJ (an edge model) in a case where the feature part indicated by the image data IMG_2D includes the edge of the target object OBJ. The feature part on the image indicated by the image data IMG_2D may be at least one of at least one of a plurality of feature points of the target object OBJ captured in the image indicated by the image data IMG_2D and at least partial edge of the edges of the target object OBJ. Note that the feature part on the image indicated by the image data IMG_2D may be detected by a known image processing.

The position pose calculation unit 312 may translate, scale and / or rotate the two-dimensional model of the target object OBJ included in the template image so that a feature part (for example, at least one of a feature point and an edge) of the two-dimensional model of the target object included in the template image is closer to (typically, matches) a feature part of the target object OBJ captured in the image indicated by the image data IMG_2D. As a result, the position pose calculation unit 312 can determine a positional relationship between the coordinate system of the two-dimensional model data and the 2D imaging coordinate system. Then, the position pose calculation unit 312 may calculate at least one of the position and the pose of the target object OBJ in the 2D imaging coordinate system from at least one of the position and the pose of the target object OBJ in the coordinate system of the two-dimensional model data based on the positional relationship between the coordinate system of the two-dimensional model data WMD and the 2D imaging coordinate system.

Then, the position pose calculation unit 312 transform at least one of the position and the pose of the target object OBJ in the 2D imaging coordinate system to at least one of the position and the pose of the target object OBJ in the robot coordinate system based on a transformation matrix for transforming a three-dimensional coordinate in one of the robot coordinate system and the 2D imaging coordinate system to a three-dimensional coordinate in the other one of the robot coordinate system and the 2D imaging coordinate system. In a case where the robot coordinate system is used as the global coordinate system, at least one of the position and the pose of the target object OBJ in the robot coordinate system corresponds to at least one of the position and the pose of the target object OBJ in the global coordinate system. However, in a case where the coordinate system that is different from the robot coordinate system is used as the global coordinate system, the position pose calculation unit 312 may calculate at least one of the position and the pose of the target object OBJ in the global coordinate system from at least one of the position and the pose of the target object OBJ in the robot coordinate system based on a transformation matrix for transforming a three-dimensional coordinate in one of the robot coordinate system and the global coordinate system to a three-dimensional coordinate in the other one of the robot coordinate system and the global coordinate system.

In a case where 2D matching processing is performed, the position pose calculation unit 312 may calculate a matching similarity, as in a case where the 3D matching processing is performed. The matching similarity calculated in the 2D matching processing is a similarity between the template image (namely, the two-dimensional model of the target object OBJ) and the image indicated by the image data IMG_2D (especially, an image part with which the target object OBJ in the template image is aligned). Note that the matching similarity, which is the similarity between the template image (namely, the two-dimensional model of the target object OBJ) and the image indicated by the image data IMG_2D (especially, the image part with which the target object OBJ in the template image is aligned), may be simply referred to as the matching similarity of the target object OBJ in the below-described description. Note that a usage of the matching similarity calculated in the 2D matching processing may be the same as a usage of the matching similarity calculated in the 3D matching processing, and therefore, a detailed description thereof is omitted.

In a case where the 2D matching processing is performed, the position pose calculation unit 312 may perform the 2D matching processing sequentially or in parallel on the plurality of target objects OBJ captured in the image indicated by the image data IMG_2D, as in a case where the 3D matching processing is performed. Then, the position pose calculation unit 312 may select at least one of the plurality of target objects OBJ as the process performed object, as in a case where the 3D matching processing is performed. In this case, the position pose calculation unit 312 may select at least one of the plurality of target objects OBJ as the process performed object based on the matching similarity. In this case, the position pose calculation unit 312 may select at least one of the plurality of target objects OBJ as the process performed object based on the matching similarity. Note that the step S2 in FIG. 4 may be omitted in a case where the position pose calculation unit 312 calculates at least one of the position and the pose of the target object OBJ by performing the matching processing using the image data IMG_2D instead of performing the 3D matching processing using the three-dimensional position data WSD at the step S3 in FIG. 4.

Alternatively, at the step S3 in FIG. 4, the position pose calculation unit 312 may calculate at least one of the position and the pose of the target object OBJ by performing the matching processing using both the three-dimensional position data WSD and the image data IMG_2D, in addition to or instead of performing at least one of the 3D matching processing using the three-dimensional position data WSD and the 2D matching processing using the image data IMG_2D.

For example, the position pose calculation unit 312 may calculate at least one of the position and the pose of the target object OBJ in the global coordinate system from a part of the position and the pose of the target object OBJ in the 2D imaging coordinate system calculated based on the image data IMG_2D and a part of the position and the pose of the target object OBJ in the 3D imaging coordinate system calculated based on the image data IMG_3D. For example, the position pose calculation unit 312 may set at least one of an initial position and an initial pose of the three-dimensional model (the template model TM3) used for the 3D matching processing based on at least one of the position and the pose of the target object OBJ in the 2D imaging coordinate system calculated based on the image data IMG_2D, and then calculate at least one of the position and the pose of the target object OBJ in the 3D imaging coordinate system by performing the 3D matching processing using the three-dimensional model positioned at the set initial position and / or positioned with the set initial the pose, and then calculate at least one of the position and the pose of the target object OBJ in the global coordinate system from at least one of the position and the pose of the target object OBJ in the 3D imaging coordinate system.

In a case where at least one of the position and the pose of the target object OBJ is calculated by using both the image data IMG_2D and the three-dimensional position data WSD, the position pose calculation unit 312 may select one target object OBJ, which satisfies a condition that a sum or a product of the matching similarity calculated by the 2D matching processing (it is referred to as a 2D matching similarity in the below-described description) and the matching similarity calculated by the 3D matching processing (it is referred to as a 3D matching similarity in the below-described description) is maximum, as one target object OBJ on which the end effector 4 should perform the predetermined process. The position pose calculation unit 312 may select one target object OBJ, which satisfies a condition that the 2D matching similarity is higher than the matching determination threshold value and the 2D matching similarity is maximum, as one target object OBJ on which the end effector 4 should perform the predetermined process. The position pose calculation unit 312 may select one target object OBJ, which satisfies a condition that the 3D matching similarity is higher than the matching determination threshold value and the 3D matching similarity is maximum, as one target object OBJ on which the end effector 4 should perform the predetermined process. The position pose calculation unit 312 may select one target object OBJ, which satisfies a condition that both the 2D matching similarity and the 3D matching similarity are higher than the matching determination threshold value, as one target object OBJ on which the end effector 4 should perform the predetermined process. The position pose calculation unit 312 may select one target object OBJ, which satisfies a condition that both the 2D matching similarity and the 3D matching similarity are higher than the matching determination threshold value and which is the closest to the end effector 4, as one target object OBJ on which the end effector 4 should perform the predetermined process. The position pose calculation unit 312 may select one target object OBJ, which satisfies a condition that both the 2D matching similarity and the 3D matching similarity are higher than the matching determination threshold value and whose Z coordinate along the Z-axis is the greatest (which is positioned at the highest position), as one target object OBJ on which the end effector 4 should perform the predetermined process.

Note that the control apparatus 3 may not acquire the image data IMG_2D at the step S1 in a case where the position pose calculation unit 312 performs the matching processing using the three-dimensional position data WSD and does not perform the matching processing using the image data IMG_2D. The imaging apparatus 21 may not image the target object OBJ in a case where the control apparatus 3 does not acquire the image data IMG_2D. The imaging system 2 may not include the imaging apparatus 21 in a case where the control apparatus 3 does not acquire the image data IMG_2D.

The control apparatus 3 may not acquire the image data IMG_3D at the step S1 in a case where the position pose calculation unit 312 performs the matching processing using the image data IMG_2D and does not perform the matching processing using the three-dimensional position data WSD. The imaging apparatus 22 may not image the target object OBJ in a case where the control apparatus 3 does not acquire the image data IMG_3D. The imaging system 2 may not include the imaging apparatus 22 in a case where the control apparatus 3 does not acquire the image data IMG_3D. The control apparatus 3 may not include the three-dimensional position data generation unit 311 in a case where the control apparatus 3 does not acquire the image data IMG_3D.

Note that an example in which the position pose calculation unit 312 performs the 3D matching processing at the step S3 in FIG. 4 will be described in the below-described description.

Then, the signal generation unit 313 determines whether or not a predetermined computing result condition, which is related to a result of a position pose computing (a position pose computing processing) that is performed by the position pose calculation unit 312 to generate the position pose data POI at the step S3 in FIG. 4, is satisfied (a step S41). Note that the position pose computing that is performed to generate the position pose data POI is a computing that includes the above-described matching processing, for example.

In the present example embodiment, an example in which a condition that the result of the position pose computing (the position pose computing processing) is good (a computing result good condition) is used as the computing result condition. In this case, the signal generation unit 313 may determine whether or not the computing result condition (the computing result good condition) is satisfied by determining whether or not the result of the position pose computing is good. The signal generation unit 313 may determine that the computing result condition (the computing result good condition) is satisfied in a case where the result of the position pose computing is good. The signal generation unit 313 may determine that the computing result condition (the computing result good condition) is not satisfied in a case where the result of the position pose computing is not good.

signal generation unit 313may determine whether or not the result of the position pose computing is good by determining whether or not there is the target object OBJ on which the end effector 4 can perform the predetermined process by using the result of the position pose computing. The signal generation unit 313 may determine whether or not the result of the position pose computing is good by determining whether or not there is the target object OBJ on which the end effector 4 cannot perform the predetermined process by using the result of the position pose computing, in addition to or instead of determining whether or not there is the target object OBJ on which the end effector 4 can perform the predetermined process by using the result of the position pose computing. The reason for this is described below.

The robot control signal is generated by using the result of the position pose computing (namely, information including the result of the matching processing, for example, information including the position pose data POI), and therefore, there is a possibility that the control apparatus 3 cannot generate the proper robot control signal in a case where the result of the position pose computing is not good. As a result, there is a possibility that the end effector 4 cannot perform the predetermined process on the target object OBJ, because the proper robot control signal is not generated. There is a possibility that there is the target objects OBJ on which the end effector 4 cannot perform the predetermined process by using the result of the position pose computing. Therefore, in a case where the end effector 4 cannot perform the predetermined process on the target object OBJ, there is a possibility that the result of the position pose computing is not good. Therefore, an existence of the target object OBJ on which the end effector 4 cannot perform the predetermined process by using the result of the position pose computing may be used as one reason for determining that the result of the position pose computing is not good. On the other hand, in a case where the result of the position pose computing is good, there is a possibility that the control apparatus 3 can generate the proper robot control signal. As a result, it is likely that the end effector 4 can perform the predetermined process on the target object OBJ because the proper robot control signal can be generated. Namely, it is likely that there is the target object OBJ on which the end effector 4 can perform the predetermined process by using the result of the position pose computing. Therefore, in a case where the end effector 4 can perform the predetermined process on the target object OBJ, it is likely that the result of the position pose computing is good. Therefore, the existence of the target object OBJ on which the end effector 4 can perform the predetermined process by using the result of the position pose computing may be used as one reason for determining that the result of the position pose computing is good.

As a first example, the signal generation unit 313 may determine that the result of the position pose computing is good in a case where the result of the position pose computing indicates that there is at least one target object OBJ on which the end effector 4 can perform the predetermined process. On the other hand, the control apparatus 3 may determine that the result of the position pose computing is not good in a case where the result of the position pose computing indicates that there is no target object OBJ on the end effector 4 can perform the predetermined process.

As a second example, the signal generation unit 313 may determine that the result of the position pose computing is not good in a case where the result of the position pose computing indicates that there is at least one target object OBJ on which the end effector 4 cannot perform the predetermined process. More specifically, the signal generation unit 313 may determine that the result of the position pose computing is not good in a case where the result of the position pose computing indicates that the number of the target objects OBJ, on which the end effector 4 cannot perform the predetermined process, is equal to or larger than a predetermined detection threshold value. In other words, the signal generation unit 313 may determine that the result of the position pose computing is not good in a case where the result of the position pose computing indicates that the number of the target objects OBJ, on which the end effector 4 can perform the predetermined process, is smaller than the predetermined detection threshold value. On the other hand, the signal generation unit 313 may determine that the result of the position pose computing is good in a case where the result of the position pose computing indicates that the number of the target objects OBJ, on which the end effector 4 cannot perform the predetermined process, is smaller than the predetermined detection threshold value. In other words, the signal generation unit 313 may determine that the result of the position pose computing is good in a case where the result of the position pose computing indicates that the number of the target objects OBJ, on which the end effector 4 can perform the predetermined process, is equal to or larger than the predetermined detection threshold value.

Note that the predetermined detection threshold value used in the second example may be set by the user. Alternatively, the predetermined detection threshold value used in the second example may be automatically set by the control apparatus 3. Note that the first example described above may be considered to be equivalent to the second example in which the predetermined detection threshold value is set to "1".

The target object OBJ whose position pose data POI has been calculated by the position pose computing is a first example of the target object OBJ on which the end effector 4 can perform the predetermined process. On the other hand, the target object OBJ whose position pose data POI has not been calculated by the position pose computing is a first example of the target object OBJ on which the end effector 4 cannot perform the predetermined process. In this case, the control apparatus 3 may determine whether or not the computing result condition is satisfied by determining whether or not the position pose data POI of the target object OBJ has been calculated by the position pose computing.

The target object OBJ whose matching similarity, which is calculated by the position pose computing, is higher than the matching determination threshold value is a second example of the target object OBJ on which the end effector 4 can perform the predetermined process. On the other hand, the target object OBJ whose matching similarity, which is calculated by the position pose computing, is lower than the matching determination threshold value is a second example of the target object OBJ on which the end effector 4 cannot perform the predetermined process. In this case, the control apparatus 3 may determine whether or not the computing result condition is satisfied by determining whether or not the position pose computing has detected the target object OBJ whose matching similarity is higher than the matching determination threshold value. the control apparatus 3 may determine whether or not the computing result condition is satisfied by determining whether or not the position pose computing has calculated the position pose data POI of the target object OBJ whose matching similarity is higher than the matching determination threshold value.

Note that it is assumed that an accuracy of the position pose data POI (namely, a calculation accuracy of at least one of the position and the pose) of the target object OBJ is higher as the matching similarity of the target object OBJ is higher. Therefore, the position pose data POI of the target object OBJ whose matching similarity is higher than the matching determination threshold value may be considered to be equivalent to the position pose data POI whose accuracy is relatively high (specifically, is higher than a predetermined accuracy threshold value). On the other hand, the position pose data POI of the target object OBJ whose matching similarity is lower than the matching determination threshold value may be considered to be equivalent to the position pose data POI whose accuracy is relatively low (specifically, is lower than the predetermined accuracy threshold value). In this case, the matching determination threshold value may be set to a desired value by which a case where the accuracy (in other words, a reliability) of the position pose data POI of the target object OBJ is so high that the predetermined process performed by the end effector 4 on the target object OBJ succeeds from a case where the accuracy (in other words, the reliability) of the position pose data POI of the target object OBJ is so low that there is a possibility that the predetermined process performed by the end effector 4 on the target object OBJ fails based on the matching similarity.

Note that it is unlikely that the result of the position pose computing is good in a case where the position pose calculation unit 312 cannot perform the position pose computing correctly. Therefore, the signal generation unit 313 may determine whether or not the result of the position pose computing is good by determining whether or not the position pose calculation unit 312 has been able to perform the position pose computing correctly. Specifically, the signal generation unit 313 may determine that the result of the position pose computing is good in a case where the position pose calculation unit 312 has been able to perform the position pose computing correctly. On the other hand, the signal generation unit 313may determine that the result of the position pose computing is not good in a case where the position pose calculation unit 312 has been unable to perform the position pose computing correctly. A state in which the position pose calculation unit 312 cannot perform the position pose computing correctly may include a state in which the position pose calculation unit 312 cannot start the position pose computing correctly. A state in which the position pose calculation unit 312 cannot perform the position pose computing correctly may include a state in which the position pose calculation unit 312 cannot complete the position pose computing correctly. A state in which the position pose calculation unit 312 cannot perform the position pose computing correctly may include a state in which the position pose computing started by the position pose calculation unit 312 abnormally terminates.

Note that the end effector 4 does not perform the predetermined process on the target object OBJ in a case where it is determined that the computing result condition is not satisfied. Therefore, determining whether or not the computing result condition is satisfied may include determining whether or not the end effector 4 performs the predetermined process on the target object OBJ. Determining that the computing result condition is not satisfied may include determining that the end effector 4 does not perform the predetermined process on the target object OBJ.

As a result of the determination at the step S41, in a case where it is determined that the computing result condition is satisfied (namely, a result of the position pose computing is good), the signal generation unit 313 generates the robot control signal by using the position pose data POI generated at the step S3 (a step S4). For example, the signal generation unit 313 may generate the robot control signal so that the end effector 4 performs the predetermined process on the target object OBJ. For example, the signal generation unit 313 may generate the robot control signals so that the end effector 4 approaches the target object OBJ to perform the predetermined process on the target object OBJ. For example, the signal generation unit 313 may generate the robot control signal so that the positional relationship between the end effector 4 and the target object OBJ is the desired positional relationship. For example, the signal generation unit 313 may generate the robot control signal for controlling the operation of the robot arm 12 so that the positional relationship between the end effector 4 and the target object OBJ is the desired positional relationship. For example, the signal generation unit 313 may generate the robot control signal so that the end effector 4 performs the predetermined process on the target object OBJ at a timing at which the positional relationship between the end effector 4 and the target object OBJ is the desired positional relationship. For example, the signal generation unit 313 may generate the robot control signal for controlling the operation of the end effector 4 to perform the predetermined process on the target object OBJ at the timing at which the positional relationship between the end effector 4 and the target object OBJ is the desired positional relationship. Note that the robot control signal for controlling the operation of the end effector 4 may be referred to as the end effector control signal as already described above.

Note that the signal generation unit 313 may generate the robot control signal to perform a feedback control of the robot 1 by using the position pose data POI generated at the step S3. For example, the signal generation unit 313 may generate the robot control signal to perform the feedback control including a P (proportional) control by using the position pose data POI. For example, the signal generation unit 313 may generate the robot control signal to perform the feedback control including a PI (Proportional - Integral) control by using the position pose data POI. For example, the signal generation unit 313 may generate the robot control signal to perform the feedback control including a PID (Proportional - Integral - Differential) control by using the position pose data POI.

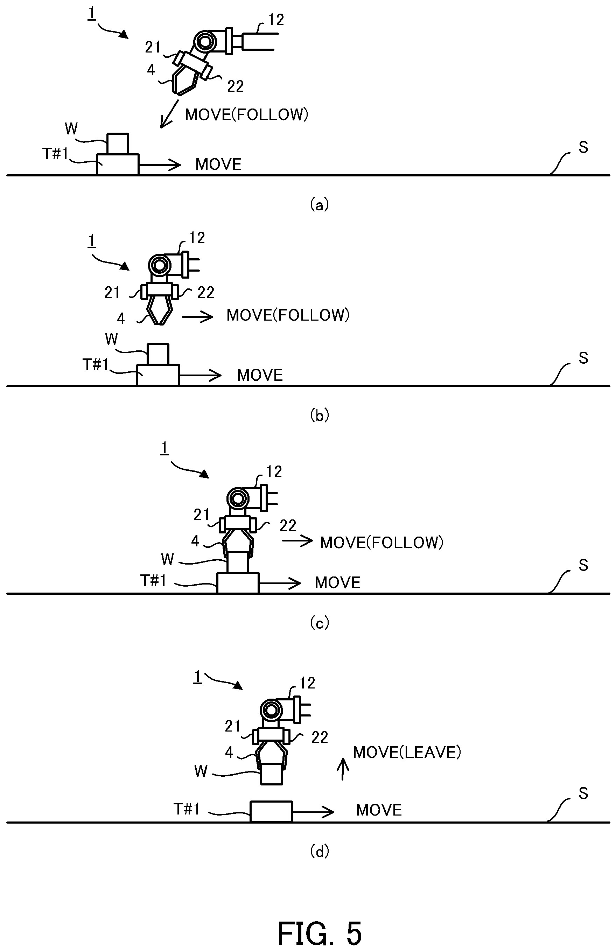

As one example, each of FIG. 5(a) to FIG. 5(d) is a side view that illustrates the positional relationship between the robot 1 and the workpiece W at a certain timing in a period during which the holding process for holding the workpiece W (namely, one example of the target object OBJ) placed on the placing apparatus T#1 such as the Automatic Guided Vehicle (AGV) moving on the support surface S is performed. In this case, the control apparatus 3 may generate the position pose data POI indicating at least one of the position and the pose of the workpiece W that is a target for the holding process (namely, one example of the target object OBJ for the holding process), and generate the robot control signal by using the generated position pose data POI. For example, as illustrated in FIG. 5(a), the signal generation unit 313 may generate the robot control signal for controlling the operation of the robot arm 12 so that the end effector 4 moves toward a space directly above the moving workpiece W. As one example, the signal generation unit 313 may generate the robot control signal for controlling the operation of the robot arm 12 so that the end effector 4 is positioned (in other words, approaches) the sequentially updated movement target position at a desired pose while sequentially updating the movement target position of the end effector 4 in accordance with the moving workpiece W based on at least one of the position and the pose of the workpiece W sequentially calculated by the position pose calculation unit 312. As illustrated in FIG. 5(b), the signal generation unit 313 may generate the robot control signal for controlling the operation of the robot arm 12 so that the end effector 4, which is positioned directly above the moving workpiece W, remains directly above the workpiece W and approaches the workpiece W until it can hold the workpiece W. As illustrated in FIG. 5(c), the signal generation unit 313 may generate the robot control signal for controlling the operations of the robot arm 12 and the end effector 4 so that the end effector 4, which is positioned at a position at which it can hold the moving workpiece W, holds the workpiece W while following the moving workpiece W. As illustrated in FIG. 5(d), the signal generation unit 313 may generate the robot control signal for controlling the operations of the robot arm 12 and end effector 4 so that the end effector 4, which has held the workpiece W, moves away from the moving placing apparatus T#1 while holding the workpiece W.

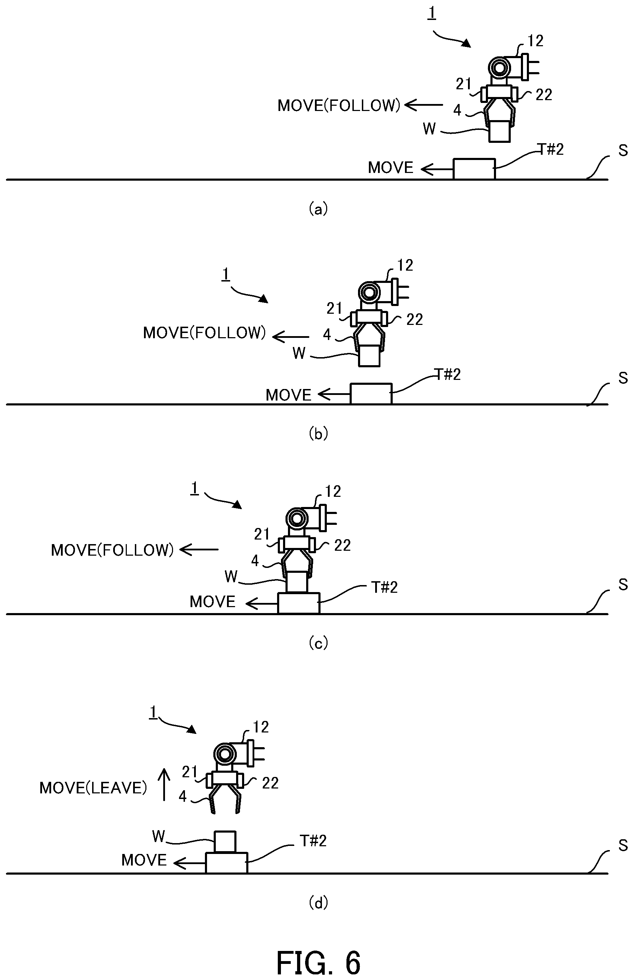

In a case where the robot 1 holds the workpiece W placed on the placing apparatus T#1 by using the end effector 4, the robot 1 may perform the releasing process for releasing the held workpiece W so that the held workpiece W is placed on a placing apparatus T#2 (namely, one example of the target object OBJ for the releasing process) that is different from the placing apparatus T#1. Namely, the robot 1 may perform the placing process for placing the workpiece W on the placing apparatus T#2 by continuously performing the holding process and the releasing process. In this case, the control apparatus 3 may generate the position pose data POI indicating at least one of the position and the pose of the placing apparatus T#2 that is a target for the releasing process, and generate the robot control signal by using the generated position pose data POI. For example, each of FIG. 6(a) to FIG. 6(d) is a side view that illustrates the positional relationship between the robot 1 and the workpiece W at a certain timing in a period during which the releasing process for placing the workpiece W on the placing apparatus T#2 moving on the support surface S is performed. In this case, as illustrated in FIG. 6(a), the signal generation unit 313 may generate the robot control signal for controlling the operation of the robot arm 12 so that the end effector 4 holding the workpiece W moves toward a space directly above the moving placing apparatus T#2 while holding the workpiece W. As one example, the signal generation unit 313 may generate the robot control signal for controlling the operation of the robot arm 12 so that the end effector 4 is positioned (in other words, approaches) the sequentially updated movement target position at a desired pose while sequentially updating the movement target position of the end effector 4 in accordance with the moving placing apparatus T#2 based on at least one of the position and the pose of the placing apparatus T#2 sequentially calculated by the position pose calculation unit 312. As illustrated in FIG. 6(b), the signal generation unit 313 may generate the robot control signal for controlling the operation of the robot arm 12 so that the end effector 4, which is positioned directly above the moving placing apparatus T#2 and is holding the workpiece W, approaches the placing apparatus T#2 until the workpiece W can be placed on the placing apparatus T#2 while positioning directly above the placing apparatus T and holding the workpiece W. As illustrated in FIG. 6(c), the signal generation unit 313 may generate the robot control signal for controlling the operations of the robot arm 12 and the end effector 4 so that the end effector 4, which is positioned at a position at which it can place the workpiece W on the placing apparatus T#2, places the workpiece W on the placing apparatus T#2 (namely, releases the held workpiece W) while following the moving placing apparatus T#2. As illustrated in FIG. 6(d), the signal generation unit 313 may generate the robot control signal for controlling the operation of the robot arm 12 so that the end effector 4, which has finished placing the workpiece W on the placing apparatus T#2, moves away from the placing apparatus T#2.

In a case where the releasing process is performed (especially, in a case where the releasing process is performed to perform the placing process), the control apparatus 3 may further generate the position pose data POI indicating at least one of the position and the pose of workpiece W (namely, one example of the target object OBJ for the releasing process), which is a second target for the releasing process, in addition to the position pose data POI indicating at least one of the position and the pose of the placing apparatus T#2 (namely, one example of the target object OBJ for the releasing process), which is the first target for the releasing process. Namely, the control apparatus 3 may generate the position pose data POI indicating at least one of the position and the pose of workpiece W held by the end effector 4 after the end effector 4 holds the workpiece W, in addition to generating the position pose data POI indicating at least one of the position and the pose of the workpiece W that is not yet held by the end effector 4 before the end effector 4 holds the workpiece W.

In a case where the releasing process is performed, the control apparatus 3 may generate the robot control signal by using the position pose data POI indicating at least one of the position and the pose of the workpiece W held by the end effector 4, in addition to the position pose data POI related to the placing apparatus T#2, before the end effector 4 releases the held workpiece W by the releasing process. Namely, the control apparatus 3 may generate the robot control signal by using the position pose data POI indicating at least one of the position and the pose of the workpiece W held by the end effector 4 in at least a part of a period during which the end effector 4 is holding the workpiece W.

For example, the signal generation unit 313 may generate the robot control signal for controlling the robot arm 12 so as to move the workpiece W held by the end effector 4 to a desired position (for example, a position at which the workpiece W should be released). In this case, the robot 1 can place the workpiece W held by the end effector 4 at the desired position of the placing apparatus T (can perform the placing process) more properly, compared to a case where the position pose data POI related to the workpiece W is not used. This is because the position of the workpiece W held by the end effector 4 is information known to the control apparatus 3. In a case where the position of the workpiece W is not the known information, there is a possibility that a technical problem that the workpiece W collides with the placing apparatus T occurs. Alternatively, in a case where the position of the workpiece W is not the known information, there is a possibility that a technical problem that the workpiece W is placed at an unintended position of the placing apparatus T (alternatively, another object) by the placing process described above occurs. Alternatively, in a case where the position of the workpiece W is not the known information, there is a possibility that a technical problem that the workpiece W is embedded into an unintended position of another object by the embedding process described above occurs. Alternatively, in a case where the position of the workpiece W is not the known information, there is a possibility that a technical problem that the workpiece W is attached to an unintended position of another object by the attachment process described above occurs. Alternatively, in a case where the position of the workpiece W is not the known information, there is a possibility that a technical problem that the workpiece W is adhered to an unintended position of another object by the adhesive process described above occurs. Alternatively, in a case where the position of the workpiece W is not the known information, there is a possibility that a technical problem that the workpiece W is welded to an unintended position of another object by the welding process described above occurs. However, in the present example embodiment, it is less likely or unlikely that these technical problems occur, because the position of the workpiece W is the known information.

Moreover, for example, the signal generation unit 313 may generate the robot control signal for controlling the end effector 4 so as to change the pose of the workpiece W held by the end effector 4 to a desired pose. In this case, the robot 1 can place the workpiece W in the desired pose on the placing apparatus T (can perform the placing process), compared to a case where the position pose data POI related to the workpiece W is not used. This is because the pose of the workpiece W held by the end effector 4 is information known to the control apparatus 3. In a case where the pose of the workpiece W is not the desired pose, there is a possibility that a technical problem that the workpiece W collides with the placing apparatus T occurs. Alternatively, in a case where the pose of the workpiece W is not the desired pose, there is a possibility that a technical problem that the workpiece W is placed at an unintended pose on the placing apparatus T (alternatively, another object) by the placing process described above occurs. Alternatively, in a case where the pose of the workpiece W is not the desired pose, there is a possibility that a technical problem that the workpiece W is embedded at an unintended pose into another object by the embedding process described above occurs. Alternatively, in a case where the pose of the workpiece W is not the desired pose, there is a possibility that a technical problem that the workpiece W is attached at an unintended pose to another object by the attachment process described above occurs. Alternatively, in a case where the pose of the workpiece W is not the desired pose, there is a possibility that a technical problem that the workpiece W is adhered at an unintended pose to another object by the adhesive process described above occurs. Alternatively, in a case where the pose of the workpiece W is not the desired pose, there is a possibility that a technical problem that the workpiece W is welded at an unintended pose to another object by the welding process described above occurs. However, in the present example embodiment, it is less likely or unlikely that these technical problems occur, because the robot 1 is controllable so that the pose of the workpiece W is the desired pose.

Note that the control apparatus 3 may generate the robot control signal by using the position pose data POI indicating at least one of the position and the pose of the workpiece W held by the end effector 4 not only in a case where the releasing process is performed but also in any case where the end effector 4 is holding the workpiece W.

At least one of the placing apparatus T#1 illustrated in FIG. 5(a) to FIG. 5(d) and the placing apparatus T#2 illustrated in FIG. 6(a) to FIG. 6(d) may not move on the support surface S. For example, each of FIG. 7(a) to FIG. 7(b)is a side view that illustrates the positional relationship between the robot 1 and the workpiece W at a certain timing in a period during which the holding process for holding the workpiece W placed on the placing apparatus T#1 that is stationary on the support surface S is performed. In this case, as illustrated in FIG. 7(a), the signal generation unit 313 may generate the robot control signal for controlling the operation of the robot arm 12 so that the end effector 4 approaches the workpiece W until it can hold the stationary workpiece W. As one example, the signal generation unit 313 may generate the robot control signal for controlling the operation of the robot arm 12 so that the end effector 4 is positioned (in other words, approaches) at a position, at which end effector 4 can hold the workpiece W whose position and / or the pose is calculated, in a desired pose based on at least one of the position and the pose of the workpiece W calculated by the position pose calculation unit 312. As illustrated in FIG. 7(b), the signal generation unit 313 may generate the robot control signal for controlling the operations of the robot arm 12 and the end effector 4 so that the end effector 4, which is positioned at a position at which it can hold the stationary workpiece W, holds the workpiece W. Furthermore, each of FIG. 7(c) to FIG. 7(e) is a side view that illustrates the positional relationship between the robot 1 and the workpiece W at a certain timing in a period during which the releasing process for placing the workpiece W on the placing apparatus T#2 that is stationary on the support surface S is performed. In this case, as illustrated in FIG. 7(c), the signal generation unit 313 may generate the robot control signal for controlling the operation of the robot arm 12 so that the end effector 4 holding the workpiece W approaches the placing apparatus T#2 until the workpiece W can be placed on the stationary placing apparatus T#2 while holding the workpiece W. As illustrated in FIG. 7(d), the signal generation unit 313 may generate the robot control signal for controlling the operations of the robot arm 12 and the end effector 4 so that the end effector 4, which is positioned at a position at which it can place the workpiece W on the placing apparatus T#2, places the workpiece W on the stationary placing apparatus T#2 (namely, releases the held workpiece W). As illustrated in FIG. 7(e), the signal generation unit 313 may generate the robot control signal for controlling the operation of the robot arm 12 so that the end effector 4, which has finished placing the workpiece W on the placing apparatus T#2, moves away from the placing apparatus T#2.

A plurality of workpieces W may be placed on the placing apparatus T#1. For example, the plurality of workpieces W may be placed on the placing apparatus T#1 so that the plurality of workpieces W are arranged on the placing apparatus T#1 in accordance with a certain manner. For example, the plurality of workpieces W may be placed on the placing apparatus T#1 so that the plurality of workpieces W are randomly stacked on the placing apparatus T#1. In this case, the robot 1 may perform the holding process for selectively holding one desired workpiece W of the plurality of workpieces W placed on the placing apparatus T#1. Especially, the robot 1 may perform the holding process for holding the plurality of workpieces W placed on the placing apparatus T#1 one by one in sequence.

Furthermore, the robot 1 may perform the releasing process for placing the plurality of workpieces W on the placing apparatus T#2. Namely, the robot 1 may perform the placing process for placing the plurality of workpieces W, which are placed on the placing apparatus T#1, on the placing apparatus T#2 (alternatively, on another placing apparatuses) one by one in sequence, by performing the holding process and the releasing process. In this case, the robot 1 may perform the releasing process for placing the plurality of workpieces W on the placing apparatus T#2 one by one in sequence so that the plurality of workpieces W are arranged on the placing apparatus T#2 in accordance with a certain manner. The robot 1 may perform the releasing process for placing the plurality of workpieces W on the placing apparatus T#2 one by one in sequence so that the plurality of workpieces W are randomly stacked on the placing apparatus T#2.

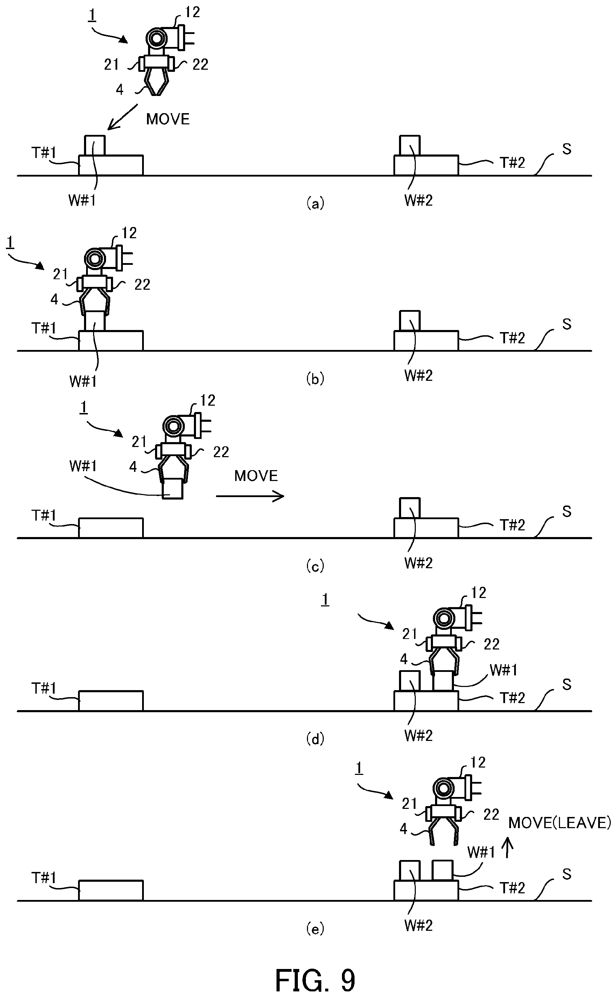

As an example, each ofFIG. 8(a) to FIG. 8(e) and FIG. 9(a) to FIG. 9(e) is a side view that illustrates the positional relationship between the robot 1 and the workpiece W at a certain timing in a period during which the holding process for holding two workpieces W#1 and W#2 placed on the placing apparatus T#1 one by one in sequence and the releasing process for placing the two workpieces W#1 and W#2 on the placing apparatus T#2 one by one in sequence is performed. In this case, as illustrated in FIG. 8(a), the signal generation unit 313 may generate the robot control signal for controlling the operation of the robot arm 12 so that the end effector 4 approaches one of the workpieces W#1 and W#2 (the workpiece W#2 in an example illustrated in FIG. 8(a)) until it can hold the workpiece W#2. As one example, the signal generation unit 313 may generate the robot control signal for controlling the operation of the robot arm 12 so that the end effector 4 is positioned (in other words, approaches) at a position, at which end effector 4 can hold the workpiece W#2 whose position and / or the pose is calculated, in a desired pose based on at least one of the position and the pose of the workpiece W#2 calculated by the position pose calculation unit 312. Then, as illustrated in FIG. 8(b), the signal generation unit 313 may generate the robot control signal for controlling the operations of the robot arm 12 and the end effector 4 so that the end effector 4, which is positioned at a position at which it can hold the workpiece W#2, holds the workpiece W#2. Then, as illustrated in FIG. 8(c), the signal generation unit 313 may generate the robot control signal for controlling the operation of the robot arm 12 so that the end effector 4 holding the workpiece W#2 approaches the placing apparatus T#2 until the workpiece W#2 can be placed on the placing apparatus T#2 while holding the workpiece W#2. As one example, the signal generation unit 313 may generate the robot control signal for controlling the operation of the robot arm 12 so that the end effector 4 is positioned (in other words, approaches) at a position, at which end effector 4 can place the workpiece W#2 on the placing apparatus T#2 whose position and / or the pose is calculated, in a desired pose based on at least one of the position and the pose of the placing apparatus T#2 calculated by the position pose calculation unit 312. Then, as illustrated in FIG. 8(d), the signal generation unit 313 may generate the robot control signal for controlling the operations of the robot arm 12 and the end effector 4 so that the end effector 4, which is positioned at a position at which it can place the workpiece W#2 on the placing apparatus T#2, places the workpiece W#2 on the placing apparatus T#2 (namely, releases the held workpiece W#2). Then, as illustrated in FIG. 8(e), the signal generation unit 313 may generate the robot control signal for controlling the operation of the robot arm 12 so that the end effector 4, which has finished placing the workpiece W#2 on the placing apparatus T#2, moves away from the placing apparatus T#2. Then, as illustrated in FIG. 9(a), the signal generation unit 313 may generate the robot control signal for controlling the operation of the robot arm 12 so that the end effector 4 approaches the other one of the workpieces W#1 and W#2 (the workpiece W#1 in an example illustrated in FIG. 9(a)) until it can hold the workpiece W#1. As one example, the signal generation unit 313 may generate the robot control signal for controlling the operation of the robot arm 12 so that the end effector 4 is positioned (in other words, approaches) at a position, at which end effector 4 can hold the workpiece W#1 whose position and / or the pose is calculated, in a desired pose based on at least one of the position and the pose of the workpiece W#1 calculated by the position pose calculation unit 312. Then, as illustrated in FIG. 9(b), the signal generation unit 313 may generate the robot control signal for controlling the operations of the robot arm 12 and the end effector 4 so that the end effector 4, which is positioned at a position at which it can hold the workpiece W#1, holds the workpiece W#1. Then, as illustrated in FIG. 9(c), the signal generation unit 313 may generate the robot control signal for controlling the operation of the robot arm 12 so that the end effector 4 holding the workpiece W#1 approaches the placing apparatus T#2 until the workpiece W#1 can be placed on the placing apparatus T#2 while holding the workpiece W#1. As one example, the signal generation unit 313 may generate the robot control signal for controlling the operation of the robot arm 12 so that the end effector 4 is positioned (in other words, approaches) at a position, at which end effector 4 can place the workpiece W#1 on the placing apparatus T#2 whose position and / or the pose is calculated, in a desired pose based on at least one of the position and the pose of the placing apparatus T#2 calculated by the position pose calculation unit 312. Then, as illustrated in FIG. 9(d), the signal generation unit 313 may generate the robot control signal for controlling the operations of the robot arm 12 and the end effector 4 so that the end effector 4, which is positioned at a position at which it can place the workpiece W#1 on the placing apparatus T#2, places the workpiece W#1 on the placing apparatus T#2 (namely, releases the held workpiece W#1). Then, as illustrated in FIG. 9(e), the signal generation unit 313 may generate the robot control signal for controlling the operation of the robot arm 12 so that the end effector 4, which has finished placing the workpiece W#1 on the placing apparatus T#2, moves away from the placing apparatus T#2.

The robot 1 may perform the holding process for holding the plurality of workpieces W placed on the placing apparatus T#1, which moves on the support surface S, one by one in sequence. Alternatively, the robot 1 may perform the holding process for holding the plurality of workpieces W placed on the placing apparatus T#1, which is stationary on the support surface S, one by one in sequence. The robot 1 may perform the releasing process for placing the plurality of workpieces W on the placing apparatus T#2, which moves on the support surface S, one by one in sequence. The robot 1 may perform the releasing process for placing the plurality of workpieces W on the placing apparatus T#2, which is stationary on the support surface S, one by one in sequence.

Again in FIG. 4, the signal generation unit 313 outputs the robot control signal generated at the step S4 to the robot 1 (especially, the robot control apparatus 13) by using the communication apparatus 33. As a result, the robot control apparatus 13 controls at least one of the operation of the robot 1 (for example, the operation of the robot arm 12) and the operation of the end effector 4 based on the robot control signal.

On the other hand, in a case where it is determined as a result of the determination at the step S41 that the computing result condition is not satisfied (namely, the result of the position pose computing is not good) (the step S41: No), the control apparatus 3 moves the imaging system 2 so that a positional relationship between the imaging system 2 and the target object OBJ changes (steps S42, S6, and S7). Note that a detail of an operation for moving the imaging system 2 will be described later, however, an overview thereof is described here. The positional relationship between the imaging system 2 and the target object OBJ may mean a positional relationship between the target object OBJ and at least one of the imaging apparatuses 21 and 22. Moving the imaging system 2 may mean moving at least one of the imaging apparatuses 21 and 22.

The positional relationship between the imaging system 2 and the target object OBJ may include a relationship between the position of the imaging system 2 and the position of the target object OBJ. Note that the position of the imaging system 2 may mean the position of at least one of the imaging apparatus 21 and 22. Therefore, the positional relationship between the imaging system 2 and the target object OBJ may include the relationship between the position of at least one of the imaging apparatuses 21 and 22 and the position of the target object OBJ. In this case, the control apparatus 3 may change the positional relationship between the imaging system 2 and the target object OBJ by moving the imaging system 2 to change the position of the imaging system 2. For example, the control apparatus 3 may change the positional relationship between the imaging system 2 and the target object OBJ from a first positional relationship to a second positional relationship by moving the imaging system 2 to change the position of the imaging system 2. Specifically, in a case where it is determined that the computing result condition is not satisfied in a situation where the positional relationship between the imaging system 2 and the target object OBJ is the first positional relationship, the control apparatus 3 may change the positional relationship between the imaging system 2 and the target object OBJ from the first positional relationship to the second positional relationship by moving the imaging system 2 so that the position of the imaging system 2 changes from a first position that corresponds to the first positional relationship to a second position that corresponds to the second positional relationship.

The positional relationship between the imaging system 2 and the target object OBJ may include a relationship between a pose (namely, a position around a rotational axis, the same applies in the below-described description) of the imaging system 2 and the pose of the target object OBJ. Note that the pose of the imaging system 2 may mean the pose of at least one of the imaging apparatus 21 and 22. Therefore, the positional relationship between the imaging system 2 and the target object OBJ may include the relationship between the pose of at least one of the imaging apparatuses 21 and 22 and the pose of the target object OBJ. In this case, the control apparatus 3 may change the positional relationship between the imaging system 2 and the target object OBJ by moving the imaging system 2 to change the pose of the imaging system 2. For example, the control apparatus 3 may change the positional relationship between the imaging system 2 and the target object OBJ from a first positional relationship to a second positional relationship by moving the imaging system 2 to change the pose of the imaging system 2. Specifically, in a case where it is determined that the computing result condition is not satisfied in a situation where the positional relationship between the imaging system 2 and the target object OBJ is the first positional relationship, the control apparatus 3 may change the positional relationship between the imaging system 2 and the target object OBJ from the first positional relationship to the second positional relationship by moving the imaging system 2 so that the pose of the imaging system 2 changes from a first pose that corresponds to the first positional relationship to a second pose that corresponds to the second positional relationship. Note that the positional relationship between the imaging system 2 and the target object OBJ may be referred to as a postural relationship between the imaging system 2 and the target object OBJ in a case where the positional relationship between the imaging system 2 and the target object OBJ indicates the relationship between the pose of at least one of the imaging apparatuses 21 and 22 and the pose of the target object OBJ. In this case, the signal generation unit 313 may change the postural relationship between the imaging system 2 and the target object OBJ from a first postural relationship to a second postural relationship by moving the imaging system 2 so that the pose of the imaging system 2 changes from the first pose that corresponds to the first positional relationship to the second pose that corresponds to the second positional relationship.

In order to move the imaging system 2, the control apparatus 3 generates the robot control signal for controlling the robot arm 12 to move the imaging system 2 so that the positional relationship between the imaging system 2 and the target object OBJ changes. Namely, the control apparatus 3 generates the robot control signal for controlling the robot arm 12 to move the imaging system 2 so that the positional relationship between the imaging system 2 and the target object OBJ changes from the first positional relationship to the second positional relationship.

Then, after the robot arm 12 moves the imaging system 2 based on the robot control signal generated by the control apparatus 3, the control apparatus 3 performs the position pose computing, which is performed to generate the position pose data POI, again. Namely, after the robot arm 12 moves the imaging system 2, the imaging system 2 images the target object OBJ again to generate at least one of the image data IMG_2D and IMG_3D again. The control apparatus 3 generates the position pose data POI by using at least one of the image data IMG_2D and IMG_3D generated again by the imaging system 2. Namely, the control apparatus 3 generates the position pose data POI by using at least one of the image data IMG_2D and IMG_3D generated again by the imaging system 2 in a situation where the positional relationship between the imaging system 2 and the target object OBJ has changed from the first positional relationship to the second positional relationship (namely, is the second positional relationship).

Here, since the imaging system 2 moves, the position and the pose of the imaging system 2 changes. Therefore, the imaging system 2 images the target object OBJ from a position, which is different from a position of the imaging system 2 before the imaging system 2 moves. Alternatively, the imaging system 2 images the target object OBJ in a pose, which is different from a pose of the imaging system 2 before the imaging system 2 moves, in addition to or instead of imaging the target object OBJ from a position, which is different from a position of the imaging system 2 before the imaging system 2 moves. Therefore, an appearance of the target object OBJ in the image indicated by each of the image data IMG_2D and IMG_3D changes. As a result, there is a possibility that it is determined based on at least one of the image data IMG_2D and IMG_3D, which is acquired after the imaging system 2 moves, that the computing result condition is not satisfied (for example, the result of the position pose computing is not good), even in a case where it has been determined based on at least one of the image data IMG_2D and IMG_3D, which is acquired before the imaging system 2 moves, that the computing result condition is not satisfied (for example, the result of the position pose computing is not good). Therefore, it is more likely that the end effector 4 can perform the predetermined process on the target object OBJ, compared to a case where the imaging system 2 does not move.

Especially, in the present example embodiment, the control apparatus 3 selectively uses two different types of movement operations as the operation for moving the imaging system 2. Specifically, in a case where it is determined at the step S41 that the computing result condition is not satisfied, the control apparatus 3 selects one of the two different types of movement operations as the operation for moving the imaging system 2 and moves the imaging system 2 by performing the selected movement operation. In the below-described description, the two different types of movement operations are referred to as a reset processing (a first movement operation) and gazing processing (a second movement operation), respectively, for convenience of description. Note that the reset processing may be referred to as a retry processing.

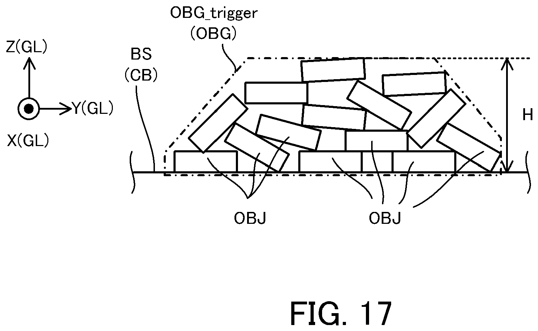

In a case where it is determined at the step S41 that the computing result condition is not satisfied (the step S41: No), the control apparatus 3 first determines whether or not a predetermined trigger condition, which is a condition for selecting the movement operation, is satisfied (a step S42), in order to select one of the reset processing or the gazing processing as the operation for moving the imaging system 2. Note that the trigger condition will be described in detail later with reference to FIG. 17 and so on, and a description thereof is omitted here.

In a case where it is determined as a result of the determination at the step S42 that the trigger condition is not satisfied (the step S42: No), the control apparatus 3 selects the reset processing as the operation for moving the imaging system 2 (a step S6). Namely, the control apparatus 3 performs the reset processing as the operation for moving the imaging system 2 (the step S6). Specifically, in order to perform the reset processing, the signal generation unit 313 of the control apparatus 3 may generate the robot control signal for controlling the robot arm 12 to move the imaging system 2. After the reset processing is performed, the control apparatus 3 may perform the position pose computing, which is performed to generate the position pose data POI, by performing the processing from the step S1 to the step S3 again.

However, in a case where it is determined that the trigger condition is not satisfied (the step S42: No), the control apparatus 3 may vibrate the container CB to move at least one of the plurality of target objects OBJ, which are contained in the container CB, in the container CB, in addition to or instead of performing the reset processing. In other words, the control apparatus 3 may vibrate the container CB to change the positions (positional relationship) of the plurality of target objects OBJ contained in the container CB, in addition to or instead of performing the reset processing. Namely, the control apparatus 3 may move the target object OBJ relative to the imaging apparatus 2, in addition to or instead of performing the reset processing that moves the imaging system 2 relative to the plurality of target objects OBJ. Then, the control apparatus 3 may perform the position pose computing, which is performed to generate the position pose data POI, by performing the processing from the step S1 to the step S3 again.

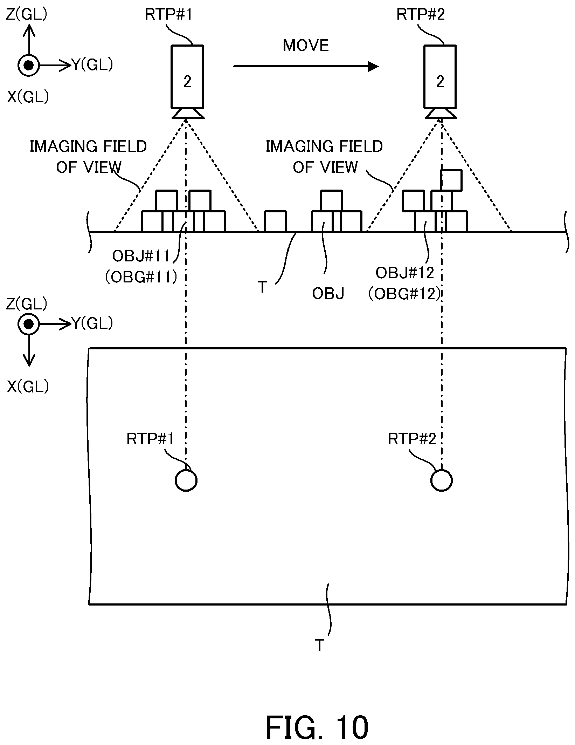

Note that the reset processing will be described in detail later with reference to FIG. 10 and so on, and a detailed description thereof is omitted here. However, an overview of the reset processing is briefly described below. The reset processing may include the operation for moving the imaging system 2 so that the imaging system 2 moves away from at least one target object OBJ that has been imaged by the imaging system 2. More specifically, the reset processing may include the operation for moving the imaging system 2 so that the imaging system 2 moves away from at least one target object OBJ, which has been captured in at least one of the image data IMG_2D and IMG_3D that is used for the position pose computing whose result has been determined not to be good (namely, for which the computing result condition has been determined not to be satisfied). As one example, in a case where it is determined that the result of the position pose computing, which is performed by using at least one of first image data IMG_2D and IMG_3D generated by the imaging system 2 imaging at least one first target object OBJ, is not good (namely, it is determined based on at least one of the first image data IMG_2D and IMG_3D that the computing result condition is not satisfied), the reset processing may include an operation for moving the imaging system 2 so that the imaging system 2 moves away from at least one first target object OBJ. As another example, in a case where it is determined that the result of the position pose computing, which is performed by using at least one of first image data IMG_2D and IMG_3D generated by the imaging system 2 imaging a first target object group including a plurality of first target objects OBJ included in the imaging field of view of the imaging system 2, is not good (namely, it is determined based on at least one of the first image data IMG_2D and IMG_3D that the computing result condition is not satisfied), the reset processing may include an operation for moving the imaging system 2 so that the imaging system 2 moves away from the first target object group. In this case, the reset processing may include the operation for moving the imaging system 2 so that the imaging system 2 moves away from all of the plurality of first target objects OBJ included in the first target object group. Alternatively, the reset processing may include the operation for moving the imaging system 2 so that the imaging system 2 moves away from a part of the plurality of first target objects OBJ included in the first target object group.

On the other hand, in a case where it is determined as a result of the determination at the step S42 that the trigger condition is satisfied (the step S42: Yes), the control apparatus 3 selects the gazing processing as the operation for moving the imaging system 2 (a step S7). Namely, the control apparatus 3 performs the gazing processing as the operation for moving the imaging system 2 (the step S6).

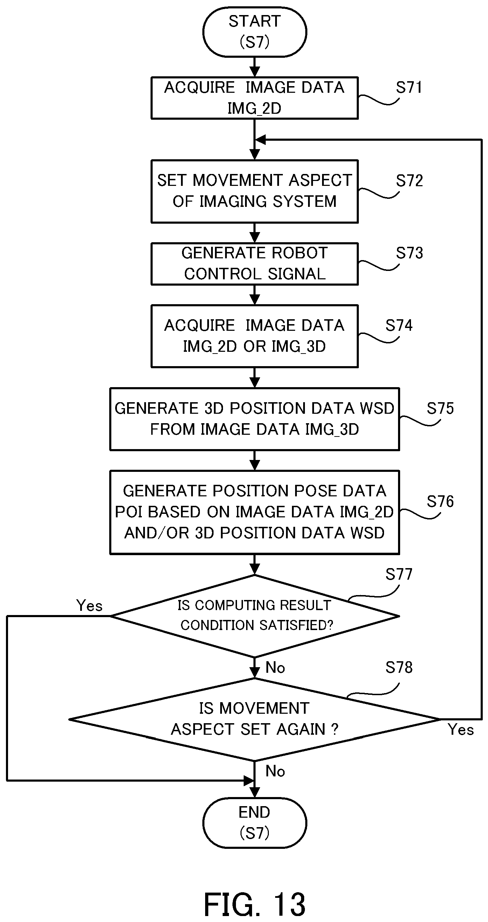

Note that the gazing processing will be described in detail later with reference to FIG. 13 and so on, and a detailed description thereof is omitted here. However, an overview of the gazing processing is briefly described below. The gazing processing may include the operation for moving the imaging system 2 to change at least one of the position and the pose of the imaging system 2 relative to at least one target object OBJ that has been imaged by the imaging system 2. Especially, the gazing process may include the operation for moving the imaging system 2 to change at least one of the position and the pose of the imaging system 2 relative to one target object OBJ, on which it is determined that the end effector 4 cannot perform the predetermined process, of the plurality of target objects OBJ that has been imaged by the imaging system 2. For example, in a case where it is determined that the result of the position pose computing, which is performed by using at least one of second image data IMG_2D and IMG_3D generated by the imaging system 2 imaging a second target object group including a plurality of second target objects OBJ included in the imaging field of view of the imaging system 2, is not good (namely, it is determined based on at least one of the second image data IMG_2D and IMG_3D that the computing result condition is not satisfied), it is likely that each of the plurality of second target object OBJ has been imaged by the imaging system 2 but it is the target object OBJ on which the end effector 4 cannot perform the predetermined process. In this case, the gazing processing may include an operation for moving the imaging system 2 to change at least one of the position and the pose of the imaging system 2 relative to one of the plurality of second target objects OBJ on which the end effector 4 cannot perform the predetermined process. Note that it can be said that the gazing processing includes an operation for moving the imaging system 2 to change at least one of the position and the pose of the imaging system 2 based on one target object OBJ. Note that it can be said that the gazing processing includes an operation for moving the imaging system 2 to change at least one of the position and the pose of the imaging system 2 around one target object OBJ.

Furthermore, as described in detail later with reference to FIG. 13, the control apparatus 3 performs, as a part of the gazing processing, the position pose computing, which is for generating the position pose data POI of the target object OBJ, by performing the operation that is the same as that from the step S1 to the step S41 and determines whether or not the computing result condition is satisfied, after moving the imaging system 2. In a case where it is determined that the computing result condition is satisfied by the gazing processing (a step S8: Yes), the control apparatus 3 generates the robot control signal based on the position pose data POI generated by the gazing processing (the step S8). On the other hand, in a case where it is determined that the computing result condition is not satisfied by the gazing processing (the step S8: No), the control apparatus 3 ends the robot control processing illustrated in FIG. 4.

However, in a case where it is determined that the computing result condition is not satisfied by the gazing processing, the control apparatus 3 may perform the reset processing instead of ending the robot control processing illustrated in FIG. 4. In this case, the control apparatus 3 may alternately repeat the reset processing and the gazing processing. Note that the control apparatus 3 may end the robot control processing illustrated in FIG. 4 in a case where it continues to be determined that the computing result condition is not satisfied even after the reset processing and the gazing processing have been alternately repeated a predetermined number of times or more (the step S41 and the step S8: No). In this case, the control apparatus 3 may output an error message to notify the user that the computing result condition is not satisfied even after the reset processing and the gazing processing have been alternately repeated a predetermined number of times or more (for example, there is no target object OBJ on which the end effector 4 can perform the predetermined process, or there is at least one target object OBJ on which the end effector 4 cannot perform the predetermined process).

Then, the control apparatus 3 repeats a series of processing from the step S1 to the step S8 until it is determined that the robot control processing is ended (a step S9). Namely, the control apparatus 3 continues to acquire at least one of the image data IMG_2D and IMG_3D from the imaging apparatuses 21 and 22 even in a period during which the operation of at least one of the robot arm 12 and the end effector 4 is controlled based on the robot control signal. For example, in a case where the end effector 4 performs the holding process as illustrated in FIG. 5(a) to FIG. 5(d), the control apparatus 3 may repeat a series of processing from the step S1 to the step S4 until the end effector 4 holds the workpiece W (furthermore, until the end effector 4 holding the workpiece W moves away from the placing apparatus T#1). For example, in a case where the end effector 4 performs the releasing process as illustrated in FIG. 6(a) to FIG. 6(d), the control apparatus 3 may repeat a series of processing from the step S1 to the step S4 until the end effector 4 places the workpiece W on the placing apparatus T#2 (furthermore, until the end effector 4, which has finished placing the workpiece W on the placing apparatus T#2, moves away from the placing apparatus T#2).

However, one target object OBJ (namely, the process performed object) on which the end effector 4 should perform the predetermined process has already been selected at a timing at which the robot control signal is generated at the step S5. Therefore, in a case where a series of processing from the step S1 to the step S8 is repeated, the control apparatus 3 may not perform the determination at the step S41 until the end effector 4 completes the predetermined process on the process performed object. Namely, the control apparatus 3 may not determine whether or not the computing result condition is satisfied. In this case, the control apparatus 3 may repeat the processing from the step S1 to the step S3 and the step S5.

Furthermore, in a case where the plurality of target objects OBJ, whose matching similarities are higher than the predetermined matching determination threshold value, are detected at the step S3, the control apparatus 3 may not perform the determination at the step S41 until the end effector 4 completes the predetermined process on the plurality of these target objects OBJ. For example, in a case where a first the target object OBJ and a second the target object OBJ are detected at the step S3 as the target objects OBJ whose matching similarities are higher than the predetermined matching determination threshold value, the control apparatus 3 may repeat the processing from the step S1 to the step S3 and the step S5 until the end effector 4 completes the predetermined process on the first target object OBJ, and then, repeat the processing from the step S1 to the step S3 and the step S5 until the end effector 4 completes the predetermined process on the second target object OBJ. Then, after the target object OBJ whose matching similarity is higher than the predetermined matching determination threshold value is newly detected at the step S3, the control apparatus 3 may perform the processing at the step S41.

In this case, since the operation of at least one of the robot arm 12 and the end effector 4 is controlled based on the robot control signal as described above, each of the imaging apparatuses 21 and 22 may image the target object OBJ during a relative movement between the target object OBJ and the imaging apparatuses 21 and 22. For example, each of the imaging apparatuses 21 and 22 may image the target object OBJ in a period during which the target object OBJ is stationary while the imaging apparatuses 21 and 22 are moving. For example, each of the imaging apparatuses 21 and 22 may image the target object OBJ in a period during which the target object OBJ is moving while the imaging apparatuses 21 and 22 are stationary. For example, each of the imaging apparatuses 21 and 22 may image the target object OBJ in a period during which the target object OBJ is moving while the imaging apparatuses 21 and 22 are moving. Namely, the control apparatus 3 may continue to perform the robot control processing illustrated in FIG. 4 during the relative movement between the target object OBJ and the imaging apparatuses 21 and 22 (namely, in a period during which at least one of the imaging apparatuses 21 and 22 and the target object OBJ is moving). As a result, the control apparatus 3 can newly calculate (namely, update) the position pose data POI indicating at least one of the position and the pose of the target object OBJ based on the newly acquired image data IMG_2D and IMG_3D even in the period during which the operation of the robot 1 is controlled based on the robot control signal.

However, each of the imaging apparatuses 21 and 22 may image the target object OBJ in a period during which the target object OBJ is stationary and the imaging apparatuses 21 and 22 are stationary. The control apparatus 3 may perform the robot control processing illustrated in FIG. 4 in a period during which the imaging apparatuses 21 and 22 and the target object OBJ are stationary.

### (2-2) Reset Processing

Next, the reset processing at the step S6 in FIG. 4 will be described. As described above, the reset processing may include the operation for moving the imaging system 2 so that the imaging system 2 moves away from at least one target object OBJ (for example, the first target object group) that has been imaged by the imaging system 2. Especially, the reset processing may include the operation for moving the imaging system 2 so that the imaging system 2 moves away from at least one target object OBJ that has been imaged last by the imaging system 2 before the reset processing is performed. For example, the reset processing may include the operation for moving the imaging system 2 so that the imaging system 2 moves away from at least one target object OBJ that has been imaged last by the imaging system 2 to perform the position pose computing at the step S3 in FIG. 4 before the reset processing is performed.

In the present example embodiment, in order to move the imaging system 2 so that the imaging system 2 moves away from at least one target object OBJ that has been imaged by the imaging system 2, the control apparatus 3 may perform the reset processing for moving the imaging system 2 so that the position of the imaging system 2 changes to a reset position RTP, which is set as a position at which the imaging system 2 images the target object OBJ, and / or the pose of the imaging system 2 changes to a reset pose RTA, which is set as the pose in which the imaging system 2 images the target object OBJ. Namely, the signal generation unit 313 of the control apparatus 3 may generate the robot control signal for controlling the robot arm 12 so that the position of the imaging system 2 changes to the reset position RTP and / or the pose of the imaging system 2 changes to the reset pose RTA.

In order to change the position of the imaging system 2 to the reset position RTP, the signal generation unit 313 may generate the robot control signal for controlling the robot arm 12 to translationally move the imaging system 2 along a predetermined translational axis. In order to change the pose of the imaging system 2 to the reset pose RTA, the signal generation unit 313 may generate the robot control signal for controlling the robot arm 12 to translationally move the imaging system 2 along a predetermined translational axis. For example, in order to change the position of the imaging system 2 to the reset position RTP, the signal generation unit 313 may generate the robot control signal for controlling the robot arm 12 to translationally move the imaging system 2 along at least one of the X-axis(GL) of the global coordinate system, the Y-axis(GL) of the global coordinate system, and the Z-axis(GL) of the global coordinate system. For example, in order to change the pose of the imaging system 2 to the reset pose RTA, the signal generation unit 313 may generate the robot control signal for controlling the robot arm 12 to translationally move the imaging system 2 along at least one of the X-axis(GL) of the global coordinate system, the Y-axis(GL) of the global coordinate system, and the Z-axis(GL) of the global coordinate system.. However, the signal generation unit 313 may generate the robot control signal for controlling the robot arm 12 to translationally move the imaging system 2 along at least one of the X-axis, the Y-axis, and the Z-axis of the coordinate system that is different from the global coordinate system.

In order to change the position of the imaging system 2 to the reset position RTP, the signal generation unit 313 may generate the robot control signal for controlling the robot arm 12 to rotationally move the imaging system 2 around a predetermined rotational axis. In order to change the pose of the imaging system 2 to the reset pose RTA, the signal generation unit 313 may generate the robot control signal for controlling the robot arm 12 to rotationally move the imaging system 2 around a predetermined rotational axis. For example, in order to change the position of the imaging system 2 to the reset position RTP, the signal generation unit 313 may generate the robot control signal for controlling the robot arm 12 to rotationally move the imaging system 2 around at least one of the rotational axis along the X-axis(GL) of the global coordinate system, the rotational axis along the Y-axis(GL) of the global coordinate system, and the rotational axis along the Z-axis(GL) of the global coordinate system. For example, in order to change the pose of the imaging system 2 to reset pose RTA, signal generation unit 313 may generate the robot control signal for controlling robot arm 12 to rotationally move the imaging system 2 around at least one of the rotational axis along the X-axis(GL) of the global coordinate system, the rotational axis along the Y-axis(GL) of the global coordinate system, and the rotational axis along the Z-axis(GL) of the global coordinate system.. However, the signal generation unit 313 may generate the robot control signal for controlling the robot arm 12 to rotationally move the imaging system 2 around at least one of the rotational axis along the X-axis of the coordinate system that is different from the global coordinate system, the rotational axis along the Y-axis of the coordinate system that is different from the global coordinate system, and the rotational axis along the Z-axis of the coordinate system that is different from the global coordinate system.

Note that a movement distance of the translationally moving imaging system 2 (namely, a translational movement distance) may be longer than a movement distance of the rotationally moving imaging system 2 (namely, a rotational movement distance) in a case where the imaging system 2 rotationally moves and translationally moves by the reset processing. In this case, the reset processing may be referred to as a translational movement processing. However, the movement distance of the translationally moving imaging system 2 may not be longer than the movement distance of the rotationally moving imaging system 2. Note that only the translational movement of the imaging system 2 may be performed by the reset processing.

After the position of the imaging system 2 changes to the reset position RTP and / or the pose of the imaging system 2 changes to the reset pose RTA, the control apparatus 3 performs the position pose computing, which is for generating the position pose data POI of the target object OBJ, by performing the operation from the step S1 to the step S3 in FIG. 4 as already described with reference to FIG. 4. In this case, since the position of the imaging system 2 changes to the reset position RTP and / or the pose of the imaging system 2 changes to the reset pose RTA, it is likely that the imaging system 2 image the target object OBJ, which is different from the target object OBJ that has been imaged by the imaging system 2 before the position of the imaging system 2 changes to the reset position RTP and / or the pose of the imaging system 2 changes to the reset pose RTA. Especially, it is likely that the imaging system 2 image the plurality of target objects OBJ including the target object OBJ, which is different from the target object OBJ that has been imaged by the imaging system 2 before the position of the imaging system 2 changes to the reset position RTP and / or the pose of the imaging system 2 changes to the reset pose RTA. Namely, a candidate of the target object OBJ on which the end effector 4 performs the predetermined process changes. Therefore, it is more likely that there is the target object OBJ on which the end effector 4 can perform the predetermined process, compared to a case where the imaging system 2 does not move. Naley, it is more likely to be determined that the computing result condition is satisfied. As a result, it is more likely that the end effector 4 can perform the predetermined process on at least one target object OBJ.

Considering that it is likely that the reset processing allows the imaging system 2 to image another target object OBJ, which is different from one target object OBJ that has been imaged previously, the reset processing may be regarded as a processing that moves the imaging system 2 to prioritize performing the predetermined process on another target object OBJ, on which the end effector 4 can easily perform the predetermined process, over keeping to try to perform the predetermined process on one target object OBJ, on which it is determined that the end effector 4 cannot perform the predetermined process.

On the other hand, there is a possibility that it is determined that the computing result condition is not satisfied (the step S41 in FIG. 4: No) even after the position of the imaging system 2 changes to the reset position RTP and / or the pose of the imaging system 2 changes to the reset pose RTA. In this case, the signal generation unit 313 may perform the reset processing again at the step S42 in FIG. 4 as long as it is determined that the trigger condition is not satisfied at the step S42 in FIG. 4 (the step S42 in FIG. 4: No). Specifically, the imaging system 2 may be moved so that the position of the imaging system 2 changes to another different reset position RTP and / or the pose of the imaging system 2 changes to another different reset pose RTA. Namely, a plurality of different reset positions RTP may be set, and a plurality of different reset poses RTA may be set. The signal generation unit 313 may generate the robot control signal for controlling the robot arm 12 so that the position of the imaging system 2 changes to another different reset position RTP and / or the pose of the imaging system 2 changes to another different reset pose RTA. In this case, it is likely that the imaging system 2 image the plurality of target objects OBJ including the target object OBJ, which is different from the target object OBJ that has been imaged by the imaging system 2 before the position of the imaging system 2 changes to another different reset position RTP and / or the pose of the imaging system 2 changes to another different reset pose RTA. Namely, the candidate of the target object OBJ on which the end effector 4 performs the predetermined process changes. Therefore, it is more likely that there is the target object OBJ on which the end effector 4 can perform the predetermined process, compared to a case where the imaging system 2 does not move. Naley, it is more likely to be determined that the computing result condition is satisfied. As a result, it is more likely that the end effector 4 can perform the predetermined process on at least one target object OBJ.

Incidentally, in a case where the plurality of reset positions RTP are set, one of the plurality of reset positions RTP may be used as an initial position of the imaging system 2 in a case where the imaging system 2 starts imaging the target object OBJ. Similarly, in a case where the plurality of reset poses RTA are set, one of the plurality of reset poses RTA may be used as an initial pose of the imaging system 2 when the imaging system 2 starts imaging the target object OBJ.

Examples of the plurality of reset positions RTP are illustrated in FIG. 10. FIG. 10 illustrates, as the examples of the plurality of reset positions RTP, a first reset position RTP#1 (for example, the initial position or a position that is different from the initial position) and a second reset position RTP#2 (for example, a position that is different from the initial position) that is different from the first reset position RTP#1. Furthermore, FIG. 10 illustrates an example in which the imaging system 2 positioned at the first reset position RTP#1 images a target object group OBG#11 that includes a plurality of target objects OBJ#11, and the imaging system 2 positioned at the second reset position RTP#2 images a target object group OBG#12 that includes a plurality of target objects OBJ#12. In this case, in a case where it is determined that the computing result condition is not satisfied (namely, the result of the position pose computing is not good) based on the imaged result of the target object group OBG#11 by the imaging system 2 positioned at the first reset position RTP#1, the control apparatus 3 may perform the reset processing for moving the imaging system 2 from the first reset position RTP#1 to the second reset position RTP#2. Namely, the control apparatus 3 may perform the reset processing for moving the imaging system 2 to change the position of the imaging system 2 from the first reset position RTP#1 to the second reset position RTP#2.

Here, as illustrated in FIG. 10, moving the imaging system 2 from the first reset position RTP#1 to the second reset position RTP#2 may be considered to be equivalent to moving the imaging system 2 so that the imaging system 2 moves away from the target object group OBG#11 that has been imaged from the first reset position RTP#1. Note that moving the imaging system 2 so that the imaging system 2 moves away from the target object group OBG#11 (namely, the imaging system 2 moves away from the target object OBJ#11) may be considered to be equivalent to moving the imaging system 2 so that the imaging field of view of the imaging system 2 moves away from the target object group OBG#11 (namely, the imaging field of view of the imaging system 2 moves away from the target object OBJ #11) as illustrated in FIG. 10.

Furthermore, as illustrated in FIG. 10, moving the imaging system 2 from the first reset position RTP#1 to the second reset position RTP#2 may be considered to be equivalent to moving the imaging system 2 so that the imaging system 2 approaches the target object group OBG#12 that can be imaged from the second reset position RTP#2. Note that moving the imaging system 2 so that the imaging system 2 approaches the target object group OBG#12 (namely, the imaging system 2 approaches the target object OBJ#12) may be considered to be equivalent to moving the imaging system 2 so that the imaging field of view of the imaging system 2 approaches the target object group OBG#12 (namely, the imaging field of view of the imaging system 2 approaches the target object OBJ #12) as illustrated in FIG. 10.

As illustrated in FIG. 10, at least one of the plurality of target objects OBJ#11 that are imaged by the imaging system 2 positioned at the first reset position RTP#1 may be different from at least one of the plurality of target objects OBJ#12 that are imaged by the imaging system 2 positioned at the second reset position RTP#2. In this case, the candidate of the target object OBJ on which the end effector 4 performs the predetermined process changes. Therefore, even in a case where it has been determined that the computing result condition is not satisfied based on the imaged result by the imaging system 2 positioned at the first reset position RTP#1, there is a possibility that it is determined that the computing result condition is satisfied based on the imaged result by the imaging system 2 positioned at the second reset position RTP#2. Note that FIG. 10 illustrates an example in which all of the plurality of target objects OBJ#11 that are imaged by the imaging system 2 positioned at the first reset position RTP#1 are different from the plurality of target objects OBJ#12 that are imaged by the imaging system 2 positioned at the second reset position RTP#2. However, a part of the plurality of target objects OBJ#11 that are imaged by the imaging system 2 positioned at the first reset position RTP#1 may be different from a part of the plurality of target objects OBJ#12 that are imaged by the imaging system 2 positioned at the second reset position RTP#2, and other part of the plurality of target objects OBJ#11 that are imaged by the imaging system 2 positioned at the first reset position RTP#1 may be the same as other part of the plurality of target objects OBJ#12 that are imaged by the imaging system 2 positioned at the second reset position RTP#2.

One reset position RTP of the plurality of reset positions RTP may be set to satisfy a condition that "a predetermined proportion of the plurality of target objects OBJ included in the imaging field of view of the imaging system 2 that has moved to the one reset position RTP is the target object OBJ that is different from the plurality of target objects OBJ included in the imaging field of view of the imaging system 2 immediately before moving to the one reset position RTP". In this case, it is more likely that the candidate of the target object OBJ on which the end effector 4 performs the predetermined process changes due to the movement of the imaging system 2. Therefore, it is more likely to be determined that there is the target object OBJ on which the end effector 4 can perform the predetermined process. Namely, it is more likely to be determined that the computing result condition is satisfied. As a result, it is more likely to be determined that the end effector 4 can perform the predetermined process on at least one target object OBJ.

In this case, the signal generation unit 313 may generate the robot control signal for moving the imaging system 2 so that a predetermined proportion of the imaging field of view of the imaging system 2 that has moved to the one reset position RTP does not overlap with the imaging field of view of the imaging system 2 immediately before moving to the one reset position RTP. As a result, the predetermined proportion of the plurality of target objects OBJ included in the imaging field of view of imaging system 2 that has moved to the one reset position RTP is the target object OBJ that is different from the plurality of target objects OBJ included in the imaging field of view of the imaging system 2 immediately before moving to the one reset position RTP.

The predetermined proportion may be equal to or larger than 50%. In this case, one reset position RTP of the plurality of reset positions RTP may be set to satisfy a condition that "at least half (namely, one-half, the same applies in the below-described description) of the plurality of target objects OBJ included in the imaging field of view of the imaging system 2 that has moved to the one reset position RTP is the target object OBJ that is different from the plurality of target objects OBJ included in the imaging field of view of the imaging system 2 immediately before moving to the one reset position RTP". In this case, it is more likely that the candidate of the target object OBJ on which the end effector 4 performs the predetermined process changes due to the movement of the imaging system 2. Therefore, it is more likely to be determined that there is the target object OBJ on which the end effector 4 can perform the predetermined process. Namely, it is more likely to be determined that the computing result condition is satisfied. As a result, it is more likely to be determined that the end effector 4 can perform the predetermined process on at least one target object OBJ.

In this case, the signal generation unit 313 may generate the robot control signal for moving the imaging system 2 so that at least half of the imaging field of view of the imaging system 2 that has moved to the one reset position RTP does not overlap with the imaging field of view of the imaging system 2 immediately before moving to the one reset position RTP. As a result, at least half of the plurality of target objects OBJ included in the imaging field of view of imaging system 2 that has moved to the one reset position RTP is the target object OBJ that is different from the plurality of target objects OBJ included in the imaging field of view of the imaging system 2 immediately before moving to the one reset position RTP.

Alternatively, the predetermined proportion may be smaller than 50%.

The predetermined proportion may be 100%. In this case, one reset position RTP of the plurality of reset positions RTP may be set to satisfy a condition that "all of the plurality of target objects OBJ included in the imaging field of view of the imaging system 2 that has moved to the one reset position RTP are the target objects OBJ that are different from the plurality of target objects OBJ included in the imaging field of view of the imaging system 2 immediately before moving to the one reset position RTP". In this case, it is much more likely that the candidate of the target object OBJ on which the end effector 4 performs the predetermined process changes due to the movement of the imaging system 2. Therefore, it is much more likely to be determined that there is the target object OBJ on which the end effector 4 can perform the predetermined process. Namely, it is much more likely to be determined that the computing result condition is satisfied. As a result, it is much more likely to be determined that the end effector 4 can perform the predetermined process on at least one target object OBJ.

In this case, the signal generation unit 313 may generate the robot control signal for moving the imaging system 2 so that the imaging field of view of the imaging system 2 that has moved to the one reset position RTP does not overlap with the imaging field of view of the imaging system 2 immediately before moving to the one reset position RTP. As a result, all of the plurality of target objects OBJ included in the imaging field of view of the imaging system 2 that has moved to the one reset position RTP are the target objects OBJ that are different from the plurality of target objects OBJ included in the imaging field of view of the imaging system 2 immediately before moving to the one reset position RTP.

The plurality of reset positions RTP may be set to satisfy a condition that "at least half of the plurality of target objects OBJ included in the imaging field of view of the imaging system 2 positioned at a first reset position RTP is the target object OBJ that is different the plurality of target objects OBJ included in the imaging field of view of imaging system 2 positioned at a second reset position RTP that is different from the first reset position RTP". In this case, the signal generation unit 313 may generate the robot control signal for moving the imaging system 2 so that at least half of the imaging field of view of the imaging system 2 positioned at the first reset position RTP does not overlap with the imaging field of view of the imaging system 2 immediately before moving to the second reset position RTP. As a result, at least half of the plurality of target objects OBJ included in the imaging field of view of the imaging system 2 positioned at the first reset position RTP is the target object OBJ that is different the plurality of target objects OBJ included in the imaging field of view of imaging system 2 positioned at the second reset position RTP. Alternatively, the plurality of reset positions RTP may be set to satisfy a condition that "all of the plurality of target objects OBJ included in the imaging field of view of the imaging system 2 positioned at the first reset position RTP are the target objects OBJ that are different the plurality of target objects OBJ included in the imaging field of view of imaging system 2 positioned at the second reset position RTP that is different from the first reset position RTP". In this case, the signal generation unit 313 may generate the robot control signal for moving the imaging system 2 so that the imaging field of view of the imaging system 2 positioned at the first reset position RTP does not overlap with the imaging field of view of the imaging system 2 immediately before moving to the second reset position RTP. As a result, all of the plurality of target objects OBJ included in the imaging field of view of the imaging system 2 positioned at the first reset position RTP are the target objects OBJ that are different the plurality of target objects OBJ included in the imaging field of view of imaging system 2 positioned at the second reset position RTP that is different from the first reset position RTP. Even in this case, it is more likely that the candidate of the target object OBJ on which the end effector 4 performs the predetermined process changes due to the movement of the imaging system 2. Therefore, it is more likely to be determined that there is the target object OBJ on which the end effector 4 can perform the predetermined process. Namely, it is more likely to be determined that the computing result condition is satisfied. As a result, it is more likely to be determined that the end effector 4 can perform the predetermined process on at least one target object OBJ.

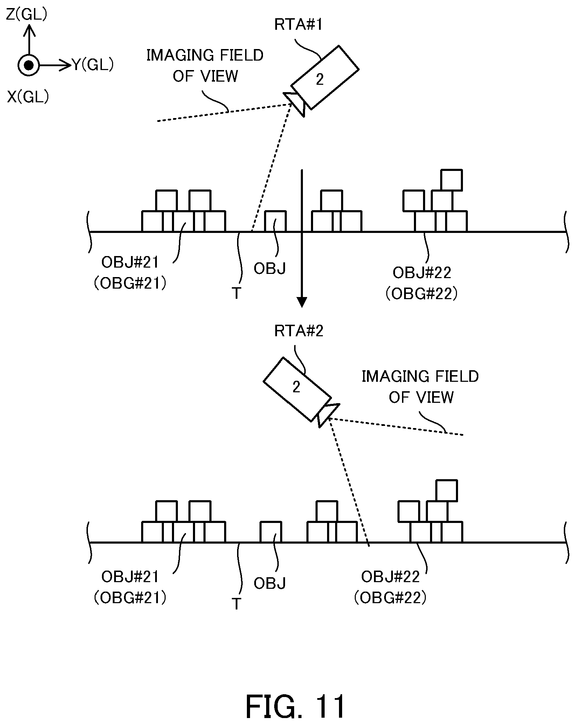

Examples of the plurality of reset poses RTA are illustrated in FIG. 11. FIG. 11 illustrates, as the examples of the plurality of reset poses RTA, a first reset pose RTA#1 (for example, an initial pose or a pose that is different from the initial pose) and a second reset pose RTA#2 (for example, a pose that is different from the initial pose) that is different from the first reset pose RTA#1. Furthermore, FIG. 11 illustrates an example in which the imaging system 2 in the first reset pose RTA#1 images a target object group OBG#21 that includes a plurality of target objects OBJ#21, and the imaging system 2 in the second reset pose RTA#2 images a target object group OBG#22 that includes a plurality of target objects OBJ#22. In this case, in a case where it is determined that the computing result condition is not satisfied based on the imaged result of the target object group OBG#21 by the imaging system 2 in the first reset pose RTA#1 (namely, the result of the position pose computing is not good), the control apparatus 3 may perform the reset processing for moving the imaging system 2 to change the pose of the imaging system 2 from the first reset pose RTA#1 to the second reset pose RTA#2.

Here, as illustrated in FIG. 11, changing the pose of the imaging system 2 from the first reset pose RTA#1 to the second reset pose RTA#2 may be considered to be equivalent to moving the imaging system 2 so that the imaging field of view of the imaging system 2 moves away from the target object group OBG#21 that has been imaged by the imaging system 2 in the first reset pose RTA#1. Note that moving the imaging system 2 so that the imaging field of view of the imaging system 2 moves away from the target object group OBG#21 (namely, the imaging field of view of the imaging system 2 moves away from the target object OBJ#21) may be considered to be equivalent to moving the imaging system 2 so that the imaging system 2 moves away from the target object group OBG#21 (namely, the imaging system 2 moves away from the target object OBJ#21) as described with reference to FIG. 10.

Furthermore, as illustrated in FIG. 11, changing the pose of the imaging system 2 from the first reset pose RTA#1 to the second reset pose RTA#2 may be considered to be equivalent to moving the imaging system 2 so that the imaging field of view of the imaging system 2 approaches the target object group OBG#22 that can be imaged by the imaging system 2 in the second reset pose RTA#2. Note that moving the imaging system 2 so that the imaging field of view of the imaging system 2 approaches the target object group OBG#22 (namely, the imaging field of view of the imaging system 2 approaches the target object OBJ#22) may be considered to be equivalent to moving the imaging system 2 so that the imaging system 2 approaches the target object group OBG#22. (namely, the imaging system 2 approaches the target object OBJ#22) as described with reference to FIG. 10.

As illustrated in FIG. 11, at least one of the plurality of target objects OBJ#21 that are imaged by the imaging system 2 in the first reset pose RTA#1 may be different from at least one of the plurality of target objects OBJ#22 that are imaged by the imaging system 2 in the second reset pose RTA#2. In this case, the candidate of the target object OBJ on which the end effector 4 performs the predetermined process changes. Therefore, even in a case where it has been determined that the computing result condition is not satisfied based on the imaged result by the imaging system 2 in the first reset pose RTA#1, there is a possibility that it is determined that the computing result condition is satisfied based on the imaged result by the imaging system 2 in the second reset pose RTA#2. Note that FIG. 11 illustrates an example in which all of the plurality of target objects OBJ#21 that are imaged by the imaging system 2 in the first reset pose RTA#1 are different from the plurality of target objects OBJ#22 that are imaged by the imaging system 2 in the second reset pose RTA#2. However, a part of the plurality of target objects OBJ#21 that are imaged by the imaging system 2 in the first reset pose RTA#1 may be different from a part of the plurality of target objects OBJ#22 that are imaged by the imaging system 2 in the second reset pose RTA#2, and other part of the plurality of target objects OBJ#21 that are imaged by the imaging system 2 in the first reset pose RTA#1 may be the same as other part of the plurality of target objects OBJ#22 that are imaged by the imaging system 2 in the second reset pose RTA#2.

One reset pose RTA of the plurality of reset poses RTA may be set to satisfy a condition that "a predetermined proportion of the plurality of target objects OBJ included in the imaging field of view of the imaging system 2 whose pose has changed to the one reset pose RTA is the target object OBJ that is different from the plurality of target objects OBJ included in the imaging field of view of the imaging system 2 immediately before its pose changes to the one reset pose RTA". In this case, it is more likely that the candidate of the target object OBJ on which the end effector 4 performs the predetermined process changes due to the movement of the imaging system 2. Therefore, it is more likely to be determined that there is the target object OBJ on which the end effector 4 can perform the predetermined process. Namely, it is more likely to be determined that the computing result condition is satisfied. As a result, it is more likely to be determined that the end effector 4 can perform the predetermined process on at least one target object OBJ.

In this case, the signal generation unit 313 may generate the robot control signal for moving the imaging system 2 so that a predetermined proportion of the imaging field of view of the imaging system 2 whose pose has changed to the one reset pose RTA does not overlap with the imaging field of view of the imaging system 2 immediately before its pose changes to the one reset pose RTA. As a result, the predetermined proportion of the plurality of target objects OBJ included in the imaging field of view of imaging system 2 whose pose has changed to the one reset pose RTA is the target object OBJ that is different from the plurality of target objects OBJ included in the imaging field of view of the imaging system 2 immediately before its pose changes to the one reset pose RTA.

The predetermined proportion may be equal to or larger than 50%. In this case, one reset pose RTA of the plurality of reset poses RTA may be set to satisfy a condition that "at least half of the plurality of target objects OBJ included in the imaging field of view of the imaging system 2 whose pose has changed to the one reset pose RTA is the target object OBJ that is different from the plurality of target objects OBJ included in the imaging field of view of the imaging system 2 immediately before its pose changes to the one reset pose RTA". In this case, it is more likely that the candidate of the target object OBJ on which the end effector 4 performs the predetermined process changes due to the movement of the imaging system 2. Therefore, it is more likely to be determined that there is the target object OBJ on which the end effector 4 can perform the predetermined process. Namely, it is more likely to be determined that the computing result condition is satisfied. As a result, it is more likely to be determined that the end effector 4 can perform the predetermined process on at least one target object OBJ.

In this case, the signal generation unit 313 may generate the robot control signal for moving the imaging system 2 so that at least half of the imaging field of view of the imaging system 2 whose pose has changed to the one reset pose RTA does not overlap with the imaging field of view of the imaging system 2 immediately before its pose changes to the one reset pose RTA. As a result, at least half of the plurality of target objects OBJ included in the imaging field of view of imaging system 2 whose pose has changed to the one reset pose RTA is the target object OBJ that is different from the plurality of target objects OBJ included in the imaging field of view of the imaging system 2 immediately before its pose changes to the one reset pose RTA.

Alternatively, the predetermined proportion may be smaller than 50%.

The predetermined proportion may be 100%. In this case, one reset pose RTA of the plurality of reset poses RTA may be set to satisfy a condition that "all of the plurality of target objects OBJ included in the imaging field of view of the imaging system 2 whose pose has changed to the one reset pose RTA are the target objects OBJ that are different from the plurality of target objects OBJ included in the imaging field of view of the imaging system 2 immediately before its pose changes to the one reset pose RTA". In this case, it is much more likely that the candidate of the target object OBJ on which the end effector 4 performs the predetermined process changes due to the movement of the imaging system 2. Therefore, it is much more likely to be determined that there is the target object OBJ on which the end effector 4 can perform the predetermined process. Namely, it is much more likely to be determined that the computing result condition is satisfied. As a result, it is much more likely to be determined that the end effector 4 can perform the predetermined process on at least one target object OBJ.

In this case, the signal generation unit 313 may generate the robot control signal for moving the imaging system 2 so that the imaging field of view of the imaging system 2 whose pose has changed to the one reset pose RTA does not overlap with the imaging field of view of the imaging system 2 immediately before its pose changes to the one reset pose RTA. As a result, all of the plurality of target objects OBJ included in the imaging field of view of the imaging system 2 whose pose has changed to the one reset pose RTA are the target objects OBJ that are different from the plurality of target objects OBJ included in the imaging field of view of the imaging system 2 immediately before its pose changes to the one reset pose RTA.

The plurality of reset poses RTA may be set to satisfy a condition that "at least half of the plurality of target objects OBJ included in the imaging field of view of the imaging system 2 in a first reset pose RTA is the target object OBJ that is different the plurality of target objects OBJ included in the imaging field of view of imaging system 2 in a second reset pose RTA that is different from the first reset pose RTA". In this case, the signal generation unit 313 may generate the robot control signal for moving the imaging system 2 so that at least half of the imaging field of view of the imaging system 2 in the first reset pose RTA does not overlap with the imaging field of view of the imaging system 2 in the second reset pose RTA. As a result, at least half of the plurality of target objects OBJ included in the imaging field of view of the imaging system 2 in the first reset pose RTA is the target object OBJ that is different the plurality of target objects OBJ included in the imaging field of view of imaging system 2 in the second reset pose RTA. Alternatively, the plurality of reset poses RTA may be set to satisfy a condition that "all of the plurality of target objects OBJ included in the imaging field of view of the imaging system 2 in the first reset pose RTA are the target objects OBJ that are different the plurality of target objects OBJ included in the imaging field of view of imaging system 2 in the second reset pose RTA that is different from the first reset pose RTA". In this case, the signal generation unit 313 may generate the robot control signal for moving the imaging system 2 so that the imaging field of view of the imaging system 2 in the first reset pose RTA does not overlap with the imaging field of view of the imaging system 2 in the second reset pose RTA. As a result, all of the plurality of target objects OBJ included in the imaging field of view of the imaging system 2 in the first reset pose RTA are the target objects OBJ that are different the plurality of target objects OBJ included in the imaging field of view of imaging system 2 in the second reset pose RTA that is different from the first reset pose RTA. Even in this case, it is more likely that the candidate of the target object OBJ on which the end effector 4 performs the predetermined process changes due to the movement of the imaging system 2. Therefore, it is more likely to be determined that there is the target object OBJ on which the end effector 4 can perform the predetermined process. Namely, it is more likely to be determined that the computing result condition is satisfied. As a result, it is more likely to be determined that the end effector 4 can perform the predetermined process on at least one target object OBJ.

The reset position may indicate a position in the global coordinate system. The reset pose may indicate a pose in the global coordinate system. However, the reset position may indicate a position in a coordinate system (for example, the robot coordinate system) that is different from the global coordinate system. The reset pose may indicate a pose in a coordinate system (for example, the robot coordinate system) that is different from the global coordinate system.

At least one of the reset position RTP and the reset pose RTA may be set in advance before the reset processing at the step S6 in FIG. 4 is performed. For example, since the reset processing is performed in a case where it is determined that the trigger condition is not satisfied at the step S42 in FIG. 4, at least one of the reset position RTP and the reset pose RTA may be set in advance before it is determined that the trigger condition is not satisfied at the step S42 in FIG. 4. For example, since the reset processing is performed in a case where it is determined that the computing result condition is not satisfied at the step S41 in FIG. 4, at least one of the reset position RTP and the reset pose RTA may be set in advance before it is determined that the computing result condition is not satisfied at the step S41 in FIG. 4. As one example, at least one of the reset position RTP and the reset pose RTA may be generated in advance before the robot control processing illustrated in FIG. 4 is performed.

At least one of the reset position RTP and the reset pose RTA may be set by the user. In this case, the user may input, to the control apparatus 3, information indicating at least one of the reset position RTP and the reset pose RTA designated by the user as imaging position pose information indicating at least one of the position and the pose at which the imaging system 2 images the target object OBJ. The user may input, to the control apparatus 3, information indicating at least one of the reset position RTP and the reset pose RTA designated by the user as re-imaging position pose information indicating at least one of the position and the pose at which the imaging system 2 images the target object OBJ again.

Alternatively, at least one of the reset position RTP and reset pose RTA may be automatically set by the control apparatus 3 (alternatively, an apparatus that is different from the control apparatus 3). In a case where the control apparatus 3 sets at least one of the reset position RTP and the reset pose PRA, the control apparatus 3 may set at least one of the reset position RTP and the reset pose RTA based on at least one of the imaging field of view of the imaging system 2 and a size of the placing apparatus T on which the plurality of target objects OBJ are placed (for example, a size of the container CB in which the plurality of target objects OBJ are contained).

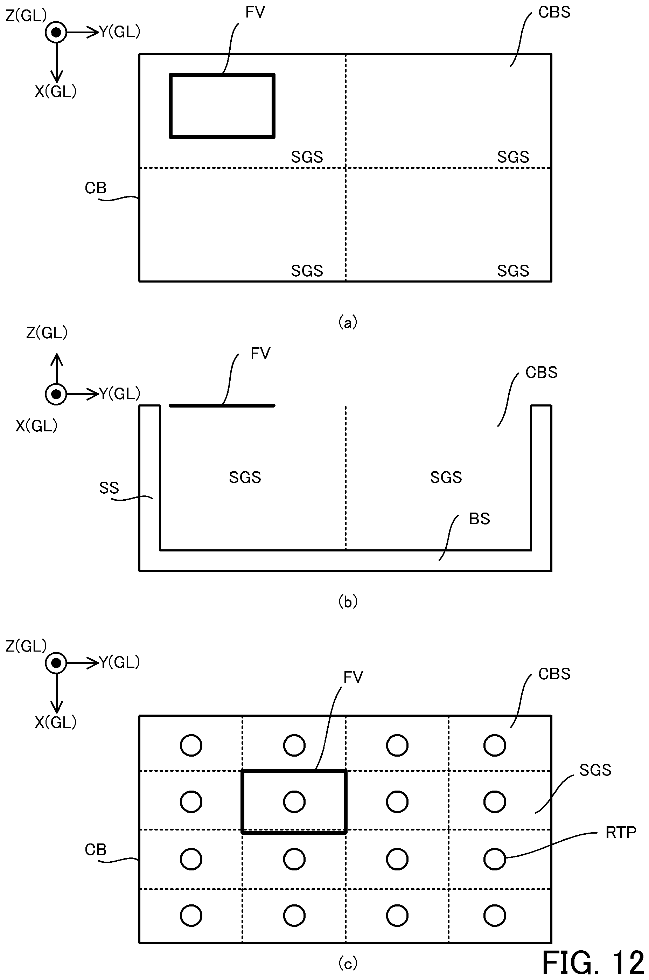

An example in which the control apparatus 3 sets the reset position RTP based on at least one of the imaging field of view of the imaging system 2 and the size of the container CB, which is one example of the placing apparatus T, on (in) which the plurality of target objects OBJ are placed (contained), is illustrated in FIG. 12(a) to FIG. 12(c). As illustrated in FIG. 12(a) to FIG. 12(b), the control apparatus 3 may set a plurality of segmentalized spaces SGS by dividing the containing space CBS in which the container CB contains the target object OBJ at equal intervals along the X-axis direction and the Y-axis direction. In a case where the container CB includes the bottom wall BS and the side wall SS as described above, the space surrounded by the bottom wall BS and the side wall SS may be used as the containing space CBS. In a case where the container CB includes the bottom wall BS but does not include the side wall SS, the space above the bottom wall BS may be used as the containing space CBS. FIG. 12(a) to FIG. 12(b) illustrate an example in which the containing space CBS is divided into four segmentalized spaces SGS. Then, the control apparatus 3 may determine whether or not the size of the segmentalized space SGS along the XY plane is larger than the size of the imaging field of view FV along the XY plane. In a case where it is determined that the size of the segmentalized space SGS along the XY plane is larger than the size of the imaging field of view FV along the XY plane, the control apparatus 3 may further divide the containing space CBS into a plurality of segmentalized spaces SGS with smaller size. In the example illustrated in FIG. 12(a) to FIG. 12(b), the size of the segmentalized space SGS along the XY plane is larger than the size of the imaging field of view FV along the XY plane. In this case, the control apparatus 3 divides the containing space CBS into a plurality of (in the example illustrated in FIG. 12(c), sixteen) segmentalized spaces SGS with smaller size as illustrated in FIG. 12(c). In a case where it is determined that the size of the segmentalized space SGS along the XY plane is smaller than the size of the imaging field of view FV along the XY plane, the control apparatus 3 may set the plurality of reset positions that correspond to the plurality of segmentalized spaces SGS, respectively. For example, the control apparatus 3 may set a center coordinate of one segmentalized space SGS in the X-axis direction as a X-coordinate of one reset position RTP corresponding to the one segmentalized space SGS. For example, the control apparatus 3 may set a center coordinate of one segmentalized space SGS in the Y-axis direction as an Y-coordinate of one reset position RTP corresponding to the one segmentalized space SGS. For example, the control apparatus 3 may set a coordinate that is away upwardly from one segmentalized space SGS in the Z-axis direction as an Z-coordinate of one reset position RTP corresponding to the one segmentalized space SGS.

The control apparatus 3 may divide the containing space CBS into the plurality of segmentalized spaces SGS so that all of the imaging field of view FV of the imaging system 2 positioned at a first reset position RTP corresponding to a first segmentalized space SGS does not overlap with the imaging field of view FV of the imaging system 2 positioned at a second reset position RTP corresponding to a second segmentalized space SGS. Alternatively, the control apparatus 3 may divide the containing space CBS into the plurality of segmentalized spaces SGS so that a predetermined proportion of the imaging field of view FV of the imaging system 2 positioned at the first reset position RTP corresponding to the first segmentalized space SGS does not overlap with the imaging field of viewFV of the imaging system 2 positioned at the second reset position RTP corresponding to the second segmentalized space SGS. The predetermined proportion may be equal to or larger than 50%.. In this case, the control apparatus 3 may divide the containing space CBS into the plurality of segmentalized spaces SGS so that at least 50% (namely, at least half) of the imaging field of view FV of the imaging system 2 positioned at the first reset position RTP corresponding to the first segmentalized space SGS does not overlap with the imaging field of view FV of the imaging system 2 positioned at the second reset position RTP corresponding to the second segmentalized space SGS. The predetermined proportion may be smaller than 50%. Note that the predetermined proportion may be set by the user or may be automatically set by the control apparatus 3.

Note that the gazing processing, which is different from the reset processing, is an operation for moving the imaging system 2 by using the imaged result by the imaging system 2 (for example, the image data IMG_2D, as described later) as described in detail later. Specifically, the gazing processing is an operation for generating the position pose data POI of the target object OBJ based on the imaged result by the imaging system 2 (for example, the image data IMG_2D as described later), and then moves the imaging system 2 based on the generated position pose data POI as described in detail later. On the other hand, the reset processing may be an operation for moving the imaging system 2 without using the imaged result by the imaging system 2 (for example, the image data IMG_2D and IMG_3D) as described above. Specifically, the reset position RTP and the reset pose RTA, which are usable as a target position and a target pose of the imaging system 2 in the reset processing, respectively, may be set without using the imaged result by the imaging system 2 as described above. In this case, the reset processing may be an operation for moving the imaging system 2 so that the position of the imaging system 2 changes to the reset position RTP, which is set without using the imaged result by the imaging system 2 and / or the pose of the imaging system 2 changes to the reset pose RTA, which is set without using the imaged result by the imaging system 2. Therefore, the reset processing may be different from the gazing processing, which uses the imaged result by the imaging system 2 to move the imaging system 2, in that it is an operation that may not use the imaged result by the imaging system 2 to move the imaging system 2.

### (2-3) Gazing Processing

### (2-3-1) Flow of Gazing Processing

Next, with reference to FIG. 13, the gazing processing (especially, a flow of the gazing processing) at the step S7 in FIG. 4 will be described. FIG. 13 is a flowchart that illustrates the flow of the gazing processing at the step S7 in FIG. 4.

As illustrated in FIG. 13, the control apparatus 3 acquires the image data IMG_2D from the imaging system 2 (a step S71). Especially, the control apparatus 3 acquires the image data IMG_2D that indicates the image including at least one target object OBJ, which is included in the latest image data IMG_3D (alternatively, the image data IMG_2D) acquired at the step S1 in FIG. 4 and on which it is determined by the position pose computing that the end effector 4 cannot perform the predetermined process (the step S71). However, as described later, the control apparatus 3 may acquire the image data IMG_3D from the imaging system 2 in addition to or instead of the image data IMG_2D at the step S71.

The image data IMG_2D (alternatively, the image data IMG_3D, the same applies in the below-described description) acquired at the step S71 is used to move the imaging system 2 in the gazing processing. Specifically, the image data IMG_2D acquired at the step S71 is used to generate the robot control signal for controlling the robot arm 12 to move the imaging system 2 in the gazing processing. Therefore, in the present example embodiment, the image data IMG_2D acquired at the step S71 may be referred to as the image data IMG_2D for the gazing processing.

For example, the imaging system 2 may generate the image data IMG_2D for the gazing processing by imaging a target object group (a second target object group) that includes a plurality of target objects OBJ (second the target objects OBJ) included in the imaging field of view of the imaging system 2 after it is determined at the step S42 in FIG. 4 that the trigger condition is satisfied. In this case, at the step S71, the control apparatus 3 may acquire the image data IMG_2D, which is generated by the imaging system 2 after it is determined that the trigger condition is satisfied.

For example, the imaging system 2 may generate the image data IMG_2D for the gazing processing by imaging the target object group that includes the plurality of target objects OBJ included in the imaging field of view of the imaging system 2 before it is determined at the step S42 in FIG. 4 that the trigger condition is satisfied. In this case, at the step S71, the control apparatus 3 may acquire the image data IMG_2D, which is generated by the imaging system 2 before it is determined that the trigger condition is satisfied. As one example, the imaging system 2 may generate the image data IMG_2D for the gazing processing by imaging the target object group that includes the plurality of target objects OBJ included in the imaging field of view of the imaging system 2 after the imaging system 2 generates at least one of the image data IMG_2D and IMG_3D for the position pose computing by imaging the target object group that includes the plurality of target objects OBJ included in the imaging field of view of the imaging system 2 at the step S1 in FIG. 4 and before it is determined at the step S42 in FIG. 4 that the trigger condition is satisfied. As another example, the imaging system 2 may generate the image data IMG_3D for the position pose computing and generate the image data IMG_2D for the gazing processing at the step S1 in FIG. 4. Namely, the imaging system 2 may generate the image data IMG_3D for the position pose computing and the image data IMG_2D for the gazing processing at the same timing.

However, in a case where a single target object OBJ is included in the imaging field of view of the imaging system 2, the imaging system 2 may generate the image data IMG_2D for the gazing processing by imaging the single object OBJ included in the imaging field of view of the imaging system 2.

Note that an example in which the position pose calculation unit 312 performs the 3D matching processing at the step S3 in FIG. 4 is described in the present example embodiment as described above, however, the imaging system 2 generates the image data IMG_2D for the position pose computing at the step S1 in FIG. 4 in a case where the position pose calculation unit 312 performs the 2D matching processing at the step S3 in FIG. 4 as described above. In this case, the control apparatus 3 may acquire the image data IMG_2D, which is generated at the step S1 in FIG. 4, as the image data IMG_2D for the gazing processing at the step S71. Namely, the image data IMG_2D for the position pose computing at the step S3 in FIG. 4 may be used as the image data IMG_2D for the gazing processing. Alternatively, the control apparatus 3 may use the position pose data POI, which is generated by the position pose computing at the step S3 in FIG. 4, to set a movement aspect of the imaging system 2 at a step S72 (described later), in addition to or instead of using the image data IMG_2D.

In any case, the image data IMG_2D acquired by the control apparatus 3 at the step S71 is the image data IMG_2D that is generated by the imaging system 2 imaging the target object group including one target object OBJ before the positional relationship between the imaging system 2 and the one target object OBJ is changed by the gazing processing. Specifically, as described above, the control apparatus 3 performs the gazing processing for moving the imaging system 2 so that the positional relationship between the imaging system 2 and the one target object OBJ changes from the first positional relationship to the second positional relationship in a case where it is determined that the computing result condition is not satisfied and the trigger condition is satisfied in a situation where the positional relationship between the imaging system 2 and the one target object OBJ is the first positional relationship. In this case, the image data IMG_2D acquired by the control apparatus 3 at the step S71 may be the image data IMG_2D that is generated by the imaging system 2 imaging the target object group including the one target object OBJ in a situation where the positional relationship between the imaging system 2 and the one target object OBJ is the first positional relationship. In other words, the image data IMG_2D acquired by the control apparatus 3 at the step S71 may be the image data IMG_2D that is generated by the imaging system 2 imaging the target object group including the one target object OBJ in a situation where the positional relationship between the imaging system 2 and the one target object OBJ is a positional relationship that is different from the second positional relationship. However, the image data IMG_2D acquired by the control apparatus 3 at the step S71 may be the image data IMG_2D that is generated by the imaging system 2 imaging the target object group including the one target object OBJ in a situation where the positional relationship between the imaging system 2 and the one target object OBJ is a positional relationship that is different from the first positional relationship. Namely, the image data IMG_2D acquired by the control apparatus 3 at the step S71 may be the image data IMG_2D that is generated by the imaging system 2 imaging the target object group including the one target object OBJ after it is determined that the computing result condition is not satisfied and the trigger condition is satisfied and then at least one of the imaging system 2 and the target object OBJ moves.

Then, the control apparatus 3 (especially, the position pose calculation unit 312 and the signal generation unit 313) sets the movement aspect of the imaging system 2 relative to one target object (for example, the gazing target object OBJ_g described later) (the step S72). Note that the movement aspect of the imaging system 2 may mean a movement pattern or a movement method of the imaging system 2 relative to one target object (for example, the gazing target object OBJ_g described later). Namely, the movement aspect of the imaging system 2 may mean the movement pattern or the movement method that indicates how to move the imaging system 2 relative to one target object (for example, the gazing target object OBJ_g described later). Note that it can be said that the movement aspect means the movement pattern or the movement method of the imaging system 2 based on one target object (for example, the gazing target object OBJ_g described later). Note that it can be said that the movement aspect means the movement pattern or the movement method of the imaging system 2 around one target object (for example, the gazing target object OBJ_g described later).

Especially, the control apparatus 3 may set the movement aspect of the imaging system 2 based on the image data IMG_2D acquired at the step S71 (the step S72). For example, the position pose calculation unit 312 may perform the 2D matching processing using the image data IMG_2D to calculate at least one of the position and the pose of one target object OBJ included in the target object group captured in the image indicated by the image data IMG_2D acquired at the step S71. Namely, the position pose calculation unit 312 may perform the 2D matching processing using the image data IMG_2D to generate the position pose data POI that indicates at least one of the position and the pose of the one included in the target object group captured in the image indicated by the image data IMG_2D acquired at the step S71. In this case, the position pose calculation unit 312 selects one target object OBJ, which is selected based on the matching similarity, from the plurality of target objects OBJ included in the target object group captured in the image indicated by the image data IMG_2D acquired at the step S71, and generates the position pose data POI of the selected one target object OBJ. Note that the processing for selecting one target object OBJ based on the matching similarity at the step S76 in FIG. 13 may be the same as the processing for selecting one target object OBJ as the process performed object based on the matching similarity at the step S3 in FIG. 4. Especially, the position pose calculation unit 312 may generate the position pose data POI that indicates at least one of the position and the pose of one target object OBJ, which is included in the latest image data IMG_3D (alternatively, the image data IMG_2D) acquired at the step S1 in FIG. 4 and on which it is determined by the position pose computing that the end effector 4 cannot perform the predetermined process. Note that the gazing processing includes an operation for moving the imaging system 2 so that at least one of the position and the pose of the imaging system 2 changes relative to the one target object OBJ whose position pose data POI is calculated at the step S72. Therefore, in the below-described description, the target object OBJ whose position pose data POI is calculated at the step S72 is referred to as the "gazing target object OBJ_g". Furthermore, since the 2D matching processing at the step S72 may be the same as the 2D matching processing at the step S3 in FIG. 4 described above, a detailed description thereof is omitted. Then, the signal generation unit 313 may set the movement aspect of the imaging system 2 based on the generated position pose data POI.

Note that the signal generation unit 313 may set the movement aspect of the imaging system 2 based on the image data IMG_3D at the step S72 in a case where the image data IMG_3D is acquired at the step S71 as described above. For example, the signal generation unit 313 may perform the 3D matching processing using the three-dimensional position data WSD generated from the image data IMG_3D to generate the position pose data POI that indicates at least one of the position and the pose of the target object OBJ. The 3D matching processing at the step S72 may be the same as the 3D matching processing at the step S3 in FIG. 4 described above, and therefore, a detailed description thereof is omitted. Then, the signal generation unit 313 may set the movement aspect of the imaging system 2 based on the generated position pose data POI. Alternatively, the signal generation unit 313 may set the movement aspect of the imaging system 2 based on both the image data IMG_2D and IMG_3D at the step S72. For example, the signal generation unit 313 may to perform both 2D the matching processing using the image data IMG_2D and the 3D matching processing using the three-dimensional position data WSD generated the from image data IMG_3D to generate the position pose data POI that indicates at least one of the position and the pose of the target object OBJ. The processing for performing both the 2D matching processing and the 3D matching processing at the step S72 may be the same as the processing for performing both the 2D matching processing and the 3D matching processing at the step S3 in FIG. 4 described above, and therefore, a detailed description thereof is omitted. Then, the signal generation unit 313 may set the movement aspect of the imaging system 2 based on the generated position pose data POI. In the below-described description, an example in which the signal generation unit 313 sets the movement aspect of the imaging system 2 based on the image data IMG_2D at the step S72 will be described, for convenience of description.

The signal generation unit 313 may set the movement aspect of the imaging system 2 so that it is more likely to be determined that the computing result condition is satisfied (namely, the result of the position pose computing is good) after the imaging system 2 moves relative to the gazing target object OBJ_g based on the movement aspect set at the step S72. Specifically, the signal generation unit 313 may set the movement aspect of the imaging system 2 based on position pose data POI of the gazing target object OBJ_g so that the positional relationship between the imaging system 2 and the gazing target object OBJ_g becomes a positional relationship satisfying a condition that "it is more likely to be determined that the result of the position pose computing, which is performed again after the imaging system 2 moves based on the movement aspect set at the step S72, is good". The signal generation unit 313 may set the movement aspect of the imaging system 2 based on position pose data POI of the gazing target object OBJ_g so that the positional relationship between the imaging system 2 and the gazing target object OBJ_g becomes a positional relationship satisfying a condition that "a possibility to be determined that the result of the position pose computing, which is performed again after the imaging system 2 moves based on the movement aspect set at the step S72, is good is higher than a possibility to be determined that the result of the position pose computing, which is performed before the imaging system 2 moves based on the movement aspect set at the step S72, is good".

In a case where the computing result condition is satisfied (namely, the result of the position pose computing is good), the end effector 4 can perform the predetermined process on the gazing target object OBJ_g as described above. Therefore, the signal generation unit 313 may set the movement aspect of the imaging system 2 so that it is more likely to be determined that the end effector 4 can perform the predetermined process on the gazing target object OBJ_g after the imaging system 2 moves relative to the gazing target object OBJ_g based on the movement aspect set at the step S72. Specifically, the signal generation unit 313 may set the movement aspect of the imaging system 2 based on the position pose data POI of the gazing target object OBJ_g so that the positional relationship between the imaging system 2 and the gazing target object OBJ_g becomes a positional relationship satisfying a condition that "it is more likely to be determined that the end effector 4 can perform the predetermined process on the gazing target object OBJ_g after the imaging system 2 moves relative to the gazing target object OBJ_g based on the movement aspect set at the step S72". The signal generation unit 313 may set the movement aspect of the imaging system 2 based on position pose data POI of the gazing target object OBJ_g so that the positional relationship between the imaging system 2 and the gazing target object OBJ_g becomes a positional relationship satisfying a condition that "a possibility to be determined that the end effector 4 can perform the predetermined process on the gazing target object OBJ_g after the imaging system 2 moves relative to the gazing target object OBJ_g based on the movement aspect set at the step S72 is higher than a possibility to be determined that the end effector 4 can perform the predetermined process on the gazing target object OBJ_g before the imaging system 2 moves relative to the gazing target object OBJ_g based on the movement aspect set at the step S72".

As described above, the target object OBJ whose position pose data POI has been calculated (specifically, could be calculated) by the position pose computing is one example of the target object OBJ on which the end effector 4 can perform the predetermined process. In this case, it is more likely that the position pose data POI of the target object OBJ can be calculated by the position pose computing as the matching similarity of the target object OBJ is higher. As a result, it is more likely that the end effector 4 can perform the predetermined process on the target object OBJ. Therefore, the signal generation unit 313 may set the movement aspect of the imaging system 2 based on the position pose data POI of the gazing target object OBJ_g so that the positional relationship between the imaging system 2 and the gazing target object OBJ_g becomes a positional relationship satisfying a condition that "the matching similarity of the gazing target object OBJ_g calculated by the position pose computing, which is performed again after the imaging system 2 moves relative to the gazing target object OBJ_g based on the movement aspect set at the step S72, is higher than the matching similarity of the gazing target object OBJ_g calculated by the position pose computing, which is performed before the imaging system 2 moves relative to the gazing target object OBJ_g based on the movement aspect set at the step S72". The signal generation unit 313 may set the movement aspect of the imaging system 2 based on the position pose data POI of the gazing target object OBJ_g so that the positional relationship between the imaging system 2 and the gazing target object OBJ_g becomes a positional relationship satisfying a condition that "the matching similarity of the gazing target object OBJ_g calculated by the position pose computing, which is performed again after the imaging system 2 moves relative to the gazing target object OBJ_g based on the movement aspect set at the step S72, is higher than the matching determination threshold value".

Here, in a case where the position pose computing including the 3D matching processing is performed to generate the position pose data POI at the step S3 in FIG. 4, there is a possibility that the matching similarity of the target object OBJ is higher as the number of points of the target object OBJ included in the point cloud indicated by the three-dimensional position data WSD used for the 3D matching processing is larger. This is because an amount of information that is usable for the 3D matching processing is larger as the number of points of the target object OBJ included in the point cloud indicated by the three-dimensional position data WSD used for the 3D matching processing is larger. Therefore, it is more likely that the target object OBJ whose matching similarity is higher than the matching threshold value is detected by the 3D matching processing as the number of points of the target object OBJ included in the point cloud indicated by the three-dimensional position data WSD is larger. Furthermore, the accuracy (the reliability) of the position pose data POI generated by the position pose computing including the 3D matching processing is higher as the number of points of the target object OBJ included in the point cloud indicated by the three-dimensional position data WSD is larger. Therefore, the signal generation unit 313 may set the movement aspect of the imaging system 2 so that the number of points of the gazing target object OBJ_g included in the point cloud indicated by the three-dimensional position data WSD increases. Specifically, the signal generation unit 313 may set the movement aspect of the imaging system 2 so that the number of points of the gazing target object OBJ_g included in the point cloud indicated by the three-dimensional position data WSD, which is generated again at a step S75 (described below) after the imaging system 2 moves, is larger than the number of points of the gazing target object OBJ_g included in the point cloud indicated by the three-dimensional position data WSD, which has been already generated last before the imaging system 2 moves. As a result, it is likely that the result of the position pose computing including the 3D matching processing is good.

It is likely that the number of points of the target object OBJ included in the point cloud indicated by the three-dimensional position data WSD is larger as a proportion of the target object OBJ relative to the imaging field of view of the imaging system 2 (especially, the imaging field of view of the imaging apparatus 22) is larger. Therefore, the signal generation unit 313 may set the movement aspect of the imaging system 2 so that the proportion of the gazing target object OBJ_g relative to the imaging field of view of the imaging system 2 (especially, the imaging field of view of the imaging apparatus 22) increases. Specifically, the signal generation unit 313 may set the movement aspect of the imaging system 2 so that the proportion of the gazing target object OBJ_g relative to the imaging field of view of the imaging system 2 (especially, the imaging field of view of the imaging apparatus 22) after the imaging system 2 moves is larger than the proportion of the gazing target object OBJ_g relative to the imaging field of view of the imaging system 2 (especially, the imaging field of view of the imaging apparatus 22) before the imaging system 2 moves. In other words, the movement aspect of the imaging system 2 may be set so that the proportion of the gazing target object OBJ_g relative to the imaging field of view of the imaging system 2 (especially, the imaging field of view of the imaging apparatus 22) for generating the image data IMG_3D after the imaging system 2 moves is larger than the proportion of the gazing target object OBJ_g relative to the imaging field of view of the imaging system 2 (especially, the imaging field of view of the imaging apparatus 22) for generating the image data IMG_3D before the imaging system 2 moves. As a result, it is likely that the result of the position pose computing including the 3D matching processing is good.

Note that there is a possibility that the proportion of the target object OBJ relative to the imaging field of view of the imaging system 2 is larger as a proportion of a part of the target object OBJ relative to the imaging field of view of the imaging system 2 (especially, the imaging field of view of the imaging apparatus 22) is larger. Therefore, the signal generation unit 313 may set the movement aspect of the imaging system 2 so that the proportion of a part of the gazing target object OBJ_g relative to the imaging field of view of the imaging system 2 (especially the, imaging field of view of the imaging apparatus 22) increases. Specifically, the signal generation unit 313 may set the movement aspect of the imaging system 2 so that the proportion of a part of the gazing target object OBJ_g relative to the imaging field of view of the imaging system 2 (especially, the imaging field of view of the imaging apparatus 22) after the imaging system 2 moves is larger than the proportion of a part of the gazing target object OBJ_g relative to the imaging field of view of the imaging system 2 (especially, the imaging field of view of the imaging apparatus 22) before the imaging system 2 moves.

Moreover, there is a possibility that the proportion of the target object OBJ relative to the imaging field of view of the imaging system 2 is larger as a proportion of an outline of the target object OBJ relative to the imaging field of view of the imaging system 2 (especially, the imaging field of view of the imaging apparatus 22) is larger. Therefore, the signal generation unit 313 may set the movement aspect of the imaging system 2 so that the proportion of the outline of the gazing target object OBJ_g relative to the imaging field of view of the imaging system 2 (especially, the imaging field of view of the imaging apparatus 22) increases. Specifically, the signal generation unit 313 may set the movement aspect of the imaging system 2 so that the proportion of the outline of the gazing target object OBJ_g relative to the imaging field of view of the imaging system 2 (especially, the imaging field of view of the imaging apparatus 22) after the imaging system 2 moves is larger than the proportion of the outline of the gazing target object OBJ_g relative to the imaging field of view of the imaging system 2 (especially, the imaging field of view of the imaging apparatus 22) before the imaging system 2 moves. Here, in a case where whole of the outline of the target object OBJ is included in the imaging field of view of the imaging system 2 (especially, the imaging field of view of the imaging apparatus 22), the proportion of the outline of the target object OBJ relative to the imaging field of view of the imaging system 2 (especially, the imaging field of view of the imaging apparatus 22) is maximum. Therefore, the signal generation unit 313 may set the movement aspect of the imaging system 2 so that whole of the outline of the gazing target object OBJ_g is included in the imaging field of view of the imaging system 2 (especially, the imaging field of view of the imaging apparatus 22).

Moreover, the signal generation unit 313 may set the movement aspect of the imaging system 2 so that both the proportion of a part of the gazing target object OBJ_g relative to the imaging field of view of the imaging system 2 (especially, the imaging field of view of the imaging apparatus 22) and the proportion of the outline of the gazing target object OBJ_g relative to the imaging field of view of the imaging system 2 (especially, the imaging field of view of the imaging apparatus 22) are maximum (alternatively, become proper proportions). Alternatively, the signal generation unit 313 may set the movement aspect of the imaging system 2 so that a ratio between the proportion of a part of the gazing target object OBJ_g relative to the imaging field of view of the imaging system 2 (especially, the imaging field of view of the imaging apparatus 22) and the proportion of the outline of the gazing target object OBJ_g relative to the imaging field of view of the imaging system 2 (especially, the imaging field of view of the imaging apparatus 22) becomes an proper ratio. Namely, the signal generation unit 313 may set the movement aspect of the imaging system 2 so that the proportion of a part of the gazing target object OBJ_g relative to the imaging field of view of the imaging system 2 (especially, the imaging field of view of the imaging apparatus 22) and the proportion of the outline of the gazing target object OBJ_g relative to the imaging field of view of the imaging system 2 (especially, the imaging field of view of the imaging apparatus 22) are balanced.

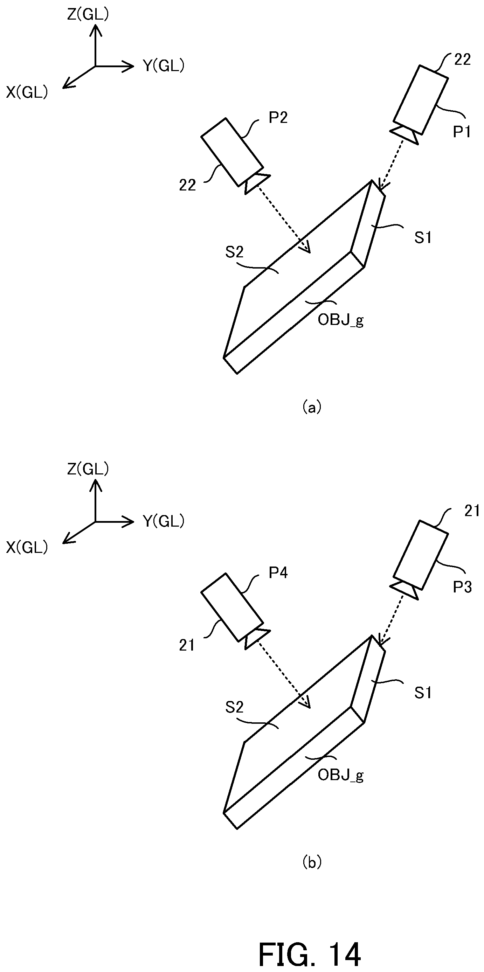

For example, FIG. 14(a) illustrates the imaging apparatus 22 before moving under the control of the signal generation unit 313 and imaging apparatus 22 after moving under the control of the signal generation unit 313. In the example illustrated in FIG. 14(a), the imaging apparatus 22 before moving under the control of the signal generation unit 313 is positioned at a first position P1. On the other hand, in the example illustrated in FIG. 14(a), the imaging apparatus 22 after moving under the control of the signal generation unit 313 is positioned at a second position P2 that is different from the first position P1. The signal generation unit 313 may set the movement aspect of the imaging system 2 relative to the gazing target object OBJ_g so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1. The signal generation unit 313 may set the movement aspect of the imaging system 2 based on the gazing target object OBJ_g so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1. The signal generation unit 313 may set the movement aspect of the imaging system 2 around the gazing target object OBJ_g so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1. The signal generation unit 313 may set the movement aspect of the imaging system 2 relative to the gazing target object OBJ_g so that the proportion of the gazing target object OBJ_g relative to the imaging field of view of the imaging system 2 positioned at the second position P2 is larger than the proportion of the gazing target object OBJ_g relative to the imaging field of view of the imaging system 2 positioned at the first position P1. The signal generation unit 313 may set the movement aspect of the imaging system 2 based on the gazing target object OBJ_g so that the proportion of the gazing target object OBJ_g relative to the imaging field of view of the imaging system 2 positioned at the second position P2 is larger than the proportion of the gazing target object OBJ_g relative to the imaging field of view of the imaging system 2 positioned at the first position P1. The signal generation unit 313 may set the movement aspect of the imaging system 2 around the gazing target object OBJ_g so that the proportion of the gazing target object OBJ_g relative to the imaging field of view of the imaging system 2 positioned at the second position P2 is larger than the proportion of the gazing target object OBJ_g relative to the imaging field of view of the imaging system 2 positioned at the first position P1. For example, the signal generation unit 313 may set the second position P2, at which the imaging system 2 should be positioned after moving, so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1, and set the movement aspect of the imaging system 2 relative to the gazing target object OBJ_g so that the imaging system 2 moves from the first position P1 to the second position P2. For example, the signal generation unit 313 may set the second position P2, at which the imaging system 2 should be positioned after moving, so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1, and set the movement aspect of the imaging system 2 based on the gazing target object OBJ_g so that the imaging system 2 moves from the first position P1 to the second position P2. For example, the signal generation unit 313 may set the second position P2, at which the imaging system 2 should be positioned after moving, so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1, and set the movement aspect of the imaging system 2 around the gazing target object OBJ_g so that the imaging system 2 moves from the first position P1 to the second position P2. For example, the signal generation unit 313 may set the second position P2, at which the imaging system 2 should be positioned after moving, so that the proportion of the gazing target object OBJ_g relative to the imaging field of view of the imaging system 2 positioned at the second position P2 is larger than the proportion of the gazing target object OBJ_g relative to the imaging field of view of the imaging system 2 positioned at the first position P1, and set the movement aspect of the imaging system 2 relative to the gazing target object OBJ_g so that the imaging system 2 moves from the first position P1 to the second position P2. For example, the signal generation unit 313 may set the second position P2, at which the imaging system 2 should be positioned after moving, so that the proportion of the gazing target object OBJ_g relative to the imaging field of view of the imaging system 2 positioned at the second position P2 is larger than the proportion of the gazing target object OBJ_g relative to the imaging field of view of the imaging system 2 positioned at the first position P1, and set the movement aspect of the imaging system 2 based on the gazing target object OBJ_g so that the imaging system 2 moves from the first position P1 to the second position P2. For example, the signal generation unit 313 may set the second position P2, at which the imaging system 2 should be positioned after moving, so that the proportion of the gazing target object OBJ_g relative to the imaging field of view of the imaging system 2 positioned at the second position P2 is larger than the proportion of the gazing target object OBJ_g relative to the imaging field of view of the imaging system 2 positioned at the first position P1, and set the movement aspect of the imaging system 2 around the gazing target object OBJ_g so that the imaging system 2 moves from the first position P1 to the second position P2. Note that setting the movement aspect of the imaging system 2 relative to the gazing target object OBJ_g may be considered to be equivalent to setting the movement aspect of the imaging system 2 based on the gazing target object OBJ_g and setting the movement aspect of the imaging system 2 around the gazing target object OBJ_g.

In the example illustrated in FIG. 14(a), the imaging apparatus 22 positioned at the first position P1 faces a first surface S1 of the gazing target object OBJ_g that is narrower than a second surface S2 of the gazing target object OBJ_g. On the other hand, the imaging apparatus 22 positioned at the second position P2 faces the second surface S2 of the gazing target object OBJ_g that is wider than the first surface S1 of the gazing target object OBJ_g. Therefore, in the example illustrated in FIG. 14(a), the number of points of the gazing target object OBJ_g included in the point cloud indicated by the three-dimensional position data WSD generated based on the image data IMG_3D generated by the imaging apparatus 22 positioned at the second position P2 is larger than the number of points of the gazing target object OBJ_g included in the point cloud indicated by the three-dimensional position data WSD generated based on the image data IMG_3D generated by the imaging apparatus 22 positioned at the first position P1. Furthermore, the proportion of the gazing target object OBJ_g relative to the imaging field of view of the imaging apparatus 22 positioned at the second position P2 is larger than the proportion of the gazing target object OBJ_g relative to the imaging field of view of the imaging apparatus 22 positioned at the first position P1.

Incidentally, although the present example embodiment describes the example in which the position pose calculation unit 312 performs the 3D matching processing at the step S3 in FIG. 4 as described above, there is a possibility that the matching similarity of the target object OBJ is higher as the number of pixels in which at least a part of the target object OBJ is captured in the image indicated by the image data IMG_2D, which is used to perform the 2D matching processing, is larger in a case where the position pose computing including the 2D matching processing is performed to generate the position pose data POI at the step S3 in FIG. 4. This is because an amount of information that is usable for the 2D matching processing is larger as the number of pixels in which at least a part of the target object OBJ is captured in the image indicated by the image data IMG_2D, which is used to perform the 2D matching processing, is larger. Therefore, it is more likely that the target object OBJ whose matching similarity is higher than the matching threshold value is detected by the 2D matching processing as the number of pixels in which at least a part of the target object OBJ is captured in the image indicated by the image data IMG_2D is larger. Furthermore, the accuracy (the reliability) of the position pose data POI generated by the position pose computing including the 2D matching processing is higher as the number of pixels in which at least a part of the target object OBJ is captured in the image indicated by the image data IMG_2D is larger. Therefore, the signal generation unit 313 may set the movement aspect of the imaging system 2 so that the number of pixels in which at least a part of the gazing target object OBJ_g is captured in the image indicated by the image data IMG_2D. Specifically, the signal generation unit 313 may set the movement aspect of the imaging system 2 so that the number of pixels in which at least a part of the gazing target object OBJ_g is captured in the image indicated by the image data IMG_2D, which is acquired again at a step S74 (described below) in FIG. 13 after the imaging system 2 moves, is larger than the number of pixels in which at least a part of the gazing target object OBJ_g is captured in the image indicated by the image data IMG_2D, which has been already acquired last before the imaging system 2 moves. As a result, it is likely that the result of the position pose computing including the 2D matching processing is good.

It is likely that the number of pixels in which at least a part of the target object OBJ is captured in the image indicated by the image data IMG_2D is larger as the proportion of the target object OBJ relative to the imaging field of view of the imaging system 2 (especially, the imaging field of view of the imaging apparatus 21) is larger. Therefore, the signal generation unit 313 may set the movement aspect of the imaging system 2 so that the proportion of the gazing target object OBJ_g relative to the imaging field of view of the imaging system 2 (especially, the imaging field of view of the imaging apparatus 21) increases. Specifically, the signal generation unit 313 may set the movement aspect of the imaging system 2 so that the proportion of the gazing target object OBJ_g relative to the imaging field of view of the imaging system 2 (especially, the imaging field of view of the imaging apparatus 21) after the imaging system 2 moves is larger than the proportion of the gazing target object OBJ_g relative to the imaging field of view of the imaging system 2 (especially, the imaging field of view of the imaging apparatus 21) before the imaging system 2 moves. In other words, the signal generation unit 313 may set the movement aspect of the imaging system 2 so that the proportion of the gazing target object OBJ_g relative to the imaging field of view of the imaging system 2 (especially, the imaging field of view of the imaging apparatus 21) for generating the image data IMG_2D after the imaging system 2 moves is larger than the proportion of the gazing target object OBJ_g relative to the imaging field of view of the imaging system 2 (especially, the imaging field of view of the imaging apparatus 21) for generating the image data IMG_2D before the imaging system 2 moves. As a result, it is likely that the result of the position pose computing including the 2D matching processing is good.

Note that there is a possibility that the proportion of the target object OBJ relative to the imaging field of view of the imaging system 2 is larger as the proportion of a part of the target object OBJ relative to the imaging field of view of the imaging system 2 (especially, the imaging field of view of the imaging apparatus 21) is larger. Therefore, the signal generation unit 313 may set the movement aspect of the imaging system 2 so that the proportion of a part of the gazing target object OBJ_g relative to the imaging field of view of the imaging system 2 (especially the, imaging field of view of the imaging apparatus 21) increases. Specifically, the signal generation unit 313 may set the movement aspect of the imaging system 2 so that the proportion of a part of the gazing target object OBJ_g relative to the imaging field of view of the imaging system 2 (especially, the imaging field of view of the imaging apparatus 21) after the imaging system 2 moves is larger than the proportion of a part of the gazing target object OBJ_g relative to the imaging field of view of the imaging system 2 (especially, the imaging field of view of the imaging apparatus 21) before the imaging system 2 moves.

Moreover, there is a possibility that the proportion of the target object OBJ relative to the imaging field of view of the imaging system 2 is larger as the proportion of the outline of the target object OBJ relative to the imaging field of view of the imaging system 2 (especially, the imaging field of view of the imaging apparatus 21) is larger. Therefore, the signal generation unit 313 may set the movement aspect of the imaging system 2 so that the proportion of the outline of the gazing target object OBJ_g relative to the imaging field of view of the imaging system 2 (especially, the imaging field of view of the imaging apparatus 21) increases. Specifically, the signal generation unit 313 may set the movement aspect of the imaging system 2 so that the proportion of the outline of the gazing target object OBJ_g relative to the imaging field of view of the imaging system 2 (especially, the imaging field of view of the imaging apparatus 21) after the imaging system 2 moves is larger than the proportion of the outline of the gazing target object OBJ_g relative to the imaging field of view of the imaging system 2 (especially, the imaging field of view of the imaging apparatus 21) before the imaging system 2 moves. Here, in a case where whole of the outline of the target object OBJ is included in the imaging field of view of the imaging system 2 (especially, the imaging field of view of the imaging apparatus 21), the proportion of the outline of the target object OBJ relative to the imaging field of view of the imaging system 2 (especially, the imaging field of view of the imaging apparatus 21) is maximum. Therefore, the signal generation unit 313 may set the movement aspect of the imaging system 2 so that whole of the outline of the gazing target object OBJ_g is included in the imaging field of view of the imaging system 2 (especially, the imaging field of view of the imaging apparatus 21).

Moreover, the signal generation unit 313 may set the movement aspect of the imaging system 2 so that both the proportion of a part of the gazing target object OBJ_g relative to the imaging field of view of the imaging system 2 (especially, the imaging field of view of the imaging apparatus 21) and the proportion of the outline of the gazing target object OBJ_g relative to the imaging field of view of the imaging system 2 (especially, the imaging field of view of the imaging apparatus 21) are maximum (alternatively, become proper proportions). Alternatively, the signal generation unit 313 may set the movement aspect of the imaging system 2 so that the ratio between the proportion of a part of the gazing target object OBJ_g relative to the imaging field of view of the imaging system 2 (especially, the imaging field of view of the imaging apparatus 21) and the proportion of the outline of the gazing target object OBJ_g relative to the imaging field of view of the imaging system 2 (especially, the imaging field of view of the imaging apparatus 21) becomes an proper ratio. Namely, the signal generation unit 313 may set the movement aspect of the imaging system 2 so that the proportion of a part of the gazing target object OBJ_g relative to the imaging field of view of the imaging system 2 (especially, the imaging field of view of the imaging apparatus 21) and the proportion of the outline of the gazing target object OBJ_g relative to the imaging field of view of the imaging system 2 (especially, the imaging field of view of the imaging apparatus 21) are balanced.

For example, FIG. 14(b) illustrates imaging apparatus 21 before moving under the control of the signal generation unit 313 and imaging apparatus 21 after moving under the control of the signal generation unit 313. In the example illustrated in FIG. 14(b), the imaging apparatus 21 before moving under the control of the signal generation unit 313 is positioned at a third position P3. On the other hand, in the example illustrated in FIG. 14(b), the imaging apparatus 21 after moving under the control of the signal generation unit 313 is positioned at a fourth position P4 that is different from the third position P3. The signal generation unit 313 may set the movement aspect of the imaging system 2 relative to the gazing target object OBJ_g so that the number of pixels in which at least a part of the gazing target object OBJ_g is captured in the image indicated by the image data IMG_2D, which is generated based on the image data IMG_2D generated by the imaging apparatus 21 positioned at the fourth position P4, is larger than the number of pixels in which at least a part of the gazing target object OBJ_g is captured in the image indicated by the image data IMG_2D, which is generated based on the image data IMG_2D generated by the imaging apparatus 21 positioned at the third position P3. The signal generation unit 313 may set the movement aspect of the imaging system 2 relative to the gazing target object OBJ_g so that the proportion of the gazing target object OBJ_g relative to the imaging field of view of the imaging system 2 positioned at the fourth position P4 is larger than the proportion of the gazing target object OBJ_g relative to the imaging field of view of the imaging system 2 positioned at the third position P3. For example, the signal generation unit 313 may set the fourth position P4, at which the imaging system 2 should be positioned after moving, so that the number of pixels in which at least a part of the gazing target object OBJ_g is captured in the image indicated by the image data IMG_2D, which is generated based on the image data IMG_2D generated by the imaging apparatus 21 positioned at the fourth position P4, is larger than the number of pixels in which at least a part of the gazing target object OBJ_g is captured in the image indicated by the image data IMG_2D, which is generated based on the image data IMG_2D generated by the imaging apparatus 21 positioned at the third position P3, and set the movement aspect of the imaging system 2 relative to the gazing target object OBJ_g so that the imaging system 2 moves from the third position P3 to the fourth position P4. For example, the signal generation unit 313 may set the fourth position P4, at which the imaging system 2 should be positioned after moving, so that the proportion of the gazing target object OBJ_g relative to the imaging field of view of the imaging system 2 positioned at the fourth position P4 is larger than the proportion of the gazing target object OBJ_g relative to the imaging field of view of the imaging system 2 positioned at the third position P3, and set the movement aspect of the imaging system 2 relative to the gazing target object OBJ_g so that the imaging system 2 moves from the third position P3 to the fourth position P4. Note that setting the movement aspect of the imaging system 2 relative to the gazing target object OBJ_g may be considered to be equivalent to setting the movement aspect of the imaging system 2 based on the gazing target object OBJ_g and setting the movement aspect of the imaging system 2 around the gazing target object OBJ_g as described above. Therefore, the signal generation unit 313 may set the movement aspect of the imaging system 2 based on the gazing target object OBJ_g to satisfy the condition described in this paragraph. The signal generation unit 313 may set the movement aspect of the imaging system 2 around the gazing target object OBJ_g to satisfy the condition described in this paragraph.

In the example illustrated in FIG. 14(b), the imaging apparatus 21 positioned at the third position P3 faces the first surface S1 of the gazing target object OBJ_g that is narrower than the second surface S2 of the gazing target object OBJ_g. On the other hand, the imaging apparatus 21 positioned at the fourth position P4 faces the second surface S2 of the gazing target object OBJ_g that is wider than the first surface S1 of the gazing target object OBJ_g. Therefore, in the example illustrated in FIG. 14(b), the number of pixels in which at least a part of the gazing target object OBJ_g is captured in the image indicated by image data IMG_2D generated by the imaging apparatus 21 positioned at the fourth position P4 is larger than the number of pixels in which at least a part of the gazing target object OBJ_g is captured in the image indicated by image data IMG_2D generated by the imaging apparatus 21 positioned at the third position P3. Furthermore, the proportion of the gazing target object OBJ_g relative to the imaging field of view of the imaging apparatus 21 positioned at the fourth position P4 is larger than the proportion of the gazing target object OBJ_g relative to the imaging field of view of the imaging apparatus 21 positioned at the third position P3.

Note that the number of pixels in which at least a part of the target object OBJ is captured in the image indicated by the image data IMG_2D increases as a size of a captured part of the target object OBJ in the image indicated by the image data IMG_2D is larger. Therefore, the signal generation unit 313 may set the movement aspect of the imaging system 2 so that the size of the captured part of the gazing target object OBJ_g in the image indicated by the image data IMG_2D, which is acquired again at the step S74 (described below) in FIG. 13 after the imaging system 2 moves, is larger than the size of the captured part of the gazing target object OBJ_g in the image indicated by the image data IMG_2D, which has been already acquired last before the imaging system 2 moves. As a result, it is likely that the result of the position pose computing including the 2D matching processing is good.

Moreover, the number of pixels in which at least a part of the target object OBJ is captured in the image indicated by the image data IMG_2D may be considered to be equivalent to the number of points of the target object OBJ captured in the image indicated by the image data IMG_2D (namely, points of the target object OBJ imaged by the imaging apparatus 21). Therefore, the signal generation unit 313 may set the movement aspect of the imaging system 2 so that the number of points of the gazing target object OBJ_g captured in in the image indicated by the image data IMG_2D (namely, points of the target object OBJ imaged by the imaging apparatus 21), which is acquired again at the step S72 in FIG. 13 after the imaging system 2 moves, is larger than the number of points of the gazing target object OBJ_g captured in in the image indicated by the image data IMG_2D (namely, points of the target object OBJ imaged by the imaging apparatus 21), which has been already acquired last before the imaging system 2 moves.

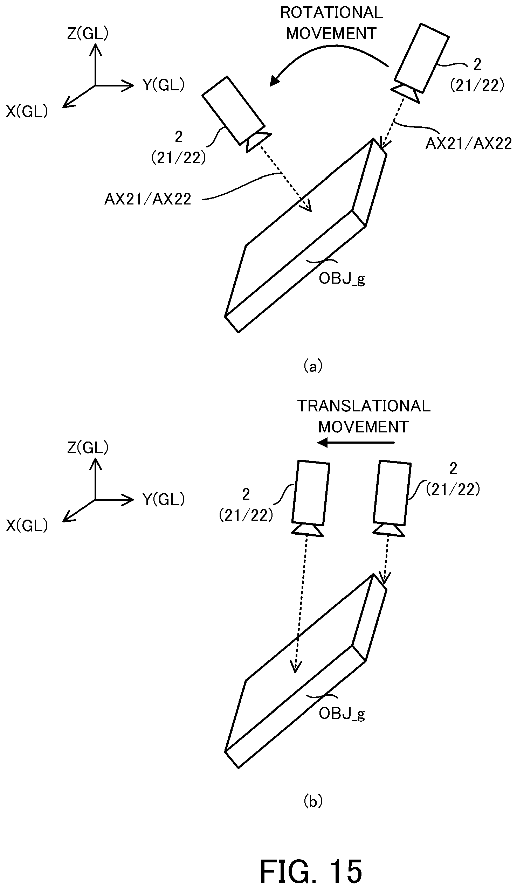

The signal generation unit 313 may set the movement aspect of the imaging system 2 so that the imaging system 2 rotationally moves around a predetermined rotational axis relative to the gazing target object OBJ_g, as illustrated in FIG. 15(a). For example, the signal generation unit 313 may set the movement aspect of the imaging system 2 so that the imaging system 2 rotationally moves around at least one of at least one of the rotational axis along the X-axis(GL) of the global coordinate system, the rotational axis along the Y-axis(GL) of the global coordinate system, and the rotational axis along the Z-axis(GL) of the global coordinate system. For example, the signal generation unit 313 may set the movement pattern of the imaging system 2 so that the imaging system 2 rotationally moves around at least one of at least one of the rotational axis along the X-axis of the coordinate system (for example, the robot coordinate system) that is different from the global coordinate system, the rotational axis along the Y-axis of the coordinate system (for example, the robot coordinate system) that is different from the global coordinate system, and the rotational axis along the Z-axis of the coordinate system (for example, the robot coordinate system) that is different from the global coordinate system.

In a case where the imaging system 2 rotationally moves in this manner, an optical axis direction, which extends from the imaging apparatus 22 along the optical axis of the imaging system 2, changes relative to the gazing target object OBJ_g. Note that the optical axis of the imaging system 2 may mean at least one of the optical axis AX21 of the imaging apparatus 21 and the optical axis AX22 of the imaging apparatus 22. Therefore, as illustrated in FIG. 15(a), the signal generation unit 313 may set the movement aspect of the imaging system 2 to change the axis of the imaging system 2 relative to the gazing target object OBJ_g by rotationally moving the imaging system 2 around the predetermined rotational axis.

However, as illustrated in FIG. 15(b), the signal generation unit 313 may set the movement aspect of the imaging system 2 so that the imaging system 2 translationally moves along a predetermined translational axis relative to the gazing target object OBJ_g, in addition to or instead of rotationally moving the imaging system 2 around the predetermined rotational axis relative to the gazing target object OBJ_g. For example, the signal generation unit 313 may set the movement aspect of the imaging system 2 so that the imaging system 2 translationally moves along at least one of the X-axis(GL) of the global coordinate system, the Y-axis(GL) of the global coordinate system, and the Z-axis(GL) of the global coordinate system. For example, the signal generation unit 313 may set the movement aspect of the imaging system 2 so that the imaging system 2 translationally moves along at least one of the X-axis, the Y-axis, and the Z-axis of the coordinate system that is different from the global coordinate system.

Note that the gazing processing may be referred to as a rotational movement processing, because the imaging system 2 rotationally moves by the gazing processing. Moreover, in a case where the movement aspect of the imaging system 2 is set so that the imaging system 2 rotationally moves relative to the gazing target object OBJ_g and the imaging system 2 translationally moves relative to the gazing target object OBJ_g, a movement distance (namely, a rotational movement distance) of the imaging system 2 rotationally moving by the gazing processing may be longer than a movement distance (namely, a translational movement distance) of the rotationally moving imaging system 2 translationally moving by the gazing processing. Even in this case, the gazing processing may be referred to as the rotational movement processing, because the imaging system 2 primarily rotationally moves by the gazing processing. However, the movement distance of the imaging system 2 rotationally moving by the gazing processing may not be longer than the movement distance of the rotationally moving imaging system 2 translationally moving by the gazing processing.

The movement aspect of the imaging system 2 may include a movement direction of the imaging system 2. Note that the movement direction of the imaging system 2 may mean the movement direction of at least one of the imaging apparatuses 21 and 22 in the present example embodiment. In this case, the control apparatus 3 may set the movement direction of the imaging system 2 relative to the gazing target object OBJ_g so that it is more likely that the result of the position pose computing is good. As illustrated in FIG. 15(a), in a case where the imaging system 2 rotationally moves, the movement direction may mean a rotational direction. As illustrated in FIG. 15(b), in a case where the imaging system 2 translationally moves, the movement direction may mean a translational direction.

The movement direction of the imaging system 2 may be automatically set by the control apparatus 3. For example, the control apparatus 3 may set a random movement direction as the movement direction of the imaging system 2. Alternatively, the movement direction of the imaging system 2 may be set by the user.

The movement aspect of the imaging system 2 may include the movement distance of the imaging system 2. Note that the movement distance of the imaging system 2 may mean the movement distance of at least one of the imaging apparatuses 21 and 22 in the present example embodiment. In this case, the control apparatus 3 may set the movement distance of the imaging system 2 relative to the gazing target object OBJ_g so that it is more likely that the results of the position pose computing is good. As illustrated in FIG. 15(a), in a case where the imaging system 2 rotationally moves, the movement distance may mean a rotational amount (for example, a rotation angle). As illustrated in FIG. 15(b), in a case where the imaging system 2 translationally moves, the movement distance may mean translational amount.

The movement distance of the imaging system 2 may be automatically set by the control apparatus 3. For example, the control apparatus 3 may set a random movement distance as the movement distance of the imaging system 2. Alternatively, the movement distance of the imaging system 2 may be set by the user.

At the step S72, the signal generation unit 313 may set the movement aspect of the imaging system 2 based on not only the position pose data POI of the gazing target object OBJ_g but also relative position pose information that indicates at least one of a relative position and a relative pose of the imaging system 2 relative to the target object OBJ in a case where the imaging system 2 images the target object OBJ. In this case, the signal generation unit 313 may calculate a target value of a position (namely, a target position) in the global coordinate system at which the imaging system 2, which moves by the gazing processing, should be positioned based on the position pose data POI of the gazing target object OBJ_g and the relative position pose information. Then, the signal generation unit 313 may set the movement aspect of the imaging system 2 so that the position of the imaging system 2 in the global coordinate system matches the calculated target position. Moreover, the signal generation unit 313 may calculate a target value of a pose (namely, a target pose) in the global coordinate system which the imaging system 2, which moves by the gazing processing, should take based on the position pose data POI of the gazing target object OBJ_g and the relative position pose information. Then, the signal generation unit 313 may set the movement aspect of the imaging system 2 so that the pose of the imaging system 2 in the global coordinate system matches the calculated target pose.

The relative position pose information may be input to the control apparatus 3 by the user. For example, the user may input the relative position pose information by using the input apparatus 34 through a GUI (Graphical User Interface) displayed on the output apparatus 35 that is configured to serve as the display apparatus. As one example, the user may specify the positional relationship between the imaging system 2 and the target object OBJ by adjusting a position of a three-dimensional model of the imaging system 2 relative to a three-dimensional model of the target object OBJ on the GUI that displays the three-dimensional model (for example, a CAD model) of the target object OBJ. As another example, the user may input the positional relationship between the imaging system 2 and the target object OBJ numerically by using the input apparatus 34.

The user may input the relative position pose information before the gazing processing illustrated in FIG. 13 is performed. For example, the user may input the relative position pose information before the robot control processing illustrated in FIG. 4, which includes the gazing processing illustrated in FIG. 13, is performed. Alternatively, the user may input the relative position pose information in a period during which the gazing processing illustrated in FIG. 13 is performed. The relative position pose information is not limited to being input to the control apparatus 3 by the user; and may be automatically generated by the control apparatus 3. In this case, the control apparatus 3 may generate the relative position pose information based on a shape of the target object OBJ (for example, a shape of the CAD model).

The relative position pose information may be set so that it is more likely to be determined that the computing result condition is satisfied (namely, the position pose data POI of the gazing target object OBJ_g is properly generated) after the imaging system 2 moves relative to the gazing target object OBJ_g based on the movement aspect that is set based on the relative position pose information. Note that an example in which the movement aspect of the imaging system 2 is set so that it is more likely to be determined that the computing result condition is satisfied after the imaging system 2 moves has already been described, and therefore, a detailed description thereof is omitted here.

Especially, since the position pose data POI of the gazing target object OBJ_g is generated to set the movement aspect of the imaging system 2 as described above, the user or the control apparatus 3 may set the relative position pose information based on the position pose data POI of the gazing target object OBJ_g so that it is more likely to be determined that the computing result condition is satisfied (namely, the position pose data POI of the gazing target object OBJ_g is properly generated) after the imaging system 2 moves relative to the gazing target object OBJ_g based on the movement aspect that is set based on the relative position pose information. In this case, it is expected that the position pose data POI of the gazing target object OBJ_g is reliably generated, and as a result, it is expected that the end effector 4 reliably perform the predetermined process on the gazing target object OBJ_g.

Again in FIG. 13, then, the signal generation unit 313 generates the robot control signal for controlling the robot arm 12 to move the imaging system 2 based on the movement aspect set at the step S72 (a step S73). As a result, the imaging system 2 moves based on the movement aspect set at the step S72 (the step S73). For example, the imaging system 2 may move in the movement direction set at the step S72. For example, the imaging system 2 may move by the movement distance set at the step S72.

Then, the control apparatus 3 performs the position pose computing, which is for generating the position pose data POI of the target object OBJ, again and determines whether or not the computing result condition is satisfied again by performing an operation that is the same as the step S1 to the step S41 in FIG. 4 (the step S74 to a step S77). Specifically, the control apparatus 3 acquires at least one of the image data IMG_2D and IMG_3D again (the step S74). Therefore, after the imaging system 2 moves at the step S73, the imaging system 2 newly generates at least one of the image data IMG_2D and IMG_3D by imaging the target object OBJ (especially, at least one target object OBJ including the gazing target object OBJ_g) again, and the control apparatus 3 acquires at least one of the image data IMG_2D and IMG_3D newly generated by the imaging system 2. Note that the processing at the step S74 may be the same as the processing at the step S1 in FIG. 4. Furthermore, in a case where the control apparatus 3 acquires the image data IMG_3D at the step S74, the three-dimensional position data generation unit 311 generates the three-dimensional position data WSD based on the acquired the image data IMG_3D (the step S75). Note that the processing at the step S75 may be the same as the processing at the step S2 in FIG. 4. Then, the position pose calculation unit 312 calculates at least one of the position and the pose of the target object OBJ (for example, the gazing target object OBJ_g) based on at least one of the image data IMG_2D acquired at the step S74 and the three-dimensional position data WSD generated at the step S75 (the step S76). However, the position pose calculation unit 312 may calculate at least one of the position and the pose of the target object OBJ that is different from the gazing target object OBJ_g at the step S76. Note that the processing at the step S76 may be the same as the processing at the step S3 in FIG. 4. Then, the signal generation unit 313 determines whether or not the predetermined computing result condition, which is related to the result of the position pose computing (the position pose computing processing) performed by the position pose calculation unit 312 at the step S76 to generate the position pose data POI, is satisfied (the step S77). Note that the processing at the step S77 may be the same as the processing at the step S41 in FIG. 4.

Here, when the imaging system 2 moves at the step S73, at least one of the position and the pose of the imaging system 2 changes. For example, the position of the imaging system 2 that has moved changes to a position that is different from a position of the imaging system 2 in a case where the imaging system 2 has imaged the target object OBJ (especially, the gazing target object OBJ_g) to generate at least one of the image data IMG_2D and IMG_3D used for a past determination (here, the determination at the step S41 in FIG. 4) that the computing result condition is not satisfied. As a result, the position of the imaging system 2 in a case where the imaging system 2 has imaged the target object OBJ (especially, the gazing target object OBJ_g) to generate at least one of the image data IMG_2D and IMG_3D used for the past determination (here, the determination at the step S41 in FIG. 4) that the computing result condition is not satisfied changes relative to the target object OBJ (especially, the gazing target object OBJ_g). For example, the pose of the imaging system 2 that has moved changes to a pose that is different from a pose of the imaging system 2 in a case where the imaging system 2 has imaged the target object OBJ (especially, the gazing target object OBJ_g) to generate at least one of the image data IMG_2D and IMG_3D used for a past determination (here, the determination at the step S41 in FIG. 4) that the computing result condition is not satisfied. As a result, the pose of the imaging system 2 in a case where the imaging system 2 has imaged the target object OBJ (especially, the gazing target object OBJ_g) to generate at least one of the image data IMG_2D and IMG_3D used for the past determination (here, the determination at the step S41 in FIG. 4) that the computing result condition is not satisfied changes relative to the target object OBJ (especially, the gazing target object OBJ_g). Therefore, the appearance of the target object OBJ (especially, the gazing target object OBJ_g) in the image indicated by each of the image data IMG_2D and IMG_3D changes. As a result, even in a case where it has been determined based on at least one of the image data IMG_2D and IMG_3D, which is acquired before the imaging system 2 moves, that the computing result condition is not satisfied (for example, the result of the position pose computing is not good), there is a possibility that it is determined based on at least one of the image data IMG_2D and IMG_3D, which is acquired after the imaging system 2 moves, that the computing result condition is satisfied (for example, the result of the position pose computing is good. As one example, even in a case where it has been determined by the position pose computing, which is performed based on at least one of the image data IMG_2D and IMG_3D acquired before the imaging system 2 moves, that the end effector 4 cannot perform the predetermined process on the gazing target object OBJ_g (for example, the matching similarity of the gazing target object OBJ_g is lower than the matching determination threshold value), there is a possibility that it is determined by the position pose computing, which is performed based on at least one of the image data IMG_2D and IMG_3D acquired after the imaging system 2 moves, that the end effector 4 can perform the predetermined process on the gazing target object OBJ_g (for example, the matching similarity of the gazing target object OBJ_g is higher than the matching determination threshold value). As a result, it is more likely that the end effector 4 can perform the predetermined process on the target object OBJ (especially, the gazing target object OBJ_g), compared to a case where the imaging system 2 does not move.

Alternatively, the appearance of other target object OBJ, which is different from the gazing target object OBJ_g, in the images indicated by each of the image data IMG_2D and IMG_3D changes in some cases. As a result, even in a case where it has been determined by the position pose computing, which is performed based on at least one of the image data IMG_2D and IMG_3D acquired before the imaging system 2 moves, that the end effector 4 cannot perform the predetermined process on the other target object OBJ (for example, the matching similarity of the other target object OBJ is lower than the matching determination threshold value), there is a possibility that it is determined by the position pose computing, which is performed based on at least one of the image data IMG_2D and IMG_3D acquired after the imaging system 2 moves, that the end effector 4 can perform the predetermined process on the other target object OBJ (for example, the matching similarity of the other target object OBJ is higher than the matching determination threshold value). As a result, it is more likely that the end effector 4 can perform the predetermined process on the other target object OBJ, compared to a case where the imaging system 2 does not move.

Thus, even in a case where it is initially determined that the end effector 4 cannot perform the predetermined process on a first the target object OBJ, it is likely to be determined by performing the gazing processing that the end effector 4 can perform the predetermined process on a second the target object OBJ, which is the same as or different from the first the target object OBJ. For example, even in a case where it is initially determined that the end effector 4 cannot perform the predetermined process on the gazing target object OBJ_g, it is likely to be determined by performing the gazing processing that the end effector 4 can perform the predetermined process on a second the same gazing target object OBJ_g. As another example, it is likely to be determined by performing the gazing processing that the end effector 4 can perform the predetermined process on the target object OBJ, on which it has been determined that the end effector 4 cannot perform the predetermined process before performing the gazing processing but on which it is most likely that the end effector 4 succeeds the predetermined process. Therefore, the gazing processing may be regarded as a processing for increasing the likelihood of a success of the predetermined process performed by the end effector 4 on the target object OBJ. The gazing processing may also be regarded as a processing for ensuring the success of the predetermined process performed by the end effector 4 on the target object OBJ.

Note that the gazing target object OBJ_g (alternatively, other target object OBJ that is different from the gazing target object OBJ_g, in addition to or instead of the gazing target object OBJ_g, the same applies in this paragraph) may not move in an imaging apparatus movement period that is from a timing at which the image data IMG_2D is generated at the step S71 before the imaging system 2 moves at the step S73 to a timing at which at least one of the image data IMG_2D and IMG_3D is generated at the step S74 after the imaging system 2 moves at the step S73. Namely, the gazing target object OBJ_g may remain stationary in the imaging apparatus movement period. In other words, an actual position and an actual pose of the gazing target object OBJ_g may not change before and after the movement of the imaging system 2. Even in a case where the actual position and the actual pose of the gazing target object OBJ_g do not change in this manner, the position and the pose of the gazing target object OBJ_g, which are calculated by the position pose computing performed again at the step S76 after the imaging system 2 moves, may be different from the position and the pose of the gazing target object OBJ_g, which are calculated at the step S72 before the imaging system 2 moves. This is because the imaging system 2 moves and thereby the imaging system 2 image the gazing target object OBJ_g from a position that is different from a position of the imaging system 2 before the imaging system 2 moves as described above. In this case, there is a possibility that the result of the position pose computing improves (in other words, changes) after the imaging system 2 moves. As a result, there is a possibility that the position and the pose of the gazing target object OBJ_g that are calculated by the position pose computing performed again at the step S76 after the imaging system 2 moves are closer to the actual position and the actual pose of the gazing target object OBJ_g, than the position and the pose of the gazing target object OBJ_g that are calculated at the step S72 before the imaging system 2 moves. For this reason, even in a case where the actual position and the actual pose of the gazing target object OBJ_g do not change, there is a possibility that the position and the pose of the gazing target object OBJ_g, which are calculated by the position pose computing performed again at the step S76 after the imaging system 2 moves, are different from the position and the pose of the gazing target object OBJ_g, which are calculated at the step S72 before the imaging system 2 moves. However, the position and the pose of the gazing target object OBJ_g, which are calculated by the position pose computing performed again at the step S3 after the imaging system 2 moves, may be the same as the position and the pose of the gazing target object OBJ_g, which are calculated at the step S72 before the imaging system 2 moves, respectively.

Note that the position and the pose of the gazing target object OBJ_g, which are calculated by the position pose computing performed again at the step S76 after the imaging system 2 moves at the step S73, may be different from the position and the pose of the gazing target object OBJ_g, which are calculated at the step S72 before the imaging system 2 moves at the step S73, respectively, in a case where a type of the image data (for example, the image data IMG_3D) that is used to calculate the position and the pose of the gazing target object OBJ_g (alternatively, other target object OBJ that is different from the gazing target object OBJ_g, in addition to or instead of the gazing target object OBJ_g, the same applies in this paragraph) at the step S76 is different from a type of the image data (for example, the image data IMG_2D) that is used to calculate the position and the pose of the gazing target object OBJ_g at the step S72. This is because the 3D matching processing is performed at the step S76 and the 2D matching processing, which is different from the 3D matching processing, is performed at the step S72. However, even in this case, the position and the pose of the gazing target object OBJ_g, which are calculated by the position pose computing performed again at the step S76 after the imaging system 2 moves at the step S73, may be different from the position and the pose of the gazing target object OBJ_g, which are calculated at the step S72 before the imaging system 2 moves at the step S73, respectively, due to an improvement of the result of the position pose computing caused by the movement of the imaging system 2.

However, the gazing target object OBJ_g (alternatively, other target object OBJ that is different from the gazing target object OBJ_g, in addition to or instead of the gazing target object OBJ_g, the same applies in this paragraph) may move in at least part of the imaging apparatus movement period. In this case, the position and the pose of the gazing target object OBJ_g, which are calculated by the position pose computing performed again at the step S76 after the imaging system 2 moves at the step S73, may be different from the position and the pose of the gazing target object OBJ_g, which are calculated at the step S72 before the imaging system 2 moves at the step S73, respectively.

In a case where the gazing target object OBJ_g (alternatively, other target object OBJ that is different from the gazing target object OBJ_g, in addition to or instead of the gazing target object OBJ_g, the same applies in this paragraph) remains stationary in the imaging apparatus movement period, it is more likely to be determined that the computing result condition is satisfied (namely, the result of the position pose computing is good, and the end effector 4 can perform the predetermined process on the gazing target object OBJ_g) after the imaging system 2 moves, compared to a case where the gazing target object OBJ_g moves in the imaging apparatus movement period. This is because the movement aspect of the imaging system 2 is set so that it is more likely to be determined that the end effector 4 can perform the predetermined process on the gazing target object OBJ_g at a timing at which the imaging system 2 generates the image data IMG_2D acquired at the step S71 (namely, a timing at which the imaging system 2 images the gazing target object OBJ_g to generate the image data IMG_2D acquired at the step S71), as described above. In this case, in a case where the gazing target object OBJ_g moves in the imaging apparatus movement period, there is a possibility that the movement aspect of the imaging system 2, which is intended to increase the likelihood that the end effector 4 can perform the predetermined process on the gazing target object OBJ_g that has moved, is different from the movement aspect of the imaging system 2, which is intended to increase the likelihood that the end effector 4 can perform the predetermined process on the gazing target object OBJ_g that has not yet moved. As a result, in a situation where the gazing target object OBJ_g moves in the imaging apparatus movement period, even in a case where the imaging system 2 moves based on the movement aspect, which is set to increase the likelihood that the end effector 4 can perform the predetermined process on the gazing target object OBJ_g that has not yet moved, it does not necessarily increase the likelihood that the end effector 4 can perform the predetermined process on the gazing target object OBJ_g that has moved. Therefore, in a case where the gazing target object OBJ_g remains stationary in the imaging apparatus movement period, it is more likely to be determined that the end effector 4 can perform the predetermined process on the gazing target object OBJ_g after the imaging apparatus moves, compared to a case where the gazing target object OBJ_g moves in the imaging apparatus movement period. Namely, it is more likely to be determined that the computing result condition is satisfied (namely, the result of the position pose computing is good).

However, in a case where the gazing target object OBJ_g (alternatively, other target object OBJ that is different from the gazing target object OBJ_g, in addition to or instead of the gazing target object OBJ_g, the same applies in this paragraph) moves in the imaging apparatus movement period, the signal generation unit 313 may predict the movement aspect of the gazing target object OBJ_g in the imaging apparatus movement period at the step S72, and set the movement aspect of the imaging system 2 based on a predicted result of the gazing target object OBJ_g in the imaging apparatus movement period. In this case, even in a case where the gazing target object OBJ_g moves in the imaging apparatus movement period, it is more likely to be determined that the end effector 4 can perform the predetermined process on the gazing target object OBJ_g after the imaging system 2 moves, as in a case where the gazing target object OBJ_g is stationary in the imaging apparatus movement period. Note that the signal generation unit 313 may predict a change of the position and the pose of the gazing target object OBJ_g based on a temporal variation of at least one of the position and the pose of the gazing target object OBJ_g, which are calculated based on at least one of the image data IMG_2D and IMG_3D generated by the imaging system 2 imaging the moving the gazing target object OBJ_g.

In a case where it is determined as a result of the determination at the step S77 that the computing result condition is satisfied (namely, the result of the position pose computing is good) (the step S77: Yes), the control apparatus 3 ends the gazing processing illustrated in FIG. 13. As a result, as illustrated in FIG. 4, the signal generation unit 313 generates the robot control signal by using the position pose data POI generated at the step S76 in FIG. 13 (the step S8: Yes and the step S5).

On the other hand, in a case where it is determined as a result of the determination at the step S77 that the computing result condition is not satisfied (namely, the result of the position pose computing is not good) (the step S77: No), the signal generation unit 313 determines whether or not the movement aspect of the imaging system 2 should be set again (a step S78).

In a case where it is determined as a result of the determination at the step S78 that the movement aspect of the imaging system 2 may not be set again (the step S78: No), the control apparatus 3 ends the gazing processing illustrated in FIG. 13. As a result, as illustrated in FIG. 4, the control apparatus 3 ends the robot control processing (the step S8: No).

On the other hand, in a case where it is determined as a result of the determination at the step S78 that the movement aspect of the imaging system 2 should be set again (the step S78: Yes), the control apparatus 3 (especially, the signal generation unit 313) sets (sets again) the movement aspect of the imaging system 2 (the step S72).

Specifically, the signal generation unit 313 may set the movement aspect of the imaging system 2 again so that at least one of the position and the pose of the imaging system 2 relative to the target object OBJ (especially, the gazing target object OBJ_g) changes. For example, the signal generation unit 313 may set the movement aspect of the imaging system 2 again so that the imaging system 2 can newly image the target object OBJ (especially, the gazing target object OBJ_g) from a position that is different from a position from which the imaging system 2 has already imaged the target object OBJ (especially, the gazing target object OBJ_g). For example, the signal generation unit 313 may set the movement aspect of the imaging system 2 again so that the imaging system 2 can newly image the target object OBJ (especially, the gazing target object OBJ_g) in a pose that different from a pose in which the target object OBJ (especially, the gazing target object OBJ_g) has already imaged the target object OBJ (especially, the gazing target object OBJ_g).

In a case where at least one of the position and the pose of the imaging system 2 relative to the target object OBJ (especially, the gazing target object OBJ_g) changes, a direction from which the imaging system 2 images the target object OBJ (especially, the gazing target object OBJ_g) may change. In this case, the signal generation unit 313 may set. the movement aspect of the imaging system 2 again so that the direction from which the imaging system 2 images the target object OBJ (especially, the gazing target object OBJ_g) changes. Especially, the signal generation unit 313 may set the movement aspect of the imaging system 2 again so that the imaging system 2 can newly image the target object OBJ (especially, the gazing target object OBJ_g) from a direction that is different from a direction from which the imaging system 2 has already imaged the target object OBJ (especially, the gazing target object OBJ_g). For example, in a case where the imaging system 2, which has moved by the gazing processing, has already imaged the target object OBJ (especially, the gazing target object OBJ_g) from a first direction, the signal generation unit 313 may set the movement aspect of the imaging system 2 again so that the imaging system 2 moves again based on the movement aspect set again to newly image the target object OBJ (especially, the gazing target object OBJ_g) from a second direction that is different from the first direction. For example, the signal generation unit 313 may set the movement aspect of the imaging system 2 again so that the imaging system 2 moves again based on the movement aspect set again to be positioned at a position at which the imaging system 2 can image the target object OBJ (especially, the gazing target object OBJ_g) from the second direction. For example, the signal generation unit 313 may set the movement aspect of the imaging system 2 again so that the imaging system 2 moves again based on the movement aspect set again to take a pose in which the imaging system 2 can image the target object OBJ (especially, the gazing target object OBJ_g) from the second direction.

At the step S72, the signal generation unit 313 may set the movement aspect indicated by change information as the movement aspect of the imaging system 2. Namely, the signal generation unit 313 may use the change information to set the movement aspect of the imaging system 2 again. The movement aspect indicated by the change information may be a fixed movement aspect. Namely, the change information may indicate in other words, may specify or may define) the fixed movement aspect as the movement aspect of the imaging system 2. For example, the change information may indicate a fixed movement direction. For example, the change information may indicate a fixed movement distance. In this case, the change information may be considered to indicate at least one of a direction and a distance for changing at least one of the position and the pose of the imaging system 2. The change information may be input by the user using the input apparatus 34, or may be automatically generated by the control apparatus 3. In a case where the change information is automatically generated by the control apparatus 3, the control apparatus 3 may generate the change information based on the shape of the target object OBJ (for example, the shape of the CAD model).

In a case where the signal generation unit 313 uses the change information to set the movement aspect of the imaging system 2 gain, the control apparatus 3 may not newly (in other words, again) acquire the image data IMG_2D at the step S71, and may not newly generate the position pose data POI of the target object OBJ based on the image data IMG_2D to set the movement aspect of the imaging system 2 at the step S72, as illustrated in FIG. 13. As a result, a processing load on the control apparatus 3 for moving the imaging system 2 by the gazing processing is reduced. As a result, a time required to perform the gazing processing is reduced.

Moreover, in a case where the signal generation unit 313 sets the movement aspect of the imaging system 2 again by using the change information, the imaging system 2 may not newly generate the image data IMG_2D that is acquired by the control apparatus 3 at the step S71. Namely, the imaging system 2 may not newly image the target object OBJ to generate the image data IMG_2D that is acquired by the control apparatus 3 at the step S71. As a result, a time required for the imaging system 2 to image the target object OBJ and generate the image data IMG_2D is eliminated, thereby the time required to perform the gazing processing is reduced.

However, the signal generation unit 313 may set, as the movement aspect of the imaging system 2, the movement aspect that is different from the movement aspect indicated by the change information.

As a first example, the signal generation unit 313 may set the movement aspect of the imaging system 2 again based on both the relative position pose information and the change information described above. For example, the signal generation unit 313 may set, as the movement aspect of the imaging system 2 again, a movement distance that is acquired by reflecting (for example, adding) the movement distance indicated by the change information to the movement distance of the imaging system 2 indicated by the relative position pose information. For example, the signal generation unit 313 may set, as the movement aspect of the imaging system 2 again, a movement direction that is acquired by reflecting the movement direction indicated by the change information to the movement direction of the imaging system 2 indicated by the relative position pose information.

As a second example, in a case where a plurality of different relative position pose information are set, the signal generation unit 313 may set the movement aspect of the imaging system 2 again based on one relative position pose information, which is not yet used to set the movement aspect of the imaging system 2, of the plurality of different relative position pose information without using the change information. Note that priorities may be assigned to the plurality of different relative position pose information. In this case, the signal generation unit 313 may sequentially use the plurality of different relative position pose information in order of priority from highest to lowest to set the movement aspect of the imaging system 2.

As a third example, the signal generation unit 313 may set a random movement aspect as the movement aspect of the imaging system 2 without using the change information. For example, the signal generation unit 313 may set a random movement direction as the movement direction of the imaging system 2 that is one example of the movement aspect of the imaging system 2. For example, the signal generation unit 313 may set a random movement distance as the movement distance of the imaging system 2 that is one example of the movement aspect of the imaging system 2.

As a fourth example, the signal generation unit 313 may set the movement aspect of the imaging system 2 again based on the position pose data POI of the gazing target object OBJ_g. For example, the signal generation unit 313 may set the movement aspect of the imaging system 2 again based on the position pose data POI of the gazing target object OBJ_g and the relative positional pose information. Conversely, in the above-described description, the signal generation unit 313 uses the position pose data POI of the gazing target object OBJ_g and the relative position pose information to set the movement aspect of the imaging system 2 for the first-time gazing processing. However, the signal generation unit 313 may set the movement aspect of the imaging system 2 for the first-time gazing processing without using the position pose data POI of the gazing target object OBJ_g and relative position pose information. For example, the signal generation unit 313 may set the movement aspect indicated by the change information as the movement aspect of the imaging system 2 for the first-time gazing processing by the gazing processing.

Then, the signal generation unit 313 generates the robot control signal for controlling the robot arm 12 to move the imaging system 2 based on the movement aspect set again at the step S72 (the step S73). As a result, the imaging system 2 moves based on the movement aspect set again at the step S72 (the step S73).

Then, the control apparatus 3 performs the position pose computing to generate the position pose data POI of the target object OBJ and determines whether or not the computing result condition is satisfied (the step S74 to the step S77).

Here, when the imaging system 2 moves based on the movement aspect set gain at the step S73, at least one of the position and the pose of the imaging system 2 changes again. For example, the position of the imaging system 2 that has moved based on the movement aspect set gain changes to a position that is different from the position of the imaging system 2 at a timing at which the imaging system 2 images the target object OBJ (especially, the gazing target object OBJ_g) to generate at least one of the image data IMG_2D and IMG_3D that is used for a previous determination that the computing result condition is not satisfied (here, the determination at the step S41 and the step S77 in FIG. 1). As a result, the position of the imaging system 2 at a timing at which the imaging system 2 images the target object OBJ (especially, the gazing target object OBJ_g) to generate at least one of the image data IMG_2D and IMG_3D that is used for the previous determination that the computing result condition is not satisfied changes relative to the target object OBJ (especially, the gazing target object OBJ_g) again. For example, the pose of the imaging system 2 that has moved based on the movement aspect set gain changes to a pose that is different from the pose of the imaging system 2 at a timing at which the imaging system 2 images the target object OBJ (especially, the gazing target object OBJ_g) to generate at least one of the image data IMG_2D and IMG_3D that is used for a previous determination that the computing result condition is not satisfied. As a result, the pose of the imaging system 2 at a timing at which the imaging system 2 images the target object OBJ (especially, the gazing target object OBJ_g) to generate at least one of the image data IMG_2D and IMG_3D that is used for the previous determination that the computing result condition is not satisfied changes relative to the target object OBJ (especially, the gazing target object OBJ_g). Therefore, the appearance of the target object OBJ (especially, the gazing target object OBJ_g) in the image indicated by each of the image data IMG_2D and IMG_3D changes again. As a result, even in a case where it has been determined based on at least one of the image data IMG_2D and IMG_3D, which is acquired before the imaging system 2 moves based on the movement aspect set gain, that the computing result condition is not satisfied (for example, the result of the position pose computing is not good), there is a possibility that it is determined based on at least one of the image data IMG_2D and IMG_3D, which is acquired after the imaging system 2 moves based on the movement aspect set gain, that the computing result condition is satisfied (for example, the result of the position pose computing is good). For example, even in a case where it has been determined by the position pose computing, which is performed based on at least one of the image data IMG_2D and IMG_3D acquired before the imaging system 2 moves based on the movement aspect set gain, that the end effector 4 cannot perform the predetermined process on the gazing target object OBJ_g (for example, the matching similarity of the gazing target object OBJ_g is lower than the matching determination threshold value), there is a possibility that it is determined by the position pose computing, which is performed based on at least one of the image data IMG_2D and IMG_3D acquired after the imaging system 2 moves based on the movement aspect set gain, that the end effector 4 can perform the predetermined process on the gazing target object OBJ_g (for example, the matching similarity of the gazing target object OBJ_g is higher than the matching determination threshold value). As a result, it is more likely that the end effector 4 can perform the predetermined process on the target object OBJ (especially, the gazing target object OBJ_g), compared to a case where the imaging system 2 does not move based on the movement aspect set again (namely, a case where the movement aspect of the imaging system 2 is not set again).

Alternatively, the appearance of other target object OBJ, which is different from the gazing target object OBJ_g, in the image indicated by each of the image data IMG_2D and IMG_3D changes in some cases. As a result, even in a case where it has been determined by the position pose computing, which is performed based on at least one of the image data IMG_2D and IMG_3D acquired before the imaging system 2 moves based on the movement aspect set gain, that the end effector 4 cannot perform the predetermined process on the other target object OBJ (for example, the matching similarity of the other target object OBJ is lower than the matching determination threshold value), there is a possibility that it is determined by the position pose computing, which is performed based on at least one of the image data IMG_2D and IMG_3D acquired after the imaging system 2 moves based on the movement aspect set gain, that the end effector 4 can perform the predetermined process on the other target object OBJ (for example, the matching similarity of the other target object OBJ is higher than the matching determination threshold value). As a result, it is more likely that the end effector 4 can perform the predetermined process on the other target object OBJ, compared to a case where the imaging system 2 does not move based on the movement aspect set again (namely, a case where the movement aspect of the imaging system 2 is not set again).

Then, the operation from the step S72 to the step S76 is repeated until it is determined at the step S77 that the computing result condition is satisfied or it is determined at the step S78 that the movement aspect of the imaging system 2 may not be set again(the step S77: Yes or the step S78: No).

Specifically, the signal generation unit 313 may set the movement aspect of the imaging system 2 again so that at least one of the position and the pose of the imaging system 2 relative to the target object OBJ (especially, the gazing target object OBJ_g) changes again. For example, the signal generation unit 313 may set the movement aspect of the imaging system 2 again so that the imaging system 2 can newly image the target object OBJ (especially, the gazing target object OBJ_g) from a position that is different from a position from which the imaging system 2 has already imaged the target object OBJ (especially, the gazing target object OBJ_g). For example, the signal generation unit 313 may set the movement aspect of the imaging system 2 again so that the imaging system 2 can newly image the target object OBJ (especially, the gazing target object OBJ_g) in a pose that different from a pose in which the target object OBJ (especially, the gazing target object OBJ_g) has already imaged the target object OBJ (especially, the gazing target object OBJ_g).

In a case where at least one of the position and the pose of the imaging system 2 relative to the target object OBJ (especially, the gazing target object OBJ_g) changes again, the direction from which the imaging system 2 images the target object OBJ (especially, the gazing target object OBJ_g) may change again. In this case, the signal generation unit 313 may set. the movement aspect of the imaging system 2 again so that the direction from which the imaging system 2 images the target object OBJ (especially, the gazing target object OBJ_g) changes. Especially, the signal generation unit 313 may set the movement aspect of the imaging system 2 again so that the imaging system 2 can newly image the target object OBJ (especially, the gazing target object OBJ_g) from a direction that is different from a direction from which the imaging system 2 has already imaged the target object OBJ (especially, the gazing target object OBJ_g). For example, in a case where the imaging system 2, which has moved by the gazing processing, has already imaged the target object OBJ (especially, the gazing target object OBJ_g) from a first direction, the signal generation unit 313 may set the movement aspect of the imaging system 2 again so that the imaging system 2 moves again based on the movement aspect set again to newly image the target object OBJ (especially, the gazing target object OBJ_g) from a second direction that is different from the first direction. For example, the signal generation unit 313 may set the movement aspect of the imaging system 2 again so that the imaging system 2 moves again based on the movement aspect set again to be positioned at a position at which the imaging system 2 can image the target object OBJ (especially, the gazing target object OBJ_g) from the second direction. For example, the signal generation unit 313 may set the movement aspect of the imaging system 2 again so that the imaging system 2 moves again based on the movement aspect set again to take a pose in which the imaging system 2 can image the target object OBJ (especially, the gazing target object OBJ_g) from the second direction.

In order to change at least one of the position and the pose of the imaging system 2 relative to target object OBJ (especially, gazing target object OBJ_g), the signal generation unit 313 may set the movement aspect of the imaging system 2 so that the movement aspect of the imaging system 2 changes each time it is determined that the computing result condition is not satisfied at the step S77 after moving the imaging system 2 at the step S73 (the step S72). For example, in a case where it is determined at the step S77 that the computing result condition is not satisfied after moving the imaging system 2 based on a first movement aspect at the step S73, the signal generation unit 313 may set a second movement aspect, which is different from the first movement aspect, as the movement aspect of the imaging system 2 (the step S72). Then, in a case where it is determined at the step S77 that the computing result condition is not satisfied after moving the imaging system 2 based on the second movement aspect at the step S73, the signal generation unit 313 may set a third movement aspect, which is different from the first to second movement aspects, as the movement aspect of the imaging system 2 (the step S72)

As one example, the signal generation unit 313 may change the movement aspect of the imaging system 2 by changing the movement direction of the imaging system 2 each time it is determined at the step S77 that the computing result condition is not satisfied. Specifically, in a case where it is determined at the step S77 that the computing result condition is not satisfied after moving the imaging system 2 in a first movement direction at the step S73, the signal generation unit 313 may change the movement aspect of the imaging system 2 to move the imaging system 2 in a second movement direction that is different from the first movement direction. For example, in a case where it is determined at the step S77 that the computing result condition is not satisfied after moving the imaging system 2 in the first movement direction at the step S73, the signal generation unit 313 may change the movement aspect of the imaging system 2 to move the imaging system 2 in the second movement direction that intersects the first movement direction. For example, in a case where it is determined at the step S77 that the computing result condition is not satisfied after moving the imaging system 2 in the first movement direction at the step S73, the signal generation unit 313 may change the movement aspect of the imaging system 2 to move the imaging system 2 in the second movement direction that is orthogonal to the first movement direction. For example, in a case where it is determined at the step S77 that the computing result condition is not satisfied after moving the imaging system 2 in the first movement direction at the step S73, the signal generation unit 313 may change the movement aspect of the imaging system 2 to move the imaging system 2 in the second movement direction that is directed toward an opposite side of the first movement direction.

As one example, the signal generation unit 313 may change the movement aspect of the imaging system 2 by changing the movement distance of the imaging system 2 each time it is determined at the step S77 that the computing result condition is not satisfied, in addition to or instead of changing at least one of the movement direction of the imaging system 2. Specifically, in a case where it is determined at the step S77 that the computing result condition is not satisfied after moving the imaging system 2 by a first movement distance at the step S73, the signal generation unit 313 may change the movement aspect of the imaging system 2 to move the imaging system 2 by a second movement distance that is different from the first movement distance. For example, in a case where it is determined at the step S77 that the computing result condition is not satisfied after moving the imaging system 2 by the first movement distance at the step S73, the signal generation unit 313 may change the movement aspect of the imaging system 2 to move the imaging system 2 by the second movement distance that is longer than the first movement distance. For example, in a case where it is determined at the step S77 that the computing result condition is not satisfied after moving the imaging system 2 by the first movement distance at the step S73, the signal generation unit 313 may change the movement aspect of the imaging system 2 to move the imaging system 2 by the second movement distance that is shorter than the first movement distance. For example, in a case where it is determined at the step S77 that the computing result condition is not satisfied after moving the imaging system 2 by the first movement distance at the step S73, the signal generation unit 313 may change the movement aspect of the imaging system 2 to move the imaging system 2 by the second movement distance that is directed toward an opposite side of the first movement direction.

Even in a case where the operation from the step S72 to the step S76 is repeated, the signal generation unit 313 may set the movement aspect indicated by the change information as the movement aspect of the imaging system 2 at the step S72. Namely, the signal generation unit 313 may use the change information to set the movement aspect of the imaging system 2 again. The movement aspect indicated by the change information may be a fixed movement aspect. Namely, the change information may indicate in other words, may specify or may define) the fixed movement aspect as the movement aspect of the imaging system 2. For example, the change information may indicate a fixed movement direction. For example, the change information may indicate a fixed movement distance. In this case, the change information may be considered to indicate at least one of a direction and a distance for changing at least one of the position and the pose of the imaging system 2. The change information may be input by the user using the input apparatus 34, or may be automatically generated by the control apparatus 3. In a case where the change information is automatically generated by the control apparatus 3, the control apparatus 3 may generate the change information based on the shape of the target object OBJ (for example, the shape of the CAD model).

However, even in a case where the operation from the step S72 to the step S76 is repeated, the signal generation unit 313 may set, as the movement aspect of the imaging system 2, the movement aspect that is different from the movement aspect indicated by the change information at the step S72.

As a first example, the signal generation unit 313 may set the movement aspect of the imaging system 2 again based on both the relative position pose information and the change information described above. For example, the signal generation unit 313 may set, as the movement aspect of the imaging system 2 again, a movement distance that is acquired by reflecting (for example, adding) the movement distance indicated by the change information to the movement distance of the imaging system 2 indicated by the relative position pose information. For example, the signal generation unit 313 may set, as the movement aspect of the imaging system 2 again, a movement direction that is acquired by reflecting the movement direction indicated by the change information to the movement direction of the imaging system 2 indicated by the relative position pose information.

As a second example, in a case where a plurality of different relative position pose information are set, the signal generation unit 313 may set the movement aspect of the imaging system 2 again based on one relative position pose information, which is not yet used to set the movement aspect of the imaging system 2, of the plurality of different relative position pose information without using the change information. Note that priorities may be assigned to the plurality of different relative position pose information. In this case, the signal generation unit 313 may sequentially use the plurality of different relative position pose information in order of priority from highest to lowest to set the movement aspect of the imaging system 2.

As a third example, the signal generation unit 313 may set a random movement aspect as the movement aspect of the imaging system 2 without using the change information. For example, the signal generation unit 313 may set a random movement direction as the movement direction of the imaging system 2 that is one example of the movement aspect of the imaging system 2. For example, the signal generation unit 313 may set a random movement distance as the movement distance of the imaging system 2 that is one example of the movement aspect of the imaging system 2.

As a fourth example, the signal generation unit 313 may set the movement aspect of the imaging system 2 again based on the position pose data POI of the gazing target object OBJ_g. For example, the signal generation unit 313 may set the movement aspect of the imaging system 2 again based on the position pose data POI of the gazing target object OBJ_g and the relative positional pose information. Conversely, in the above-described description, the signal generation unit 313 uses the position pose data POI of the gazing target object OBJ_g and the relative position pose information to set the movement aspect of the imaging system 2 for the first-time gazing processing. However, the signal generation unit 313 may set the movement aspect of the imaging system 2 for the first-time gazing processing without using the position pose data POI of the gazing target object OBJ_g and relative position pose information. For example, the signal generation unit 313 may set the movement aspect indicated by the change information as the movement aspect of the imaging system 2 for the first-time gazing processing by the gazing processing.

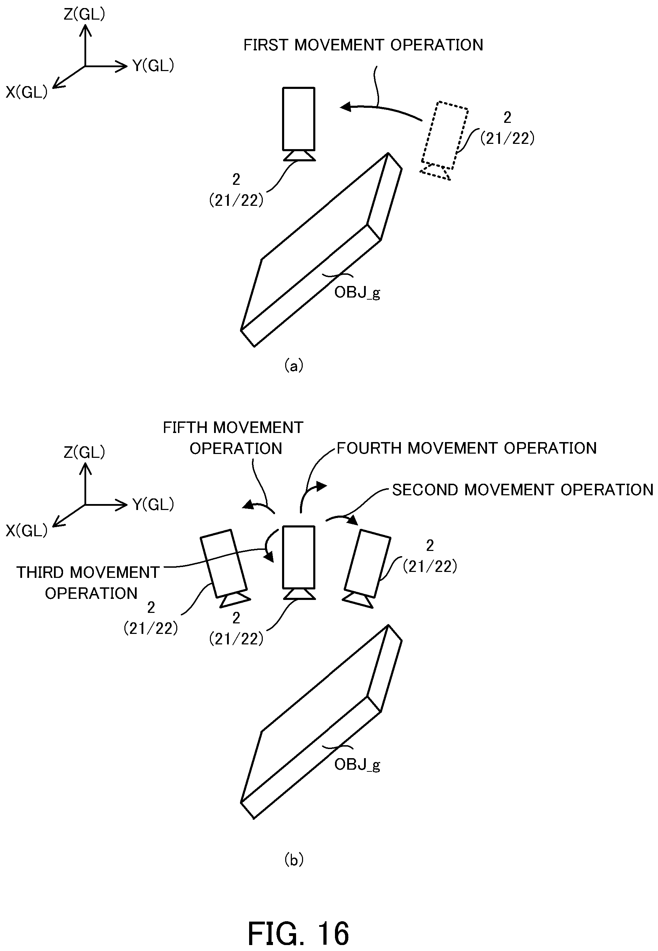

FIG. 16(a) and FIG. 16(b) illustrate an example in which the movement aspect of the imaging system 2 is changed each time it is determined that the end effector 4 cannot perform the predetermined process on the target object OBJ.

As illustrated in FIG. 16(a), after gazing processing is started, the signal generation unit 313 may first move the imaging system 2 based on the movement aspect set that is based on the image data IMG_2D. For example, the signal generation unit 313 may move the imaging system 2 based on the movement aspect that is set based on the relative positional pose information (the positional relationship between the imaging system 2 and the target object OBJ when the imaging system 2 images the target object OBJ) input by the user and the image data IMG_2D (the position pose data POI of the gazing target object OBJ_g). In this case, the signal generation unit 313 may calculate, based on the position pose data POI of the gazing target object OBJ_g (namely, at least one of the position and the pose of the gazing target object OBJ_g in the global coordinate system) generated from the image data IMG_2D at the step S72 and the relative position pose information, a target value of a position (namely, an initial target position) in the global coordinate system at which the imaging system 2 should be positioned after movement, and move the imaging system 2 so that the position of the imaging system 2 in the global coordinate system matches the calculated initial target position. Moreover, the signal generation unit 313 may calculate, based on the position pose data POI of the gazing target object OBJ_g (namely, at least one of the position and the pose of the gazing target object OBJ_g in the global coordinate system) generated from the image data IMG_2D at the step S72 and the positional relationship between the imaging system 2 and the gazing target object OBJ_g set by the user, a target value of a pose (namely, an initial target pose) in the global coordinate system which the imaging system 2 should take after movement, and move the imaging system 2 so that the pose of the imaging system 2 in the global coordinate system matches the calculated initial target pose. In the example illustrated in FIG. 16(a), the signal generation unit 313 performs a first movement operation for at least rotationally moving the imaging system 2 so that the position of the imaging system 2 changes from a current position to the initial target position, and the pose of the imaging system 2 changes from a current pose to the initial target pose.

Then, as illustrated in FIG. 16(b), in a case where it is determined for a second or more time that the computing result condition is not satisfied, the signal generation unit 313 may move the imaging system 2 based on the movement aspect indicated by the change information. Especially, as illustrated in FIG. 16(b), in a case where it is determined for a second or more time that the computing result condition is not satisfied, the signal generation unit 313 may repeat an operation for moving the imaging system 2 based on the movement aspect indicated by the change information. Specifically, in a case where it is determined for a second or more time that the computing result condition is not satisfied, the signal generation unit 313 may move the imaging system 2 based on one movement aspect indicated by the change information. Then, the operation for moving the imaging system 2 based on other movement aspects indicated by the change information may be repeated each time it is determined again that the computing result condition is not satisfied.

In this case, the change information may be information indicating that the imaging system 2 is to be moved sequentially in a plurality of different movement aspects. For example, the change information may be information indicating that the imaging system 2 is to be moved sequentially by a plurality of different movement distances. For example, the change information may be information indicating that the imaging system 2 is to be moved sequentially in a plurality of different movement directions.

In the example illustrated in FIG. 16(b), in a case where it is determined for a second time that the computing result condition is not satisfied, the signal generation unit 313 performs a second movement operation for rotationally moving the imaging system 2, which is positioned at the above-described initial target position and takes the above-described initial target pose, in a negative rotational direction around the X-axis(GL). Then, in a case where it is determined for a third time that the computing result condition is not satisfied, the signal generation unit 313 performs a third movement operation for rotationally moving the imaging system 2, which is positioned at the initial target position and takes the initial target pose, in a positive rotational direction around the X-axis(GL). However, after the second movement operation is performed, the position of the imaging system 2 is different from the initial target position and / or the pose of the imaging system 2 is different from the initial target pose. In this case, the signal generation unit 313 may calculate, based on the change information and at least one of the position and the pose of the imaging system 2 as the target position and the target pose for the third movement operation, the position and the pose of the imaging system 2 assuming that the imaging system 2, which is positioned at the initial target position and takes the initial target pose, is rotationally moved in the positive rotational direction around the Y-axis(GL), and performs the third movement operation so that the position of the imaging system 2 changes to the target position and the pose of the imaging system 2 changes to the target pose. The same applies to fourth and fifth movement operations described later. Then, in a case where it is determined for a fourth time that the computing result condition is not satisfied, the signal generation unit 313 performs a fourth movement operation for rotationally moving the imaging system 2, which is positioned at the initial target position and takes the initial target pose, in a negative rotational direction around the Y-axis(GL). Then, in a case where it is determined for a fifth time that the computing result condition is not satisfied, the signal generation unit 313 performs a fifth movement operation for rotationally moving the imaging system 2, which is positioned at the initial target position and takes the initial target pose, in a positive rotational direction around the Y-axis(GL).

Namely, in FIG. 16(b), in a case where it is determined for a second or more time that the computing result condition is not satisfied, the signal generation unit 313 may repeat an operation for moving the imaging system 2, which is positioned at the initial target position and takes the initial target pose, in the movement direction indicated by the change information while changing the movement direction based on the change information. In this case, the movement distance of the imaging system 2 may be fixed. Alternatively, the movement distance of the imaging system 2 may also be changed. Namely, in a case where it is determined for a second or more time that the computing result condition is not satisfied, the signal generation unit 313 may repeat an operation for moving the imaging system 2, which is positioned at the initial target position and takes the initial target pose, in the movement direction indicated by the change information by the movement distance indicated by the change information while changing at least one of the movement direction and the movement distance based on the change information. Alternatively, in a case where it is determined for a second or more time that the computing result condition is not satisfied, the signal generation unit 313 may repeat an operation for moving the imaging system 2, which is positioned at the initial target position and takes the initial target pose, by the movement distance indicated by the change information while changing the movement distance based on the change information and fixing the movement direction.

Alternatively, in a case where it is determined for a second or more time that the computing result condition is not satisfied, the movement aspect of the imaging system 2 may be set by using the same change information. For example, in a case where it is determined for a second or more time that the computing result condition is not satisfied, the signal generation unit 313 may repeat an operation for moving the imaging system 2, which is positioned at the initial target position and takes the initial target pose, in the movement direction indicated by the change information by the movement distance indicated by the change information by using the change information. Namely, the signal generation unit 313 may move the imaging system 2 in the same direction by the same distance each time it is determined for a second or more time that the computing result condition is not satisfied. In a case where the control apparatus 3 may perform the gazing processing without sequentially changing the change information.

### (2-3-2) Other Example of Gazing Processing

As briefly described above, the control apparatus 3 may set the movement aspect of the imaging system 2 based on the image data IMG_3D (alternatively, the three-dimensional position data WSD generated from the image data IMG_3D), instead of the image data IMG_2D, at the step S72 in FIG. 13. For example, the control apparatus 3 may perform the 3D matching processing using the three-dimensional position data WSD to calculate at least one of the position and the pose of the target object OBJ, and set the movement aspect of the imaging system 2 based on at least one of the calculated position and pose of the target object OBJ. Even in this case, the control apparatus 3 may set the movement aspect of the imaging system 2 based on the image data IMG_3D (alternatively, the three-dimensional position data WSD generated from the image data IMG_3D) so that it is more likely to be determined that the computing result condition is satisfied (as a result, the end effector 4 can perform the predetermined process on the target object OBJ). Note that a processing for setting the movement aspect of the imaging system 2 based on the image data IMG_3D (alternatively, the three-dimensional position data WSD generated from the image data IMG_3D) may be the same as the above-described processing for setting the movement aspect of the imaging system 2 based on the image data IMG_2D. Therefore, a detailed description of the processing for setting the movement aspect of the imaging system 2 based on the image data IMG_3D (alternatively, the three-dimensional position data WSD generated from the image data IMG_3D) is omitted.

Even in this case, the control apparatus 3 may acquire the image data IMG_3D, which is generated by the imaging system 2 after it is determined that the trigger condition is satisfied. Alternatively, the control apparatus 3 may acquire the image data IMG_3D, which is generated by the imaging system 2 before it is determined that the trigger condition is satisfied. As one example, the imaging system 2 may generate the image data IMG_3D for the gazing processing by imaging the target object OBJ after the imaging system 2 generates at least one of the image data IMG_2D and IMG_3D for the position pose computing by imaging the target object OBJ at the step S1 in FIG. 4 and before it is determined at the step S42 in FIG. 4 that the trigger condition is satisfied. As another example, the imaging system 2 may generate the image data IMG_3D for the position pose computing at the step S1 in FIG. 4, and the control apparatus 3 may use the image data IMG_3D generated at the step S1 in FIG. 4 as the image data IMG_3D for the gazing processing. Namely, the image data IMG_3D for the position pose computing at the step S3 in FIG. 4 may be used as the image data IMG_3D for the gazing processing. Alternatively, the control apparatus 3 may use the position pose data POI, which is generated by the position pose computing at the step S3 in FIG. 4, to set the movement aspect of the imaging system 2 at the step S72 in FIG. 13, in addition to or instead of using the image data IMG_3D. As another example, the imaging system 2 may generate the image data IMG_2D, which is for the position pose computing, and generate the image data IMG_3D, which is for the gazing processing and which is acquired by the control apparatus 3 at the step S71 in FIG. 13, at the step S1 in FIG. 4. Namely, the imaging system 2 may generate the image data IMG_2D for the position pose computing and the image data IMG_3D for the gazing processing at the same timing.

As briefly described above, the control apparatus 3 may set the movement aspect of the imaging system 2 based on both the image data IMG_2D and the image data IMG_3D (alternatively, the three-dimensional position data WSD generated from the image data IMG_3D) at the step S73 in FIG. 13. For example, the control apparatus 3 may perform both the 2D matching processing using the image data IMG_2D and the 3D matching processing using the three-dimensional position data WSD to calculate at least one of the position and the pose of the target object OBJ, and set the movement aspect of the imaging system 2 based on at least one of the calculated position and pose of the target object OBJ. Even in this case, the control apparatus 3 may set the movement aspect of the imaging system 2 based on both the image data IMG_2D and the image data IMG_3D (alternatively, the three-dimensional position data WSD generated from the image data IMG_3D) so that it is more likely to be determined that the computing result condition is satisfied. Note that a processing for setting the movement aspect of the imaging system 2 based on both the image data IMG_2D and the image data IMG_3D (alternatively, the three-dimensional position data WSD generated from the image data IMG_3D) may be the same as the above-described processing for setting the movement aspect of the imaging system 2 based on the image data IMG_2D. Therefore, a detailed description of the processing for setting the movement aspect of the imaging system 2 based on both the image data IMG_2D and the image data IMG_3D (alternatively, the three-dimensional position data WSD generated from the image data IMG_3D) is omitted.

In a case where at least one of the image data IMG_2D and the image data IMG_3D (specifically, the three-dimensional position data WSD generated from the image data IMG_3D) is used to perform the position pose computing (the matching processing) at the step S3 in FIG. 4 and the step S76 in FIG. 13, the control apparatus 3 may set the movement aspect of the imaging system 2 by using at least other one of the image data IMG_2D and the image data IMG_3D (alternatively, the three-dimensional position data WSD generated from the image data IMG_3D) at the step S72 in FIG. 13.

As one example, in a case where the image data IMG_3D (specifically, the three-dimensional position data WSD generated from the image data IMG_3D) is used but the image data IMG_2D is not used to perform the position pose computing at the step S3 in FIG. 4 and the step S76 in FIG. 13, the control apparatus 3 may set the movement aspect of the imaging system 2 by using at least the image data IMG_2D at the step S72 in FIG. 13. This is because it is not likely that there is a significant difference between a detected result of the target object OBJ for performing the position pose computing and the detected result of the target object OBJ for setting the movement aspect of the imaging system 2, in a case where the image data IMG_3D is used for the position pose calculation and the image data IMG_3D is used for setting the movement aspect of the imaging system 2. As a result, in a case where it is determined that the result of the position pose computing, which is performed based on the image data IMG_3D generated by the imaging apparatus 21, is not good (namely, the computing result condition is not satisfied), there is a possibility that it is determined again that the result of the position pose computing is not good even in a case where the imaging system 2 moves based on the movement aspect that is set by using the image data IMG_3D generated by the same imaging apparatus 22. On the other hand, in a case where the image data IMG_3D is used to perform the position pose computing and the image data IMG_2D is used to set the movement aspect of the imaging system 2, there is a possibility that there is a difference between a detected result of the target object OBJ for performing the position pose computing and the detected result of the target object OBJ for setting the movement aspect of the imaging system 2. As a result, in a case where it is determined that the result of the position pose computing, which is performed based on the image data IMG_3D generated by the imaging apparatus 22, is not good (namely, the computing result condition is not satisfied), it is more likely to be determined that the result of the position pose computing is good due to the movement of the imaging system 2 based on the movement aspect that is set by using the image data IMG_2D generated by the imaging apparatus 21 that is different from the imaging apparatus 22. Therefore, in a case where the image data IMG_3D is used to perform the position pose computing and the image data IMG_2D is used to set the movement aspect of the imaging system 2, the control apparatus 3 can set the movement aspect of the imaging system 2 so that it is more likely that the result of the position pose computing is good (as a result, the end effector 4 can perform the predetermined process on the target object OBJ).

Moreover, there is a possibility that the position pose data POI generated by the above-described 3D matching processing is more accurate than the position pose data POI generated by the 2D matching processing. However, in a case where the 3D matching processing is performed, there is a possibility that a quality of the three-dimensional position data WSD deteriorates and / or varies in the process of generating the three-dimensional position data WSD from the image data IMG_3D. For example, in a case where the three-dimensional position data WSD is the point cloud data, there is a possibility that an amount of noise included in the point cloud (for example, point cloud that is different from point cloud of the object and that is the noise) increases, or a difference between a three-dimensional coordinate indicated by the point cloud data and a true value increases. In this case, there is a possibility that the accuracy of the position pose data POI, which is generated by the 3D matching processing, varies (for example, deteriorates) significantly depending on the quality and / or the variability of the three-dimensional position data WSD. Namely, a robustness of the position pose data POI generated by the 3D matching processing is low. On the other hand, in a case where the 2D matching processing is performed, the position pose data POI is generated by directly using the image data IMG_2D without converting the image data IMG_2D to other data (for example, the three-dimensional position data WSD). Therefore, it is unlikely that the accuracy of the position pose data POI, which is generated by the 2D matching processing, varies significantly (for example, deteriorates significantly). Namely, the robustness of the position pose data POI generated by the 2D matching processing is high. Therefore, in a case where the computing result condition, which is related to the position pose computing including the 3D matching processing that is performed by using the image data IMG_3D (specifically, the three-dimensional position data WSD generated from the image data IMG_3D) at the step S3 in FIG. 4 and the step S76 in FIG. 13 as described above, is not satisfied, the control apparatus 3 performs the 2D matching processing, by which it is expected that the calculated matching similarity is equal to or higher than the matching threshold value because its robustness is high, to generate the position pose data POI, which is expected to accurately indicate at least one of the position and the pose of the target object OBJ (especially, the gazing target object OBJ_g), and sets the movement aspect of the imaging system 2 based on this position pose data POI. In this case, the control apparatus 3 may be considered to support the 3D matching processing by the 2D matching processing to improve the result of the position pose computing including the 3D matching processing that is performed next.

For the same reason, in a case where the image data IMG_2D is used but the image data IMG_3D (specifically, the three-dimensional position data WSD generated from the image data IMG_3D) is not used to perform the position pose computing at the step S3 in FIG. 4 and the step S76 in FIG. 13, the control apparatus 3 may set the movement aspect of the imaging system 2 by using at least the image data IMG_3D (specifically, the three-dimensional position data WSD generated from the image data IMG_3D) at the step S72 in FIG. 13. Even in this case, the control apparatus 3 can set the movement aspect of the imaging system 2 so that it is more likely that the result of the position pose computing is good (as a result, the end effector 4 can perform the predetermined process on the target object OBJ).

However, in a case where the image data IMG_3D (alternatively, the three-dimensional position data WSD generated from the image data IMG_3D) is used but the image data IMG_2D is not used to perform the position pose computing at the step S3 in FIG. 4 and the step S76 in FIG. 13, the control apparatus 3 may set the movement aspect of the imaging system 2 by using at least the image data IMG_3D (alternatively, the three-dimensional position data WSD generated from the image data IMG_3D) at the step S72 in FIG. 13. Alternatively, in a case where the image data IMG_3D (alternatively, the three-dimensional position data WSD generated from the image data IMG_3D) is used but the image data IMG_2D is not used to perform the position pose computing at the step S3 in FIG. 4 and the step S76 in FIG. 13, the control apparatus 3 may set the movement aspect of the imaging system 2 by using both the image data IMG_2D and the image data IMG_3D (alternatively, the three-dimensional position data WSD generated from the image data IMG_3D) at the step S72 in FIG. 13.

Similarly, in a case where the image data IMG_2D is used but the image data IMG_3D (alternatively, the three-dimensional position data WSD generated from the image data IMG_3D) is not used to perform the position pose computing at the step S3 in FIG. 4 and the step S76 in FIG. 13, the control apparatus 3 may set the movement aspect of the imaging system 2 by using at least the image data IMG_2D at the step S72 in FIG. 13. Alternatively, in a case where the image data IMG_2D is used but the image data IMG_3D (specifically, the three-dimensional position data WSD generated from the image data IMG_3D) is not used to perform the position pose computing at the step S3 in FIG. 4 and the step S76 in FIG. 13, the control apparatus 3 may set the movement aspect of the imaging system 2 by using both the image data IMG_2D and the image data IMG_3D (alternatively, the three-dimensional position data WSD generated from the image data IMG_3D) at the step S72 in FIG. 13.

Moreover, in a case where both the image data IMG_2D and the image data IMG_3D (specifically, the three-dimensional position data WSD generated from the image data IMG_3D) is used to perform the position pose computing at the step S3 in FIG. 4 and the step S76 in FIG. 13, the control apparatus 3 may set the movement aspect of the imaging system 2 by using at least of the image data IMG_2D and the image data IMG_3D (alternatively, the three-dimensional position data WSD generated from the image data IMG_3D) at the step S72 in FIG. 13.

Alternatively, the control apparatus 3 may set the movement aspect of the imaging system 2 at the step S72 in FIG. 13 without acquiring the image data IMG_2D and IMG_3D (alternatively, the three-dimensional position data WSD generated from the image data IMG_3D) at the step S71 in FIG. 13. For example, even in a case where it is determined that the result of the position pose computing is not good (namely, the result of the position pose computing is not good and the computing result condition is not satisfied) because the matching similarity calculated by the position pose calculation unit 312 is lower than the matching determination threshold value, at least one of the position and the pose of the target object OBJ is still calculated. In this case, the position pose calculation unit 312 may set the movement aspect of the imaging system 2 based on at least one of the position and the pose of OBJ that is calculated as a result of the position pose computing (namely, at least one of the position and the pose of OBJ whose accuracy may be low).

### (2-4) Trigger Condition

Next, the trigger condition that is used at the step S42 in FIG. 4 will be described. In the present example embodiment, a height condition, which is related to a height H of the plurality of target objects OBJ on which the end effector 4 should sequentially perform the predetermined process, may be used as the trigger condition.

For example, in a case where the end effector 4 sequentially performs the holding process on the plurality of target objects OBJ (namely, sequentially picks up the plurality of target objects OBJ), the plurality of target objects OBJ may be contained in the container CB as illustrated in FIG. 17. In this case, the height condition, which is related to the height H of the plurality of target objects OBJ contained in the container CB, may be used as the trigger condition. Note that the trigger condition (the height condition) that is used in a case where the end effector 4 sequentially performs the holding process on the plurality of target objects OBJ (namely, sequentially picks up the plurality of target objects OBJ) will be described in the below-described description.

The height H of the plurality of target objects OBJ contained in the container CB may mean the height H of the target object group OBG that includes all of the plurality of target objects OBJ contained in the container CB. Alternatively, the height H of the plurality of target objects OBJ contained in the container CB may mean the height H of the target object group OBG that includes a part of the plurality of target objects OBJ contained in the container CB. Namely, the height H of the plurality of target objects OBJ contained in the container CB may mean the height H of the target object group OBG that includes at least a part of the plurality of target objects OBJ contained in the container CB. Note that the target object group OBG (namely, the target object group OBG that is a target for calculating the height H) described in the description of the trigger condition is referred to as a target object group OBG_trigger in the below-described description.

As one example, as described with reference to FIG. 4, the control apparatus 3 determines whether or not the trigger condition is satisfied, in a case where it is determined that the result of the position pose computing performed at the step S3 in FIG. 4 is not good. Here, the position pose computing is performed by using at least one of the image data IMG_2D and IMG_3D generated by the imaging system 2 imaging the plurality of target objects OBJ. In this case, the target object group OBG_trigger that is the target for calculating the height H may include at least one target object OBJ, which is imaged by the imaging system 2 to perform the position pose computing, among the plurality of target objects OBJ contained in the container CB. In other words, the trigger target object group OBG_trigger may not include at least one target object OBJ, which is not imaged by the imaging system 2 to perform the position pose computing, among the plurality of target objects OBJ contained in the container CB. For example, in a case where all of the plurality of target objects OBJ contained in the container CB are included in the imaging field of view of the imaging system 2, the imaging system 2 can image all of the plurality of target objects OBJ contained in the container CB to perform the position pose computing. In this case, the target object group OBG_trigger may include all of the plurality of target objects OBJ contained in the container CB. In this case, the target object group OBG_trigger that is the target for calculating the height H may be the same as the target object group including the plurality of target objects OBJ imaged by the imaging system 2 to perform the position pose computing. Namely, the plurality of target objects OBJ included in the target object group OBG_trigger that is the target for calculating the height H may be the same as the plurality of target objects OBJ imaged by the imaging system 2 to perform the position pose computing. On the other hand, for example, in a case where a part of the plurality of target objects OBJ contained in the container CB are included in the imaging field of view of the imaging system 2 but other part of the plurality of target objects OBJ contained in the container CB are not included in the imaging field of view of the imaging system 2, the imaging system 2 can image a part of the plurality of target objects OBJ contained in the container CB but cannot image other part of the plurality of target objects OBJ contained in the container CB. In this case, the target object group OBG_trigger may include a part of the plurality of target objects OBJ contained in the container CB. Even in this case, the target object group OBG_trigger that is the target for calculating the height H may be the same as the target object group imaged by the imaging system 2 to perform the position pose computing.

However, the target object group OBG_trigger that is the target for calculating the height H may be different from the target object group imaged by the imaging system 2 to perform the position pose computing. For example, at least one target object OBJ included in the target object group OBG_trigger that is the target for calculating the height H may be different from at least one of the plurality of target objects OBJ imaged by the imaging system 2 to perform the position pose computing. The target object group OBG_trigger may not include at least one target object OBJ, which is imaged by the imaging system 2 to perform the position pose computing, among the plurality of target objects OBJ contained in the container CB. The target object group OBG_trigger may include at least one target object OBJ, which is not imaged by the imaging system 2 to perform the position pose computing, among the plurality of target objects OBJ contained in the container CB.

The height H of the target object group OBG_trigger may mean the height H of the target object group OBG_trigger from a reference plane. A placement surface of the placing apparatus T on which the target object group OBG_trigger is placed is one example of the reference plane. For example, as illustrated in FIG. 17, the bottom surface of the bottom wall BS of the container CB in which the target object group OBG_trigger is contained is one example of the reference plane. Note that the height H of the target object group OBG_trigger may be the coordinate value of the target object group OBG_trigger along the Z-axis(GL) in the global coordinate system. Namely, the height H of the target object group OBG_trigger may mean the height H of the target object group OBG_trigger from a coordinate origin of the global coordinate system. Note that the height H of the target object group OBG_trigger may be a coordinate value of the target object group OBG_trigger in along a Z-axis of a coordinate system (for example, the robot coordinate system) that is different from the global coordinate system. Namely, the height H of the target object group OBG_trigger may mean the height H of the target object group OBG_trigger from a coordinate origin of the coordinate system (for example, the robot coordinate system) that is different from the global coordinate system.

A height of the highest part of the target object group OBG_trigger may be used as the height H of the target object group OBG_trigger. For example, a height of one target object OBJ, which is positioned at the highest position, of the plurality of target objects OBJ included in the target object group OBG_trigger may be used as the height H of the target object group OBG_trigger. For example, a height of the highest part of one target object OBJ, which is positioned at the highest position, of the plurality of target objects OBJ included in the target object group OBG_trigger may be used as the height H of the target object group OBG_trigger. For example, a height of any part of one target object OBJ, which is positioned at the highest position, of the plurality of target objects OBJ included in the target object group OBG_trigger may be used as the height H of the target object group OBG_trigger.

A height of the highest part of a part of the target object group OBG_trigger may be used as the height H of the target object group OBG_trigger. For example, a height of at least one target object OBJ, which is selected based on a desired selection condition, of the plurality of target object OBJ included in the target object group OBG_trigger may be used as the height H of the target object group OBG_trigger. For example, a height of the highest part of at least one target object OBJ, which is selected based on the desired selection condition, of the plurality of target objects OBJ included in the target object group OBG_trigger may be used as the height H of the target object group OBG_trigger. For example, a height of any part of at least one target object OBJ, which is selected based on the desired selection condition, of the plurality of target objects OBJ included in the target object group OBG_trigger may be used as the height H of the target object group OBG_trigger.

An average height of the target object group OBG_trigger may be used as the height H of the target object group OBG_trigger. The average height of the target object group OBG_trigger may mean an average value of the heights of a plurality of parts of the target object group OBG_trigger. The average height of the target object group OBG_trigger may mean an average value of the heights of the plurality of target object OBJ included in the target object group OBG_trigger. In a case where the plurality of target objects OBJ are stacked (namely, randomly stacked), the average height of the target object group OBG_trigger may mean an average height of some target object OBJ on which other target object OBJ is not stacked (namely, some target object OBJ positioned at the uppermost position) of the plurality of target objects OBJ included in the target object group OBG_trigger. In a case where the plurality of target objects OBJ are stacked (namely, randomly stacked), the average height of the target object group OBG_trigger may mean an average height of some target object OBJ whose upper part is exposed at least partially (namely, some target object OBJ positioned at the uppermost position) of the plurality of target objects OBJ included in the target object group OBG_trigger.

An average height of a part of the target object group OBG_trigger may be used as the height H of the target object group OBG_trigger. The average height of a part of the target object group OBG_trigger may mean an average height of at least one target object OBJ, which is selected based on a desired selection condition, of the plurality of target objects OBJ included in the target object group OBG_trigger.

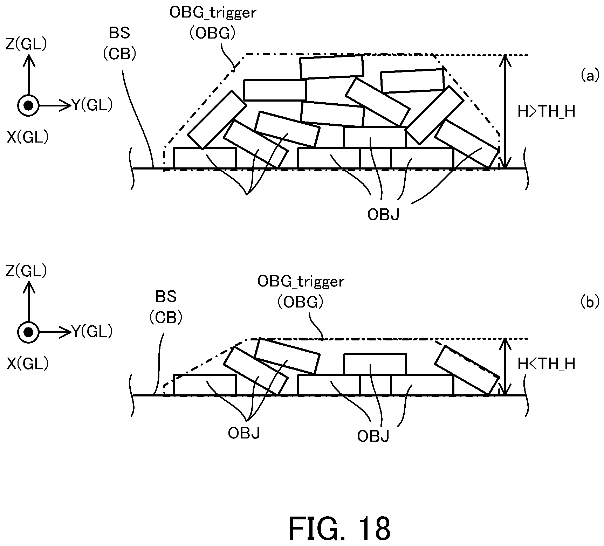

In a case where the height condition is used as the trigger condition, a state in which the height condition is not satisfied (namely, a state in which the trigger condition is not satisfied) may include a state in which the height of the target object group OBG_trigger is higher than a predetermined height threshold value TH_H, as illustrated in FIG. 18(a). On the other hand, a state in which the height condition is satisfied (namely, the trigger condition is satisfied) may include a state in which the height of the target object group OBG_trigger is lower than the predetermined height threshold value TH_H, as illustrated in FIG. 18(b). Note that a state in which the height of the target object group OBG_trigger is equal to the predetermined height threshold value TH_H may be used as the state in which the height condition is not satisfied, or may be used as the state in which the height condition is satisfied.

Here, in a case where the end effector 4 sequentially performs holding process on the plurality of target objects OBJ (namely, sequentially picks up the plurality of target objects OBJ), the number of target objects OBJ picked up by the end effector 4 increases over time. As a result, the number of target objects OBJ contained in the container CB decreases over time. As a result, the height H of the target object group OBG_trigger decreases over time. Therefore, usually, the control apparatus 3 initially determines that the trigger condition is not satisfied, and then determines that the trigger condition is satisfied at a timing at which the height H of the target object group OBG_trigger is lower than the predetermined threshold value TH_H. Therefore, in the present example embodiment, in a case where it is determined that the computing result condition is not satisfied, the control apparatus 3 first performs the reset processing to move the imaging system 2. Namely, the control apparatus 3 preferentially performs the reset processing. Then, the control apparatus 3 performs the gazing processing instead of the reset processing after it is determined that the trigger condition is satisfied over time.

Specifically, in a case where it is determined that the trigger condition is not satisfied, it is likely that a relatively large number of target objects OBJ exist (namely, remain) in the container CB. In this case, the control apparatus 3 performs the reset processing. As a result, the imaging system 2 moves so that the end effector 4 can perform the predetermined process on the target object OBJ, on which the end effector 4 can perform the predetermined process relatively easily, among the relatively large number of target objects OBJ contained in the container CB. As a result, it is more likely to be determined by the reset processing that the computing result condition is satisfied in a situation where a relatively large number of target objects OBJ exist (namely, remain) in the container CB because the trigger condition is not satisfied. Namely, it is more likely that the end effector 4 can perform the predetermined process on the target object OBJ in a situation where a relatively large number of target objects OBJ exist (namely, remain) in the container CB because the trigger condition is not satisfied.

Then, in a case where it is determined that the trigger condition is satisfied over time, it is likely that a relatively small number of target objects OBJ exist (namely, remain) in the container CB. In this case, it is likely that the target object OBJ remaining in the container CB is the target objects OBJ on which the end effector 4 cannot perform the predetermined process easily. This is because the target object OBJ, which remains in the container CB at the timing at which it is determined that the trigger condition is satisfied, is the target object OBJ on which the end effector 4 cannot perform the predetermined process even after performing the reset processing. Thus, in a case where it is determined that the trigger condition is satisfied, it is likely that the target object OBJ, on which the end effector 4 cannot perform the predetermined process easily, remains in the container CB. Namely, in a case where it is determined that the trigger condition is satisfied, it is likely that the target object OBJ, on which the end effector 4 cannot perform the predetermined process even if the reset processing is performed, remains in the container. In this case, in order to allow the end effector 4 to perform the predetermined process on the target object OBJ, on which the end effector 4 cannot perform the predetermined process even if the reset processing is performed, the control apparatus 3 performs the gazing processing instead of the reset processing. As a result, at least one of the position and the pose of the imaging system 2 relative to the target object OBJ (for example, the gazing target object OBJ_g described above) remaining in the container CB changes. Therefore, it is more likely that it is determined that the computing result condition is satisfied for the target object OBJ remaining in the container CB, because the appearance of the target object OBJ in the image indicated by the image data IMG_3D changes. Namely, in a case where the target object OBJ, on which the end effector 4 cannot perform the predetermined process easily because the trigger condition is satisfied, exists (namely, remains) in the container CB, it is more likely that the end effector 4 can perform the predetermined process on the target object OBJ.

Thus, in the present example embodiment, it is more likely to be determined that the computing result condition is satisfied regardless of the number of target objects OBJ contained in the container CB. As a result, it is more likely that the end effector 4 can perform the predetermined process on the target object OBJ regardless of the number of target objects OBJ contained in the container CB. This is because the gazing processing allows the end effector 4 to perform the predetermined process on the target object OBJ on which the end effector 4 cannot perform the predetermined process even if the reset processing is performed. As a result, it is more likely that the end effector 4 can perform the predetermined process on all target objects OBJ, on which the end effector 4 should perform the predetermined process, among the plurality of target objects OBJ contained in the container CB. In other words, a frequency of an occurrence of a case where the end effector 4 cannot perform the predetermined process on the target object OBJ is lower by performing both the reset processing and the gazing processing, compared to a case where only the reset processing is performed, and therefore, a throughput of the end effector 4 performing the predetermined process on all target objects OBJ, on which the end effector 4 should perform the predetermined process, among the plurality of target objects OBJ contained in the container CB is improved (namely, a time required for the end effector 4 to complete the predetermined process on all target objects OBJ, on which the end effector 4 should perform the predetermined process, is reduced).

Not only in a case where the plurality of target objects OBJ are contained in the container CB, but also in a case where the plurality of target objects OBJ are placed on the placing apparatus T that is different from the container CB, it is more likely to be determined that the computing result condition is satisfied regardless of the number of target objects OBJ placed on the placing apparatus T. As a result, it is more likely that the end effector 4 can perform the predetermined process on the target object OBJ regardless of the number of target objects OBJ placed on the placing apparatus T. Namely, it is more likely that the end effector 4 can perform the predetermined process on all target objects OBJ, on which the end effector 4 should perform the predetermined process, among the plurality of target objects OBJ placed on the placing apparatus T. In other words, a frequency of an occurrence of a case where the end effector 4 cannot perform the predetermined process on the target object OBJ is lower by performing both the reset processing and the gazing processing, compared to a case where only the reset processing is performed, and therefore, a throughput of the end effector 4 performing the predetermined process on all target objects OBJ, on which the end effector 4 should perform the predetermined process, among the plurality of target objects OBJ placed on the placing apparatus T is improved.

Note that the control apparatus 3 may not use the imaged result (for example, the image data IMG_2D and IMG_3D) by the imaging system 2 in a case where the reset processing is performed as described above, unlike in a case where the gazing processing is performed. Namely, the control apparatus 3 may not generate the position pose data POI of the target object OBJ based on the imaged result (for example, the image data IMG_2D, as described later) by the imaging system 2. Furthermore, the imaging system 2 may not image the target object OBJ to perform the reset processing in a case where the reset processing is performed as described above, unlike in a case where the gazing processing is performed. Therefore, a time required to move the imaging system 2 by performing the reset processing is shorter than a time required to move the imaging system 2 by performing the gazing processing. As a result, the throughput of the robot control processing improves in a case where the reset processing is preferentially performed, compared to a case where the gazing processing is preferentially performed. From this point, in the present example embodiment, the control apparatus 3 first preferentially performs the reset processing until it is determined that the trigger condition is satisfied. Then, the control apparatus 3 performs the gazing processing instead of the reset processing after it is determined that the trigger condition is satisfied. Therefore, the throughput of the robot control processing improves compared to a case where the gazing processing is preferentially performed. Moreover, it is more likely that the end effector 4 can perform the predetermined process on the target object OBJ regardless of the number of target objects OBJ contained in the container CB by selectively using either the reset processing or the gazing processing based on the trigger condition as described above. Therefore, the control apparatus 3 can move the imaging system 2 so that it is more likely to be determined that the computing result condition is satisfied (namely, the end effector 4 can perform the predetermined process on the target object OBJ) while improving the throughput of the robot control processing. In other words, the control apparatus 3 can achieve both an effect of improving the throughput of the robot control processing and an effect of increasing the likelihood that the computing result condition is determined to be satisfied (namely, the likelihood that the end effector 4 can perform the predetermined process on the target object OBJ) by moving the imaging system 2.

The control apparatus 3 may calculate the height H of the target object group OBG_trigger by using at least one of the image data IMG_2D and IMG_3D generated by the imaging system 2 imaging the target object group OBG_trigger. For example, the control apparatus 3 may calculate the height H of the target object group OBG_trigger by analyzing the image indicated by at least one of the image data IMG_2D and IMG_3D. Alternatively, the control apparatus 3 may calculate at least one of the position and the pose of the target object OBJ included in the target object group OBG_trigger by performing the 2D matching processing using the image data IMG_2D, and calculate the height H of the target object group OBG_trigger based on the calculated result of at least one of the position and the pose of the target object OBJ. Alternatively, the control apparatus 3 may position a three-dimensional model of the target object OBJ in a virtual simulation space, which simulates a three-dimensional space in which the target object group OBG_trigger is positioned, based on the calculated result of at least one of the position and the pose of the target object OBJ by the 2D matching processing, and calculate the height of this three-dimensional model as the height H of the target object group OBG_trigger. Alternatively, the control apparatus 3 may calculate, as the height H of the target object group OBG_trigger, the height of the target object OBJ captured in the image indicated by the image data IMG_2D by performing a segmentation using the image data IMG_2D.

Alternatively, the control apparatus 3 may calculate the height H of the target object group OBG_trigger by using the three-dimensional position data WSD generated from the image data IMG_3D, in addition to or instead of analyzing the image indicated by at least one of the image data IMG_2D and IMG_3D. As one example, the control apparatus 3 may calculate at least one of the position and the pose of the target object OBJ included in the target object group OBG_trigger by performing the 3D matching processing using the three-dimensional position data WSD, and calculate the height H of the target object group OBG_trigger based on the calculated result of at least one of the position and the pose of the target object OBJ. As another example, the control apparatus 3 may position the three-dimensional model of the target object OBJ in the virtual simulation space, which simulates the three-dimensional space in which the target object group OBG_trigger is positioned, based on the calculated result of at least one of the position and the pose of the target object OBJ by the 3D matching processing, and calculate the height of this three-dimensional model as the height H of the target object group OBG_trigger. As another example, the control apparatus 3 may calculate, as the height H of the target object group OBG_trigger, the height of the point cloud indicated by the three-dimensional position data WSD (especially, the height of the point cloud corresponding to the target object group OBG_trigger).

In a case where the height of the point cloud indicated by the three-dimensional position data WSD is calculated as the height H of the target object group OBG_trigger, the control apparatus 3 may calculate the height H of the target object group OBG_trigger by using a following method. For example, the control apparatus 3 may calculate, as the height H of the target object group OBG_trigger, a height of at least a part of the points included in the point cloud indicated by the three-dimensional position data WSD. For example, the control apparatus 3 may calculate, as the height of the target object group OBG_trigger, a height of the point, which is positioned at the highest position, of the plurality of points included in the point cloud indicated by the three-dimensional position data WSD. In this case, the control apparatus 3 can calculate, as the height H of the target object group OBG_trigger, the height of the highest part of the target object group OBG_trigger. Alternatively, for example, the control apparatus 3 may calculate, as the height of the target object group OBG_trigger, a height of the point, which is positioned at the N-th (wherein N is a constant value representing an integer that is equal to or larger than 2) highest position, of the plurality of points included in the point cloud indicated by the three-dimensional position data WSD. In this case, the control apparatus 3 can calculate, as the height H of the target object group OBG_trigger, the height of one target object OBJ, which is positioned at the N-th highest position, of the plurality of target objects OBJ included in the target object group OBG_trigger. Alternatively, for example, the control apparatus 3 may calculate, as the height H of the target object group OBG_trigger, an average value of the height of at least a part of the points included in the point cloud indicated by the three-dimensional position data WSD. In this case, the control apparatus 3 can calculate, as the height H of the target object group OBG_trigger, the average value of the height of at least a part of the target object group OBG_trigger. As one example, the control apparatus 3 may calculate, as the height H of the target object group OBG_trigger, an average value of the heights of all points included in the point cloud indicated by the three-dimensional position data WSD. As another example, the control apparatus 3 may calculate, as the height H of the target object group OBG_trigger, an average value of the height of a partial point cloud, which is included in a predetermined point cloud space, of the plurality of points included in the point cloud indicated by the three-dimensional position data WSD. A space including the point, which is positioned at the highest (alternatively, N-th highest) position, of the plurality of points included in the point cloud indicated by the three-dimensional position data WSD is one example of the predetermined point cloud space. For example, the predetermined point cloud space may be a three-dimensional space that includes a space between a virtual plane (for example, a horizontal plane), which includes the point (highest point) positioned at the highest (alternatively, N-th highest) position of the plurality of points included in the point cloud indicated by the three-dimensional position data WSD, and a virtual plane (for example, a horizontal plane), which is positioned at a position that is lower than this point (highest point) by a predetermined height along the Z-axis direction.

Then, the control apparatus 3 may compare the calculated height H with the height threshold value TH_H to determine whether or not the height condition is satisfied.

Thus, in this present example embodiment, the control apparatus 3 calculates the height H of the target object group OBG_trigger by using the imaging system 2. In this case, the imaging system 2 may be considered to serve as a measurement apparatus that is configured to directly or indirectly measure the height H of the target object group OBG_trigger.

The control apparatus 3 may calculate the height H of the target object group OBG_trigger by using at least one of the image data IMG_2D and IMG_3D acquired at the step S1 in FIG. 4. Namely, the control apparatus 3 may calculate the height H of the target object group OBG_trigger by using at least one of the image data IMG_2D and IMG_3D that is used for the position pose computing at the step S3 in FIG. 4. Alternatively, the control apparatus 3 may newly acquire at least one of the image data IMG_2D and IMG_3D that is used to calculate the height H of the target object group OBG_trigger after acquiring at least one of the image data IMG_2D and IMG_3D at the step S1 in FIG. 4. In this case, the imaging system 2 may image the target object OBJ again to calculate the height H of the target object group OBG_trigger at the step S42 in FIG. 4 after imaging the target object OBJ for the position pose computing at the step S3 in FIG. 4. Then, the control apparatus 3 may calculate the height H of the target object group OBG_trigger by using at least one of the newly acquired image data IMG_2D and IMG_3D. Note that the control apparatus 3 may newly acquire at least one of the image data IMG_2D and IMG_3D that is used to calculate the height H of the target object group OBG_trigger before acquiring at least one of the image data IMG_2D and IMG_3D at the step S1 in FIG. 4.

The height threshold value TH_H, which is used to determine whether or not the height condition is satisfied, may be set by the user. For example, the user may set the height threshold value TH_H by using rules of thumb to balance the effect of improving the throughput of the robot control processing illustrated in FIG. 4 and the effect of increasing the likelihood that the computing result condition is determined to be satisfied by moving the imaging system 2.

The height threshold value TH_H, which is used to determine whether or not the height condition is satisfied, may be set by the control apparatus 3. For example, the control apparatus 3 may set the height threshold value TH_H by using data related to the past robot control processing (especially, data related to a selective usage of the gazing processing and the reset processing) to balance the effect of improving the throughput of the robot control processing illustrated in FIG. 4 and the effect of increasing the likelihood that the computing result condition is determined to be satisfied by moving the imaging system 2.

The control apparatus 3 may set the height threshold value TH_H by performing a simulation. For example, the control apparatus 3 may perform the simulation for sequentially dropping the plurality of target objects OBJ on the container CB, and use, as the height threshold value TH_H, a height of the plurality of target objects OBJ, which have been dropped on the container CB at a timing at which a condition that the dropped target object OBJ does not touch the bottom surface of the container CB is satisfied. A state in which the dropped target object OBJ does not touch the bottom surface of the container CB may be considered to be equivalent to a state in which the dropped target object OBJ has fallen on other target object OBJ. In this case, the control apparatus 3 may use, as the height threshold value TH_H, a height of the plurality of target objects OBJ, which have been dropped on the container CB at a timing at which a condition that the dropped the target object OBJ has fallen on other target object OBJ is satisfied.

### (2-5) Specific Example of Robot Control Processing

Next, a specific example of the robot control processing will be described. In the below-described description, one specific example of the robot control processing, which is performed in a case where the imaging system 2 (especially, the imaging apparatus 22) images the plurality of target objects OBJ, will be described.

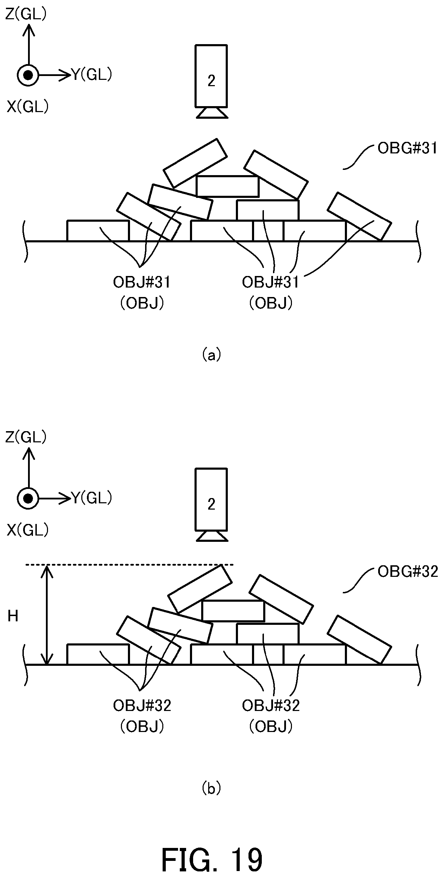

After the robot control processing illustrated in FIG. 4 is started, as illustrated in FIG. 19(a), the control apparatus 3 acquires the image data IMG_3D (it is referred to as image data IMG_3D#31) generated by imaging a first target object group OBG#31, which includes at least a part of the plurality of target objects OBJ contained in the container CB (the step S1 in FIG. 4). Note that the target object OBJ included in the first target object group OBG#31 is referred to as a first target object OBJ#31 for convenience of description in the below-described description. Then, the position pose calculation unit 312 performs the position pose computing for generating the position pose data POI (it is referred to as position pose data POI#31) of at least one fist target object OBJ#31 of the plurality of first target objects OBJ#31 based on the image data IMG_3D#31 (specifically, based on the three-dimensional position data WSD generated from the image data IMG_3D#31) (the step S2 to the step S3 in FIG. 4).

Then, in a case where it is determined that the result of the position pose computing based on the image data IMG_3D#31 is good (the step S41: Yes in FIG. 4), the signal generation unit 313 generates the robot control signal for controlling the robot 1 so that the end effector 4 approach the first target object OBJ#31 that is selected as the process performed object, based on the position pose data POI#31 of at least one (for example, one) first target objects OBJ#31 that is selected as the process performed object (the step S5 in FIG. 4). Then, the end effector 4 holds (namely, picks up) the first target object OBJ#31 that is selected as the process performed object.

On the other hand, in a case where it is determined that the result of the position pose computing based on the image data IMG_3D#31 is not good (the step S41: No in FIG. 4), the control apparatus 3 determines whether or not the trigger condition (the height condition) is satisfied (the step S42 in FIG. 4). Specifically, as illustrated in FIG. 19(b), the control apparatus 3 compares the height H of a second target object group OBG#32, which includes at least a part of the plurality of target objects OBJ contained in the container CB, with the predetermined height threshold value TH_H. For example, the control apparatus 3 may calculate the height H of the second target object group OBG#32 based on the three-dimensional position data WSD generated from the image data IMG_3D#31, and compare the calculated result of the height H of the second target object group OBG#32 with the predetermined height threshold value TH_H. For example, the control apparatus 3 may calculate the height H of the second target object group OBG#32 based on the three-dimensional position data WSD generated from the image data IMG_3D (it is referred to as image data IMG_3D#32) generated by imaging the second target object group OBG#32, and compare the calculated result of the height H of the second target object group OBG#32 with the predetermined height threshold value TH_H. Note that the target object OBJ included in the second target object group OBG#32 is referred to as a second target object OBJ#32 for convenience of description in the below-described description.

The second target object group OBG#32 may include at least a part of the plurality of target objects OBJ, that are contained in the container CB (alternatively, placed on the placing apparatus T) at a timing at which the imaging system 2 images the first target object group OBG#11 to determine whether or not the result of the position pose computing based on the image data IMG_3D#31 is good.

As already described, the second target object group OBG#32, which is used for the determine of the trigger condition at the step S42 in FIG. 4, may be the same as the first target object group OBG#31, which is used for the position pose computing at the step S3 in FIG. 4. Namely, the plurality of second target objects OBJ#32 included in the second target object group OBG#32 may be the same as the plurality of first target objects OBJ#31 included in the first target object group OBG#31. For example, in a case where the height H of the second target object group OBG#32 is calculated based on the image data IMG_3D#31 generated by imaging the first target object OBG#31, the second target object group OBG#32 may be the same as the first target object group OBG#31. For example, in a case where the imaging position of the imaging system 2 that images the second target object OBG#32 is the same as the imaging position of the imaging system 2 that images the first target object OBG#31 (namely, the imaging system 2 does not move in a period from a timing at which the first target object group OBG#31 is imaged to a timing at which the second target object group OBG#32 is imaged), the second target object group OBG#32 may be the same as the first target object group OBG#31. Alternatively, he second target object group OBG#32, which is used for the determine of the trigger condition at the step S42 in FIG. 4, may be different from the first target object group OBG#31, which is used for the position pose computing at the step S3 in FIG. 4. Namely, at least one of the plurality of second target objects OBJ#32 included in the second target object group OBG#32 may be different from at least one of the plurality of first target objects OBJ#31 included in the first target object group OBG#31. For example, in a case where the imaging position of the imaging system 2 that images the second target object OBG#32 is different from the imaging position of the imaging system 2 that images the first target object OBG#31 (namely, the imaging system 2 moves in a period from a timing at which the first target object group OBG#31 is imaged to a timing at which the second target object group OBG#32 is imaged), the second target object group OBG#32 may be different from the first target object group OBG#31.

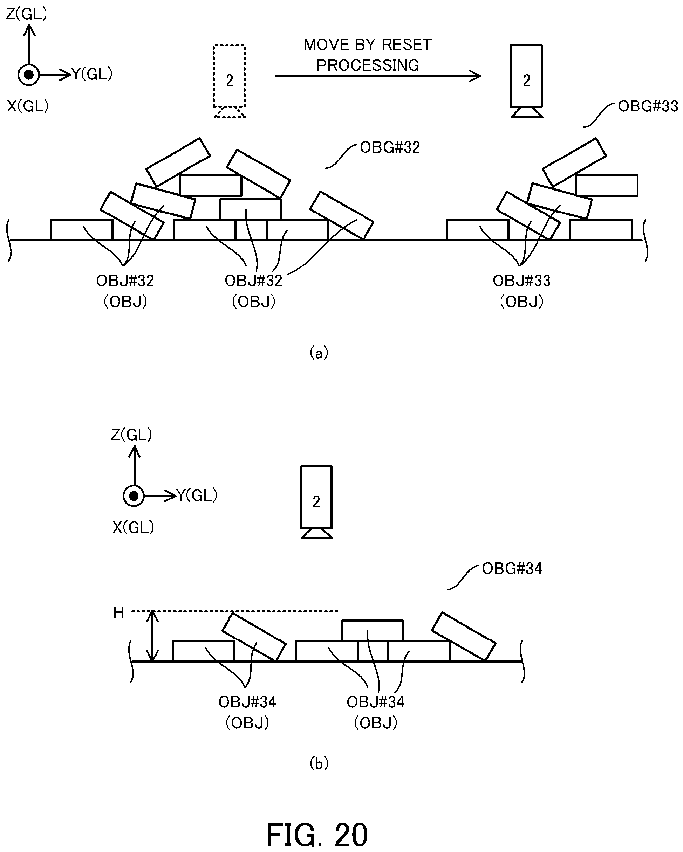

An example in which the height H of the second target object group OBG#32 is higher than the predetermined height threshold value TH_H at this timing, and as a result, it is determined that the trigger condition is not satisfied will be described. In a case where it is determined that the trigger condition is not satisfied (the step S42: No in FIG. 4), the control apparatus 3 moves the imaging system 2 by performing the reset processing (the step S6 in FIG. 4). In this case, as illustrated in FIG. 20(a), the control apparatus 3 may move the imaging system 2 so that the imaging system 2 moves away from the second target object group OBG#32. As illustrated in FIG. 20(a), the control apparatus 3 may move the imaging system 2 so that the imaging system 2 approaches a third target object group OBG#33, which includes at least a part of the plurality of target objects OBJ contained in the container CB. Note that the target object OBJ included in the third target object group OBG#33 is referred to as a third target object OBJ#33 for convenience of description in the below-described description.

The third target object group OBG#33 may include at least a part of the plurality of target objects OBJ, that are contained in the container CB (alternatively, placed on the placing apparatus T) at a timing at which the imaging system 2 images the first target object group OBG#11 to determine whether or not the result of the position pose computing based on the image data IMG_3D#31 is good.

As already described, the third target object group OBG#33, which is included in the imaging field of view of the imaging system 2 after the imaging system 2 moves by the reset processing, is different from the second target object group OBG#32, which is included in the imaging field of view of the imaging system 2 before the imaging system 2 moves by the reset processing. For example, a predetermined proportion (for example, at least half or all) of the plurality of third target objects OBJ#33 included in the third target object group OBG#33 may be different from the plurality of second target objects OBJ#32 included in the second target object group OBG#32.

Then, the control apparatus 3 acquires the image data IMG_3D (it is referred to as image data IMG_3D#33) generated by imaging the third target object group OBG#33 (the step S1 in FIG. 4). Then, the position pose calculation unit 312 performs the position pose computing for generating the position pose data POI (it is referred to as position pose data POI#33) of at least one third target object OBJ#33 of the plurality of third target objects OBJ#33 based on the image data IMG_3D#33 (specifically, based on the three-dimensional position data WSD generated from the image data IMG_3D#33) (the step S2 to the step S3 in FIG. 4).

Then, in a case where it is determined that the result of the position pose computing based on the image data IMG_3D#33 is good (the step S41: Yes in FIG. 4), the robot control signal is generated for controlling the robot 1 so that the end effector 4 approach the third target object OBJ#33 that is selected as the process performed object, based on the position pose data POI#33 of at least one (for example, one) third target objects OBJ#33 that is selected as the process performed object (the step S5 in FIG. 4). Then, the end effector 4 holds (namely, picks up) the third target object OBJ#33 that is selected as the process performed object.

On the other hand, in a case where it is determined that the result of the position pose computing based on the image data IMG_3D#33 is not good (the step S41: No in FIG. 4), the control apparatus 3 determines whether or not the trigger condition (the height condition) is satisfied (the step S42 in FIG. 4). Specifically, as illustrated in FIG. 20(b), the control apparatus 3 compares the height H of a fourth target object group OBG#34, which includes at least a part of the plurality of target objects OBJ contained in the container CB, with the predetermined height threshold value TH_H. For example, the control apparatus 3 may calculate the height H of the fourth target object group OBG#33 based on the three-dimensional position data WSD generated from the image data IMG_3D#33, and compare the calculated result of the height H of the fourth target object group OBG#34 with the predetermined height threshold value TH_H. For example, the control apparatus 3 may calculate the height H of the fourth target object group OBG#34 based on the three-dimensional position data WSD generated from the image data IMG_3D (it is referred to as image data IMG_3D#34) generated by imaging the fourth target object group OBG#34, and compare the calculated result of the height H of the fourth target object group OBG#34 with the predetermined height threshold value TH_H. Note that the target object OBJ included in the fourth target object group OBG#34 is referred to as a fourth target object OBJ#34 for convenience of description in the below-described description.

The fourth target object group OBG#34 may include at least a part of the plurality of target objects OBJ, that are contained in the container CB (alternatively, placed on the placing apparatus T) at a timing at which the imaging system 2 images the first target object group OBG#11 to determine whether or not the result of the position pose computing based on the image data IMG_3D#31 is good.

The fourth target object group OBG#34, which is used for the determination of the trigger condition after the reset processing is performed, may be the same as the third target object group OBG#33, which is used for the position pose computing performed at the step S3 in FIG. 4 immediately after the reset processing is performed. Namely, the plurality of fourth target objects OBJ#34 included in the fourth target object group OBG#34 may be the same as the plurality of third target objects OBJ#33 included in the third target object group OBG#33. For example, in a case where the height H of the fourth target object group OBG#34 is calculated based on the image data IMG_3D#33 generated by imaging the third object OBG#33, the fourth target object group OBG#34 may be the same as the third target object group OBG#33. For example, in a case where the imaging position of the imaging system 2 that images the fourth target object OBG#34 is the same as the imaging position of the imaging system 2 that images the third target object OBG#33 (namely, the imaging system 2 does not move in a period from a timing at which the third target object group OBG#33 is imaged to a timing at which the fourth target object group OBG#34 is imaged), the fourth target object group OBG#34 may be the same as the third target object group OBG#33. For example, in a case where the end effector 4 does not hold (pick up) any third target object OBJ#33 after the reset processing is performed, the fourth target object group OBG#34 may be the same as the third target object group OBG#33. Note that the control apparatus 3 may calculate the height H of the fourth target object group OBG#34 based on the image data IMG_3D#33 at any timing after the image data IMG_3D#33 is acquired at the step S1 in FIG. 4, in a case where the height H of the fourth target object group OBG#34 is calculated based on the image data IMG_3D#33 generated by imaging the third target object OBG#33. In a case where the height H of the fourth target object group OBG#34 is calculated based on the image data IMG_3D#34 generated by imaging the fourth target object OBG#34, the control apparatus 3 may calculate the height H of the fourth target object group OBG#34 based on the image data IMG_3D#34 before determining whether or not the trigger condition is satisfied at the step S42 in FIG. 4 or at a timing at which it is determined whether or not the trigger condition is satisfied at the step S42 in FIG. 4. Alternatively, the fourth target object group OBG#34, which is used for the determination of the trigger condition after the reset processing is performed, may be different from the third target object group OBG#33, which is used for the position pose computing performed at the step S3 in FIG. 4 immediately after the reset processing is performed. For example, in a case where the imaging position of the imaging system 2 that images the fourth target object OBG#34 is different from the imaging position of the imaging system 2 that images the third target object OBG#33 (namely, the imaging system 2 moves in a period from a timing at which the third target object group OBG#33 is imaged to a timing at which the fourth target object group OBG#34 is imaged), the fourth target object group OBG#34 may be different from the third target object group OBG#33. For example, in a case where the end effector 4 has held (picked up) at least one third target object OBJ#33 after the reset processing is performed, the fourth target object group OBG#34 may not include at least one third target object OBJ#33 of the third target object group OBG#33. Namely, in a case where the end effector 4 has held (picked up) at least one third target object OBJ#33 after the reset processing is performed, the fourth target object group OBG#34 may be different from the third target object group OBG#33.

Thus, the control apparatus 3 may determine whether or not the trigger condition is satisfied in a state where the end effector 4 does not hold (pick up) any third target object OBJ#33 after the reset processing is performed, or may determine whether or not the trigger condition is satisfied after the end effector 4 has held (picked up) at least one third target objects OBJ#33 after the reset processing is performed. However, normally, it is likely that the end effector 4 holds (picks up) at least one third target objects OBJ#33 before determining whether or not the trigger condition is satisfied. In this case, it is likely that the number of fourth target objects OBJ#34 included in the fourth target object group OBG#34 is smaller than each of the number of third target objects OBJ#33 included in the third target object group OBG#33. For the same reason, it is likely that the number of fourth target objects OBJ#34 included in the fourth target object group OBG#34 is smaller than the number of first targe objects OBJ#32 included in the first target object group OBG#31 and the number of second target objects OBJ#32 included in the second target object group OBG#32 described above.

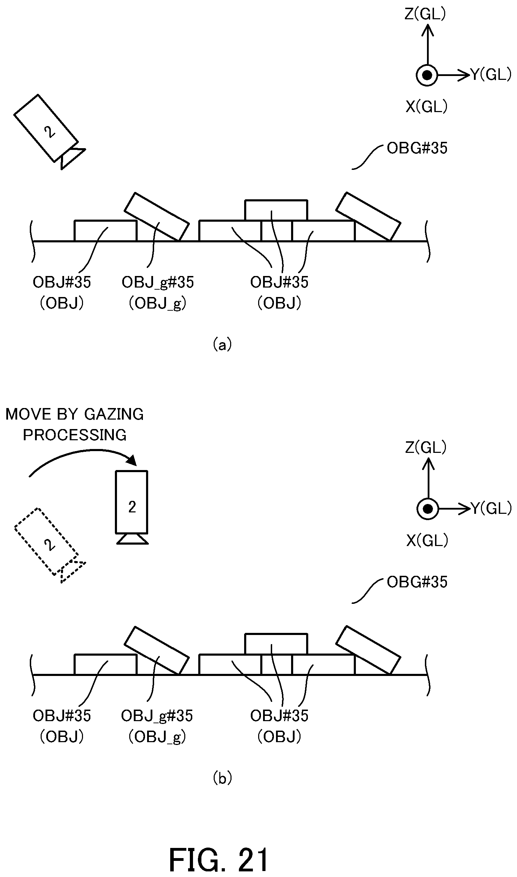

In the below-described description, an example in which the height H of the fourth target object group OBG#34 is lower than the predetermined height threshold value TH_H, and as a result, it is determined that the trigger condition is satisfied will be described. In a case where it is determined that the trigger condition is satisfied (the step S42: Yes in FIG. 4), the control apparatus 3 moves the imaging system 2 by performing the gazing processing (the step S7 in FIG. 4). Specifically, as illustrated in FIG. 21(a), the control apparatus 3 acquires the image data IMG_2D (it is referred to as image data IMG_2D#35) generated by imaging a fifth target object group OBG#35, which includes at least a part of the plurality of target objects OBJ contained in the container CB (the step S71 in FIG. 13). Note that the target object OBJ included in the fifth target object group OBG#35 is referred to as a fifth target object OBJ#35 for convenience of description in the below-described description.

The fifth target object group OBG#35 may include at least a part of the plurality of target objects OBJ, that are contained in the container CB (alternatively, placed on the placing apparatus T) at a timing at which the imaging system 2 images the first target object group OBG#11 to determine whether or not the result of the position pose computing based on the image data IMG_3D#31 is good.

The fifth target object group OBG#35, which is imaged to generate the image data IMG_2D used for the gazing processing, may be the same as the fourth target object group OBG#34, which is imaged for determining that the trigger condition is satisfied. Namely, the plurality of fifth target objects OBJ#35 included in the fifth target object group OBG#35 may be the same as the plurality of fourth target objects OBJ#34 included in the fourth target object group OBG#34. For example, in a case where the imaging position of the imaging system 2 that images the fifth target object OBG#35 is the same as the imaging position of the imaging system 2 that images the fourth target object OBG#34 (namely, the imaging system 2 does not move in a period from a timing at which the fourth target object OBG#34 is imaged to a timing at which the fifth target object OBG#35 is imaged), the fifth target object group OBG#35 may be the same as the fourth target object group OBG#34. For example, in a case where the imaging system 2 does not move in a period from a timing at which the fourth target object OBG#34 is imaged to calculate the height H of the fourth target object group OBG#34 to a timing at which the fifth target object OBG#35 is imaged to perform the gazing processing), the fifth target object group OBG#35 may be the same as the fourth target object group OBG#34. Note that the third object OBG#33 is the same as the fourth target object group OBG#34 in a case where the image data IMG_3D generated by imaging the third target object OBG#33 is used to calculate the height H of the fourth target object group OBG#34 as described above. In this case, for example, in a case where the imaging system 2 does not move in a period from a timing at which the third target object OBG#33 is imaged to calculate the height H of the fourth target object group OBG#34 to a timing at which the fifth target object OBG#35 is imaged to perform the gazing processing, the fifth target object group OBG#35 may be the same as the fourth target object group OBG#34 (the third target object group OBG#33). Alternatively, the fifth target object group OBG#35, which is imaged to generate the image data IMG_2D used for the gazing processing, may be different from the fourth target object group OBG#34, which is imaged for determining that the trigger condition is satisfied. Namely, at least one of the plurality of fifth target objects OBJ#35 included in the fifth target object group OBG#35 may be different from at least one of the plurality of fourth target objects OBJ#34 included in the fourth target object group OBG#34. For example, in a case where the imaging position of the imaging system 2 that images the fifth target object OBG#35 is different from the imaging position of the imaging system 2 that images the fourth target object OBG#34 (namely, the imaging system 2 moves in a period from a timing at which the fourth target object OBG#34 is imaged to a timing at which the fifth target object OBG#35 is imaged), the fifth target object group OBG#35 may be different from the fourth target object group OBG#34. For example, in a case where the imaging system 2 moves in a period from a timing at which the fourth target object OBG#34 is imaged to calculate the height H of the fourth target object group OBG#34 to a timing at which the fifth target object OBG#35 is imaged to perform the gazing processing), the fifth target object group OBG#35 may be different from the fourth target object group OBG#34. Note that the third object OBG#33 is the same as the fourth target object group OBG#34 in a case where the image data IMG_3D generated by imaging the third target object OBG#33 is used to calculate the height H of the fourth target object group OBG#34 as described above. In this case, for example, in a case where the imaging system 2 moves in a period from a timing at which the third target object OBG#33 is imaged to calculate the height H of the fourth target object group OBG#34 to a timing at which the fifth target object OBG#35 is imaged to perform the gazing processing, the fifth target object group OBG#35 may be different from the fourth target object group OBG#34 (the third target object group OBG#33).

Then, the position pose calculation unit 312 performs the position pose computing for generating the position pose data POI (it is referred to as position pose data POI#35) of the gazing target object OBJ_g (it is referred to as a gazing target object OBJ_g#35), which is one fifth target object OBJ#35 of the plurality of fifth target objects OBJ#35, based on the image data IMG_2D#35 (the step S72 in FIG. 13). Furthermore, the signal generation unit 313 sets the movement aspect of the imaging system 72 based on the position pose data POI#35 (the step S72 in FIG. 13). As a result, as illustrated in FIG. 21(b), the control apparatus 3 moves the imaging system 2 so that the imaging system 2 changes at least one of the position and the pose of the imaging system 2 relative to one fifth target object OBJ#35 (especially, the gazing target object OBJ_g#35) of the plurality of fifth target objects OBJ#35 included in the fifth target object group OBG#35.

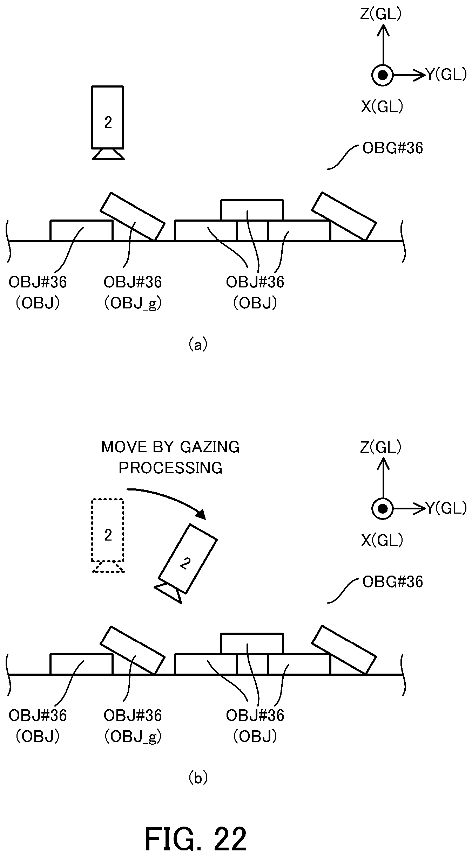

Then, as illustrated in FIG. 22(a), the control apparatus 3 acquires the image data IMG_3D (it is referred to as image data IMG_3D#36) generated by imaging a sixth target object group OBG#36, which includes at least a part of the plurality of target objects OBJ contained in the container CB (the step S74 in FIG. 13). Note that the target object OBJ included in the sixth target object group OBG#36 is referred to as a sixth target object OBJ#36 for convenience of description in the below-described description. Then, the position pose calculation unit 312 performs the position pose computing for generating the position pose data POI (it is referred to as position pose data POI#36) of at least one sixth target object OBJ#36 of the plurality of sixth target objects OBJ#36 based on the image data IMG_3D#36 (specifically, based on the three-dimensional position data WSD generated from the image data IMG_3D#36) (the step S75 to the step S76 in FIG. 13).

The sixth target object group OBG#36, which is used for the position pose computing performed after the gazing processing is performed, may be different from the third target object group OBG#33, which is used for the position pose computing performed after the reset processing is performed. For example, in a case where the end effector 4 has held (picked up) at least one third target object OBJ#33 after the reset processing, the plurality of sixth target objects OBJ#36 included in the sixth target object group OBG#36 may not include at least one of the plurality of third target objects OBJ#33 included in the third target object group OBG#33. However, the sixth target object group OBG#36 may be the same as the third target object group OBG#33. For example, in a case where the end effector 4 does not hold (pick up) any third target object OBJ#33 after the reset processing is performed, the plurality of sixth target objects OBJ#36 included in the sixth target object group OBG#36 may be the same as the plurality of third target objects OBJ#33 included in the third target object group OBG#33.

Then, in a case where it is determined that the result of the position pose computing based on the image data IMG_3D#36 is good (the step S77: Yes in FIG. 13), the sixth the target object OBJ#36 selected as the process performed object (for example, the robot control signal is generated for controlling the robot 1 so that the end effector 4 approach the sixth target object OBJ#36 that is selected as the process performed object, based on the position pose data POI#36 of the sixth target objects OBJ#36 (for example, the sixth target object OBJ#36 that is the same as the gazing target object OBJ_g#35) that is selected as the process performed object (the step S5 in FIG. 4). Then, the end effector 4 holds (namely, picks up) the sixth target object OBJ#36 that is selected as the process performed object.

On the other hand, in a case where it is determined that the result of the position pose computing based on the image data IMG_3D#36 is not good (the step S77 in FIG. 13: No), the control apparatus 3 changes the movement aspect of the imaging system 2 (the step S72 in FIG. 13). As a result, as illustrated in FIG. 22(b), the imaging system 2 moves so that the imaging system 2 changes at least one of the position and the pose of the imaging system 2 relative to one sixth target objects OBJ#36 (for example, the sixth target object OBJ#36 that is the same as the gazing target object OBJ_g#35) of the plurality of sixth target objects OBJ#36 included in the sixth target object group OBG#36. In this case, the imaging system 2 may image the sixth target object group OBG#36 (especially, the gazing target object OBJ_g) from a different direction.

### (3) Technical Effect

As described above, in this present example embodiment, in a case where it is determined that the computing result condition is not satisfied (namely, the result of the position pose computing is not good, and the end effector 4 cannot perform the predetermined process on the target object OBJ), the control apparatus 3 may move the imaging system 2 and then perform the position pose computing again. Therefore, it is more likely to be determined that the computing result condition is satisfied (namely, the result of the position pose computing is good), compared to a case where the imaging system 2 does not move even in a case where it is determined that the computing result condition is not satisfied. As a result, the control apparatus 3 can properly generate the position pose data POI of the target object OBJ. As a result, the control apparatus 3 can properly generate the robot control signal so that the robot 1 (the end effector 4) can perform the predetermined process on the target object OBJ. Namely, it is more likely that the end effector 4 can perform the predetermined process on the target object OBJ.

Furthermore, it is likely that the control apparatus 3 can properly calculate at least one of the position and the pose of the target object OBJ regardless of the position and the pose of the target object OBJ. In other words, it is likely that the control apparatus 3 can properly calculate at least one of the position and the pose of the target object OBJ regardless of the position and the pose in which the target object OBJ is placed. This is because the imaging system 2 moves in a case where it is determined that the computing result condition is not satisfied, and therefore, it is more likely that the result of the position pose computing is good, compared to a case where the imaging system 2 does not move. As a result, the control apparatus 3 can properly generate the robot control signal so that the robot 1 (the end effector 4) can perform the predetermined process on the target object OBJ. Namely, it is more likely that the end effector 4 can perform the predetermined process on the target object OBJ.

Furthermore, even in a case where the plurality of target objects OBJ are positioned randomly, it is likely that the control apparatus 3 can properly calculate at least one of the positions and the poses of all of the plurality of target objects OBJ. This is because the imaging system 2 moves, and therefore, it is more likely that the result of the position pose computing is good, compared to a case where the imaging system 2 does not move. As a result, the control apparatus 3 can properly generate the robot control signal so that the robot 1 (the end effector 4) can perform the predetermined process on each of the plurality of target objects OBJ. Namely, it is more likely that the end effector 4 can perform the predetermined process on each of the plurality of target objects OBJ.

Furthermore, in the present example embodiment, the reset processing and the gazing processing are selectively used based on the trigger condition to move the imaging system 2. Therefore, it is likely to be determined that the computing result condition is satisfied, regardless of the number of target objects OBJ contained in the container CB,. As a result, it is likely that the end effector 4 can perform the predetermined process on the target objects OBJ, regardless of the number of target objects OBJ contained in the container CB.

Specifically, it is likely that a relatively large number of target objects OBJ exist (namely, remain) in the container CB in a case where it is determined that the trigger condition is not satisfied as described above. In this case, the control apparatus 3 performs the reset processing, instead of the gazing processing that moves the imaging system 2 based on the target object OBJ (especially, the gazing target object OBJ_g) contained in the container CB. Even in this case, a relatively large number of target objects OBJ exist in the container CB, and therefore, it is likely that the imaging system 2 moves so that the end effector 4 can perform the predetermined process on the target object OBJ, on which the end effector 4 can perform the predetermined process relatively easily, among a relatively large number of target objects OBJ contained in the container CB. As a result, in a case where a relatively large number of target objects OBJ exist (namely, remain) in the container CB because the trigger condition is not satisfied, it is likely to be determined that the computing result condition is satisfied due to the reset processing. Namely, in a case where a relatively large number of target objects OBJ exist (namely, remain) in the container CB because the trigger condition is not satisfied, it is likely that the end effector 4 can perform the predetermined process on the target object OBJ.

Then, in a case where it is determined that the trigger condition is satisfied over time, it is likely that a relatively small number of target objects OBJ exist (namely, remain) in the container CB. In this case, it is likely that the target object OBJ, on which the end effector 4 could not perform the predetermined process even if the reset processing is performed, remains in the container CB as described above. Namely, in a case where it is determined that the trigger condition is satisfied, it is likely that the target object OBJ, on which the end effector 4 cannot perform the predetermined process even if the reset processing is performed, remains in the container CB. In this case, in order to allow the end effector 4 to perform the predetermined process on the target object OBJ, on which the end effector 4 cannot perform the predetermined process even if the reset processing is performed, the control apparatus 3 performs the gazing processing that moves the imaging system 2 based on the target object OBJ, on which the end effector 4 cannot perform the predetermined process even if the reset processing is performed and therefore remains in the container CB. It is likely to be determined that the computing result condition is satisfied for the target object OBJ, on which the end effector 4 cannot perform the predetermined process even if the reset processing is performed and therefore remains in the container CB, due to the gazing processing. Namely, in a case where the target object OBJ, on which the end effector 4 cannot perform the predetermined process even if the reset processing is performed, exists (namely, remains) in the container CB, it is likely that the end effector 4 can perform the predetermined process on the target object OBJ.

Furthermore, in the present example embodiment, the control apparatus 3 performs the reset processing in a case where the trigger condition is not satisfied while the computing result condition is satisfied. Moreover, the control apparatus 3 performs the gazing processing in a case where the trigger condition is satisfied while the computing result condition is satisfied. Therefore, as already described above, the control apparatus 3 can move the imaging system 2 so that it is likely to be determined that the computing result condition is satisfied while improving the throughput of the robot control processing illustrated in FIG. 4. In other words, the control apparatus 3 can achieve both an effect of improving the throughput of the robot control processing illustrated in FIG. 4 and an effect of increasing the likelihood that the computing result condition is determined to be satisfied by moving the imaging system 2.

### (4) Modified Example

Next, a modified example of the robot system SYS will be described. Note that each modified example described below may be combined with other modified example. Moreover, a detailed description of the component that has been already described is omitted by assigning the same reference number to it in the below-described description. Furthermore, a detailed description of the processing that has been already described is omitted by assigning the same step number to it in the below-described description. Namely, in the below-described description, the components different from the component that has been already described and the processing different from the processing that has been already described will be described mainly. Therefore, in a case where there is no notation, the robot system SYS may include the component that has been already described, and the robot system SYS may perform the processing that has been already described, even in the modified examples described below.

### (4-1) First Modified Example

In the above-described description, the control apparatus 3 calculates the height H of the target object group OBG_trigger at the step S42 in FIG. 4, by using at least one of the image data IMG_2D and IMG_3D generated by the imaging system 2, in order to determine whether or not the trigger condition (the height condition) is satisfied. In a first modified example, the control apparatus 3 may calculate the height H of the target object group OBG_trigger by using a height calculation method that is different from a height calculation method using at least one of the image data IMG_2D and IMG_3D generated by the imaging system 2. Next, a specific example of the height calculation method, which is different from the height calculation method using at least one of the image data IMG_2D and IMG_3D generated by the imaging system 2, will be described.

### (4-1-1) First Height Calculation Method using Imaging System 91 different from Imaging System 2

The control apparatus 3 may calculate the height H of the target object group OBG_trigger by using an imaging system 91 that is different from imaging system 2. For example, in a case where the robot system SYS includes the imaging system 91, the control apparatus 3 may calculate the height H of the target object group OBG_trigger by using the imaging system 91 of the robot system SYS. For example, in a case where the robot system SYS does not include the imaging system 91, the control apparatus 3 may calculate the height H of the target object group OBG_trigger by using the imaging system 91 external to the robot system SYS. The imaging system 91 may be positioned at a position and a pose that allow an imaging field of view of the imaging system 91 to include as many target objects OBJ as possible.

The imaging system 91 may be attached to the robot 1. The imaging system 91 may be attached to the robot arm 12. The imaging system 91 may be attached to a part that is different from the robot 1 (especially, the robot arm 12). For example, the imaging system 91 may be attached to a ceiling of a building in which the robot system SYS is installed. For example, the imaging system 91 may be attached to a robot that is different from the robot 1. For example, the imaging system 91 may be attached to a structural object such as a pillar.

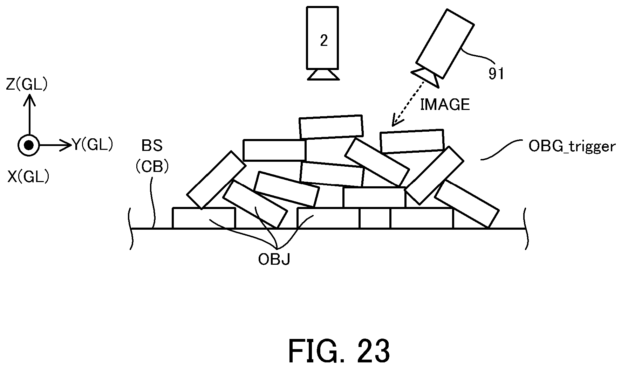

As illustrated in FIG. 23 that is a cross-sectional view illustrating the imaging system 91, the imaging system 91 is configured to image the target object group OBG_trigger contained in the container CB. The imaging system 91 is configured to image the target object group OBG_trigger contained in the container CB to generate image data indicating an image in which the target object group OBG_trigger is captured. The control apparatus 3 may calculate the height H of the target object group OBG_trigger by using the image data generated by the imaging system 91.

Note that a method for calculating the height H of the target object group OBG_trigger by using the image data generated by the imaging system 91 may be the same as a method for calculating the height H of the target object group OBG_trigger by using at least one of the image data IMG_2D and IMG_3D generated by the imaging system 2. For example, the control apparatus 3 may calculate the height H of the target object group OBG_trigger by analyzing the image indicated by the image data generated by the imaging system 91. Alternatively, in a case where the image data generated by the imaging system 91 is image data whose type is the same as that of the image data IMG_2D, the control apparatus 3 may calculate the height H of the target object group OBG_trigger by performing the 2D matching processing using the image data generated by the imaging system 91. Alternatively, in a case where the image data generated by the imaging system 91 is image data whose type is the same as that of the image data IMG_3D (for example, the stereo image data), the control apparatus 3 may generate three-dimensional position data (for example, point cloud data) from the image data generated by the imaging system 91, as in a case where the three-dimensional position data WSD is generated from the image data IMG_3D. Then, the control apparatus 3 may calculate the height H of the target object group OBG_trigger by using the generated three-dimensional position data.

Thus, according to a first height calculation method, the control apparatus 3 calculates the height H of the target object group OBG_trigger by using the imaging system 91. In this case, the imaging system 91 may be considered to serve as a measurement apparatus that is configured to directly or indirectly measure the height H of the target object group OBG_trigger.

### (4-1-2) Second Height Calculation Method using Weight Sensor 92

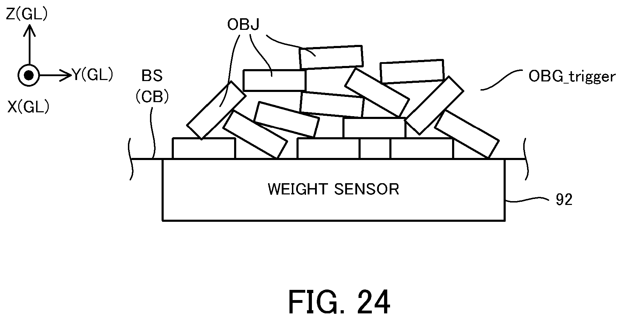

The control apparatus 3 may calculate the height H of the target object group OBG_trigger by using a weight sensor 92. For example, as illustrated in FIG. 24 that is a cross-sectional view illustrating the weight sensor 92, the weight sensor 92 is configured to measure a weight of the target object group OBG_trigger contained in the container CB. In this case, the weight sensor 92 may be built into the container CB. Alternatively, the container CB may be positioned on the weight sensor 92 and the target object group OBG_trigger may be contained in the container CB that is positioned on the weight sensor 92. A measured result by the weight sensor 92 (namely, a measured result of the weight of the target object group OBG_trigger) is output to the control apparatus 3.

The control apparatus 3 may calculate the height H of the target object group OBG_trigger based on the measured result by the weight sensor 92 (namely, the measured result of the weight of the target object group OBG_trigger). Specifically, it is expected that the weight of the target object group OBG_trigger is heavier and the height H of the target object group OBG_trigger is higher as the number of target objects OBJ contained in the target object group OBG_trigger contained in the container CB is larger. In other words, it is expected that the weight of the target object group OBG_trigger is lighter and the height H of the target object group OBG_trigger is lower as the number of target objects OBJ contained in the target object group OBG_trigger contained in the container CB is smaller. Namely, it is expected that the weight of the target object group OBG_trigger and the height H of the target object group OBG_trigger have a relationship that the height H of the target object group OBG_trigger is higher as the weight of the target object group OBG_trigger is heavier. In other words, namely, it is expected that the weight of the target object group OBG_trigger and the height H of the target object group OBG_trigger have a relationship that the height H of the target object group OBG_trigger is lower as the weight of the target object group OBG_trigger is lighter. The control apparatus 3 may calculate (in this case, estimate) the height H of the target object group OBG_trigger based on the measured result by the weight sensor 92 (namely, the measured result of the weight of the target object group OBG_trigger) by using this relationship. For example, the control apparatus 3 may calculate (in this case, estimate) the height H of the target object group OBG_trigger by using a table, which indicates the relationship between the height H of the target object group OBG_trigger and the weight of the target object group OBG_trigger, and the measured result by the weight sensor 92.

Thus, according to a second height calculation method, the control apparatus 3 calculates the height H of the target object group OBG_trigger by using the weight sensor 92 that is configured to measure the weight, which is a parameter different from the height H. In this case, the weight sensor 92 may be considered to serve as a measurement apparatus that is configured to indirectly measure the height H of the target object group OBG_trigger.

### (4-1-3) Third Height Calculation Method using Object Detection Sensor 93

The control apparatus 3 may calculate the height H of the target object group OBG_trigger by using an object detection sensor 93. For example, in a case where the robot system SYS includes the object detection sensor 93, the control apparatus 3 may calculate the height H of the target object group OBG_trigger by using the object detection sensor 93 of the robot system SYS. For example, in a case where the robot system SYS does not include the object detection sensor 93, the control apparatus 3 may calculate the height H of the target object group OBG_trigger by using the object detection sensor 93 external to the robot system SYS.

The object detection sensor 93 is configured to detect the target object OBJ. For example, the object detection sensor 93 may be an optical sensor, such as a photoelectric sensor, that is configured to detect the target object OBJ by emitting detection light toward the target object OBJ and detecting reflected light from the target object OBJ. However, the object detection sensor 93 may be an optical sensor that is different from the photoelectric sensor. Moreover, as long as the object detection sensor 93 is configured to detect the target object OBJ, the object detection sensor 93 may be an existing sensor that is different from the optical sensor.

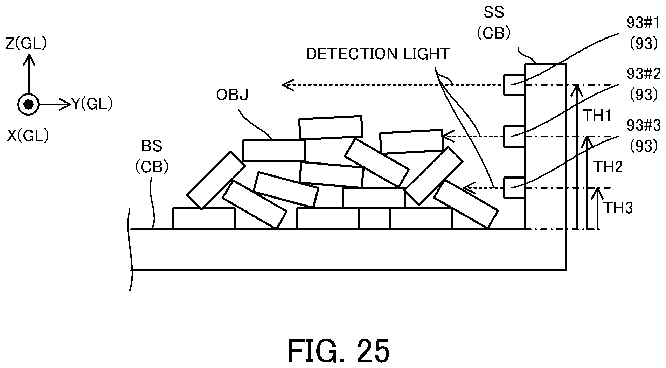

The object detection sensor 93 may be positioned at a desired position so that the height H of the target object group OBG_trigger can be calculated based on a detected result of the target object OBJ by the object detection sensor 93. For example, as illustrated in FIG. 25, a plurality of object detection sensors 93 may be positioned at mutually different heights, respectively. In the example illustrated in FIG. 25, three object detection sensors 93 (specifically, the object detection sensor 93#1, the object detection sensor 93#2, and the object detection sensor 93#3) are positioned at a first height TH1, a second height TH2, and a third height TH3 that are different from one another on the side wall SS of the container CB, respectively. Note that each of the first height TH1, the second height TH2, and the third height TH3 may mean the height from the above-described reference surface (for example, the bottom surface of the bottom wall BS of the container CB). Moreover, the first height TH1 is higher than the second height TH2, and the second height TH2 is higher than the third height TH3. Furthermore, in the example illustrated in FIG. 25, each object detection sensor 93 emits the detection light along a horizontal direction. In this case, each object detection sensor 93 may detect the target object OBJ that is positioned at the height at which each object detection sensor 93 is positioned. For example, object detection sensor 93#1 may detect the target object OBJ that is positioned at the first height TH1. For example, the object detection sensor 93#2 may detect the target object OBJ that is positioned at the second height TH2. For example, the object detection sensor 93#3 may detect the target object OBJ that is positioned at a third height TH3.

The detected results by the plurality of object detection sensors 93 are output to the control apparatus 3. The control apparatus 3 may calculate the height H of the target object group OBG_trigger based on the detected results by the plurality of object detection sensors 93. For example, in a case where one object detection sensor 93 positioned at one height detects the target object OBJ (namely, the detection light is irradiated onto the target object OBJ, and the reflected light from the target object OBJ returns to the one object detection sensor 93), it is expected that the height H of the target object group OBG_trigger is higher than the one height. On the other hand, in a case where the object detection sensor 93 positioned at the one height does not detect the target object OBJ (namely, the detection light is not irradiated onto the target object OBJ, and the reflected light from the target object OBJ does not return to the object detection sensor 93), it is expected that the height H of the target object group OBG_trigger is lower than the one height. Therefore, the control apparatus 3 can calculate (in this case, estimate) the height H (especially, the approximate height H) of the target object group OBG_trigger based on the detected results by the plurality of object detection sensors 93. For example, in a case where all object detection sensors 93#1 to 93#3 have detected the target object OBJ, the control apparatus 3 may calculate a height that is equal to or higher than the first height TH1 as the height H of the target object group OBG_trigger. For example, in a case where the object detection sensor 93#1 have not detected the target object OBJ and the object detection sensors 93#2 to 93#3 have detected the target object OBJ, the control apparatus 3 may calculate a height that is equal to or higher than the second height TH2 and that is equal to or lower than the first height TH1 as the height H of the target object group OBG_trigger. For example, in a case where the object detection sensors 93#1 to 93#2 have not detected the target object OBJ and the object detection sensor 93#3 have detected the target object OBJ, the control apparatus 3 may calculate a height that is equal to or higher than the third height TH3 and that is equal to or lower than the second height TH2 as the height H of the target object group OBG_trigger. For example, in a case where none of the object detection sensors 93#1 to 93#3 have detected the target object OBJ, the control apparatus 3 may calculate a height that is equal to or lower than the third height TH3 as the height H of the target object group OBG_trigger.

Thus, according to the third height calculation method, the control apparatus 3 calculates the height H of the target object group OBG_trigger by using the object detection sensors 93. In this case, the object detection sensors 93 may be considered to serve as a measurement apparatuses that is configured to directly measure the height H of the target object group OBG_trigger.

Note that the plurality of object detection sensors 93 may be positioned so that the height of at least one of the plurality of object detection sensors 93 is higher than the above-described height threshold value TH_H and the height of at least one remaining object detection sensor 93 of the plurality of object detection sensors 93 is lower than the above-described height threshold value TH_H. In this case, the control apparatus 3 may determine, based on the number of object detection sensors 93 that have not detected the target object OBJ, whether or not the height H of the target object group OBG_trigger is lower than the height threshold value TH_H. For example, in the example illustrated in FIG. 25, an example in which the first height TH1 at which the object detection sensor 93#1 is positioned and the second height TH2 at which the object detection sensor 93#2 is positioned are higher than the height threshold value TH_H and the third height TH3 at which the object detection sensor 93#3 is positioned is lower than the height threshold value TH_H will be described. In this case, in a case where at least one of the object detection sensors 93#1 and 93#2 has detected the target object OBJ (namely, the number of object detection sensors 93 that have not detected the target object OBJ is equal to or smaller than one), the control apparatus 3 may determine that the height H of the target object group OBG_trigger is higher than the height threshold value TH_H. On the other hand, in a case where both the object detection sensors 93#1 and 93#2 have not detected the target object OBJ (namely, the number of object detection sensors 93 that have not detected the target object OBJ is equal to or larger than two), the control apparatus 3 may determine that the height H of the target object group OBG_trigger is lower than the height threshold value TH_H. Even in this case, it can be said that the control apparatus 3 acquires information related to the height H of the target object group OBG_trigger based on the detected result by the object detection sensors 93. Therefore, even in this case, the object detection sensor 93 may be considered to serve as the measurement apparatuses that is configured to indirectly measure the height H of the target object group OBG_trigger.

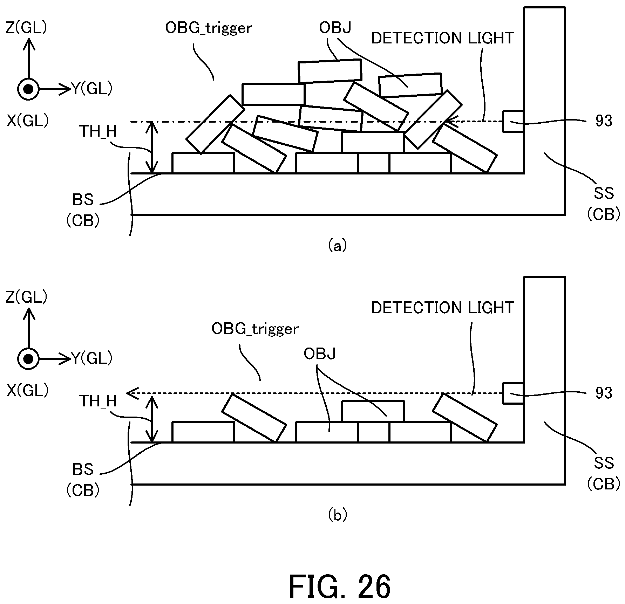

Moreover, as illustrated in FIG. 26(a) and FIG. 26(b), a single object detection sensor 93 may be positioned at a height that allows it to detect the target object OBJ positioned at a height corresponding to the above-described height threshold value TH_H. In the example illustrated in FIG. 26(a) and FIG. 26(b), the object detection sensor 93, which is a photoelectric sensor, is positioned on the side wall SS of the container CB at a position whose height from the bottom wall BS (namely, the reference plane) is equal to the height threshold value TH_H and the object detection sensor 93 emits the detection light along a horizontal direction. In this case, in a case where the object detection sensor 93 has detected the target object OBJ (namely, the detection light is irradiated onto the target object OBJ and the reflected light from the target object OBJ has returned to the object detection sensor 93) as illustrated in FIG. 26(a), it is estimated that the height of the target object group OBG_trigger is higher than the height threshold value TH_H. On the other hand, in a case where the object detection sensor 93 has not detected the target object OBJ (namely, the detection light is not irradiated onto the target object OBJ, and the reflected light from the target object OBJ does not return to the object detection sensor 93) as illustrated in FIG. 26(b), it is estimated that the height of the target object group OBG_trigger is lower than the height threshold value TH_H. Therefore, the control apparatus 3 may determine, based on the detected result by the object detection sensor 93, whether or not the height H of the target object group OBG_trigger is lower than the height threshold value TH_H. Even in this case, it can be said that the control apparatus 3 acquires information related to the height H of the target object group OBG_trigger based on the detected result by the object detection sensors 93. Therefore, even in this case, the object detection sensor 93 illustrated in FIG. 26(a) and FIG. 26(b) may be considered to serve as the measurement apparatuses that is configured to indirectly measure the height H of the target object group OBG_trigger.

### (4-1-4) Fourth Height Calculation Method using Marker 94

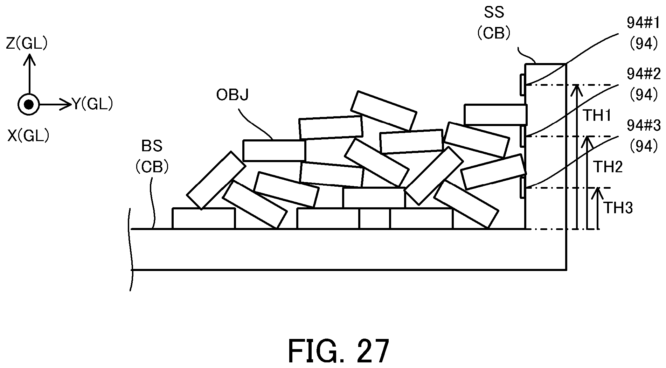

The control apparatus 3 may calculate the height H of the target object group OBG_trigger by using a marker 94. Specifically, as illustrated in FIG. 27 that illustrates the marker 94, the marker 94 may be positioned on the container CB in which the target object OBJ is contained. Especially, the marker 94 may be placed on a surface (usually, an inner surface) of the container CB facing the containing space CBS in which the target object OBJ is contained. For example, the marker 94 may be positioned on the side wall SS of the container CB facing the containing space CBS. Note that the marker 94 may be detachable from the container CB, or the marker 94 may be fixed to the container CB. Alternatively, the marker 94 may be printed on the container CB.

The marker 94 is a marker that can be imaged by the imaging system 2 (alternatively, the imaging system 91 used in the first height calculation method, the same applies in the below-described description of the fourth height calculation method). However, since the marker 94 is positioned at a position facing the containing space for the target object OBJ, the imaging system 2 cannot image the marker 94 in a case where the marker 94 is hidden by the target object OBJ.

The marker 94 may be positioned at a desired position so that the height H of the target object group OBG_trigger can be calculated based on the imaged result of the marker 94 by the imaging system 2 (namely, at least one of the image data IMG_2D and IMG_3D generated by the imaging system 2 imaging the marker 94). For example, as illustrated in FIG. 27, a plurality of markers 94 may be positioned at mutually different heights, respectively. In the example illustrated in FIG. 27, three markers 94 (specifically, the marker 94#1, the marker 94#2, and the marker 94#3) are positioned at a first height TH1, a second height TH2, and a third height TH3 that are different from one another on the side wall SS of the container CB, respectively. Note that each of the first height TH1, the second height TH2, and the third height TH3 may mean the height from the above-described reference plane (for example, the bottom surface of the bottom wall BS of the container CB). Moreover, the first height TH1 is higher than the second height TH2, and the second height TH2 is higher than the third height TH3.

In this case, the control apparatus 3 may calculate the height H of the target object group OBG_trigger based on the imaged result of the markers 94 by the imaging system 2. For example, in a case where one marker 94 positioned at one height is not captured in the image generated by the imaging system 2 (namely, in a case where the marker 94 cannot be detected based on the image data that is the imaged result by the imaging system 2), it is expected that the one marker 94 is hidden by the target object OBJ. In this case, it is expected that the target object OBJ is positioned at the one height at which the one marker 94 is positioned or at a position that is higher than the one height. As a result, it is expected that the height H of the target object group OBG_trigger is higher than the one height. On the other hand, for example, in a case where one marker 94 positioned at one height is captured in the image generated by the imaging system 2 (namely, in a case where the marker 94 can be detected based on the image data that is the imaged result by the imaging system 2), it is expected that the one marker 94 is not hidden by the target object OBJ. In this case, it is expected that the target object OBJ is not positioned at the one height at which the one marker 94 is positioned or at a position that is higher than the one height. As a result, it is expected that the height H of the target object group OBG_trigger is lower than the one height. Therefore, the control apparatus 3 can calculate (in this case, estimate) the height H (especially, the approximate height H) of the target object group OBG_trigger based on the imaged result of the marker 94 by the imaging system 2. For example, in a case where none of the markers 94#1 to 94#3 are captured in the image generated by the imaging system 2, the control apparatus 3 may calculate a height that is equal to or higher than the first height TH1 as the height H of the target object group OBG_trigger. For example, in a case where the marker 94#1 is captured in the image generated by the imaging system 2 and the markers 94#2 to 94#3 are not captured in the image generated by the imaging system 2, the control apparatus 3 may calculate a height that is equal to or higher than the second height TH2 and that is equal to or lower than the first height TH1 as the height H of the target object group OBG_trigger. For example, in a case where the markers 94#1 and 94#2 are captured in the image generated by the imaging system 2 and the marker 94#3 is not captured in the image generated by the imaging system 2, the control apparatus 3 may calculate a height that is equal to or higher than the third height TH3 and that is equal to or lower than the second height TH2 as the height H of the target object group OBG_trigger. For example, in a case where all markers 94#1 to 94#3 are captured in the image generated by the imaging system 2, the control apparatus 3 may calculate a height that is equal to or lower than the third height TH3 as the height H of the target object group OBG_trigger.

The control apparatus 3 may calculate the height H of the target object group OBG_trigger by using at least one of the image data IMG_2D and IMG_3D acquired at the step S1 in FIG. 4 as the imaged result of the markers 94 by the imaging system 2. The control apparatus 3 may calculate the height H of the target object group OBG_trigger by using the image data IMG_2D acquired at the step S71 in FIG. 13 as the imaged result of the marker 94 by the imaging system 2. The control apparatus 3 may calculate the height H of the target object group OBG_trigger by using at least one of the image data IMG_2D and IMG_3D acquired at the step S74 in FIG. 13 as the imaged result of the marker 94 by the imaging system 2. In this case, the imaging system 2 may not newly image the marker 94 to calculate the height H of the target object group OBG_trigger.

However, the imaging system 2 may not newly image the marker 94 to calculate the height H of the target object group OBG_trigger. The control apparatus 3 may calculate the height H of the target object group OBG_trigger by using at least one of the image data IMG_2D and IMG_3D generated by the imaging system 2 newly imaging the marker 94 to calculate the height H of the target object group OBG_trigger, without using at least one of the image data IMG_2D and IMG_3D acquired at the step S1 in FIG. 4, the image data IMG_2D acquired at the step S71 in FIG. 13, and at least one of the image data IMG_2D and IMG_3D acquired at the step S74 in FIG. 13 as the imaged result of the marker 94 by the imaging system 2.

Shapes of the plurality of markers 94 may be different from each other. In this case, the control apparatus 3 may calculate the height H of the target object group OBG_trigger based on the shape of the marker 94 captured in the image generated by the imaging system 2. For example, an example in which the marker 94#1 has a first shape, the marker 94#2 has a second shape that is different from the first shape, and the marker 94#3 has a third shape that is different from the first to second shapes in the example illustrated in FIG. 27 will be described. In this case, in a case where the shape of the marker 94 captured in the image generated by the imaging system 2 is only the first shape (namely, only the marker 94#1 is captured in the image generated by the imaging system 2), the control apparatus 3 may calculate a height that is equal to or higher than the second height TH2 and that is equal to or lower than the first height TH1 as the height H of the target object group OBG_trigger. For example, in a case where the shapes of the markers 94 captured in the image generated by the imaging system 2 are only the first and second shapes (namely, only the markers 94#1 to 94#2 are captured in the image generated by the imaging system 2), the control apparatus 3 may calculate a height that is equal to or higher than the third height TH3 and that is equal to or lower than the second height TH2 as the height H of the target object group OBG_trigger. For example, in a case where the shapes of the marker 94 captured in the image generated by the imaging system 2 are the first to third shapes (namely, all markers 94#1 to 94#3 are captured in the image generated by the imaging system 2), the control apparatus 3 may calculate a height that is equal to or lower than the third height TH3 as the height H of the target object group OBG_trigger.

Thus, according to the fourth height calculation method, the control apparatus 3 calculates the height H of the target object group OBG_trigger by using the markers 94 and the imaging system 2. In this case, the imaging system 2 may be considered to serve as a measurement apparatus that is configured to directly measure the height H of the target object group OBG_trigger, and the marker 94 may be considered to serve as a measurement member that is configured to directly measure the height H of the target object group OBG_trigger.

Note that the plurality of markers 94 may be positioned so that the height of at least one marker 94 is higher than the above-described height threshold value TH_H and the height of at least one remaining marker 94 of the plurality of markers 94 is lower than the above-described height threshold value TH_H. In this case, the control apparatus 3 may determine, based on the number of markers 94 captured in the image generated by the imaging system 2 (namely, the number of markers 94 that is not hidden in the image), whether or not the height H of the target object group OBG_trigger is lower than the height threshold value TH_H. For example, in the example illustrated in FIG. 27, an example in which the first height TH1 at which the marker 94#1 is positioned and the second height TH2 at which the marker 94#2 is positioned are higher than the height threshold value TH_H and the third height TH3 at which the marker 94#3 is positioned is lower than the height threshold value TH_H will be described. In this case, in a case where at least one of the markers 94#1 and 94#2 is not captured in the image generated by the imaging system 2 (namely, the number of markers 94 captured in the image generated by the imaging system 2 is equal to or smaller than one), the control apparatus 3 may determine that the height H of target object group OBG_trigger is higher than height threshold value TH_H. On the other hand, in a case where both the markers 94#1 and 94#2 are captured in the image generated by the imaging system 2 (namely, the number of markers 94 captured in the image generated by the imaging system 2 is equal to or larger than two), the control apparatus 3 may determine that the height H of target object group OBG_trigger is lower than the height threshold value TH_H. Even in this case, it can be said that the control apparatus 3 acquires information related to the height H of the target object group OBG_trigger based on the imaged result of the markers 94 by the imaging system 2. Therefore, even in this case, the imaging system 2 may be considered to serve as the measurement apparatus that is configured to indirectly measure the height H of the target object group OBG_trigger, and the markers 94 may be considered to serve as the measurement member that is configured to indirectly measure the height H of the target object group OBG_trigger.

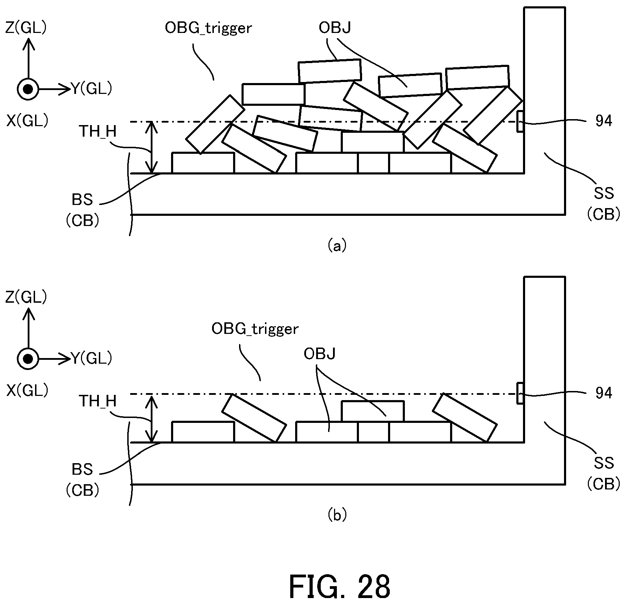

Moreover, as illustrated in FIG. 28(a) and FIG. 28(b), a single marker 94 may be positioned at the height corresponding to the above-described height threshold value TH_H. In the example illustrated in FIG. 28(a) and FIG. 28(b), the marker 94 is positioned on the side wall SS of the container CB at a position whose height from the bottom wall BS (namely, the reference plane) is equal to the height threshold value TH_H. In this case, in a case where the marker 94 is not captured in the image generated by the imaging system 2 as illustrated in FIG. 28(a), it is estimated that the height of the target object group OBG_trigger is higher than the height threshold value TH_H. On the other hand, in a case where the marker 94 is captured in the image generated by the imaging system 2 as illustrated in FIG. 28(b), it is estimated that the height of the target object group OBG_trigger is lower than the height threshold value TH_H. Therefore, the control apparatus 3 may determine, based on the imaged result of the marker 94 by the imaging system 2, whether or not the height H of the target object group OBG_trigger is lower than the height threshold value TH_H. Even in this case, it can be said that the control apparatus 3 acquires information related to the height H of the target object group OBG_trigger based on the imaged result of the markers 94 by the imaging system 2. Therefore, even in the example illustrated in FIG. 28(a) and FIG. 28(b), the imaging system 2 may be considered to serve as the measurement apparatus that is configured to indirectly measure the height H of the target object group OBG_trigger, and the markers 94 may be considered to serve as the measurement member that is configured to indirectly measure the height H of the target object group OBG_trigger.

### (4-1-5) Fifth Height Calculation Method using Number of Target Objects OBJ held (picked up) by End Effector 4

The control apparatus 3 may calculate the height H of the target object group OBG_trigger by using information related to the number of target objects OBJ that has been held (picked up) by the end effector 4. Note that the information related to the number of target objects OBJ that has been held (picked up) by the end effector 4 is known information to the control apparatus 3, because the end effector 4 holds (picks up) the target object OBJ under the control of the control apparatus 3.

Specifically, it is expected that the number of target objects remaining in the container CB is smaller and the height H of the target object group OBG_trigger is lower as the number of target objects OBJ that has been picked up by the end effector 4 (namely, the number of target objects OBJ that has been taken out from the container CB) is larger. In other words, it is expected that the number of target objects remaining in the container CB is larger and the height H of the target object group OBG_trigger is higher as the number of target objects OBJ that has been picked up by the end effector 4 is smaller. Namely, it is expected that the number of target objects OBJ that has been picked up by the end effector 4 and the height H of the target object group OBG_trigger have a relationship that the height H of the target object group OBG_trigger is higher as the number of target objects OBJ that has been picked up by the end effector 4 is smaller. In other words, namely, it is expected that the number of target objects OBJ that has been picked up by the end effector 4 and the height H of the target object group OBG_trigger have a relationship that the height H of the target object group OBG_trigger is lower as the number of target objects OBJ that has been picked up by the end effector 4 is larger. The control apparatus 3 may calculate (in this case, estimate) the height H of the target object group OBG_trigger based on the information related to the number of target objects OBJ that has been picked up by the end effector 4 by using this relationship. For example, the control apparatus 3 may calculate (In this case, estimate) the height H of the target object group OBG_trigger by using a table, which indicates the relationship between the height H of the target object group OBG_trigger and the number of target objects OBJ that has been picked up by the end effector 4, and the information related to the number of target objects OBJ that has been picked up by the end effector 4.

### (4-2) Second Modified Example

In the above-described description, the height condition, which is related to the height H of the plurality of target objects OBJ on which the end effector 4 should sequentially perform the predetermined process (namely, the height H of the target object group OBG_trigger), is used as the trigger condition. Here, it can be said that the height H of the plurality of target objects OBJ on which the end effector 4 should sequentially perform the predetermined process is a parameter indicating a quantity of the plurality of target objects OBJ on which the end effector 4 should sequentially perform the predetermined process. This is because it can be said that the quantity of the plurality of target objects OBJ on which the end effector 4 should sequentially perform the predetermined process is larger as the height H of the plurality of target objects OBJ on which the end effector 4 should sequentially perform the predetermined process is higher. In other words, it can be said that the quantity of the plurality of target objects OBJ on which the end effector 4 should sequentially perform the predetermined process is smaller as the height H of the plurality of target objects OBJ on which the end effector 4 should sequentially perform the predetermined process is lower.

Therefore, the height condition may be regarded as the height condition related to height H, which is a parameter indicating the quantity of the plurality of target objects OBJ on which the end effector 4 should sequentially perform the predetermined process. In other words, the height condition may be regarded as a quantity condition that is related to the quantity of the plurality of target objects OBJ on which the end effector 4 should sequentially perform the predetermined process. For example, the height condition may be regarded as the quantity condition related to the quantity of the plurality of target objects OBJ contained in the container CB.

Considering that the height condition may be regarded as the quantity condition in this manner, in a case where any parameter that is different from the height H indicates the quantity of the plurality of target objects OBJ, the quantity condition, which is related to any parameter indicating the quantity of the plurality of target objects OBJ on which the end effector 4 should sequentially perform the predetermined process, may be used as the trigger condition, in addition to or instead of the height condition. For example, the quantity condition, which is related to any parameter indicating the quantity of the plurality of target objects OBJ contained in the container CB, may be used as the trigger condition. In this case, the quantity of the plurality of target objects OBJ contained in the container CB may mean the quantity of all of the plurality of target objects OBJ contained in the container CB (namely, the quantity of the target object group OBG_trigger including all of the plurality of target objects OBJ contained in the container CB). Alternatively, the quantity of the plurality of target objects OBJ contained in the container CB may mean the quantity of a part of the plurality of target objects OBJ contained in the container CB (namely, the quantity of the target object group OBG_trigger including a part of the plurality of target objects OBJ contained in the container CB). For example, as with the target object group OBG_trigger that is the target for calculating the height H as described above, the target object group OBG_trigger that is the target for calculating the quantity may include at least one target object OBJ, which is imaged by the imaging system 2 to perform the position pose computing, among the plurality of target objects OBJ contained in the container CB. In other words, the trigger target object group OBG_trigger that is the target for calculating the quantity may not include at least one target object OBJ, which is not imaged by the imaging system 2 to perform the position pose computing, among the plurality of target objects OBJ contained in the container CB.

The quantity of whole of the target object group OBG_trigger may be used as the quantity of the target object group OBG_trigger. For example, the quantity of whole of the plurality of target objects OBJ included in the target object group OBG_trigger may be used as the quantity of the target object group OBG_trigger. Alternatively, the quantity of a part of the target object group OBG_trigger may be used as the quantity of the target object group OBG_trigger. For example, the quantity of at least one target object OBJ, which is selected from the plurality of target objects OBJ included in the target object group OBG_trigger based on a desired selection condition, may be used as the quantity of the target object group OBG_trigger.

In a case where the quantity condition is used as the trigger condition, a state in which the quantity condition is not satisfied (namely, the state in which the trigger condition is not satisfied) may include a state in which the quantity of the target object group OBG_trigger is larger than a predetermined quantity threshold value. On the other hand, a state in which the quantity condition is satisfied (namely, the trigger condition is satisfied) may include a state in which the quantity of the target object group OBG_trigger is smaller than the predetermined quantity threshold value. In this case, an effect, which is the same as a technical effect achievable by using the above-described height condition, is achievable. Namely, it is more likely that the end effector 4 can perform the predetermined process on the target object OBJ regardless of the number of target objects OBJ contained in the container CB.

The number of target objects OBJ included in the target object group OBG_trigger is one example of the parameter that indicates the quantity of the target object group OBG_trigger. A weight of the target object group OBG_trigger (namely, a weight of the target objects OBJ included in the target object group OBG_trigger) is one example of the parameter that indicates the quantity of the target object group OBG_trigger. A volume of the target object group OBG_trigger (namely, a volume of the target objects OBJ included in the target object group OBG_trigger) is one example of the parameter that indicates the quantity of the target object group OBG_trigger.

Next, the examples of the parameter that indicates the quantity of the target object group OBG_trigger will be described specifically.

### (4-2-1) Number Condition related to Number of Target Objects OBJ included in Target Object Group OBG

A number condition, which is related to the number of target objects OBJ contained in the target object group OBG_trigger, may be used as the trigger condition (the quantity condition). A state in which the number condition is not satisfied (namely, the trigger condition is not satisfied) may include a state in which the number of target objects OBJ contained in the target object group OBG_trigger is larger than a first predetermined number. On the other hand, a state in which the quantity condition is satisfied (namely, the trigger condition is satisfied) may include a state in which the number of target objects OBJ contained in the target object group OBG_trigger is smaller than the first predetermined number. In this case, an effect, which is the same as a technical effect achievable by using the above-described height condition, is achievable. This is because it is expected that the number of target objects OBJ included in the target object group OBG_trigger and the height H of the target object group OBG_trigger have a relationship that the height H of the target object group OBG_trigger is higher as the number of target objects OBJ included in the target object group OBG_trigger is larger, (namely, the height H of the target object group OBG_trigger is lower as the number of target objects OBJ included in the target object group OBG_trigger is smaller).

In a case where the number condition is used, the control apparatus 3 may calculate the number of target objects OBJ included in the target object group OBG_trigger, and determine whether or not the number condition is satisfied based on the calculated number.

As a first example, the control apparatus 3 may calculate the number of target objects OBJ included in the target object group OBG_trigger by using at least one of the image data IMG_2D and IMG_3D generated by the imaging system 2 (alternatively, the image data generated by the imaging system 91 used by the first height calculation method in the first modified example, the same applies in the second modified example). For example, the control apparatus 3 may calculate the number of target objects OBJ included in the target object group OBG_trigger by analyzing the image indicated by the image data generated by the imaging system 91. Alternatively, the control apparatus 3 may calculate the number of target objects OBJ included in the target object group OBG_trigger by using the three-dimensional position data WSD generated from the image data IMG_3D, in addition to or instead of analyzing the image indicated by at least one of the image data IMG_2D and IMG_3D. In this case, the imaging system 2 may be considered to serve as a measurement apparatus that is configured to indirectly measure the number (the quantity) of target objects OBJ included in the target object group OBG_trigger.

As a second example, the control apparatus 3 may calculate the number of target objects OBJ included in the target object group OBG_trigger based on the measured result by the weight sensor 92 used by the second height calculation method in the first modified example (namely, the measured result of the weight of the target object group OBG_trigger). Specifically, it is expected that the weight of the target object group OBG_trigger is heavier as the number of target objects OBJ included in the target object group OBG_trigger is larger. In other words, it is expected that the weight of the target object group OBG_trigger is lighter as the number of target objects OBJ included in the target object group OBG_trigger is smaller. Namely, it is expected that the number of target objects OBJ included in the target object group OBG_trigger and the weight of the target object group OBG_trigger have a relationship that the number of target objects OBJ included in the target object group OBG_trigger is larger as the weight of the target object group OBG_trigger is heavier. In other words, it is expected that the number of target objects OBJ included in the target object group OBG_trigger and the weight of the target object group OBG_trigger have a relationship that the number of target objects OBJ included in the target object group OBG_trigger is smaller as the weight of the target object group OBG_trigger is lighter. The control apparatus 3 may calculate (in this case, estimate) the number of target objects OBJ included in the target object group OBG_trigger based on the measured result by the weight sensor 92 (namely, the measured result of the weight of the target object group OBG_trigger) by using this relationship. For example, the control apparatus 3 may calculate (in this case, estimate) the number of target objects OBJ included in the target object group OBG_trigger) by using a table, which indicates the relationship between the number of target objects OBJ included in the target object group OBG_trigger and the weight of the target object group OBG_trigger, and the measured result by the weight sensor 92. In this case, the weight sensor 92 may be considered to serve as a measurement apparatus that is configured to indirectly measure the number (the quantity) of target objects OBJ included in the target object group OBG_trigger.

As a third example, the control apparatus 3 may calculate the number of target objects OBJ included in the target object group OBG_trigger based on the information that is related to the number of target objects OBJ that has been held (picked up) by the end effector 4 and that is used by the fifth height calculation method in the first modified example. For example, the control apparatus 3 may calculate, as the number of target objects OBJ included in the target object group OBG_trigger (namely, the number of target objects OBJ remaining in the container CB), a number that is calculated by subtracting the number of target objects OBJ, which has been held (picked up) by the end effector 4, from the number of target objects OBJ, which has been contained in the container CB before starting the robot control processing.

Note that the control apparatus 3 may calculate the number of target objects OBJ included in the target object group OBG_trigger based on the detected result by the object detection sensor 93 used by the third height calculation method in the first modified example. The control apparatus 3 may calculate the number of target objects OBJ included in the target object group OBG_trigger based on the imaged result of the marker 94 used by the fourth height calculation method in the first modified example. This is because it is expected that the number of target objects OBJ included in the target object group OBG_trigger and the height H of the target object group OBG_trigger have a relationship that the number of target objects OBJ included in the target object group OBG_trigger is larger as the height H of the target object group OBG_trigger is higher (namely, the number of target objects OBJ included in the target object group OBG_trigger is smaller as the height H of the target object group OBG_trigger is lower).

Moreover, the number of target objects OBJ included in the target object group OBG_trigger and the number of target objects OBJ that has been picked up by the end effector 4 have a relationship that the number of target objects OBJ that has been picked up by the end effector 4 is smaller as the number of target objects OBJ included in the target object group OBG_trigger is larger (namely, the number of target objects OBJ that has been picked up by the end effector 4 is larger as the number of target objects OBJ included in the target object group OBG_trigger is smaller). Therefore, a second number condition, which is related to the number of target objects OBJ that has been picked up by the end effector 4 (namely, the number of target objects OBJ that has been taken out from the container CB), may be used, in addition to or instead of first number condition , which is related to the number of target objects OBJ included in the target object group OBG_trigger (namely, the number of target objects OBJ remaining in the container CB).

In a case where the second number condition is used, a state in which the second number condition is not satisfied (namely, the state in which the trigger condition is not satisfied) may include a state in which the number of target objects OBJ that has been picked up by the end effector 4 is smaller than a second predetermined number. On the other hand, a state in which the second number condition is satisfied (namely, the trigger condition is satisfied) may include a state in which the number of target objects OBJ that has been picked up by the end effector 4 is larger than the second predetermined number. In this case, an effect, which is the same as a technical effect achievable by using the above-described height condition, is achievable.

Calculating the number of target objects OBJ included in the target object group OBG_trigger is equivalent to calculating the number of target objects OBJ that has been picked up by the end effector 4. This is because the number of target objects OBJ included in the target object group OBG_trigger and the number of target objects OBJ that has been picked up by the end effector 4 have a relationship that a total sum of the number of target objects OBJ contained in the target object group OBG_trigger and the number of target objects OBJ that has been picked up by the end effector 4 is constant (specifically, is equal to the number of target objects OBJ contained in the container CB before the robot control process is started). Therefore, even in a case where the second number condition is used, the control apparatus 3 may calculate the number of target objects OBJ that has been picked up by the end effector 4 by using the method described above.

### (4-2-2) Weight Condition related to Weight of Target Object Group OBG

A weight condition, which is related to the weight of target object group OBG_trigger, may be used as the trigger condition (the quantity condition). A state in which the weight condition is not satisfied (namely, the state in which the trigger condition is not satisfied) may include a state in which the weight of the target object group OBG_trigger is larger than a predetermined weight threshold value. On the other hand, a state in which the weight condition is satisfied (namely, the trigger condition is satisfied) may include a state in which the weight of the target object group OBG_trigger is smaller than the predetermined weight threshold value. In this case, an effect, which is the same as a technical effect achievable by using the above-described height condition, is achievable. This is because it is expected that the weight of the target object group OBG_trigger and the height H of the target object group OBG_trigger have a relationship that the height H of the target object group OBG_trigger is higher as the weight of the target object group OBG_trigger is heavier (namely, the height H of the target object group OBG_trigger is lower as the weight of the target object group OBG_trigger is lighter).

In a case where the weight condition is used, the control apparatus 3 may calculate the weight of the target object group OBG_trigger, and determine whether or not the weight condition is satisfied based on the calculated weight.

As a first example, the control apparatus 3 may calculate the weight of the target object group OBG_trigger by using at least one of the image data IMG_2D and IMG_3D generated by the imaging system 2. For example, the control apparatus 3 may calculate the weight of the target object group OBG_trigger by analyzing the image indicated by the image data generated by the imaging system 2. Alternatively, the control apparatus 3 may calculate the weight of the target object group OBG_trigger by using the three-dimensional position data WSD generated from the image data IMG_3D, in addition to or instead of analyzing the image indicated by at least one of the image data IMG_2D and IMG_3D. In this case, the imaging system 2 may be considered to serve as a measurement apparatus that is configured to indirectly measure the weight (the quantity) of target object group OBG_trigger.

As a second example, the control apparatus 3 may calculate the weight of the target object group OBG_trigger based on the measured result by the weight sensor 92 used by the second height calculation method in the first modified example (namely, the measured result of the weight of the target object group OBG_trigger). In this case, the weight sensor 92 may be considered to serve as a measurement apparatus that is configured to directly measure the weight (the quantity) of the target object group OBG_trigger.

As a third example, the control apparatus 3 may calculate the weight of the target object group OBG_trigger based on the information that is related to the number of target objects OBJ held (picked up) by the end effector 4 and that is used by the fifth height calculation method in the first modified example. Specifically, it is expected that the weight of the target object group OBG_trigger remaining in the container CB is heavier as the number of target objects OBJ that has been picked up by the end effector 4 (namely, the number of target objects OBJ that has been taken out from the container CB) is smaller. In other words, it is expected that the weight of the target object group OBG_trigger remaining in the container CB is lighter as the number of target objects OBJ that has been picked up by the end effector 4 (namely, the number of target objects OBJ that has been taken out from the container CB) is larger. Namely, it is expected that the number of target objects OBJ that has been picked up by the end effector 4 and the weight of the target object group OBG_trigger has a relationship that the weight of the target object group OBG_trigger is heavier as the number of target objects OBJ that has been picked up by the end effector 4 is smaller. In other words, it is expected that the number of target objects OBJ that has been picked up by the end effector 4 and the weight of the target object group OBG_trigger has a relationship that the weight of the target object group OBG_trigger is lighter as the number of target objects OBJ that has been picked up by the end effector 4 is larger. The control apparatus 3 may calculate (in this case, estimate) the weight of the target object group OBG_trigger based on the information related to the number of target objects OBJ that has been picked up by the end effector 4 by using this relationship. For example, the control apparatus 3 may calculate (in this case, estimate) the weight of the target object group OBG_trigger by using a table, which indicates the relationship between the number of target object OBJ that has been picked up by the end effector 4 and the weight of the target object group OBG_trigger, and the information related to the number of target object OBJ that has been picked up by the end effector 4.

Note that the control apparatus 3 may calculate the weight of the target object group OBG_trigger based on the detected result by the object detection sensor 93 that is used by the third height calculation method in the first modified example. The control apparatus 3 may calculate the weight of the target object group OBG_trigger based on the imaged result of the marker 94 that is used by the fourth height calculation method in the first modified example. This is because it is expected that the weight of the target object group OBG_trigger and the height H of the target object group OBG_trigger have a relationship that the weight of the target object group OBG_trigger is heavier as the height H of the target object group OBG_trigger is higher (namely, the weight of the target object group OBG_trigger is lighter as the height H of the target object group OBG_trigger is lower).

### (4-2-3) Volume Condition related to Volume of Target Object Group OBG

A volume condition, which is related to the volume of the target object group OBG_trigger, may be used as the trigger condition (the quantity condition). A state in which the volume condition is not satisfied (namely, a state in which the trigger condition is not satisfied) may include a state in which the volume of the target object group OBG_trigger is larger than a predetermined volume threshold value. On the other hand, a state in which the volume condition is satisfied (namely, the trigger condition is satisfied) may include a state in which the volume of the target object group OBG_trigger is smaller than a predetermined volume threshold value. In this case, an effect, which is the same as a technical effect achievable by using the above-described height condition, is achievable. This is because it is expected that the volume of the target object group OBG_trigger and the height H of the target object group OBG_trigger have a relationship that the height H of the target object group OBG_trigger is higher as the volume of the target object group OBG_trigger is larger (namely, the height H of the target object group OBG_trigger is lower as the volume of the target object group OBG_trigger is smaller).

In a case where the volume condition is used, the control apparatus 3 may calculate the volume of the target object group OBG_trigger, and determine whether or not the volume condition is satisfied based on the calculated volume.

As a first example, the control apparatus 3 may calculate the volume of the target object group OBG_trigger by using at least one of the image data IMG_2D and IMG_3D generated by the imaging system 2. For example, the control apparatus 3 may calculate the volume of the target object group OBG_trigger by analyzing the image indicated by the image data generated by the imaging system 2. Alternatively, the control apparatus 3 may calculate the volume of the target object group OBG_trigger by using the three-dimensional position data WSD generated from the image data IMG_3D, in addition to or instead of analyzing the image indicated by at least one of the image data IMG_2D and IMG_3D. In this case, the imaging system 2 may be considered to serve as a measurement apparatus that is configured to indirectly measure the volume (the quantity) of target object group OBG_trigger.

As a second example, the control apparatus 3 may calculate the volume of the target object group OBG_trigger based on the measured result by the weight sensor 92 used by the second height calculation method in the first modified example (namely, the measured result of the volume of the target object group OBG_trigger). Specifically, it is expected that the weight of the target object group OBG_trigger is heavier as the volume of the target object group OBG_trigger is larger. In other words, it is expected that the weight of the target object group OBG_trigger is lighter as the volume of the target object group OBG_trigger is smaller. Namely, it is expected that the volume of the target object group OBG_trigger and the weight of the target object group OBG_trigger have a relationship that the volume of the target object group OBG_trigger is larger as the weight of the target object group OBG_trigger is heavier. In other words, it is expected that the volume of the target object group OBG_trigger and the weight of the target object group OBG_trigger have a relationship that the volume of the target object group OBG_trigger is smaller as the weight of the target object group OBG_trigger is lighter. The control apparatus 3 may calculate (in this case, estimate) the volume of the target object group OBG_trigger based on the measured result by the weight sensor 92 (namely, the measured result of the weight of the target object group OBG_trigger) by using this relationship. For example, the control apparatus 3 may calculate (in this case, estimate) the volume of the target object group OBG_trigger by using a table, which indicates the relationship between the volume of the target object group OBG_trigger and the weight of the target object group OBG_trigger, and the measured result by the weight sensor 92. In this case, the weight sensor 92 may be considered to serve as a measurement apparatus that is configured to directly measure the volume (the quantity) of the target object group OBG_trigger.

As a third example, the control apparatus 3 may calculate the volume of the target object group OBG_trigger based on the information that is related to the number of target objects OBJ held (picked up) by the end effector 4 and that is used by the fifth height calculation method in the first modified example. Specifically, it is expected that the volume of the target object group OBG_trigger remaining in the container CB is larger as the number of target objects OBJ that has been picked up by the end effector 4 (namely, the number of target objects OBJ that has been taken out from the container CB) is smaller. In other words, it is expected that the volume of the target object group OBG_trigger remaining in the container CB is smaller as the number of target objects OBJ that has been picked up by the end effector 4 (namely, the number of target objects OBJ that has been taken out from the container CB) is larger. Namely, it is expected that the number of target objects OBJ that has been picked up by the end effector 4 and the volume of the target object group OBG_trigger has a relationship that the volume of the target object group OBG_trigger is larger as the number of target objects OBJ that has been picked up by the end effector 4 is smaller. In other words, it is expected that the number of target objects OBJ that has been picked up by the end effector 4 and the volume of the target object group OBG_trigger has a relationship that the volume of the target object group OBG_trigger is smaller as the number of target objects OBJ that has been picked up by the end effector 4 is larger. The control apparatus 3 may calculate (in this case, estimate) the volume of the target object group OBG_trigger based on the information related to the number of target objects OBJ that has been picked up by the end effector 4 by using this relationship. For example, the control apparatus 3 may calculate (in this case, estimate) the volume of the target object group OBG_trigger by using a table, which indicates the relationship between the number of target object OBJ that has been picked up by the end effector 4 and the volume of the target object group OBG_trigger, and the information related to the number of target object OBJ that has been picked up by the end effector 4.

Note that the control apparatus 3 may calculate the volume of the target object group OBG_trigger based on the detected result by the object detection sensor 93 that is used by the third height calculation method in the first modified example. The control apparatus 3 may calculate the volume of the target object group OBG_trigger based on the imaged result of the marker 94 that is used by the fourth height calculation method in the first modified example. This is because it is expected that the volume of the target object group OBG_trigger and the height H of the target object group OBG_trigger have a relationship that the volume of the target object group OBG_trigger is larger as the height H of the target object group OBG_trigger is higher (namely, the volume of the target object group OBG_trigger is smaller as the height H of the target object group OBG_trigger is lower).

### (4-3) Third Modified Example

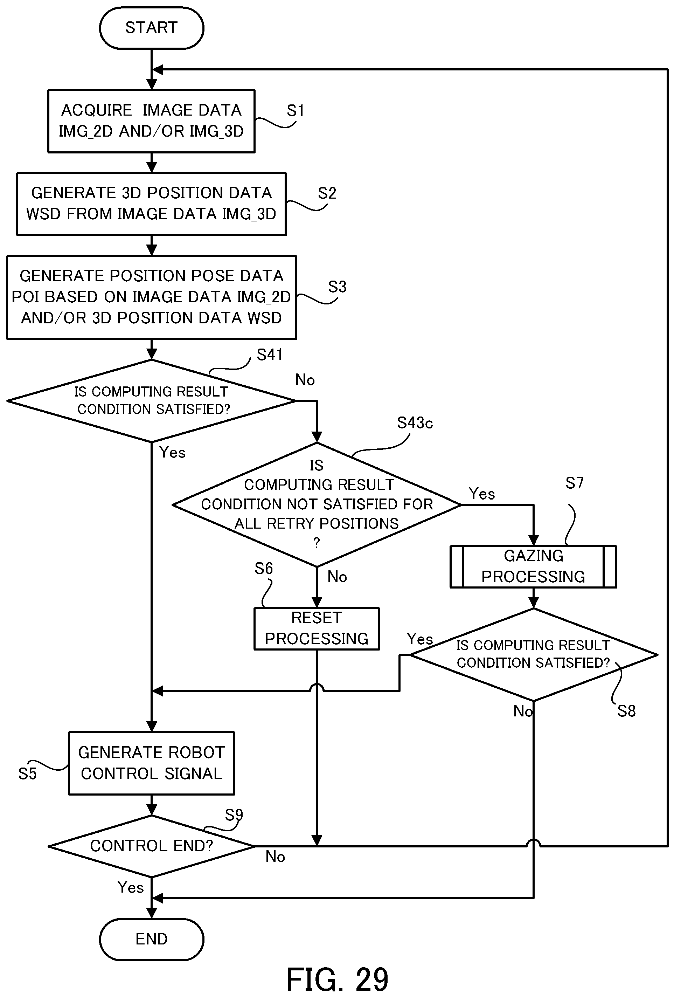

A part of the robot control processing in a third modified example is different from the robot control processing illustrated in the above FIG. 4. Therefore, in the below-described description, the robot control processing in the third modified example will be described with reference to FIG. 29. FIG. 29 is a flowchart that illustrates a flow of the robot control processing in the third modified example.

As illustrated in FIG. 29, the third modified example is different from the robot control processing illustrated in FIG. 4 in that the control apparatus 3 determines whether or not it has been determined that the computing result condition is not satisfied for all reset positions RTP and reset poses RTA (the step S43c), instead of determining whether or not the trigger condition is satisfied, after it is determined that the computing result condition is not satisfied at the step S41 (the step S41: No). Other feature of the robot control processing in the third modified example may be the same as other feature of the robot control processing illustrated in FIG. 4.

It may be determined at the step S43c that it has been determined that the computing result condition is not satisfied for all reset positions RTP and reset poses RTA, in a case where all of (i) a first condition that the imaging system 2 has been positioned at all set reset positions by the reset processing, (ii) a second condition that the imaging system 2 has taken all set reset poses by the reset processing, (iii) a third condition that the result of the position pose calculation performed by using at least one of the image data IMG_2D and IMG_3D generated by the imaging system 2 positioned at each reset position RTP has not been good, and (iv) a fourth condition that the result of the position pose calculation performed by using at least one of the image data IMG_2D and IMG_3D generated by the imaging system 2 taking each reset poses RTA has not been good are satisfied. On the other hand, the control apparatus 3 may determine that it has not been determined that the computing result condition is not satisfied for all reset positions RTP and reset poses RTA, in a case where at least one of the first condition to the fourth condition is not satisfied.

In a case where it is determined as a result of the determination at the step S43c that it has not been determined that the computing result condition is not satisfied for all reset positions RTP and reset poses RTA (the step S43c: No), the control apparatus 3 performs the reset processing (the step S6). On the other hand, in a case where it is determined as a result of the determination at the step S43c that it has been determined that the computing result condition has not been satisfied for all reset positions RTP and reset poses RTA (the step S43c: Yes), the control apparatus 3 performs the gazing processing (the step S7).

Thus, in the third modified example, the control apparatus 3 preferentially performs the reset processing until the imaging system 2 cannot move by the reset processing so that it is determined that the computing result condition is satisfied. Namely, in the third modified example, the control apparatus 3 performs the gazing processing only after the imaging system 2 cannot move by the reset processing so that it is determined that the computing result condition is satisfied. Even in this case, an effect, which is the same as an effect achievable in a case where the robot control processing illustrated in FIG. 4, is achievable. Moreover, in the third modified example, the control apparatus 3 may not determine whether or not the trigger condition is satisfied, and thereby, the processing load on the control apparatus is reduced.

Furthermore, in the third modified example, the control apparatus 3 preferentially performs the reset processing until the imaging system 2 cannot move by the reset processing so that it is determined that the computing result condition is satisfied. Therefore, in the third modified example, the control apparatus 3 preferentially performs the reset processing until the predetermined process is completed for the target object OBJ on which the end effector 4 can perform the predetermined process without performing the gazing processing. As a result, the number of times for performing the gazing processing, which take longer time than the reset processing (namely, results in a deterioration of the throughput), can be reduced. As a result, the throughput of the robot control processing is improved (namely, a time required for the end effector 4 to complete the predetermined process on all target objects OBJ, on which the end effector 4 should perform the predetermined process, is reduced).

### (4-4) Fourth Modified Example

As described above, the position pose calculation unit 312 performs the 3D matching processing (in other words, the template matching processing) using the three-dimensional model data WMD on the three-dimensional position data WSD to generate the position pose data POI. Specifically, the position pose calculation unit 312 performs, on the three-dimensional position data WSD, the 3D matching processing using the template model TM3 indicated by the three-dimensional model data WMD as the template to generate the position pose data POI. In a fourth modified example, the position pose calculation unit 312 may perform the 3D matching processing using a part of the template model TM3 indicated by the three-dimensional model data WMD as the template, in addition to or instead of performing the 3D matching processing using a whole of the template model TM3 indicated by the three-dimensional model data WMD as the template. Namely, the position pose calculation unit 312 may perform the 3D matching processing using a partial model data that is three-dimensional model data indicating a part of the template model TM3 (the three-dimensional model). Note that the template model corresponding to the whole of template model TM3 indicated by the three-dimensional model data WMD is referred to as a whole model TM3_W in the below-described description. Namely, the template model TM3 (the three-dimensional model) itself is referred to as the whole model TM3_W in the below-described description. On the other hand, a template model corresponding to a part of the template model TM3 indicated by the three-dimensional model data WMD is referred to as a partial model TM3_P. In this case, the partial model TM3_P may be regarded a part of the whole model TM3_W. The template model corresponding to a part of the template model TM3 may be referred to as a three-dimensional partial model.

The control apparatus 3 (especially, the computing apparatus 31) may generate the partial model TM3_P. For example, the control apparatus 3 (especially, the computing apparatus 31) may extract at least a part of the whole model TM3_W from the whole model TM3_W to generate the partial model TM3_P that corresponds to the extracted partial part of the whole model TM3_W. However, an apparatus that is different from the control apparatus 3 (for example, a computing apparatus that is different from the computing apparatus 31) may generate the partial model TM3_P.

As one example, the control apparatus 3 may generate the partial model TM3_P based on an instruction from a user. For example, the control apparatus 3 may generate the partial model TM3_P based on the instruction from the user for extracting at least a part of the whole model TM3_W as the partial model TM3_P. In other words, the control apparatus 3 may generate the partial model TM3_P based on the instruction from the user for generating the partial model TM3_P.

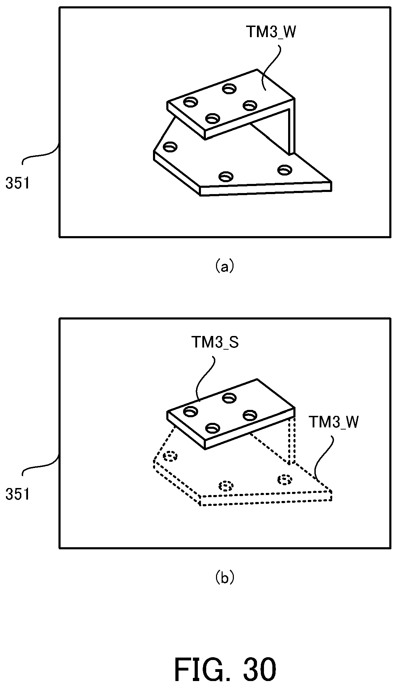

The user may input model generation information, which is related to the instruction from the user for generating the partial model TM3_P, to the control apparatus 3 by using the input apparatus 34. For example, the control apparatus 3 may display a model generation screen 351, which is operable by the user to generate the partial model TM3_P, on the output apparatus 35 that serves as the display apparatus. One example of the model generation screen 351 is illustrated in FIG. 30(a) to FIG. 30(b). As illustrated in FIG. 30(a) to FIG. 30(b), the model generation screen 351 may display the whole model TM3_W. The user may input the instruction (the model generation information) for generating the partial model TM3_P by using the whole model TM3_W displayed on the model generation screen 351 to the control apparatus 3 on the model generation screen 351.

As illustrated in FIG. 30(b), for example, the user may input, to the control apparatus 3, the instruction for selecting at least a part of the whole model TM3_W displayed on the model generation screen 351 as a selection model TM3_S. Note that the selection model TM3_S, which is selected by the user, of the whole model TM3_W is illustrated with a solid line and a model part, which is not selected by the user, of the whole model TM3_W is illustrated with a dashed line in FIG. 30(b). Furthermore, the user may input, to the control apparatus 3, the instruction for designating the selection model TM3_S as a model part that should be included in the partial model TM3_P. In this case, the control apparatus 3 may extract, from the whole model TM3_W, the model part of the whole model TM3_W selected by the user to generate the partial model TM3_P that includes at least a part of the extracted partial part of the whole model TM3_W. Alternatively, the user may input, to the control apparatus 3, the instruction for designating the selection model TM3_S as a model part that should not be included in the partial model TM3_P. In this case, the control apparatus 3 may extract, from the whole model TM3_W, the model part of the whole model TM3_W not selected by the user to generate the partial model TM3_P that includes at least a part of the extracted partial part of the whole model TM3_W.

As another example, the control apparatus 3 may generate the partial model TM3_P without using the instructions from the user. For example, the control apparatus 3 may generate the partial model TM3_P based on simulation image data. The simulation image data may be generated by an simulation of an operation of the imaging system 2 imaging the target object OBJ. For example, image data that is expected to be generated by the imaging system 2 assuming that the imaging system 2 images the target object OBJ may be generated as the simulation image data. The simulation image data that is used to generate the partial model TM3_P used by the 3D matching processing may be image data in a format that is the same as a format of the image data IMG_3D (for example, the stereo image data), for example. Then, the control apparatus 3 may select and generate, from the whole model TM3_W, the partial model TM3_P satisfying a condition that "the target object OBJ is accurately detected by the matching processing using the partial model TM3_P (as a result, at least one of the position and the pose of the target object OBJ is accurately calculated)" based on the simulation image data (for example, by using simulation point cloud data calculated from the simulation image data).

After the partial model TM3_P is generated, the control apparatus 3 may perform the 3D matching processing using the three-dimensional position data WSD and the partial model TM3_P, in addition to or instead of performing the 3D matching processing using the three-dimensional position data WSD and the whole model TM3_W.

Especially in the fourth modified example, the control apparatus 3 may perform the 3D matching processing using the whole model TM3_W or may perform the 3D matching processing using the partial model TM3_P to generate the position pose data POI at the step S3 in FIG. 4. Namely, the control apparatus 3 may perform the 3D matching processing using the whole model TM3_W or may perform the 3D matching processing using the partial model TM3_P to generate the position pose data POI after moving the imaging system 2 by the reset processing.

On the other hand, the control apparatus 3 may perform the 3D matching processing using the partial model TM3_P instead of the 3D matching processing using the whole model TM3_W to generate the position pose data POI at the step S7 in FIG. 4 (especially, the step S76 in FIG. 13). Namely, the control apparatus 3 may perform the 3D matching processing using the partial model TM3_P instead of the 3D matching processing using the whole model TM3_W to generate the position pose data POI after moving the imaging system 2 by the gazing processing.

Next, a technical reason for performing the 3D matching processing using the partial model TM3_P instead of the 3D matching processing using the whole model TM3_W to generate the position pose data POI after moving the imaging system 2 by the gazing processing will be described.

In a case where the imaging system 2 moves relative to one target object OBJ (the gazing target object OBJ_g) at the step S73 in FIG. 13, the positional relationship between the imaging system 2 and the target object OBJ (the gazing target object OBJ_g) changes, compared to that before the imaging system 2 moves. As a result, the appearance of the target object OBJ in the image indicated by the image data IMG_3D changes. For example, there is a possibility that an irradiation aspect of light (for example, at least one of the projection light described above and ambient light) onto the target object OBJ changes due to the movement of the imaging system 2, and as a result, a brightness of the target object OBJ (in other words, a contrast of the target object OBJ) captured in the image indicated by the image data IMG_3D changes. Note that the contrast of the target object OBJ may include the contrast of the projected light in a case where the projection apparatus 23 projects the projection light onto the target object OBJ,. As a result, there is a possibility that an amount of the point cloud included in the point cloud data, which is generated as the three-dimensional position data WSD based on the image data IMG_3D, changes. Specifically, there is a possibility that a density of the points included in the point cloud data changes. As one example, there is a possibility that the density of the points of an object part, which appears relatively dark in the image indicated by the image data IMG_3D, of the target object OBJ is lower than the density of the points of an object part, which appears relatively bright in the image indicated by the image data IMG_3D, of the target object OBJ. Note that there is a possibility that the brightness (the contrast) of the target object OBJ captured in the image indicated by the image data IMG_3D changes not only due to a change of the irradiation aspect of the light but also due to a change of a distance between the imaging system 2 and the target object OBJ as the imaging system 2 moves.

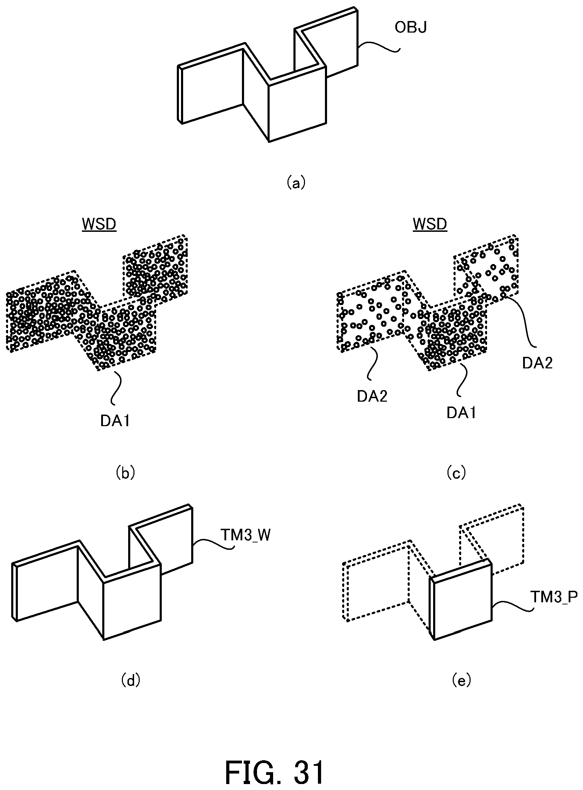

For example, FIG. 31(a) illustrates one example of the target object OBJ, and FIG. 31(b) illustrates one example of the point cloud included in the point cloud data (the three-dimensional position data WSD) generated from the image data IMG_3D, which indicates the image in which the target object OBJ is captured with a first brightness (a first contrast). FIG. 31(c) illustrates one example of the point cloud included in the point cloud data (the three-dimensional position data WSD) generated from the image data IMG_3D, which indicates the image in which the target object OBJ is captured with a second brightness (a second contrast) that is different from the first brightness (the first contrast). In the point cloud illustrated in FIG. 31(c), a proportion of a dense area DA1, in which the density of the points (namely, the number of points per unit volume) is equal to or higher than a predetermined density threshold value, to the whole point cloud is smaller, compared to the point cloud illustrated in FIG. 31(b). In the point cloud illustrated in FIG. 31(c), a proportion of a sparse area DA2, in which the density of the points is lower than the predetermined density threshold value, to the whole point cloud is larger, compared to the point cloud illustrated in FIG. 31(b).

Here, in a case where the point cloud data (the three-dimensional position data WSD) indicating the point cloud illustrated in FIG. 31(b) is generated, the target object OBJ illustrated in FIG. 31(a) can be properly detected by the 3D matching processing using the whole model TM3_W illustrated in FIG. 31(d). This is because the point cloud illustrated in FIG. 31(b) properly indicates the three-dimensional shape of the target object OBJ. On the other hand, in a case where the point cloud data (the three-dimensional position data WSD) indicating the point cloud illustrated in FIG. 31(c) is generated, there is a possibility that the target object OBJ illustrated in FIG. 31(a) cannot be properly detected by the 3D matching processing using the whole model TM3_W illustrated in FIG. 31(d). This is because the point cloud illustrated in FIG. 31(c) properly indicates the three-dimensional shape of a part of the target object OBJ corresponding to the dense area DA1 but may not necessarily properly indicates the three-dimensional shape of a part of the target object OBJ corresponding to the sparse area DA2. Therefore, there is a possibility that the point cloud included in the sparse area DA2 is not used as the point cloud on which the matching using the whole model TM3_W should be performed in the matching between the point cloud and the whole model TM3_W. As a result, the target object OBJ cannot be detected properly, and therefore, there is a possibility that it is determined that the result of the position pose computing is defect.

Therefore, in the fourth modified example, the position pose calculation unit 312 may perform the 3D matching processing using the partial model TM3_P, as illustrated in FIG. 31(e), considering the possibility of the sparse area DA2 being included in the point cloud due to the movement of the imaging system 2 by the gazing processing. In this case, the partial model TM3_P, which includes a model part of the whole model TM3_W corresponding to the dense area DA1, may be used as illustrated in FIG. 31(e). Alternatively, the partial model TM3_P, which does not include a model part of the whole model TM3_W corresponding to the sparse area DA2, may be used as illustrated in FIG. 31(e).

However, the control apparatus 3 may perform the 3D matching processing using the whole model TM3_W to generate the position pose data POI at the step S7 in FIG. 4 (especially, the step S76 in FIG. 13) (for example, to generate the position pose data POI after performing the reset processing). Namely, the control apparatus 3 may perform the 3D matching processing using the whole model TM3_W to generate the position pose data POI after moving the imaging system 2 by the gazing processing (for example, after performing the reset processing).

Incidentally, even in a case where the 2D matching processing that uses the template image as the template is performed, the position pose calculation unit 312 may perform the 2D matching processing that uses a partial model corresponding to a part of the template image as the template, in addition to or instead of the position pose calculation unit 312 performing the 2D matching processing that uses a whole model corresponding to a whole of the template image as the template, as with a case where the 3D matching processing is performed. Incidentally, in a case where the partial model used for the 2D matching processing is generated based on the simulation image data described above, the simulation image data may be image data in a format that is the same as a format of the image data IMG_2D (for example, the monocular image data). Note that a method for generating the partial model used for the 2D matching processing may be the same as a method for generating the partial model TM3_P used for the 3D matching processing described above, and therefore, a detailed description thereof is omitted. Furthermore, the 2D matching processing using the partial model may be the same as the 3D matching processing using the partial model TM3_P described above, and therefore, a detailed description thereof is omitted. Note that the partial model corresponding to a part of the template image may be referred to as a two-dimensional partial model.

Note that a plurality of different partial models TM3_P may be associated with the plurality of different relative position pose information, respectively, in a case where the plurality of different relative position pose information are used in the gazing processing as described above. In this case, the control apparatus 3 may move the imaging system 2 based on the movement aspect that is set based on one relative position pose information (the step S72 to the step S73 in FIG. 13), and then generate the position pose data POI by using one partial model TM3_P associated with the one relative position pose information (the step S74 to the step S76 in FIG. 13).

### (4-5) Fifth Modified Example

In a fifth modified example, before moving the imaging system 2 by the gazing processing at the step S73 in FIG. 13, the control apparatus 3 may determine in advance whether or not the imaging system 2, which is assumed to be moved by the gazing processing, can properly image the target object OBJ (for example, the gazing target object OBJ_g) assuming that the imaging system 2 has been moved by the gazing processing.

For example, the control apparatus 3 may position a robot model RM, which is a three-dimensional model of the robot 1, in a simulation space, which is a virtual three-dimensional space. Furthermore, the control apparatus 3 may position at least one object model OM, which is a three-dimensional model of at least one target object OBJ including the gazing target object OBJ_g, in the simulation space. Furthermore, the control apparatus 3 may position a surrounding model SM, which is a three-dimensional model of a surrounding object positioned around the robot 1, in the simulation space. The container CB in which the target object OBJ is contained is one example of the surrounding object. Especially, the control apparatus 3 may position the robot model RM, the object model OM, and the surrounding model SM in the simulation space so that a relative position between the robot model RM, the object model OM, and the surrounding model SM in the simulation space is the same as a relative position between the robot 1, the target object OBJ, and the surrounding object in a real space. Then, the control apparatus 3 may move the robot model RM in the simulation space based on the movement aspect that is set at the step S72 in FIG. 13. After moving the robot model RM, the control apparatus 3 may determine whether or not the imaging system 2 can properly image the target object OBJ (for example, the gazing target object OBJ_g) in the real space, based on the positional relationship in the simulation space between the robot model RM (namely, the moved robot model RM), the object model OM, and the surrounding model SM.

For example, the control apparatus 3 may determine based on the positional relationship between the robot model RM, the object model OM, and the surrounding model SM in the simulation space whether or not any object, which is different from the target object OBJ that should be imaged by the imaging apparatus 2, exists on the optical axis of the imaging system 2 (namely, at least one of the optical axis AX21 of the imaging apparatus 21 and the optical axis AX22 of the imaging apparatus 22) in the real space. More specifically, the control apparatus 3 may determine whether or not any other object positioned on the optical axis of the imaging system 2 exists between the imaging system 2 and the target object OBJ (for example, the gazing target object OBJ_g or other target object OBJ that is different from the gazing target object OBJ_g) that should be imaged by the imaging apparatus 2. The surrounding object is one example of other object that is different from the target object OBJ that should be imaged by the imaging apparatus 2. Other target object OBJ that is different from the target object that should be imaged by the imaging system 2 is one example of other object that is different from the target object OBJ that should be imaged by the imaging apparatus 2.

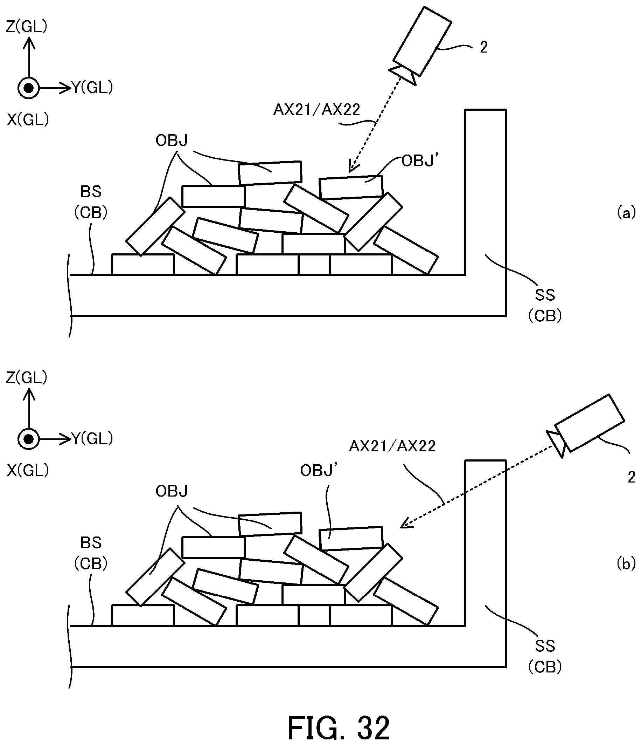

Here, FIG. 32(a) illustrates an example in which other object that is different from the target object OBJ (the target object OBJ' in FIG. 32(a)) that should be imaged by the imaging system 2 does not exist on the optical axis of the imaging system 2. On the other hand, FIG. 32(b) illustrates an example in which other object (the container CB, especially, the side wall SS, in the example illustrated in FIG. 32(b)) that is different from the target object OBJ (the target object OBJ' in FIG. 32(a)) that should be imaged by the imaging system 2 exists on the optical axis of the imaging system 2. In the example illustrated in FIG. 32(a), the imaging system 2 can properly image the target object OBJ'. On the other hand, in the example illustrated in FIG. 32(b), other object, which is different from the target object OBJ' that should be imaged by the imaging system 2, prevent the imaging system 2 from imaging the target object OBJ'. Therefore, in the example illustrated in FIG. 32(b), the imaging system 2 cannot properly image the target object OBJ'. Therefore, in a case where other object that is different from the target object OBJ that should be imaged by the imaging system 2 does not exist on the optical axis of the imaging system 2, the control apparatus 3 may determine that the imaging system 2 can properly image the target object OBJ. On the other hand, in a case where other object that is different from the target object OBJ that should be imaged by the imaging system 2 exists on the optical axis of the imaging system 2, the control apparatus 3 may determine that the imaging system 2 cannot properly image the target object OBJ.

In a case where it is determined that the imaging system 2 can properly image the target object OBJ, the control apparatus 3 may actually move the imaging system 2 by the gazing processing at the step S73 in FIG. 13.

On the other hand, in a case where it is determined that the imaging system 2 cannot properly image the target object OBJ, the control apparatus 3 may not actually move the imaging system 2 by the gazing processing at the step S73 in FIG. 13. As a result, the imaging system 2 may not be moved unnecessarily, and thereby, the throughput of the robot control processing is improved. In this case, the control apparatus 3 may set (set again) the movement aspect of the imaging system 2 (the step S72 in FIG. 13).

Note that the control apparatus 3 may determine based on at least one of the image data IMG_2D and IMG_3D whether or not the imaging system 2 can properly image the target object OBJ, in a case where other object that is different from the target object OBJ that should be imaged by the imaging system 2 is captured in the image indicated by at least one of the image data IMG_2D and IMG_3D generated by the imaging system 2. For example, the control apparatus 3 may determine based on at least one of the image data IMG_2D and IMG_3D whether or not other object that is different from the target object OBJ that should be imaged by the imaging system 2 exists on the optical axis of the imaging system 2.

### (4-6) Other Modified Example

### (4-6-1) Modified Example of Robot Control Processing

In the above-described description, the control apparatus 3 generates the position pose data POI of the target object OBJ at the step S3 and then determines whether or not the computing result condition is satisfied at the step S41 in the robot control processing illustrated in FIG. 4. However, the control apparatus 3 may not generate the position pose data POI before determining whether or not the computing result condition is satisfied. Namely, the control apparatus 3 may determine whether or not the computing result condition is satisfied before generating the position pose data POI. For example, the control apparatus 3 may perform a part of the position pose computing including the matching processing to determine whether or not the computing result condition is satisfied before generating the position pose data POI, and perform other part of the position pose computing including the matching processing to generate the position pose data POI after determining that the computing result condition is satisfied. As one example, the control apparatus 3 may perform a part of the position pose computing including the matching processing to calculate the matching similarity before generating the position pose data POI, and determine based on the matching similarity whether or not the computing result condition is satisfied. Then, the control apparatus 3 may generate the position pose data POI of the target object OBJ, whose matching similarity is higher than the matching determination threshold value, after determining that the computing result condition is satisfied. Note that the control apparatus 3 may generate not only the position pose data POI of the target object OBJ, whose matching similarity is higher than the matching determination threshold value, but also the position pose data POI of the target object OBJ, whose matching similarity is lower than the matching determination threshold value, after determining that the computing result condition is satisfied. Namely, the control apparatus 3 may generate the position pose data POI of the target object OBJ detected by the position pose computing, no matter howe large or small the matching similarity is.

In the above-described description, the control apparatus 3 performs the reset processing in the robot control processing illustrated in FIG. 4. However, the control apparatus 3 may not perform the reset processing in some cases. The control apparatus 3 may perform the gazing processing without performing the reset processing in some cases. For example, the control apparatus 3 may generate the robot control signals so that the end effector 4 perform the predetermined process on the target object OBJ without performing the reset processing as long as the computing result condition is satisfied at the step S41 in FIG. 4. Namely, the end effector 4 may sequentially perform the predetermined process on the plurality of target objects OBJ without performing the reset processing. For example, the end effector 4 may sequentially pick up the plurality of target objects OBJ without performing a reset processing. Here, the height H of the target object group OBG_trigger contained in the container CB decreases as the end effector 4 sequentially picks up the plurality of target objects OBJ as described above. As a result, there is a possibility that the height H of the target object group OBG_trigger contained in the container CB is already lower than the predetermined height threshold value TH_H at a timing at which it is determined at the step S41 in FIG. 4 that the computing result condition is satisfied. In this case, since it is determined at the step S42 in FIG. 4 that the trigger condition is satisfied, the control apparatus 3 may perform the gazing processing without performing the reset processing. Thus, the control apparatus 3 may not perform the reset processing in some cases. Alternatively, the robot control processing illustrated in FIG. 4 may not include the reset processing at the step S42. In a case where the reset processing is not performed in this manner, the control apparatus 3 may not move the imaging system 2 by the reset processing, and thereby, the throughput of the robot control processing is improved. Even in this case, since the gazing processing is performed after it is determined that the trigger condition is satisfied (namely, the height H of the target object group OBG_trigger contained in the container CB is lower than the predetermined height threshold value TH_H), it is more likely to be determined that the computing result condition is satisfied after the imaging system 2 moves by the gazing processing. For example, the control apparatus 3 can properly generate the position pose data POI of the target object OBJ, whose position pose data POI could not be generated properly by the position pose calculation before the gazing processing, after the imaging system 2 moves by the gazing processing.

Alternatively, in a case where it is determined that the trigger condition is not satisfied (the step S42: No in FIG. 4), the control apparatus 3 may move the container CB in which the target object OBJ is contained, in addition to or instead of performing the reset processing for moving the imaging system 2. Namely, the control apparatus 3 may move the container CB, in which the target object OBJ is contained, relative to the imaging system 2. Even in this case, the imaging system 2 moves relative to the target object OBJ, as in a case where the reset processing is performed. As a result, an effect, which is the same as an effect achievable in a case where the reset processing is performed, is achievable.

Alternatively, in a case where it is determined that the trigger condition is not satisfied (the step S42: No in FIG. 4), the control apparatus 3 may end the robot control processing, in instead of performing the reset processing. Specifically, as described above, the height H of the target object group OBG_trigger contained in the container CB is higher than the predetermined height threshold value TH_H in a case where the trigger condition is not satisfied. Therefore, it is expected that a relatively large number of target objects OBJ are contained in the container CB. In this case, in a case where it is determined that the trigger condition is not satisfied, it is determined that the computing result condition is not satisfied despite a relatively large number of target objects OBJ being contained in the container CB. Thus, in a case where the computing result condition is not satisfied despite a relatively large number of target objects OBJ being contained in the container CB, there is a possibility that it is determined that the computing result condition is still not satisfied even in a case where the imaging system 2 moves by the reset processing. Namely, there is a possibility that the robot 1 cannot pick up all of the plurality of target objects OBJ contained in the container CB easily even in a case where the retry processing is performed. For this reason, the control apparatus 3 may end the robot control processing in a case where it is determined that the trigger condition is not satisfied. In this case, the control apparatus 3 may notify the user of the robot system SYS that the robot control processing does not end normally. Then, the user may adjust at least one of the positions and the poses of the plurality of target objects OBJ contained in the container CB to increase the likelihood that the computing result condition is satisfied.

In the above-described description, the control apparatus 3 continues to control the robot 1 to perform the predetermined process on the target object OBJ until it is determined that the computing result condition is not satisfied (namely, the result of the position pose calculation is not good) after performing the reset processing in the robot control processing illustrated in FIG. 4 or FIG. 29. However, the control apparatus 3 may perform the reset processing again in a case where the predetermined process has been performed on a predetermined number of target objects OBJ, even in a case where it is not yet determined that the computing result condition is not satisfied (namely, the result of the position pose computing is not good) after performing the reset processing. Note that the control apparatus 3 may perform the predetermined process on a predetermined number of target objects OBJ without determining whether or not the computing result condition is satisfied after performing the reset processing, and then perform the reset processing again in this case. For example, in a case where the holding process is performed as one example of the predetermined process, the control apparatus 3 may perform the reset processing again in a case where a predetermined number of target objects OBJ have been picked up, even in a case where the target object OBJ that can be picked up by the end effector 4 still remains after performing the reset processing. In this case, the robot 1 can pick up approximately the same number of target objects OBJ at each of a plurality of positions (for example, the segmentalized spaces SGS illustrated in FIG. 12), which correspond to the plurality of reset positions RTP, respectively, on the placing apparatus T. As a result, the target objects OBJ placed on the placing apparatus T decrease evenly (in other words, without bias). Then, the control apparatus 3 may perform the gazing processing without determining whether or not the trigger condition is satisfied at a timing it is determined that the computing result condition is not satisfied before picking up a predetermined number of target objects OBJ at a certain position on the placing apparatus T corresponding to a certain reset position RTP. This is because the target objects OBJ placed on the placing apparatus T decrease evenly, and therefore, it is likely that the quantity of target objects OBJ positioned at a certain position or near a certain position is small at a timing it is determined that the computing result condition is not satisfied before picking up a predetermined number of target objects OBJ at a certain position on the placing apparatus T corresponding to a certain reset position RTP.

In the above-described description, the control apparatus 3 (especially, the three-dimensional position data generation unit 311) generates the three-dimensional position data WSD from the image data IMG_3D. However, an apparatus that is different from the control apparatus 3 may generate the three-dimensional position data WSD from the image data IMG_3D. For example, the imaging system 2 that generates the image data IMG_3D may generate the three-dimensional position data WSD from the image data IMG_3D. In this case, the control apparatus 3 may acquire the three-dimensional position data WSD from the apparatus that is different from the control apparatus 3. The control apparatus 3 may calculate at least one of the position and the pose of the target object OBJ by using the three-dimensional position data WSD acquired from the apparatus that is different from the control apparatus 3.

### (4-6-2) Modified Example of Robot 1

In the above-described description, the end effector 4 (for example, the hand clipper or the vacuum clipper), which performs at least one of the holding process and the releasing process, is attached to the robot arm 12. However, the end effector 4 is not limited to an apparatus that performs at least one of the holding process and the releasing process, and may be an apparatus that performs another process on the target object OBJ.

As one example, a processing apparatus for processing the target object OBJ may be attached to the robot arm 12 as one example of the end effector 4. The processing apparatus may perform at least one of an additive manufacturing for adding a new build object to the target object OBJ, a subtractive manufacturing for removing a part of the target object OBJ, a welding processing for jointing two target objects OBJ, and a cutting processing for cutting the target object OBJ. The processing apparatus may process the target object OBJ by using a tool. In this case, the processing apparatus including the tool may be attached to the robot arm 12. Alternatively, the processing apparatus may process the target object OBJ by irradiating the target object OBJ with an energy beam (for example, light, electromagnetic wave, and charged particle beam). In this case, the processing apparatus including an irradiation apparatus that irradiates the target object OBJ with the energy beam may be attached to the robot arm 12.

The processing apparatus that is one example of the end effector 4 may perform soldering processing for soldering a component to the target object OBJ. The processing apparatus may solder the component to the target object OBJ by using a soldering copper. In this case, the processing apparatus including the soldering copper may be attached to the robot arm 12. Alternatively, the processing apparatus may solder the component to the target object OBJ by irradiating the solder with an energy beam (for example, light, electromagnetic wave, and charged particle beam). In this case, the processing apparatus including an irradiation apparatus that irradiates the target object OBJ with the energy beam may be attached to the robot arm 12.

As another example, a measurement apparatus for measuring the target object OBJ may be attached to the robot arm 12 as one example of the end effector 4. The measurement apparatus may be configured to measure a characteristic of the target object OBJ. At least one of a shape of the target object OBJ, a size of the target object OBJ, a distance from the measurement apparatus to the target object OBJ, a reflectance of the target object OBJ, a transmittance of the target object OBJ, and a temperature of the target object OBJ is one example of the characteristic of the target object OBJ. The measurement apparatus may be an existing contact type of measurement apparatus. For example, the measurement apparatus may measure the target object OBJ by using a touch probe. In this case, the measurement apparatus including the touch probe may be attached to the robot arm 12. Alternatively, the measurement apparatus may be an existing non-contact type of measurement apparatus. For example, the measurement apparatus may measure the target object OBJ by irradiating the target object OBJ with an energy beam (for example, light, electromagnetic wave, and charged particle beam). In this case, the measurement apparatus including an irradiation apparatus that irradiates the target object OBJ with the energy beam may be attached to the robot arm 12. Note that the measurement apparatus may be an imaging apparatus including one or more monocular cameras. As one example, the measurement apparatus may be a stereo camera including two monocular cameras.

In a case where at least one of the processing apparatus and the measurement apparatus is attached to the robot arm 12 as one example of the end effector 4, the control apparatus 3 may generate a control signal for controlling an operation of at least one of the processing apparatus and the measurement apparatus. For example, the control apparatus 3 may generate the control signal for controlling a rotation of the tool of the processing apparatus. For example, the control apparatus 3 may generate the control signal for controlling an ON / OFF of the energy beam by the irradiation apparatus of at least one of the processing apparatus and the measurement apparatus.

As another example, a discharging apparatus may be attached to the robot arm 12 as one example of the end effector 4. For example, the discharging apparatus may discharge at least one of an adhesive material, a seal material, a paint material, and a solder. The discharging apparatus may discharge at least one of the adhesive material, the seal material, the paint material, and the solder toward the target object OBJ. For example, the control apparatus 3 may generate a control signal for controlling at least one of ON / OFF of a discharge from the discharging apparatus and an discharged amount. Note that the discharging apparatus may be referred to as a processing apparatus, because it can be said that discharging at least one of the adhesive material, the seal material, the paint material, and the solder to the target object OBJ is processing the target object OBJ.

### (4-6-3) Modified Example of Imaging System 2

In the above-described description, the imaging system 2 includes the imaging apparatus 22 and the projection apparatus 23 to generate the image data IMG_3D. However, the imaging system 2 may not include the projection apparatus 23 to generate the image data IMG_3D. This is because the imaging apparatus 22 is the stereo camera as described above, and therefore, the three-dimensional position data WSD indicating the three-dimensional position of each of the plurality of points of the target object OBJ can be generated from the two image data IMG_3D generated by the two imaging elements of the stereo camera. In this case, the three-dimensional position data generation unit 311 may calculate the parallax by performing a matching for each part (for example, each pixel) between the images indicated by the two image data included in the image data IMG_3D, respectively, by using a known processing method, and generate the three-dimensional position data WSD by a known method based on a triangulation using the calculated parallax.

The imaging apparatus 22 may not be the stereo camera. For example, the imaging apparatus 22 may be a monocular camera that images the target object OBJ using a single imaging element. Even in this case, the target object OBJ, on which the projection pattern from the projection apparatus 23 is projected, is captured in the image indicated by the image data IMG_3D. In this case, the shape of the projection pattern captured in the image indicated by the image data IMG_3D reflects the three-dimensional shape of the target object OBJ on which the projection pattern is projected. Therefore, even in a case where the imaging apparatus 22 is not the stereo camera, the three-dimensional position data generation unit 311 can generate the three-dimensional position data WSD based on the projection pattern captured in the image indicated by the image data IMG_3D by using a known processing method.

The imaging system 2 may include the imaging apparatus 21 that is the monocular camera, but may not include the imaging apparatus 22 that is the stereo camera. In this case, the image data generated by the imaging apparatus 21 imaging the target object in a period during which the projection apparatus 23 does not project the desired projection pattern on the target object OBJ may be used as the image data IMG_2D. On the other hand, the image data generated by the imaging apparatus 21 imaging the target object in a period during which the projection apparatus 23 projects the desired projection pattern on the target object OBJ may be used as the image data IMG_3D. In this case, the image data IMG_3D may be monocular image data corresponding to a single image data (namely, including a single image).

The imaging system 2 may include the imaging apparatus 22 that is a stereo camera, but may not include the imaging apparatus 21. In this case, the image data generated by one of two monocular cameras of the imaging apparatus 22 imaging the target object OBJ may be used as the image data IMG_2D. On the other hand, the image data generated by both two monocular cameras of the imaging apparatus 22 imaging the target object OBJ may be used as the image data IMG_3D.

In the above-described description, both imaging apparatuses 21 and 22 are mounted on the robot 1 (especially, the robot arm 12). However, at least one of the imaging apparatuses 21 and 22 may be mounted on a part that is different from the robot 1 (especially, the robot arm 12). For example, at least one of the imaging apparatuses 21 and 22 may be positioned on a ceiling of a building in which the robot system SYS is positioned. For example, at least one of the imaging apparatuses 21 and 22 may be attached to a structure such as a column.

In the above-described description, the imaging system 2 is mounted on the robot 1 that includes the robot arm 12. However, the imaging system 2 may be mounted on a robot that does not include the robot arm 12. For example, the imaging system 2 may be mounted on the robot 1, which includes a support apparatus that is configured to support the imaging system 2 above target object OBJ. In this case, the imaging system 2 may be mounted on the support apparatus. The support apparatus may include a plurality of leg members each of which extends upwardly from the support surface S and a beam member that connects the plurality of leg members through upper ends or vicinity parts of the plurality of leg members. For example, the robot 1 may be configured to move the support apparatus. Note that the support apparatus may not be mounted on the robot 1.

### (4-6-4) Alternative of Imaging System 2

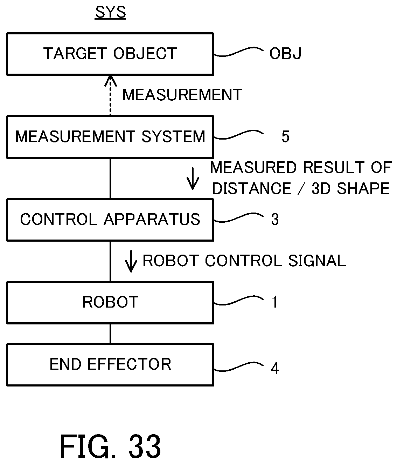

As illustrated in FIG. 33, the robot system SYS may include a measurement system 5 that is configured to measure at least one of a distance to the target object OBJ and its three-dimensional shape, in addition to or instead of the imaging system 2 that is configured to image the target object OBJ. In this case, the control apparatus 3 (especially, the three-dimensional position data generation unit 311) may generate the three-dimensional position data WSD based on a measured result of at least one of the distance to the target object OBJ and its three-dimensional shape. Then, the control apparatus 3 (especially, the position pose calculation unit 312) may perform the matching processing (namely, the 3D matching processing) using the three-dimensional position data WSD, as in a case where the three-dimensional position data WSD is generated from the image data IMG_3D generated by the imaging system 2.

The measurement system 5 may be configured to optically measure at least one of the distance to the target object OBJ and its three-dimensional shape. For example, the measurement system 5 may be configured to measure of at least one of the distance to the target object OBJ and its three-dimensional shape with a non-contact method. For example, the measurement system 5 may be configured to optically measure at least one of the distance to target object OBJ and its three-dimensional shape by irradiating the target object OBJ with measurement electromagnetic wave and detect the electromagnetic wave returning to the measurement system 5 from the target object OBJ onto which the electromagnetic wave is irradiated. The measurement electromagnetic wave may be light (in this case, the light irradiated onto the target object OBJ may be referred to as measurement light) or radio wave (in this case, the radio wave irradiated onto the target object OBJ may be measurement wave). At least one of a TOF (Time Of Flight) type of measurement apparatus, a FMCW (Frequency Modulated Continuous Wave) type of measurement apparatus, an optical comb type of interferometer using light (an optical frequency comb) including frequency components arranged with equal intervals on the frequency axis as the measurement light, a triangulation-based measurement apparatus, and a millimeter-wave radar using millimeter waves as the measurement wave is one example of the measurement system 5. Note that at least one of the TOF type of measuring instrument and the FMCW type of measuring instrument may be referred to as LiDAR (Light Detection and Ranging). In a case where the measurement system 5 is this type of measurement sensor, the control apparatus 3 (especially, the three-dimensional position data generation unit 311) may generate the three-dimensional position data WSD, which is point cloud data, based on the measured result of the target object OBJ by the measurement sensor. Then, the control apparatus 3 (especially, the position pose calculation unit 312) may perform the matching processing (namely, the 3D matching processing) using the three-dimensional position data WSD, as in a case where the three-dimensional position data WSD is generated from the image data IMG_3D generated by the imaging system 2. Note that the measurement system 5 may be referred to as a measurement apparatus or a measurement sensor.

Note that imaging system 2 images the target object OBJ by using an imaging element of each of the imaging apparatuses 21 and 22 to detect returning light from the target object OBJ. Namely, both the imaging system 2 and the measurement system 5 detect the returning light from the target object OBJ. Therefore, the imaging system 2 and the measurement system 5 may collectively be referred to as a light detection system.

### (5) Supplementary Note

Regarding the above-described example embodiment, below described Supplementary notes are further disclosed.

### [Supplementary Note A1]

A control apparatus that generates a control signal for controlling a robot on which a process apparatus that is configured perform a process on a target object and an imaging system are mounted and which moves the process apparatus and the imaging system, wherein
the control apparatus includes:
a computing apparatus that generates the control signal; and
a communication apparatus that outputs the control signal generated by the computing apparatus,
the computing apparatus:
   generates, as the control signal, a first control signal for controlling the robot so that the imaging system moves away from a first target object group, in a case where a first determination that the process apparatus cannot perform the process on at least one target object of the first target object group is made based on an imaged result of the first target object group, which includes at least a part of a plurality of target objects, by the imaging system; and
   generates, as the control signal, a second control signal for controlling the robot to change a position and a pose of the imaging system relative to one target object of a second target object group, in a case where a second determination that the process apparatus cannot perform the process on at least one target object of the second target object group is made based on an imaged result of the second target object group, which includes at least a part of the plurality of target objects, by the imaging system after the imaging system moves by a control of the robot based on the first control signal.

### [Supplementary Note A2]

The control apparatus according to the Supplementary Note A1, wherein
the first determination includes a determination that the number of the target objects on which the process apparatus cannot perform the process in the first target object group is equal to or larger than a predetermined threshold value.

### [Supplementary Note A3]

The control apparatus according to the Supplementary Note A1 or A2, wherein
the first determination includes a determination that there is no target object on which the process apparatus can perform the process in the first target object group.

### [Supplementary Note A4]

The control apparatus according to any one of the Supplementary Notes A1 to A3, wherein
the second determination includes a determination that the number of the target objects on which the process apparatus cannot perform the process in the second target object group is equal to or larger than a predetermined threshold value.

### [Supplementary Note A5]

The control apparatus according to any one of the Supplementary Notes A1 to A4, wherein
the second determination includes a determination that there is no target object on which the process apparatus can perform the process in the second target object group.

### [Supplementary Note A6]

The control apparatus according to any one of the Supplementary Notes A1 to A5, wherein
the first control signal is a signal for controlling the robot so that at least half or more of target objects of a third target object group, which includes at least a part of the plurality of target objects and which is included in an imaging field of view of the imaging system after the imaging system moves by the control of the robot based on the first control signal, are target objects that are different from target objects of the first target object group, which is included in the imaging field of view before the imaging system moves by the control of the robot based on the first control signal.

### [Supplementary Note A7]

The control apparatus according to any one of the Supplementary Notes A1 to A6, wherein
the first control signal is a signal for controlling the robot so that all of target objects of a third target object group, which includes at least a part of the plurality of target objects and which is included in an imaging field of view of the imaging system after the imaging system moves by the control of the robot based on the first control signal, are target objects that are different from target objects of the first target object group, which is included in the imaging field of view before the imaging system moves by the control of the robot based on the first control signal.

### [Supplementary Note A8]

The control apparatus according to the Supplementary Note A6 or A7, wherein
the third target object group is the second target object group.

### [Supplementary Note A9]

The control apparatus according to any one of the Supplementary Notes A1 to A8, wherein
in a case where the first determination is made, the computing apparatus generates the first control signal for controlling the robot so that at least one of the position and the pose of the imaging system change to at least one of a first position and a first pose, respectively, without using the imaged result by the imaging system.

### [Supplementary Note A10]

The control apparatus according to any one of the Supplementary Notes A1 to A9, wherein
the first control signal is a control signal for controlling the robot to perform a change to at least one of a first position and a first pose, respectively, which are set in advance before the first determination is made.

### [Supplementary Note A11]

The control apparatus according to the Supplementary Note A9 or A10, wherein
the computing apparatus sets at least one of the first position and the first pose based on position pose information input in advance by a user.

### [Supplementary Note A12]

The control apparatus according to any one of the Supplementary Notes A9 to A11, wherein
the computing apparatus sets at least one of the first position and the first pose based on an imaging field of view of the imaging system.

### [Supplementary Note A13]

The control apparatus according to the Supplementary Note A12, wherein
the plurality of target objects are in a container, and
the computing apparatus sets at least one of the first position and the first pose based on the imaging field of view and a size of the container.

### [Supplementary Note A14]

The control apparatus according to any one of the Supplementary Notes A1 to A13, wherein
the second control signal is a signal for controlling the robot so that an optical axis direction, which extends from the imaging system along an optical axis of the imaging system, changes relative to the one target object of the second target object group.

### [Supplementary Note A15]

The control apparatus according to any one of the Supplementary Notes A1 to A14, wherein
the second control signal is a signal for controlling the robot so that a proportion of the one target object included in an imaging field of view of the imaging system after the imaging system moves by a control of the robot based on the second control signal is larger than a proportion of the one target object included in the imaging field of view before the imaging system moves by the control of the robot based on the second control signal.

### [Supplementary Note A16]

The control apparatus according to any one of the Supplementary Notes A1 to A15, wherein
the second control signal is a signal for controlling the robot so that the imaging system moves to at least one of a position and a pose at which the one target object can be imaged from a first direction, and
the computing apparatus generates a third control signal for controlling the robot so that the imaging system moves to at least one of a position and a pose at which the one target object can be imaged from a second direction different from the first direction, after the imaging system moves to at least one of the position and the pose at which the one target object can be imaged from the first direction by a control of the robot based on the second control signal.

### [Supplementary Note A17]

The control apparatus according to the Supplementary Note A16, wherein
the computing apparatus generates, as the third control signal, the control signal for controlling the robot to change at least one of a position and a pose of the imaging system relative to one target object of a sixth target object group, in a case where a fifth determination that the processing apparatus cannot perform the process on at least one target object of the sixth target object group is made based on an imaged result of the sixth target object group, which includes at least a part of the plurality of target objects, by the imaging system after the imaging system moves by control of the robot based on the second control signal.

### [Supplementary Note A18]

The control apparatus according to the Supplementary Note A16 or A17, wherein
the computing apparatus generates the third control signal without using new image data that is the imaged result by the imaging system.

### [Supplementary Note A19]

The control apparatus according to any one of the Supplementary Notes A16 to A18, wherein
the computing apparatus generates the third control signal based on change information that is set in advance and that indicates at least one of a direction and a distance for changing at least one of a relative position and pose between the target object and the imaging system.

### [Supplementary Note A20]

The control apparatus according to the Supplementary Note A19, wherein
the change information is set by an input from a user in advance.

### [Supplementary Note A21]

The control apparatus according to any one of the Supplementary Notes A16 to A20, wherein
the computing apparatus generates, as the control signal, a sixth control signal for controlling the robot so that the process apparatus approaches the one target object, in a case where a sixth determination that the processing apparatus can perform the process on the one target object is made based on an imaged result of a seventh target object group, which includes at least a part of the plurality of target objects and which includes the one target object of the sixth target object group, by the imaging system after the imaging system moves by control of the robot based on the third control signal.

### [Supplementary Note A22]

The control apparatus according to the Supplementary Note A21, wherein
the sixth control signal is a signal for controlling the robot so that the process apparatus approaches the one target object of the seventh target object group to perform the process on the one target object of the seventh target object group.

### [Supplementary Note A23]

The control apparatus according to any one of the Supplementary Notes A16 to A22, wherein
the computing apparatus generates, as the control signal, a seventh control signal for controlling the robot to change at least one of a position and a pose of the imaging system relative to one target object of a seventh target object group, in a case where a seventh determination that the processing apparatus cannot perform the process on at least one target object of the seventh target object group is made based on an imaged result of the seventh target object group, which includes at least a part of the plurality of target objects and which includes the one target object of the sixth target object group, by the imaging system after the imaging system moves by control of the robot based on the third control signal.

### [Supplementary Note A24]

The control apparatus according to any one of the Supplementary Notes A1 to A23, wherein
At least one of a position and a pose of the imaging system changed by a control of the robot based on the second control signal are different from at least one of a position and a pose of the imaging system when the imaging system has imaged the second target object group to acquire the imaged result that is used for the second determination.

### [Supplementary Note A25]

The control apparatus according to any one of the Supplementary Notes A1 to A24, wherein
the second control signal is a signal for controlling the robot to change at least one of a position and a pose of the imaging system when the imaging system has imaged the second target object group to acquire the imaged result that is used for the second determination relative to the one target object.

### [Supplementary Note A26]

The control apparatus according to any one of the Supplementary Notes A1 to A25, wherein
in a case where the second determination is made, the computing apparatus generates the second control signal for controlling the robot to change at least one of the position and the pose of the imaging system relative to the one target object, based on an imaged result of a fourth target object group, which includes at least a part of the plurality of target objects and which includes the one target object of the second target object group, by the imaging system.

### [Supplementary Note A27]

The control apparatus according to the Supplementary Note A26, wherein
in a case where the second determination is made, the computing apparatus generates the second control signal for controlling the robot to change at least one of the position and the pose of the imaging system relative to the one target object, based on at least one of a position and a pose of the one target object, which are calculated based on the imaged result of the fourth target object group by the imaging system.

### [Supplementary Note A28]

The control apparatus according to the Supplementary Note A26 or A27, wherein
in a case where the second determination is made, the computing apparatus generates the second control signal for controlling the robot to change at least one of the position and the pose of the imaging system relative to the one target object, based on at least one of a position and a pose of the one target object, which are calculated based on the imaged result of the fourth target object group by the imaging system, and relative position pose information, which is set in advance and which indicates relative position and pose between the target object and the imaging system.

### [Supplementary Note A29]

The control apparatus according to the Supplementary Note A28, wherein
the relative position pose information is set by an input from a user in advance.

### [Supplementary Note A30]

The control apparatus according to any one of the Supplementary Notes A26 to A29, wherein
the fourth target object group is the second target object group.

### [Supplementary Note A31]

The control apparatus according to any one of the Supplementary Notes A1 to A30, wherein
the computing apparatus generates a fourth control signal for controlling the robot so that the process apparatus approaches one target object of the second target object group on which it is determined by a third determination that the process can be performed, in a case where the third determination that the process apparatus can perform the process on at least one target object of the second target object group is made based on the imaged result of the second target object group by the imaging system after the imaging system moves by the control of the robot based on the first control signal.

### [Supplementary Note A32]

The control apparatus according to the Supplementary Note A31, wherein
in a case where the third determination is made, the computing apparatus generates the fourth control signal based on first position pose data that is generated based on the imaged result of the second target object group and that indicates at least one of a position and a pose of the one target object of the second target object group on which it is determined by the third determination that the process can be performed.

### [Supplementary Note A33]

The control apparatus according to the Supplementary Note A32, wherein
the computing apparatus:
generates the first position pose data based on the imaged result of the second target object group and at least one of whole model data, which indicates a model of the target object, and partial model data, which indicates a part of the model, in a case where the third determination is made; and
generates the fourth control signal based on the generated first position pose data.

### [Supplementary Note A34]

The control apparatus according to any one of the Supplementary Notes A1 to A33, wherein
the computing apparatus generates a fifth control signal for controlling the robot so that the process apparatus approaches the one target object, in a case where a fourth determination that the process apparatus can perform the process on the one target object is made based on an imaged result of a fifth target object group, which includes at least a part of the plurality of target objects and which includes the one target object of the second target object group, by the imaging system after the imaging system moves by a control of the robot based on the second control signal.

### [Supplementary Note A35]

The control apparatus according to the Supplementary Note A34, wherein
in a case where the fourth determination is made, the computing apparatus generates the fifth control signal based on second position pose data that is generated based on an imaged result of the fifth target object group and that indicates at least one of a position and a pose of the one target object.

### [Supplementary Note A36]

The control apparatus according to the Supplementary Note A35, wherein
the computing apparatus:
generates the second position pose data based on the imaged result of the fifth target object group and partial model data that indicates a part of a model of the target object in a case where the fourth determination is made; and
generates the fifth control signal based on the generated second position pose data.

### [Supplementary Note A37]

The control apparatus according to any one of the Supplementary Notes A1 to A36, wherein
the imaging system includes: at least one of a monocular camera; and a stereo camera including two monocular cameras.

### [Supplementary Note A38]

The control apparatus according to any one of the Supplementary Notes A26 to A30, wherein
the imaging system includes a first imaging apparatus and a second imaging apparatus that is different from the first imaging apparatus,
the first imaging apparatus:
   images the first target object group to acquire the imaged result that is used for the first determination; and
   images the second target object group to acquire the imaged result that is used for the second determination, and
   the second imaging apparatus images the fourth target object group to acquire the imaged result that is used for generating the second control signal.

### [Supplementary Note A39]

The control apparatus according to the Supplementary Note A38, wherein
the first imaging apparatus is one of a stereo camera that includes two monocular cameras and a monocular camera that is different from the two monocular cameras, and
the second imaging apparatus is the other one of the stereo camera and the monocular camera that is different from the two monocular cameras.

### [Supplementary Note A40]

The control apparatus according to the Supplementary Note A39, wherein
the first imaging apparatus is the stereo camera, and
the second imaging apparatus is the monocular camera that is different from the two monocular cameras.

### [Supplementary Note A41]

The control apparatus according to any one of the Supplementary Notes A26 to A30, wherein
the imaging system includes a stereo camera including two monocular cameras,
the two monocular cameras of the stereo camera:
   images the first target object group to acquire the imaged result that is used for the first determination; and
   images the second target object group to acquire the imaged result that is used for the second determination, and
   one monocular camera of the two monocular cameras of the stereo camera images the fourth target object group to acquire the imaged result that is used for generating the second control signal.

### [Supplementary Note A43]

The control apparatus according to any one of the Supplementary Notes A26 to A30, wherein
the imaging system includes a monocular camera, and
the monocular camera:
   images the first target object group to acquire the imaged result that is used for the first determination;
   images the second target object group to acquire the imaged result that is used for the second determination; and
   images the fourth target object group to acquire the imaged result that is used for generating the second control signal.

### [Supplementary Note A44]

The control apparatus according to the Supplementary Note A43, wherein
the imaging system includes a projection apparatus that is configured to project projection light onto the target object, and
the monocular camera:
   images the first target object group to acquire the imaged result that is used for the first determination in at least a part of a period during which the projection apparatus performs the projection onto the target object;
   images the second target object group to acquire the imaged result that is used for the second determination in at least a part of a period during which the projection apparatus performs the projection onto the target object; and
   images the fourth target object group to acquire the imaged result that is used for generating the second control signal in at least a part of a period during which the projection apparatus does not perform the projection onto the target object.

### [Supplementary Note A45]

The control apparatus according to any one of the Supplementary Notes A1 to A44, wherein
the plurality of target objects are a plurality of target objects placed on a placing apparatus when the imaging system images the first target object group for the first determination.

### [Supplementary Note A46]

A control system including:
the control apparatus according to any one of the Supplementary Notes A1 to A45; and
the imaging system.

### [Supplementary Note A47]

A robot system including:
the control apparatus according to any one of the Supplementary Notes A1 to A45;
the imaging system; and
the robot.

### [Supplementary Note A48]

A control method that generates a control signal for controlling a robot on which a process apparatus that is configured perform a process on a target object and an imaging system are mounted and which moves the process apparatus and the imaging system, wherein
the control method includes:
generating, as the control signal, a first control signal for controlling the robot so that the imaging system moves away from a first target object group, in a case where a first determination that the process apparatus cannot perform the process on at least one target object of the first target object group is made based on an imaged result of the first target object group, which includes at least a part of a plurality of target objects, by the imaging system; and
generating, as the control signal, a second control signal for controlling the robot to change a position and a pose of the imaging system relative to one target object of a second target object group, in a case where a second determination that the process apparatus cannot perform the process on at least one target object of the second target object group is made based on an imaged result of the second target object group, which includes at least a part of the plurality of target objects, by the imaging system after the imaging system moves by a control of the robot based on the first control signal.

### [Supplementary Note A49]

A computer program that allows a computer to execute the control method according to the Supplementary Note A48.

### [Supplementary Note B1]

A control apparatus that generates a control signal for controlling a robot on which a process apparatus that is configured perform a process on a target object and an imaging system are mounted and which moves the process apparatus and the imaging system, wherein
the control apparatus comprises:
a computing apparatus that generates the control signal; and
a communication apparatus that outputs the control signal generated by the computing apparatus,
the computing apparatus generates the control signal for controlling the robot to change at least one of a position and a pose of the imaging system relative to one target object of a first target object group, in a case where it is determined based on an imaged result of the first target object group, which includes at least a part of a plurality of target objects, by the imaging system that the process apparatus cannot perform the process on at least one target object of the first target object group and in a case where a predetermined trigger condition, which is related to at least one of a quantity of the plurality of target objects and a height of the plurality of target objects, is satisfied.

### [Supplementary Note B2]

The control apparatus according to the Supplementary Note B1, wherein
the determination includes a determination that the number of the target objects on which the process apparatus cannot perform the process in the first target object group is equal to or larger than a predetermined threshold value.

### [Supplementary Note B3]

The control apparatus according to the Supplementary Note B1 or B2, wherein
the determination includes a determination that there is no target object on which the process apparatus can perform the process in the first target object group.

### [Supplementary Note B4]

The control apparatus according to any one of the Supplementary Notes B1 to B3, wherein
the quantity of the plurality of target objects is a quantity of a second target object group that includes at least a part of the plurality of target objects, and
the height of the plurality of target objects is a height of the second target object group.

### [Supplementary Note B5]

The control apparatus according to the Supplementary Note B4, wherein
at least one target object of the second target object group is the target object that is different from at least one target object of the first target object group.

### [Supplementary Note B6]

The control apparatus according to the Supplementary Note B4, wherein
the second target object group is the first target object group.

### [Supplementary Note B7]

The control apparatus according to any one of the Supplementary Notes B4 to B6, wherein
the trigger condition includes a condition that at least one of the quantity of the second target object group and the height of the second target object group is lower than a predetermined threshold value.

### [Supplementary Note B8]

The control apparatus according to any one of the Supplementary Notes B4 to B7, wherein
the quantity of the second target object group includes at least one of the number of the second target object group and a weight of the second target object group.

### [Supplementary Note B9]

The control apparatus according to the Supplementary Note B7, wherein
the threshold value is set by a user.

### [Supplementary Note B10]

The control apparatus according to the Supplementary Note B7 or B9, wherein
the threshold value is set by the computing apparatus.

### [Supplementary Note B11]

The control apparatus according to any one of the Supplementary Notes B1 to B10, wherein
the computing apparatus determines whether or not the trigger condition is satisfied based on an imaged result of the target object by the imaging system.

### [Supplementary Note B12]

The control apparatus according to any one of the Supplementary Notes B2 to B10, wherein
the computing apparatus:
calculates the height of the second target object group based on an imaged result of the second target object group by the imaging system; and
determines whether or not the trigger condition is satisfied based on the calculated height of the second target object group.

### [Supplementary Note B13]

The control apparatus according to the Supplementary Note B12, wherein
the computing apparatus calculates the height of the second target object group based on three-dimensional position data that is calculated based on the imaged result of the second target object group and that indicates a three-dimensional positions of each of a plurality of points of the second target object group.

### [Supplementary Note B14]

The control apparatus according to the Supplementary Note B12 or B13, wherein
the imaged result of the second target object group is the imaged result of the first target object group.

### [Supplementary Note B15]

The control apparatus according to any one of the Supplementary Notes B4 to B14, wherein
the computing apparatus determines whether or not the trigger condition is satisfied based on a measured result by a measurement apparatus that is configured to measure at least directly or indirectly one of the quantity of the second target object group and the height of the second target object group in the container.

### [Supplementary Note B16]

The control apparatus according to the Supplementary Note B15, wherein
the imaging system is a first imaging system, the measurement apparatus the imaging system is a first imaging system,
the measurement apparatus includes at least one of the first imaging system and a second imaging system that is different from the first imaging system, and
the computing apparatus determines whether or not the trigger condition is satisfied based on an imaged result by at least one of the first and second imaging systems.

### [Supplementary Note B17]

The control apparatus according to the Supplementary Note B16, wherein
the imaged result by at least one of the first and second imaging systems is an imaged result of the second target object group in the container.

### [Supplementary Note B18]

The control apparatus according to the Supplementary Note B16 or 17, wherein
the imaged result by at least one of the first and second imaging systems is an imaged result of at least one marker that is formed at a position, which faces a space in which the second target object group is positioned, on a surface of the container.

### [Supplementary Note B19]

The control apparatus according to the Supplementary Note B18, wherein
the computing apparatus determines that the trigger condition is satisfied, in a case where the number of the markers, which is not hidden by the target object of the second target object group in an image that is the imaged result by at least one of the first and second imaging systems, is larger than a first predetermined number.

### [Supplementary Note B20]

The control apparatus according to any one of the Supplementary Notes B15 to B19, wherein
the measurement apparatus includes a weight sensor that is configured to measure a weight of the second target object group.

### [Supplementary Note B21]

The control apparatus according to any one of the Supplementary Notes B15 to B20, wherein
the measurement apparatus includes at least one sensor that is configured to detect at least one target object of the second target object group.

### [Supplementary Note B22]

The control apparatus according to any one of the Supplementary Notes B15 to B21, wherein
the measurement apparatus includes a plurality of sensors that are configured to detect at least one target object of the second target object group and that are positioned at different heights, respectively.

### [Supplementary Note B23]

The control apparatus according to the Supplementary Note B21 or B22, wherein
the computing apparatus determines that the trigger condition is satisfied, in a case where the number of the sensors, which has not detected at least one target object of the second target object group, is larger than a second predetermined number.

### [Supplementary Note B24]

The control apparatus according to any one of the Supplementary Notes B21 to B23, wherein
the at least one sensor is positioned in a container in which the second target object group is contained.

### [Supplementary Note B25]

The control apparatus according to any one of the Supplementary Notes B1 to B24, wherein
the computing apparatus determines whether or not the trigger condition is satisfied based on the number of the target objects on which the process apparatus has performed the process.

### [Supplementary Note B26]

The control apparatus according to the Supplementary Note B25, wherein
the computing apparatus determines that the trigger condition is satisfied, in a case where the number of the target objects on which the process apparatus has performed the process is larger than a third predetermined number.

### [Supplementary Note B27]

The control apparatus according to any one of the Supplementary Notes B1 to B26, wherein
the control signal for controlling the robot to change at least one of the position and the pose of the imaging system relative to the one target object of the first target object group is a first control signal,
the first control signal is a signal for controlling the robot so that an optical axis direction, which extends from the imaging system along an optical axis of the imaging system, changes relative to the one target object of the first target object group.

### [Supplementary Note B28]

The control apparatus according to any one of the Supplementary Notes B1 to B27, wherein
the control signal for controlling the robot to change at least one of the position and the pose of the imaging system relative to the one target object of the first target object group is a first control signal,
the first control signal is a signal for controlling the robot so that the imaging system moves to at least one of a position and a pose at which the one target object can be imaged from a first direction, and
the computing apparatus generates a second control signal for controlling the robot so that the imaging system moves to at least one of a position and a pose at which the one target object can be imaged from a second direction different from the first direction, after the imaging system moves to at least one of the position and the pose at which the one target object can be imaged from the first direction by a control of the robot based on the first control signal.

### [Supplementary Note B29]

The control apparatus according to the Supplementary Note B28, wherein
the control signal for controlling the robot to change at least one of the position and the pose of the imaging system relative to the one target object of the first target object group is a first control signal,
the determination is a first determination, and
the computing apparatus generates, as the control signal, a fourth control signal for controlling the robot to change at least one of a position and a pose of the imaging system relative to one target object of a fourth target object group, in a case where a third determination that the process apparatus cannot perform the process on at least one target object of the fourth target object group is made based on an imaged result of the fourth target object group, which includes at least a part of a plurality of target objects and which includes the one target object of the first target object group, by the imaging system after the imaging system moves by a control of the robot based on the second control signal and in a case where the predetermined trigger condition is satisfied.

### [Supplementary Note B30]

The control apparatus according to the Supplementary Note B28 or B29, wherein
the computing apparatus generates the fourth control signal without using new image data that is the imaged result by the imaging system.

### [Supplementary Note B31]

The control apparatus according to any one of claims B28 to B30, wherein
the computing apparatus generates the fourth control signal based on change information that is set in advance and that indicates at least one of a direction and a distance for changing at least one of a relative position and pose between the target object and the imaging system.

### [Supplementary Note B32]

The control apparatus according to the Supplementary Note B31, wherein
the change information is set by an input from a user in advance.

### [Supplementary Note B33]

The control apparatus according to any one of the Supplementary Notes B28 to B32, wherein
the computing apparatus generates, as the control signal, a fifth control signal for controlling the robot so that the process apparatus approaches the one target object, in a case where a fourth determination that the processing apparatus can perform the process on the one target object is made based on an imaged result of a fifth target object group, which includes at least a part of the plurality of target objects and which includes the one target object of the fourth target object group, by the imaging system after the imaging system moves by control of the robot based on the fourth control signal.

### [Supplementary Note B34]

The control apparatus according to the Supplementary Note B33, wherein
the fifth control signal is a signal for controlling the robot so that the process apparatus approaches the one target object of the fifth target object group to perform the process on the one target object of the fifth target object group.

### [Supplementary Note B35]

The control apparatus according to any one of the Supplementary Notes B28 to B34, wherein
the computing apparatus generates, as the control signal, a sixth control signal for controlling the robot to change at least one of a position and a pose of the imaging system relative to the one target object, in a case where a fifth determination that the processing apparatus cannot perform the process on at least one target object of the fifth target object group is made based on an imaged result of the fifth target object group, which includes at least a part of the plurality of target objects and which includes the one target object of the fourth target object group, by the imaging system after the imaging system moves by control of the robot based on the fourth control signal and in a case where the trigger condition is satisfied.

### [Supplementary Note B36]

The control apparatus according to any one of the Supplementary Notes B1 to B35, wherein
the control signal for controlling the robot to change at least one of the position and the pose of the imaging system relative to the one target object of the first target object group is a first control signal, and
at least one of a position and a pose of the imaging system changed by a control of the robot based on the first control signal are different from at least one of a position and a pose of the imaging system when the imaging system has imaged the first target object group to acquire the imaged result that is used for the determination.

### [Supplementary Note B37]

The control apparatus according to any one of the Supplementary Notes B1 to B36, wherein
the control signal for controlling the robot to change at least one of the position and the pose of the imaging system relative to the one target object of the first target object group is a first control signal, and
the first control signal is a control signal for controlling the robot to change at least one of a position and a pose of the imaging system when the imaging system has imaged the first target object group to acquire the imaged result that is used for the determination relative to the one target object.

### [Supplementary Note B38]

The control apparatus according to any one of the Supplementary Notes B1 to B37, wherein
the control signal for controlling the robot to change at least one of the position and the pose of the imaging system relative to the one target object of the first target object group is a first control signal, and
in a case where the determination is made and the trigger condition is satisfied, the computing apparatus generates the first control signal for controlling the robot to change at least one of the position and the pose of the imaging system relative to the one target object, based on an imaged result of a third target object group, which includes at least a part of the plurality of target objects and which includes the one target object of the first target object group, by the imaging system.

### [Supplementary Note B39]

The control apparatus according to any one of the Supplementary Notes B38, wherein
the control signal for controlling the robot to change at least one of the position and the pose of the imaging system relative to the one target object of the first target object group is a first control signal, and
the computing apparatus generates the first control signal for controlling the robot to change at least one of the position and the pose of the imaging system relative to the one target object, based on at least one of a position and a pose of the one target object that is calculated based on the imaged result of the third target object group by the imaging system, in a case where the determination is made and the trigger condition is satisfied.

### [Supplementary Note B40]

The control apparatus according to any one of the Supplementary Notes B38 or B39, wherein
the computing apparatus generates the second control signal for controlling the robot to change at least one of the position and the pose of the imaging system relative to the one target object, based on at least one of a position and a pose of the one target object, which is calculated based on the imaged result of the third target object group by the imaging system, and relative position pose information, which is set in advance and which indicates at least one of a relative position and pose between the target object and the imaging system, in a case where the determination is made and the trigger condition is satisfied.

### [Supplementary Note B41]

The control apparatus according to the Supplementary Note B40, wherein
the relative position pose information is set by an input from a user in advance.

### [Supplementary Note B42]

The control apparatus according to the Supplementary Note B41, wherein
the third target object group is the first target object group.

### [Supplementary Note B43]

The control apparatus according to any one of the Supplementary Notes B1 to B42, wherein
the control signal for controlling the robot to change the position and the pose of the imaging system relative to the one target object of the first target object group is a first control signal,
the determination is a first determination, and
the computing apparatus generates a third control signal for controlling the robot so that the process apparatus approaches the one target object, in a case where a second determination that the process apparatus can perform the process on the one target object is made based on an imaged result of a fourth target object group, which includes at least a part of the plurality of target objects and which includes the one target object of the first target object group, by the imaging system after the imaging system moves by a control of the robot based on the first control signal.

### [Supplementary Note B44]

The control apparatus according to the Supplementary Note B43, wherein
in a case where the second determination is made, the computing apparatus generates the third control signal based on position pose data that is generated based on an imaged result of the fourth target object group and that indicates at least one of a position and a pose of the one target object.

### [Supplementary Note B45]

The control apparatus according to the Supplementary Note B44, wherein
the computing apparatus:
generates the position pose data based on the imaged result of the fourth target object group and partial model data, which indicates a part of a model of the target object, in a case where the second determination is made; and
generates the third control signal based on the generated position pose data.

### [Supplementary Note B46]

The control apparatus according to any one of the Supplementary Notes B1 to B45, wherein
the imaging system includes: at least one of a monocular camera; and a stereo camera including two monocular cameras.

### [Supplementary Note B47]

The control apparatus according to any one of the Supplementary Notes B38 to B42, wherein
the imaging system includes a first imaging apparatus and a second imaging apparatus that is different from the first imaging apparatus,
the first imaging apparatus images the first target object group to acquire the imaged result that is used for the determination; and
the second imaging apparatus images the third target object group to acquire the imaged result that is used for generating the control signal.

### [Supplementary Note B48]

The control apparatus according to the Supplementary Note B47, wherein
the first imaging apparatus is one of a stereo camera that includes two monocular cameras and a monocular camera that is different from the two monocular cameras, and
the second imaging apparatus is the other one of the stereo camera and the monocular camera that is different from the two monocular cameras.

### [Supplementary Note B49]

The control apparatus according to the Supplementary Note B48, wherein
the first imaging apparatus is the stereo camera, and
the second imaging apparatus is the monocular camera that is different from the two monocular cameras.

### [Supplementary Note B50]

The control apparatus according to any one of the Supplementary Notes B38 to B42, wherein
the imaging system includes a stereo camera,
the two monocular cameras of the stereo camera images the first target object group to acquire the imaged result that is used for the determination; and
one monocular camera of the two monocular cameras of the stereo camera images the third target object group to acquire the imaged result that is used for generating the control signal.

### [Supplementary Note B51]

The control apparatus according to any one of the Supplementary Notes B38 to B42, wherein
the imaging system includes a monocular camera, and
the monocular camera:
   images the first target object group to acquire the imaged result that is used for the determination; and
   images the third target object group to acquire the imaged result that is used for generating the first control signal.

### [Supplementary Note B52]

The control apparatus according to the Supplementary Note B51, wherein
the imaging system includes a projection apparatus that is configured to project projection light onto the target object, and
the monocular camera:
   images the first target object group to acquire the imaged result that is used for the determination in at least a part of a period during which the projection apparatus performs the projection onto the target object; and
   images the third target object group to acquire the imaged result that is used for generating the first control signal in at least a part of a period during which the projection apparatus does not perform the projection onto the target object.

### [Supplementary Note B53]

A control system including:
the control apparatus according to any one of the Supplementary Notes B1 to B52; and
the imaging system.

### [Supplementary Note B54]

A robot system including:
the control apparatus according to any one of the Supplementary Notes B1 to B52; and
the imaging system; and
the robot.

### [Supplementary Note B55]

A control method that generates a control signal for controlling a robot on which a process apparatus that is configured perform a process on a target object and an imaging system are mounted and which moves the process apparatus and the imaging system, wherein
the control apparatus generates the control signal for controlling the robot to change at least one of a position and a pose of the imaging system relative to one target object of a first target object group, in a case where it is determined based on an imaged result of the first target object group, which includes at least a part of a plurality of target objects, by the imaging system that the process apparatus cannot perform the process on at least one target object of the first target object group and in a case where a predetermined trigger condition, which is related to at least one of a quantity of the plurality of target objects and a height of the plurality of target objects, is satisfied.

### [Supplementary Note B56]

A computer program that allows a computer to execute the control method according to the Supplementary Note B55.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a control apparatus, a control system, a robot system, a control method, and a computer program, which involve such changes, are also intended to be within the technical scope of the present invention.

### Description of Reference Codes

- SYS: robot system
- 1: robot
- 12: robot arm
- 13: robot control apparatus
- 2: imaging system
- 21, 22: imaging apparatus
- 3: control apparatus
- 31: computing apparatus
- 311: three-dimensional position data generation unit
- 312: position pose calculation unit
- 313: signal generation unit
- 33: communication unit
- 4: end effector
- OBJ: target object
- W: workpiece
- T: placing apparatus
- IMG_2D, IMG_3D: image data
- WSD: three-dimensional position data
- POI: position pose data
- RTP: retry position
- RTA: retry pose

## Claims

1. A control apparatus that generates a control signal for controlling a robot on which a process apparatus that is configured perform a process on a target object and an imaging system are mounted and which moves the process apparatus and the imaging system, wherein
the control apparatus comprises:
a computing apparatus that generates the control signal; and
a communication apparatus that outputs the control signal generated by the computing apparatus,
the computing apparatus:
generates, as the control signal, a first control signal for controlling the robot so that the imaging system moves away from a first target object group, in a case where a first determination that there is no target object on which the process apparatus can perform the process in the first target object group is made based on an imaged result of the first target object group, which includes at least a part of a plurality of target objects, by the imaging system; and
generates, as the control signal, a second control signal for controlling the robot to change a position and a pose of the imaging system relative to one target object of a second target object group, in a case where a second determination that there is no target object on which the process apparatus can perform the process in the second target object group is made based on an imaged result of the second target object group, which includes at least a part of the plurality of target objects, by the imaging system after the imaging system moves by a control of the robot based on the first control signal.

2. The control apparatus according to claim 1, wherein
the first control signal is a signal for controlling the robot so that at least half or more of target objects of a third target object group, which includes at least a part of the plurality of target objects and which is included in an imaging field of view of the imaging system after the imaging system moves by the control of the robot based on the first control signal, are target objects that are different from target objects of the first target object group, which is included in the imaging field of view before the imaging system moves by the control of the robot based on the first control signal.

3. The control apparatus according to claim 1 or 2, wherein
the first control signal is a signal for controlling the robot so that all of target objects of a third target object group, which includes at least a part of the plurality of target objects and which is included in an imaging field of view of the imaging system after the imaging system moves by the control of the robot based on the first control signal, are target objects that are different from target objects of the first target object group, which is included in the imaging field of view before the imaging system moves by the control of the robot based on the first control signal.

4. The control apparatus according to claim 2 or 3, wherein
the third target object group is the second target object group.

5. The control apparatus according to any one of claims 1 to 4, wherein
in a case where the first determination is made, the computing apparatus generates the first control signal for controlling the robot so that the position and the pose of the imaging system change to a first position and a first pose, respectively, without using the imaged result by the imaging system.

6. The control apparatus according to any one of claims 1 to 5, wherein
the first control signal is a control signal for controlling the robot to perform a change to a first position and a first pose, respectively, which are set in advance before the first determination is made.

7. The control apparatus according to claim 5 or 6, wherein
the computing apparatus sets the first position and the first pose based on position pose information input in advance by a user.

8. The control apparatus according to any one of claims 5 to 7, wherein
the computing apparatus sets the first position and the first pose based on an imaging field of view of the imaging system.

9. The control apparatus according to claim 8, wherein
the plurality of target objects are in a container, and
the computing apparatus sets the first position and the first pose based on the imaging field of view and a size of the container.

10. The control apparatus according to any one of claims 1 to 9, wherein
the second control signal is a signal for controlling the robot so that an optical axis direction, which extends from the imaging system along an optical axis of the imaging system, changes relative to the one target object of the second target object group.

11. The control apparatus according to any one of claims 1 to 10, wherein
the second control signal is a signal for controlling the robot so that a proportion of the one target object included in an imaging field of view of the imaging system after the imaging system moves by a control of the robot based on the second control signal is larger than a proportion of the one target object included in the imaging field of view before the imaging system moves by the control of the robot based on the second control signal.

12. The control apparatus according to any one of claims 1 to 11, wherein
the second control signal is a signal for controlling the robot so that the imaging system moves to a position and a pose at which the one target object can be imaged from a first direction, and
the computing apparatus generates a third control signal for controlling the robot so that the imaging system moves to a position and a pose at which the one target object can be imaged from a second direction different from the first direction, after the imaging system moves to the position and the pose at which the one target object can be imaged from the first direction by a control of the robot based on the second control signal.

13. The control apparatus according to any one of claims 1 to 12, wherein
a position and a pose of the imaging system changed by a control of the robot based on the second control signal are different from a position and a pose of the imaging system when the imaging system has imaged the second target object group to acquire the imaged result that is used for the second determination.

14. The control apparatus according to any one of claims 1 to 13, wherein
the second control signal is a signal for controlling the robot to change a position and a pose of the imaging system when the imaging system has imaged the second target object group to acquire the imaged result that is used for the second determination relative to the one target object.

15. The control apparatus according to any one of claims 1 to 14, wherein
in a case where the second determination is made, the computing apparatus generates the second control signal for controlling the robot to change the position and the pose of the imaging system relative to the one target object, based on an imaged result of a fourth target object group, which includes at least a part of the plurality of target objects and which includes the one target object of the second target object group, by the imaging system.

16. The control apparatus according to claim 15, wherein
in a case where the second determination is made, the computing apparatus generates the second control signal for controlling the robot to change the position and the pose of the imaging system relative to the one target object, based on a position and a pose of the one target object, which are calculated based on the imaged result of the fourth target object group by the imaging system.

17. The control apparatus according to claim 15 or 16, wherein
in a case where the second determination is made, the computing apparatus generates the second control signal for controlling the robot to change the position and the pose of the imaging system relative to the one target object, based on a position and a pose of the one target object, which are calculated based on the imaged result of the fourth target object group by the imaging system, and relative position pose information, which is set in advance and which indicates relative position and pose between the target object and the imaging system.

18. The control apparatus according to claim 17, wherein
the relative position pose information is set by an input from a user in advance.

19. The control apparatus according to any one of claims 15 to 18, wherein
the fourth target object group is the second target object group.

20. The control apparatus according to any one of claims 1 to 19, wherein
the computing apparatus generates a fourth control signal for controlling the robot so that the process apparatus approaches one target object of the second target object group on which it is determined by a third determination that the process can be performed, in a case where the third determination that the process apparatus can perform the process on at least one target object of the second target object group is made based on the imaged result of the second target object group by the imaging system after the imaging system moves by the control of the robot based on the first control signal.

21. The control apparatus according to claim 20, wherein
in a case where the third determination is made, the computing apparatus generates the fourth control signal based on first position pose data that is generated based on the imaged result of the second target object group and that indicates a position and a pose of the one target object of the second target object group on which it is determined by the third determination that the process can be performed.

22. The control apparatus according to claim 21, wherein
the computing apparatus:
generates the first position pose data based on the imaged result of the second target object group and at least one of whole model data, which indicates a model of the target object, and partial model data, which indicates a part of the model, in a case where the third determination is made; and
generates the fourth control signal based on the generated first position pose data.

23. The control apparatus according to any one of claims 1 to 22, wherein
the computing apparatus generates a fifth control signal for controlling the robot so that the process apparatus approaches the one target object, in a case where a fourth determination that the process apparatus can perform the process on the one target object is made based on an imaged result of a fifth target object group, which includes at least a part of the plurality of target objects and which includes the one target object of the second target object group, by the imaging system after the imaging system moves by a control of the robot based on the second control signal.

24. The control apparatus according to claim 23, wherein
in a case where the fourth determination is made, the computing apparatus generates the fifth control signal based on second position pose data that is generated based on an imaged result of the fifth target object group and that indicates a position and a pose of the one target object.

25. The control apparatus according to claim 24, wherein
the computing apparatus:
generates the second position pose data based on the imaged result of the fifth target object group and partial model data that indicates a part of a model of the target object in a case where the fourth determination is made; and
generates the fifth control signal based on the generated second position pose data.

26. The control apparatus according to any one of claims 1 to 25, wherein
the imaging system includes: at least one of a monocular camera; and a stereo camera including two monocular cameras.

27. The control apparatus according to any one of claims 15 to 19, wherein
the imaging system includes a first imaging apparatus and a second imaging apparatus that is different from the first imaging apparatus,
the first imaging apparatus:
images the first target object group to acquire the imaged result that is used for the first determination; and
images the second target object group to acquire the imaged result that is used for the second determination, and
the second imaging apparatus images the fourth target object group to acquire the imaged result that is used for generating the second control signal.

28. The control apparatus according to claim 27, wherein
the first imaging apparatus is one of a stereo camera that includes two monocular cameras and a monocular camera that is different from the two monocular cameras, and
the second imaging apparatus is the other one of the stereo camera and the monocular camera that is different from the two monocular cameras.

29. The control apparatus according to claim 28, wherein
the first imaging apparatus is the stereo camera, and
the second imaging apparatus is the monocular camera that is different from the two monocular cameras.

30. The control apparatus according to any one of claims 15 to 19, wherein
the imaging system includes a stereo camera,
the two monocular cameras of the stereo camera:
images the first target object group to acquire the imaged result that is used for the first determination; and
images the second target object group to acquire the imaged result that is used for the second determination, and
one monocular camera of the two monocular cameras of the stereo camera images the fourth target object group to acquire the imaged result that is used for generating the second control signal.

31. The control apparatus according to any one of claims 1 to 30, wherein
the plurality of target objects are a plurality of target objects placed on a placing apparatus when the imaging system images the first target object group for the first determination.

32. A control system comprising:
the control apparatus according to any one of claims 1 to 31; and
the imaging system.

33. A robot system comprising:
the control apparatus according to any one of claims 1 to 31;
the imaging system; and
the robot.

34. A control method that generates a control signal for controlling a robot on which a process apparatus that is configured perform a process on a target object and an imaging system are mounted and which moves the process apparatus and the imaging system, wherein
the control method comprises:
generating, as the control signal, a first control signal for controlling the robot so that the imaging system moves away from a first target object group, in a case where a first determination that there is no target object on which the process apparatus can perform the process in the first target object group is made based on an imaged result of the first target object group, which includes at least a part of a plurality of target objects, by the imaging system; and
generates, as the control signal, a second control signal for controlling the robot to change a position and a pose of the imaging system relative to one target object of a second target object group, in a case where a second determination that there is no target object on which the process apparatus can perform the process in the second target object group is made based on an imaged result of the second target object group, which includes at least a part of the plurality of target objects, by the imaging system after the imaging system moves by a control of the robot based on the first control signal.

35. A computer program that allows a computer to execute the control method according to claim 34.

36. A control apparatus that generates a control signal for controlling a robot on which a process apparatus that is configured perform a process on a target object and an imaging system are mounted and which moves the process apparatus and the imaging system, wherein
the control apparatus comprises:
a computing apparatus that generates the control signal; and
a communication apparatus that outputs the control signal generated by the computing apparatus,
the computing apparatus generates the control signal for controlling the robot to change a position and a pose of the imaging system relative to one target object of a first target object group, in a case where it is determined based on an imaged result of the first target object group, which includes at least a part of a plurality of target objects contained in a container, by the imaging system that there is no target object on which the process apparatus can perform the process in the first target object group and in a case where a predetermined trigger condition, which is related to at least one of a quantity of the plurality of target objects in the container and a height of the plurality of target objects in the container, is satisfied.

37. The control apparatus according to claim 36, wherein
the quantity of the plurality of target objects is a quantity of a second target object group that includes at least a part of the plurality of target objects in the container, and
the height of the plurality of target objects in the container is a height of the second target object group in the container.

38. The control apparatus according to claim 37, wherein
at least one target object of the second target object group is the target object that is different from at least one target object of the first target object group.

39. The control apparatus according to claim 37, wherein
the second target object group is the first target object group.

40. The control apparatus according to any one of claims 37 to 39, wherein
the trigger condition includes a condition that at least one of the quantity of the second target object group in the container and the height of the second target object group in the container is lower than a predetermined threshold value.

41. The control apparatus according to any one of claims 37 to 40, wherein
the quantity of the second target object group in the container includes at least one of the number of the second target object group in the container and a weight of the second target object group in the container.

42. The control apparatus according to claim 40, wherein
the threshold value is set by a user.

43. The control apparatus according to claim 40 or 42, wherein
the threshold value is set by the computing apparatus.

44. The control apparatus according to any one of claims 36 to 43, wherein
the computing apparatus determines whether or not the trigger condition is satisfied based on an imaged result of the target object by the imaging system.

45. The control apparatus according to any one of claims 37 to 43, wherein
the computing apparatus:
calculates the height of the second target object group based on an imaged result of the second target object group by the imaging system; and
determines whether or not the trigger condition is satisfied based on the calculated height of the second target object group.

46. The control apparatus according to claim 45, wherein
the computing apparatus calculates the height of the second target object group based on three-dimensional position data that is calculated based on the imaged result of the second target object group and that indicates a three-dimensional positions of each of a plurality of points of the second target object group.

47. The control apparatus according to claim 45 or 46, wherein
the imaged result of the second target object group is the imaged result of the first target object group.

48. The control apparatus according to any one of claims 37 to 47, wherein
the computing apparatus determines whether or not the trigger condition is satisfied based on a measured result by a measurement apparatus that is configured to measure at least directly or indirectly one of the quantity of the second target object group in the container and the height of the second target object group in the container.

49. The control apparatus according to claim 48, wherein
the imaging system is a first imaging system,
the measurement apparatus includes at least one of the first imaging system and a second imaging system that is different from the first imaging system, and
the computing apparatus determines whether or not the trigger condition is satisfied based on an imaged result by at least one of the first and second imaging systems.

50. The control apparatus according to claim 49, wherein
the imaged result by at least one of the first and second imaging systems is an imaged result of the second target object group in the container.

51. The control apparatus according to claim 49 or 50, wherein
the imaged result by at least one of the first and second imaging systems is an imaged result of at least one marker that is formed at a position, which faces a space in which the second target object group is positioned, on a surface of the container.

52. The control apparatus according to claim 51, wherein
the computing apparatus determines that the trigger condition is satisfied, in a case where the number of the markers, which is not hidden by the target object of the second target object group in an image that is the imaged result by at least one of the first and second imaging systems, is larger than a first predetermined number.

53. The control apparatus according to any one of claims 48 to 52, wherein
the measurement apparatus includes a weight sensor that is configured to measure a weight of the second target object group in the container.

54. The control apparatus according to any one of claims 48 to 53, wherein
the measurement apparatus includes at least one sensor that is configured to detect at least one target object of the second target object group in the container.

55. The control apparatus according to claim 54, wherein
the computing apparatus determines that the trigger condition is satisfied, in a case where the number of the sensors, which has not detected at least one target object of the second target object group, is larger than a second predetermined number.

56. The control apparatus according to claim 54 or 55, wherein
the at least one sensor is positioned in the container.

57. The control apparatus according to any one of claims 36 to 56, wherein
the computing apparatus determines whether or not the trigger condition is satisfied based on the number of the target objects on which the process apparatus has performed the process.

58. The control apparatus according to claim 57, wherein
the computing apparatus determines that the trigger condition is satisfied, in a case where the number of the target objects on which the process apparatus has performed the process is larger than a third predetermined number.

59. The control apparatus according to any one of claims 36 to 58, wherein
the control signal for controlling the robot to change the position and the pose of the imaging system relative to the one target object of the first target object group is a first control signal,
the first control signal is a signal for controlling the robot so that the imaging system moves to a position and a pose at which the one target object can be imaged from a first direction, and
the computing apparatus generates a second control signal for controlling the robot so that the imaging system moves to a position and a pose at which the one target object can be imaged from a second direction different from the first direction, after the imaging system moves to the position and the pose at which the one target object can be imaged from the first direction by a control of the robot based on the first control signal.

60. The control apparatus according to any one of claims 36 to 59, wherein
the control signal for controlling the robot to change the position and the pose of the imaging system relative to the one target object of the first target object group is a first control signal, and
a position and a pose of the imaging system changed by a control of the robot based on the first control signal are different from a position and a pose of the imaging system when the imaging system has imaged the first target object group to acquire the imaged result that is used for the determination.

61. The control apparatus according to any one of claims 36 to 60, wherein
the control signal for controlling the robot to change the position and the pose of the imaging system relative to the one target object of the first target object group is a first control signal, and
the first control signal is a control signal for controlling the robot to change a position and a pose of the imaging system when the imaging system has imaged the first target object group to acquire the imaged result that is used for the determination relative to the one target object.

62. The control apparatus according to any one of claims 36 to 61, wherein
the control signal for controlling the robot to change the position and the pose of the imaging system relative to the one target object of the first target object group is a first control signal, and
in a case where the determination is made and the trigger condition is satisfied, the computing apparatus generates the first control signal for controlling the robot to change the position and the pose of the imaging system relative to the one target object, based on an imaged result of a third target object group, which includes at least a part of the plurality of target objects contained in the container and which includes the one target object of the first target object group, by the imaging system.

63. The control apparatus according to claim 62, wherein
the third target object group is the first target object group.

64. The control apparatus according to any one of claims 36 to 63, wherein
the control signal for controlling the robot to change the position and the pose of the imaging system relative to the one target object of the first target object group is a first control signal,
the determination is a first determination, and
the computing apparatus generates a third control signal for controlling the robot so that the process apparatus approaches the one target object, in a case where a second determination that the process apparatus can perform the process on the one target object is made based on an imaged result of a fourth target object group, which includes at least a part of the plurality of target objects and which includes the one target object of the first target object group, by the imaging system after the imaging system moves by a control of the robot based on the first control signal.

65. The control apparatus according to claim 64, wherein
in a case where the second determination is made, the computing apparatus generates the third control signal based on position pose data that is generated based on an imaged result of the fourth target object group and that indicates a position and a pose of the one target object.

66. The control apparatus according to any one of claims 36 to 65, wherein
the imaging system includes: at least one of a monocular camera; and a stereo camera including two monocular cameras.

67. The control apparatus according to claim 62 or 63, wherein
the imaging system includes a first imaging apparatus and a second imaging apparatus that is different from the first imaging apparatus,
the first imaging apparatus images the first target object group to acquire the imaged result that is used for the determination; and
the second imaging apparatus images the third target object group to acquire the imaged result that is used for generating the control signal.

68. The control apparatus according to claim 67, wherein
the first imaging apparatus is one of a stereo camera that includes two monocular cameras and a monocular camera that is different from the two monocular cameras, and
the second imaging apparatus is the other one of the stereo camera and the monocular camera that is different from the two monocular cameras.

69. The control apparatus according to claim 68, wherein
the first imaging apparatus is the stereo camera, and
the second imaging apparatus is the monocular camera that is different from the two monocular cameras.

70. The control apparatus according to claim 62 or 63, wherein
the imaging system includes a stereo camera,
the two monocular cameras of the stereo camera images the first target object group to acquire the imaged result that is used for the determination; and
one monocular camera of the two monocular cameras of the stereo camera images the third target object group to acquire the imaged result that is used for generating the control signal.

71. A control system comprising:
the control apparatus according to any one of claims 36 to 70; and
the imaging system.

72. A robot system comprising:
the control apparatus according to any one of claims 36 to 70;
the imaging system; and
the robot.

73. A control method that generates a control signal for controlling a robot on which a process apparatus that is configured perform a process on a target object and an imaging system are mounted and which moves the process apparatus and the imaging system, wherein
the control method generates the control signal for controlling the robot to change a position and a pose of the imaging system relative to one target object of a first target object group, in a case where it is determined based on an imaged result of the first target object group, which includes at least a part of a plurality of target objects contained in a container, by the imaging system that there is no target object on which the process apparatus can perform the process in the first target object group and in a case where a predetermined trigger condition, which is related to at least one of a quantity of the plurality of target objects in the container and a height of the plurality of target objects in the container, is satisfied.

74. A computer program that allows a computer to execute the control method according to claim 73.
